(19) Europäisches Patentamt
European Patent Office
Office européen des brevets

(11) EP 1 759 866 A1

(12) **EUROPEAN PATENT APPLICATION**
published in accordance with Art. 158(3) EPC

(43) Date of publication:
**07.03.2007 Bulletin 2007/10**

(21) Application number: **05755687.0**

(22) Date of filing: **22.06.2005**

(51) Int Cl.:
***B41M 5/26*** *(2006.01)* ***C09B 67/22*** *(2006.01)*
***C09B 69/04*** *(2006.01)* ***G11B 7/24*** *(2006.01)*
*C09B 23/00* *(2006.01)*

(86) International application number:
**PCT/JP2005/011866**

(87) International publication number:
**WO 2006/001460 (05.01.2006 Gazette 2006/01)**

(84) Designated Contracting States:
**AT BE BG CH CY CZ DE DK EE ES FI FR GB GR HU IE IS IT LI LT LU MC NL PL PT RO SE SI SK TR**

(30) Priority:
**23.06.2004 JP 2004184884**
**30.07.2004 JP 2004222939**
**04.10.2004 JP 2004291117**
**28.01.2005 JP 2005021613**
**05.04.2005 JP 2005108861**
**08.04.2005 JP 2005112226**
**26.04.2005 JP 2005127921**
**17.06.2005 JP 2005178226**
**17.06.2005 JP 2005178075**
**17.06.2005 JP 2005178074**

(71) Applicant: **FUJI PHOTO FILM CO., LTD.**
**Minami-Ashigara-shi, Kanagawa 250-0193 (JP)**

(72) Inventors:
- **MIKOSHIBA, Hisashi**
  **Minami-Ashigara-Shi,**
  **Kanagawa (JP)**
- **MOTOKI, Masuji**
  **Minami-Ashigara-shi,**
  **Kanagawa (JP)**
- **SHIBATA, Michihiro**
  **Odawara-shi,**
  **Kanagawa (JP)**
- **NII, Kazumi**
  **Minami-Ashigara-shi,**
  **Kanagawa (JP)**
- **TANAKA, Osahiko**
  **Minami-Ashigara-shi,**
  **Kanagawa (JP)**
- **TSUKASE, Masaaki**
  **Minami-Ashigara-shi,**
  **Kanagawa (JP)**

(74) Representative: **HOFFMANN EITLE**
**Patent- und Rechtsanwälte**
**Arabellastrasse 4**
**81925 München (DE)**

# (54) NOVEL OXONOL DYE COMPOUND AND OPTICAL INFORMATION RECORDING MEDIUM

(57) An optical recording medium comprising a substrate having thereon a recording layer containing at least two kinds of dye A and dye B, wherein dye A and dye B satisfy the following conditions (1) and (2):
(1) the starting temperature of decomposition is from 150 to 250°C,
(2) refractive index n (A) and extinction coefficient k (A) of dye A at the wavelength of recording laser ray, and refractive index n (B) and extinction coefficient k (B) of dye B at the same wavelength satisfy the following expressions:

$$n (B)/n (A) > 0.7$$

$$k (B)/k (A) > 10.$$

Fig.1

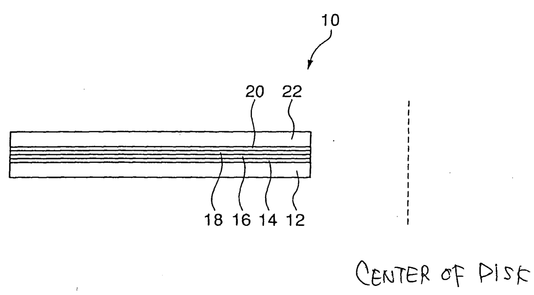


EP 1 759 866 A1

Printed by Jouve, 75001 PARIS (FR)

## Description

### Technical Field

The present invention relates to an optical recording medium, In particular, relates to an optical recording medium having a recording layer containing a dye, and capable of high density and high speed recording. More specifically, the invention relates to a heat-mode information-recording medium capable of writing (recording) and writing (reproduction) of information with laser rays of high energy density, and an information recording method. The present invention relates to a heat-mode information-recording medium, such as a recordable digital versatile disc (DVD-R) on which information is recorded by use of visible laser light. More specifically, the invention is concerned with an optical recording medium including an oxonol dye having a particular structure.

### Background Art

Information recording media on which information can be recorded only once by use of laser light (optical discs) have hitherto been known. Such information recording media are also referred to as recordable CDs (the so-called CD-Rs). The recordable CDs have an advantage in that they can be delivered speedily in low quantities at reasonable prices, compared with the manufacture of traditional CDs, and the demand for them has been growing as personal computer use has become pervasive in recent years. The CD-R type of information recording medium is typically structured to laminate a transparent disk-shape substrate, a recording layer including an organic dye, a reflective layer including a metal such as gold and a resin-made protective layer in the order of mention.

And recording of information on such an optical disc is performed by changing an optical property with local heat generation and deformation (physical or chemical change (e.g. forming a pit) caused in its recording layer by irradiation with laser light in the near infrared region (laser light generally having its wavelength in the vicinity of 780 nm). On the other hand, reading (playback) of information from the disc is generally performed by irradiating the disc with laser light of the same wavelength as the laser light used for recording has, and detecting difference in reflectivity between the area deformed by heat generation (recorded area) and the area remaining undeformed (unrecorded area) in the recording layer.

In recent years, information recording media of higher recording densities have been required. In order to heighten the recording densities, it is known to be effective that the beam diameter of laser used for irradiation is narrowed down. Moreover, irradiation with laser light of shorter wavelengths is known to be theoretically more advantageous to further increase in recording density, because the beam diameter of laser can be made narrower the shorter the laser light is in wavelength. Therefore, the development of optical discs suitable for record and playback with laser light of wavelengths shorter than hitherto used 780 nm has been pursued. For instance, optical discs referred to as recordable digital versatile discs (the so-called DVD-Rs) are currently on the market. These optical discs are each manufactured so as to have a structure that two disks, which each have on a 120-mm-dia or 80-mm-dia transparent disk-shape substrate wherein is formed a pregroove having a 0.74 to 0.8-$\mu$m track pitch smaller than 1.6 $\mu$m adopted as the track pitch of CD-R a dye-containing recording layer, a reflective layer and a protective layer in the order of mention, are bonded together with the recording layers inside, or one disk as described above and a disk-shape protective substrate having almost the same dimensions are bonded together with the recording layer inside. And the record and the playback of DVD-R are performed by irradiation with visible laser light (generally in a wavelength range of 600 to 700 nm). Therefore, DVD-R is considered to enable high-density recording, compared with CD-R type of optical discs.

In recent years, photo-discs called DVD+R of the specification analogous to DVD-R have been on the market.

As the information recording medium of DVD-R type can record information several times as much as that of a hitherto used information recording medium of CD-R type, it is desired that the information recording medium of DVD-R type has not only high recording sensitivity but also a low incidence of errors even in high-speed recording made by necessity to rapidly process high-volume information in particular. In addition, it is desired to develop a recording layer capable of retaining its properties with stability for a long time even under exposure to light or heat, because a dye-containing recording layer is generally not so stable to prolonged exposure to heat or light. Further, it is desired to be capable of manufacturing easily and inexpensively.

Further, as in the case of CD-Rs, a reduction in recording time, or a speedup in recording, has recently been desired for recordable DVDs also, so it has been desirable to further increase the sensitivity of DVD-R and provide an improvement in lowering of write accuracy (worsening of jitter) associated with enhancement of laser power for writing.

JP-A-63-209995 [Patent Literature 1] discloses the CD-R type of information recording medium having an oxonol dye-containing recording layer provided on a substrate. Therein, it is stated that the use of such a dye compound enables long-term retention of consistent record and playback characteristics. And this Document 1 discloses the oxonol dye compounds having ammonium ions introduced in the form of inner salts. In addition, JP-A-2000-52658 [Patent Literature 2] and JP-A-2002-249674 [Patent Literature 3] disclose the oxonol dye compounds providing optical information-recording media with high light resistance and durability as well as excellent recording characteristics. Further, JP-A-2002-59652 [Patent Literature 4] discloses the art of mixing two dyes having different sensitivities, and therein the description of oxonol dyes can be found. Furthermore, JP-A-2004-188968 [Patent Literature 5] discloses the bis-oxonol dyes having the specified structure.

For making high-speed recording possible, it is necessary to increase recording sensitivity of an optical recording medium, and various techniques have been proposed as means for heightening recording sensitivity. However, examples that achieved the improvement of sensitivity by including two kinds of dyes in a recording layer aiming at the utilization of the thermal decomposition characteristics of these two dyes are not known.

On the other hand, the techniques themselves of including two or more kinds of dyes in a recording layer are known. For example, there is exemplified an optical recording medium containing a first dye having absorption maximum at wavelengths of from 450 to 600 nm, and a second dye having absorption maximum at wavelengths of from 600 to 750 nm, wherein the content of the second dye is adjusted to satisfy k (655 nm) $\leqq$ 0.03, k (670 nm) $\leqq$ 0.030, 7 $\leqq$ k (670 nm)/k (655 nm) $\leqq$ 1.05 (for example, refer to Patent literature 6). As other example, an optical recording medium having a recording layer containing a mixture of an organic dye having absorption maximum at wavelengths of from 500 to 650 nm and an organic dye having absorption maximum at wavelengths of from 660 to 720 nm (for example, refer to patent Literature 7).

In the above two examples, respective objects are certainly achieved by mixing two kinds of dyes and including in a recording layer, but concerning thermal decomposition characteristics of dyes, there are merely described in paragraph [0022] of patent Literature 7 that the starting temperature of decomposition is preferably from 100 to 350˚C, and when the temperature is 360˚C or more, pit forming does not go well and jitter characteristics are deteriorated, while when 100˚C or less, the preservation stability of a disc lowers, and there are no descriptions in the patents on the improvement of sensitivity.

Azo dyes for use in the invention are illustrated in the following patent literatures 10 to 18 and the like.

In the technical field of the optical disc, a technique of mixing two or more dyes for the purpose of adjusting recording sensitivity is known (refer to patent literatures 6 to 9). However, there is not disclosed in these patent literatures to use an oxonol dye and an azo dye in combination.


[Patent Literature 1] JP-A-63-209995
[Patent Literature 2] JP-A-2000-52658
[Patent Literature 3] JP-A-2002-249674
[Patent Literature 4] JP-A-2002-59652
[Patent Literature 5] JP-A-2004-188968
[Patent Literature 6] JP-A-2004-82406
[Patent Literature 7] JP-A-2004-118898
[Patent Literature 8] JP-A-2003-276342
[Patent Literature 9] JP-A-2003-34078
[Patent Literature 10] JP-A-3-268994
[Patent Literature 11] JP-A-7-161069
[Patent Literature 12] JP-A-7-251567
[Patent Literature 13] JP-A-10-204070
[Patent Literature 14] JP-A-11-12483
[Patent Literature 15] JP-A-11-166125
[Patent Literature 16] JP-A-2001-199169
[Patent Literature 17] JP-A-2001-152040
[Patent Literature 18] JP-A-2002-114922


## Disclosure of the Invention

The invention has been done in view of the prior art problems, and aims to attain the following object. That is, an object of the invention is to provide an optical recording medium that is high sensitivity throughout low speed recording to high speed recording, and having good recording characteristics.

The present inventors have found that the optical recording media using bis-oxonol dyes of specific structures had high sensitivities, reduced amounts of jitter, high degrees of modulation and excellent storage stabilities. However, those dyes had a problem that their solubility was insufficient to prepare coating solutions from them or, even though coating solutions were prepared from them, the solution ageing stabilities thereof were insufficient, or the use of their coating solutions in concentrated form made streaks on the coatings formed and thereby the coating surface smoothness was degraded. In addition, the films formed from the bis-oxonol dyes had sharp absorption waveforms and their absorption was not flat in the wavelength region of recording laser. As a result, shifts of the absorption maxima of bis-oxonol dyes

to longer wave lengths with the intention of enhancing the sensitivity caused excessive changes in absorbance at the laser wavelength and resulted in undesirable effects, such as too large increase in reflectance, being brought about. Under the circumstances, it was difficult to adjust the absorption maxima of bis-oxonol dyes to absolutely ideal values. On the other hand, the use of bis-oxonol dyes in combination with dyes having their absorption maxima at longer wavelengths than the bis-oxonol dyes used mainly was effective for increasing the sensitivity. In this case, however, there occurred problems of degradation in light fastness and reduction in stability of dyes in coating solutions unless the selection of dyes suitable for the combined use was made. Further, problems of insufficient sensitivity and jitter degradation were caused when dyes of high solubility were used and high-speed recording was performed.

First Problems that the invention is to solve are (i) to improve solubility of dyes in a coating solution, (ii) to promote solution ageing stability of a coating solution, (iii) to enhance coating suitability and thereby improve smoothness of the coating formed and (iv) to resolve a deposition problem of dyes in a recording medium. A further problem of the invention is to offer dyes capable of increasing the sensitivity of an optical recording medium, suffering no degradations in light fastness and resistance to moisture and heat, and avoiding damage to stability in a coating solution. And a still further problem is to provide an optical recording medium having excellent high-speed recording characteristics. As a result of our intensive studies, it has been found that satisfactory recording characteristics can be obtained even at the time of high-speed recording and the solubility, the solution ageing stability and the coating suitability of dyes can be improved without influencing the keeping quality, thereby achieving the invention.

In addition, further performance improvements, such as improvements in reflectivity and modulation degree, have been required for information recording media of DVD-R type, and it has been desired to address this requirement by further improvement in the real part (symbolized by a letter n) of complex refractive index. In addition, bis-oxonol dyes had a problem that their solubility was insufficient to prepare coating solutions from them or, even though coating solutions were prepared from them, the solution ageing stabilities thereof were insufficient. Even though they were used in combination with dyes of various structures for solubility improvement, therein were involved drawbacks that satisfactory solubility improvement effect was not achieved and the aforementioned performances attributed to the bis-oxonol dyes deteriorated.

Second problems that the invention aims to solve are to achieve greater real part n in the complex refractive index while maintaining excellent jitter and storage stability characteristics of bis-oxonol dyes in high-speed recording, and to solve a deposition problem of dyes in recording media by enhancing solubility of dyes in a coating solution, solution ageing stability of a coating solution and coating suitability of a coating solution.

The present inventor investigated the performances of various oxonol dye compounds disclosed in the above patents by using them in DVD-R optical information-recording media. The present inventors have found that an optical recording medium using oxonol dyes having a specific structure is low in jitter, high in modulation factor, and excellent in preservation stability. Of these dyes, bis-oxonol dyes were especially preferred.

However, the films formed from the oxonol dyes had sharp absorption waveforms and their absorption was not flat in the wavelength region of recording laser. As a result, shifts of the absorption maxima of bis-oxonol dyes to longer wavelengths with the intention of enhancing the sensitivity caused excessive changes in absorbance at the laser wavelength and undesirable effects, such as too large increase in reflectance, were brought about, so that it was difficult to adjust the absorption maxima of bis-oxonol dyes to absolutely ideal values. It was effective to use bis-oxonol dyes in combination with dyes having their absorption maxima at longer wavelengths than those of the oxonol dyes mainly used for the improvement of sensitivity. However, these dyes had problems such that they were insufficient in solubility in preparation of coating solutions of dyes and solution aging stability of coating solutions, and light fastness was inferior.

As a result of eager investigation by the present inventors, it was found that the solubility of dyes and solution aging stability could be improved without influencing recording characteristics and preservation stability by the use of oxonol dyes in combination with cyanine dyes, thus the invention was accomplished.

Third problems that the invention is to solve are to improve the solubility of dyes in a coating solution, to promote solution aging stability of a coating solution, to increase coating suitability, and to solve the problem of precipitation of dyes in a recording medium, by the use of the mixture of cyanine dyes with oxonol dyes, more preferably bis-oxonol dyes. A further object of the invention is to offer dyes capable of increasing the sensitivity of an optical recording medium, suffering no degradations in light fastness and resistance to moisture and heat, and avoiding damage to stability in a coating solution.

As a result of eager investigation by the present inventors, it was found that the solubility of dyes and solution aging stability could be improved without influencing recording characteristics and preservation stability by the use of oxonol dyes in combination with azo dyes, preferably azo metal chelate dyes comprising azo dyes and metal ions, thus the invention was accomplished.

Fourth problems that the invention is to solve are, at the time of the use of oxonol dyes, to improve the solubility of dyes in a coating solution, to promote solution aging stability of a coating solution, to increase coating suitability, and to solve the problem of precipitation of dyes in a recording medium. A still further object of the invention is to provide an optical information recording medium capable of increasing sensitivity while maintaining the coating suitability, and

suffering no degradations in light fastness and resistance to moisture and heat.

The means for solving the above problems are as follows. That is:

[1] An optical recording medium comprising: a substrate; and a recording layer on the substrate, the recording layer containing at least two kinds of dye A and dye B, wherein the dye A and the dye B satisfy the following conditions (1) and (2):

(1) the starting temperature of decomposition is from 150 to 250˚C,

(2) refractive index n (A) and extinction coefficient k (A) of the dye A at a wavelength of recording laser ray, and refractive index n (B) and extinction coefficient k (B) of the dye B at the same wavelength satisfy the following expressions:

$$n(B)/n(A) > 0.7$$

$$k(B)/k(A) > 10.$$

[2] The optical recording medium as described in [1], wherein a cationic part of the dye A and a cationic part of the dye B are the same, or an anionic part of the dye A and an anionic part of the dye B are the same.

[3] The optical recording medium as described in [2], wherein the anionic part is the anionic part of an oxonol dye.

[4] The optical recording medium as described in [2] or [3], wherein the cationic part has the following structure:

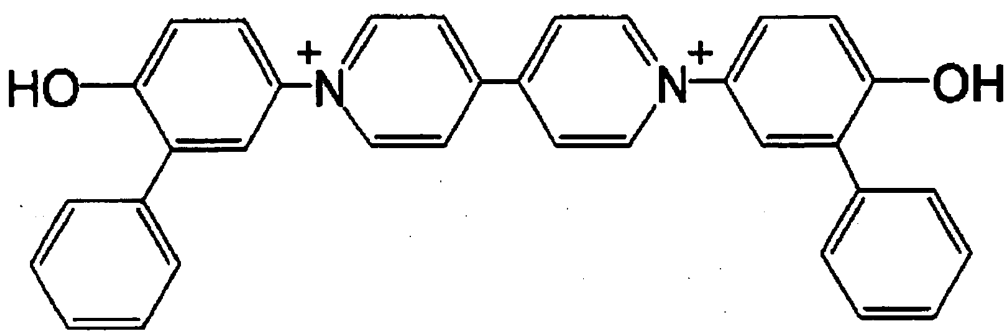

[5] The optical recording medium as described in any of [1] to [4], wherein the mass ratio of dye B to dye A is from 1 to 10%.

The first problems described above are solved by the following means.

[6] An optical information-recording medium, including two or more kinds of compounds selected from compounds having structures represented by the following formula (I);

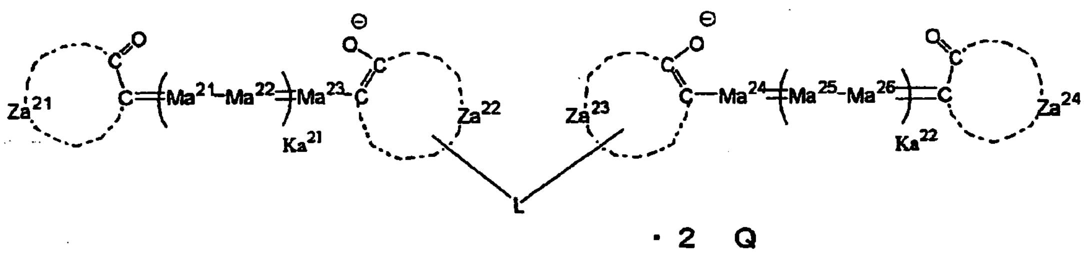

(I)

wherein $Za^{21}$, $Za^{22}$, $Za^{23}$ and $Za^{24}$ each independently represents atoms forming an acidic nucleus, $Ma^{21}$, $Ma^{22}$, $Ma^{23}$, $Ma^{24}$, $Ma^{25}$ and $Ma^{26}$ each independently represents a substituted or unsubstituted methine group, L represents a divalent linkage group forming no $\pi$-conjugated system in conjunction with its two bonds, $Ka^{21}$ and $Ka^{22}$ each independently represents an integer of 0 to 3 and Q represents a univalent cation for neutralizing an electric charge or 2Q represents a divalent cation, wherein, when $Ka^{21}$ and $Ka^{22}$ are plural number each, more than one

$Ma^{21}$, more than one $Ma^{22}$, and more than one $Ma^{25}$ and more than one $Ma^{26}$ present are the same or different each.

[7] An optical information-recording medium as described in [6], wherein the two or more kinds of compounds comprise a compound having a structure represented by the following formula (IIIa) and a compound having a structure represented by the following formula (IIIb);

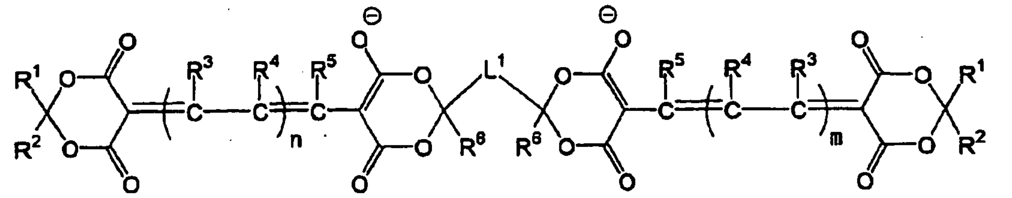

(IIIa)

· 2 Q

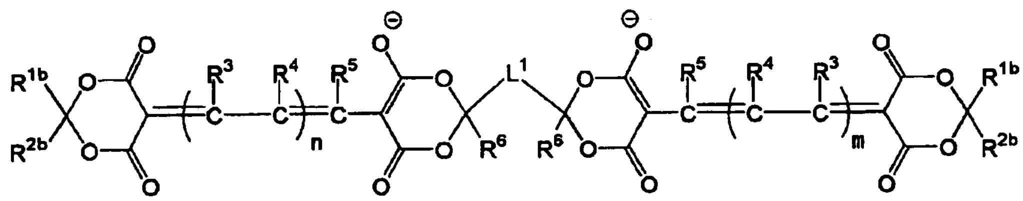

(IIIb)

· 2 Q

in formula (IIIa), wherein $R^1$ and $R^2$ each independently represents a hydrogen atom, an unsubstituted alkyl group or an unsubstituted aryl group, $R^3$, $R^4$ and $R^5$ each independently represents a hydrogen atom or a substituent, two $R^6$s in each formula represent independently of each other a hydrogen atom, a substituted or unsubstituted alkyl group or a substituted or unsubstituted aryl group, two $R^6$s may combine with each other to form a divalent linkage group, $L^1$ represents a divalent linkage group, n and m each independently represents an integer of 0 to 2 wherein, when n and m are plural number each, more than one $R^3$ and more than one $R^4$ are the same or different each, and Q represents a univalent cation for neutralizing an electric charge or 2Q represents a divalent cation; and in formula (IIIb), $R^3$, $R^4$, $R^5$, $R^6$, n, m, $L^1$ and Q have the same meanings as in formula (IIIa), respectively, $R^{1b}$ represents a hydrogen atom, a substituted or unsubstituted alkyl group or a substituted or unsubstituted aryl group and $R^{2b}$ represents a substituted alkyl group or a substituted aryl group.

[8] An optical information-recording medium, including a dye that has a structure represented by the following formula (I) and exhibits its absorption maximum in a wavelength range of 500 nm to shorter than 600 nm when formed into an amorphous film and a dye that has a structure represented by the following formula (II) and exhibits its absorption maximum in a wavelength range of 600 nm to shorter than 720 nm;

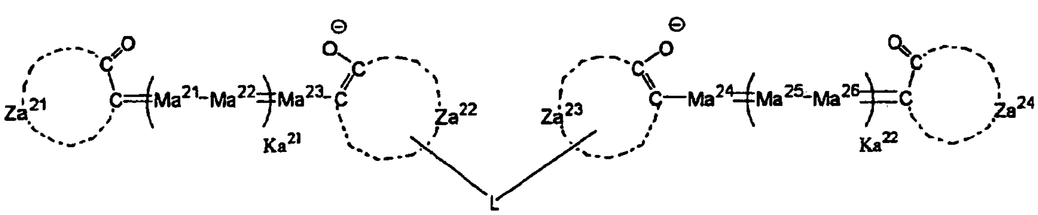

(I)

· 2 Q

wherein $Za^{21}$, $Za^{22}$, $Za^{23}$ and $Za^{24}$ each independently represents atoms forming an acidic nucleus, $Ma^{21}$, $Ma^{22}$, $Ma^{23}$, $Ma^{24}$, $Ma^{24}$ and $Ma^{26}$ each independently represents a substituted or unsubstituted methine group, L represents a divalent linkage group forming no $\pi$-conjugated system in conjunction with its two bonds, $Ka^{21}$ and $Ka^{22}$ each independently represents an integer of 0 to 3 and Q represents a univalent cation for neutralizing an electric charge or 2Q represents a divalent cation, wherein, when $Ka^{21}$ and $Ka^{22}$ are plural number each, more than one $Ma^{21}$, more than one $Ma^{22}$, more than one $Ma^{25}$ and more than one $Ma^{26}$ are the same or different each, and

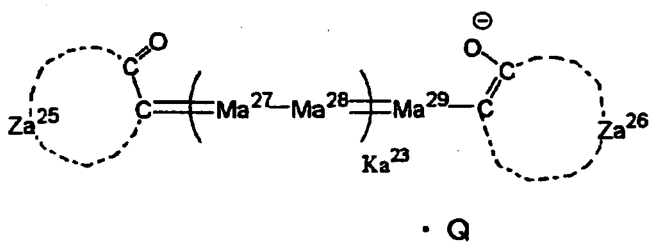

(II)

wherein $Za^{25}$ and $Za^{26}$ each independently represents atoms forming an acidic nucleus, $Ma^{27}$, $Ma^{28}$ and $Ma^{29}$ each independently represents a substituted or unsubstituted methine group, $Ka^{23}$ represents an integer of 0 to 3 and Q represents a univalent cation, wherein, when $Ka^{23}$ is plural number, more than one $Ma^{27}$ and more than one $Ma^{28}$ are the same or different each.

[9] An optical information-recording medium as described in [8], wherein the dye having a structure represented by formula (I) is a dye having a structure represented by the following formula (III) and the dye having a structure represented by formula (II) is a dye having a structure selected from structures represented by the following formulae (IV), (V), (VI) and (VII), respectively;

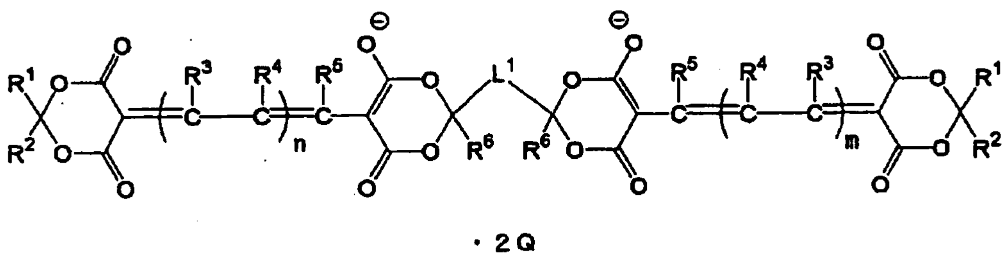

(III)

wherein $R^1$ and $R^2$ represent independently of each other a hydrogen atom, a substituted or unsubstituted alkyl group or a substituted or unsubstituted aryl group, $R^1$ and $R^2$ may combine with each other to form a ring structure, $R^3$, $R^4$ and $R^5$ each independently represents a hydrogen atom or a substituent, each $R^6$ represents a hydrogen atom, a substituted or unsubstituted alkyl group or a substituted or unsubstituted aryl group, two $R^6$s may combine with each other to form a divalent linkage group, $L^1$ represents a divalent linkage group, n and m each independently represents an integer of 0 to 2 wherein, when n and m are more than one each, more than one $R^3$ and more than one $R^4$ are the same or different each, and Q represents a univalent cation for neutralizing a charge or 2Q represents a divalent cation, and

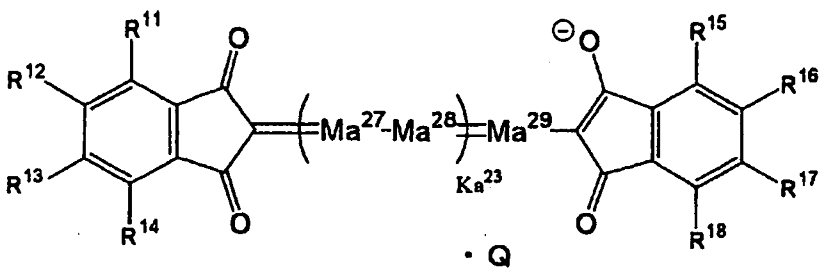

(IV)

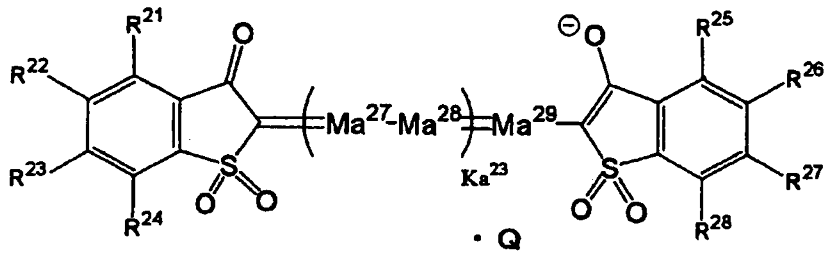

(V)

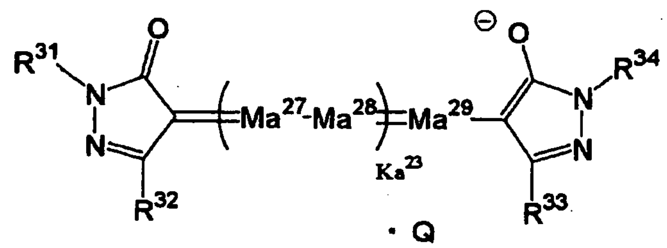

(VI)

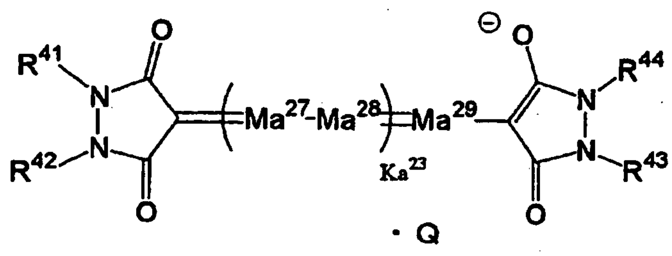

(VII)

wherein $R^{11}$, $R^{12}$, $R^{13}$, $R^{14}$, $R^{15}$, $R^{16}$, $R^{17}$, $R^{18}$, $R^{21}$, $R^{22}$, $R^{23}$, $R^{24}$, $R^{25}$, $R^{26}$, $R^{27}$, $R^{28}$, $R^{31}$, $R^{32}$, $R^{33}$, $R^{34}$, $R^{41}$, $R^{42}$, $R^{43}$ and $R^{44}$ each independently represents a hydrogen atom or a substituent, $Ma^{27}$, $Ma^{28}$ and $Ma^{29}$ each independently represents a substituted or unsubstituted methine group, $Ka^{23}$ represents an integer of 0 to 3, wherein, when $Ka^{23}$ is plural number, more than one $Ma^{27}$ and more than one $Ma^{28}$ are each the same or different, and Q represents a univalent cation for neutralizing a charge.

[10] A compound having a structure represented by the following formula (VIII);

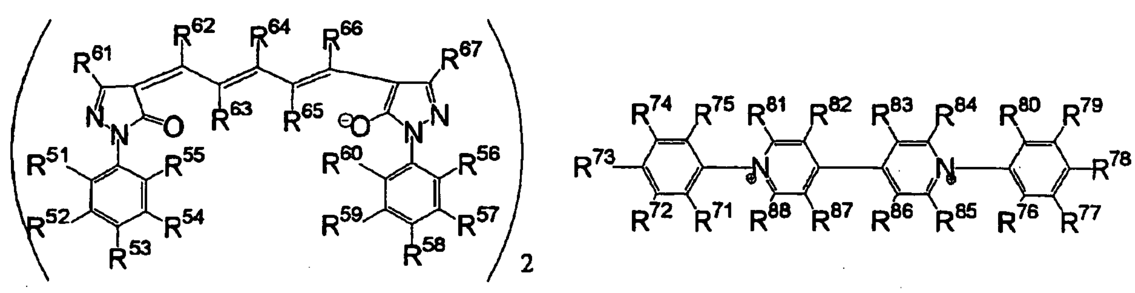

(VIII)

wherein $R^{51}$, $R^{52}$ , $R^{53}$, $R^{54}$, $R^{55}$, $R^{56}$, $R^{57}$, $R^{58}$, $R^{59}$ and $R^{60}$ each independently represents a hydrogen atom or a substituent, $R^{61}$ and $R^{67}$ each independently represents a hydrogen atom, a substituted or unsubstituted alkyl group,

a substituted or unsubstituted aryl group, a cyano group, a substituted or unsubstituted carbamoyl group, a substituted or unsubstituted alkoxy group, a substituted or unsubstituted alkoxycarbonyl group, a substituted or unsubstituted aryloxycarbonyl group or a substituted or unsubstituted acylamino group, $R^{62}$, $R^{63}$, $R^{64}$ , $R^{65}$ and $R^{66}$ each independently represents a hydrogen atom, a substituted or unsubstituted alkyl group, a substituted or unsubstituted aryl group, a substituted or unsubstituted acylamino group or a substituted or unsubstituted heterocyclic group, and $R^{71}$, $R^{72}$, $R^{73}$ $R^{74}$, $R^{75}$, $R^{76}$, $R^{77}$, $R^{78}$, $R^{79}$, $R^{80}$, $R^{81}$, $R^{82}$, $R^{83}$, $R^{84}$, $R^{85}$, $R^{86}$, $R^{87}$ and $R^{88}$ each independently represents a hydrogen atom or a substituent.

[11] An optical information-recording medium comprising: at least two kind of compounds having structures represented by the following formula (I) and exhibiting their absorption maxima in a wavelength range of 500 nm to shorter than 600 nm when formed into an amorphous film; and an oxonol dye exhibiting its absorption maximum in a wavelength range of 600 nm to shorter than 720 nm when formed into an amorphous film;

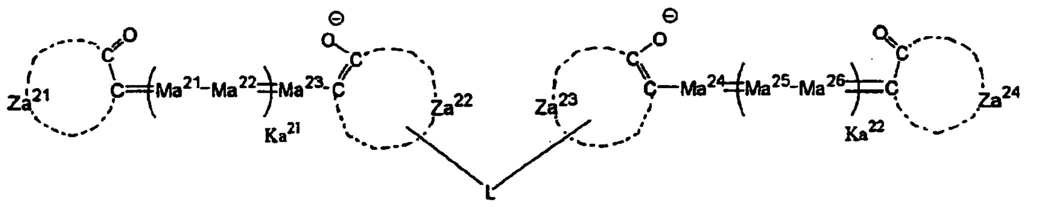

(I)

· 2 Q

wherein $Za^{21}$, $Za^{22}$, $Za^{23}$ and $Za^{24}$ each independently represents atoms forming an acidic nucleus, $Ma^{21}$, $Ma^{22}$, $Ma^{23}$, $Ma^{24}$, $Ma^{25}$ and $Ma^{26}$ each independently represents a substituted or unsubstituted methine group, L represents a divalent linkage group forming no $\pi$-conjugated system in conjunction with its two bonds, $Ka^{21}$ and $Ka^{22}$ each independently represents an integer of 0 to 3, and Q represents a univalent cation for neutralizing an electric charge or 2Q represents a divalent cation, wherein, when $Ka^{21}$ and $Ka^{22}$ are plural number each, more than one $Ma^{21}$, more than one $Ma^{22}$, more than one $Ma^{25}$ and more than one $Ma^{26}$ are the same or different each.

[12] An optical information-recording medium as described in [11], wherein the oxonol dye exhibiting its absorption maximum in a wavelength range of 600 nm to shorter than 720 nm when formed into an amorphous film is a dye having a structure represented by the following formula (II);

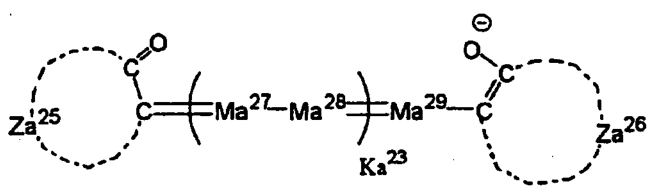

(II)

· Q

wherein $Za^{25}$ and $Za^{26}$ each independently represents atoms forming an acidic nucleus, $Ma^{27}$, $Ma^{28}$ and $Ma^{29}$ each independently represents a substituted or unsubstituted methine group, $Ka^{23}$ represents an integer of 0 to 3 and Q represents a univalent cation, wherein, when $Ka^{23}$ is plural number, more than one $Ma^{27}$ and more than one $Ma^{28}$ are the same or different each.

[13] An optical information-recording medium as described in [12], wherein one of the two or more dyes having structures represented by formula (I) is a dye having a structure represented by the following formula (IIIa) and another of the two or more dyes having structures represented by formula (I) is a dye having a structure represented by the following formula (IIIb) and the dye having a structure represented by formula (II) is a dye having a structure represented by the following formula (IV), (V), (VI) or (VII);

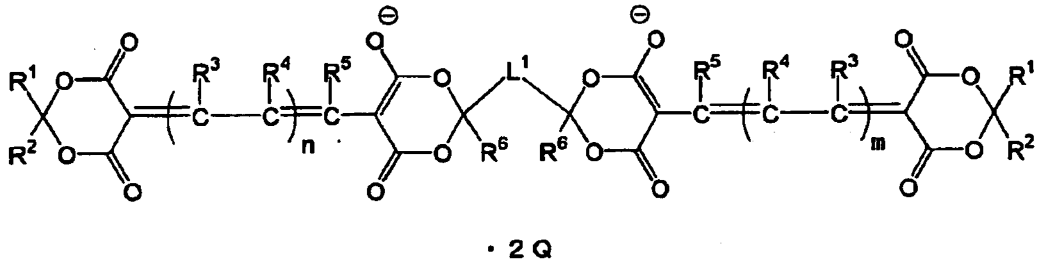

(IIIa)

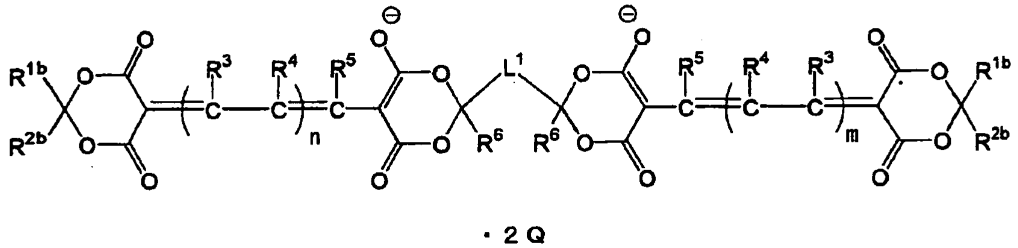

(IIIb)

in formula (IIIa), $R^1$ and $R^2$ each independently represents a hydrogen atom, an unsubstituted alkyl group or an unsubstituted aryl group, $R^3$, $R^4$ and $R^5$ each independently represents a hydrogen atom or a substituent, $R^6$s in each formula represent independently of each other a hydrogen atom, a substituted or unsubstituted alkyl group or a substituted or unsubstituted aryl group, two $R^6$s may combine with each other to form a divalent linkage group, $L^1$ represents a divalent linkage group, and n and m each independently represents an integer of 0 to 2, wherein, when n and m are plural number each, more than one $R^3$ and more than one $R^4$ are the same or different each, and Q represents a univalent cation for neutralizing an electric charge or 2Q represents a divalent cation;
in formula (IIIb), $R^3$, $R^4$, $R^5$, $R^6$, n, m, $L^1$ and Q have the same meanings as in formula (IIIa), respectively, $R^{1b}$ represents a hydrogen atom, a substituted or unsubstituted alkyl group or a substituted or unsubstituted aryl group and $R^{2b}$ represents a substituted alkyl group or a substituted aryl group, and

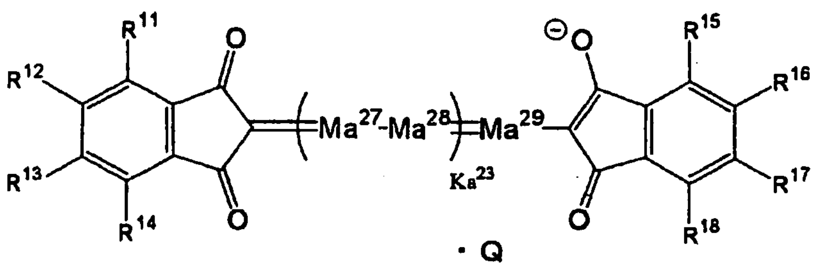

(IV)

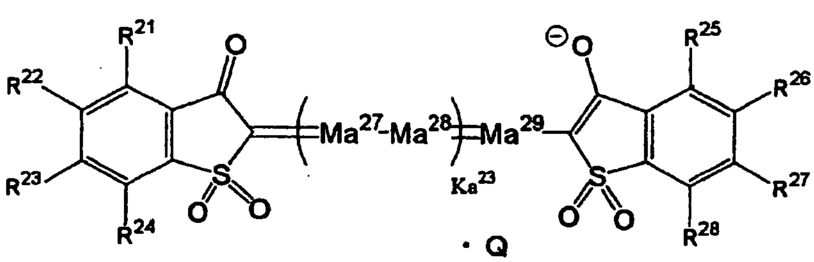

(V)

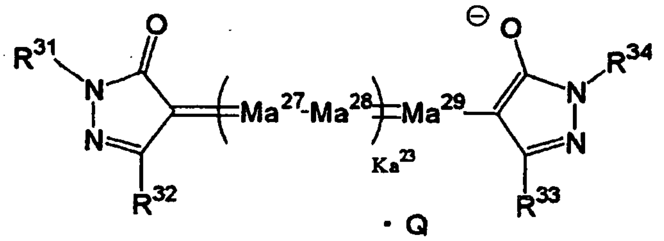

(VI)

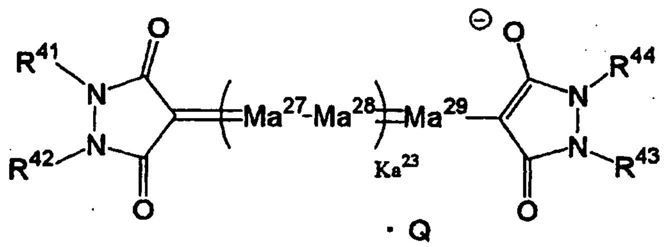

(VII)

wherein $R^{11}$, $R^{12}$, $R^{13}$, $R^{14}$, $R^{15}$, $R^{16}$, $R^{17}$, $R^{18}$, $R^{21}$, $R^{22}$, $R^{23}$, $R^{24}$, $R^{25}$, $R^{26}$, $R^{27}$, $R^{28}$, $R^{31}$, $R^{32}$, $R^{33}$, $R^{34}$, $R^{41}$, $R^{42}$, $R^{43}$ and $R^{44}$ each independently represents a hydrogen atom or a substituent, $Ma^{27}$, $Ma^{28}$ and $Ma^{29}$ each independently represents a substituted or unsubstituted methine group, $Ka^{23}$ represents an integer of 0 to 3, wherein, when $Ka^{23}$ is plural number, more than one $Ma^{27}$ and more than one $Ma^{28}$ are the same or different each, and Q represents a univalent cation for neutralizing an electric charge.

As a result of our intensive studies by the inventors, the aforesaid second problems can be solved by the following optical information recording medium.

[14] An optical information-recording medium, including a compound having a structure represented by the following formula (II');

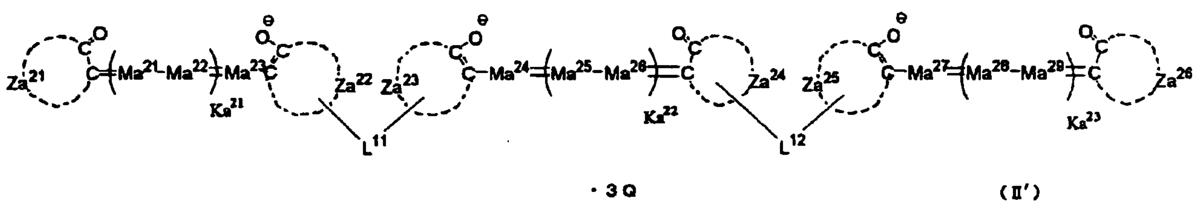

(II')

wherein $Za^{21}$, $Za^{22}$, $Za^{23}$, $Za^{24}$, $Za^{25}$ and $Za^{26}$ each independently represents atoms forming an acidic nucleus, $Ma^{21}$, $Ma^{22}$, $Ma^{23}$, $Ma^{24}$, $Ma^{25}$, $Ma^{26}$, $Ma^{27}$, $Ma^{28}$ and $Ma^{29}$ each independently represents a substituted or unsubstituted methine group, $L^{11}$ and $L^{12}$ each independently represents a divalent linkage group forming no $\pi$-conjugated system in conjunction with its two bonds, $Ka^{21}$, $Ka^{22}$ and $Ka^{23}$ each independently represents an integer of 0 to 3; and Q represents a univalent cation for neutralizing an electric charge, wherein, when $Ka^{21}$, $Ka^{22}$ and $Ka^{23}$ are plural number each, more than one $Ma^{21}$, more than one $Ma^{22}$, more than one $Ma^{25}$, more than one $Ma^{26}$, more than one $Ma^{28}$ and more than one $Ma^{29}$ are the same or different each.

[15] An optical information-recording medium, including a compound having a structure represented by the following formula (I') and a compound having a structure represented by the following formula (II');

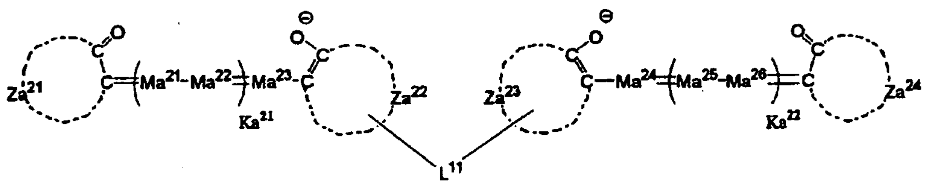

·2 Q

(I')

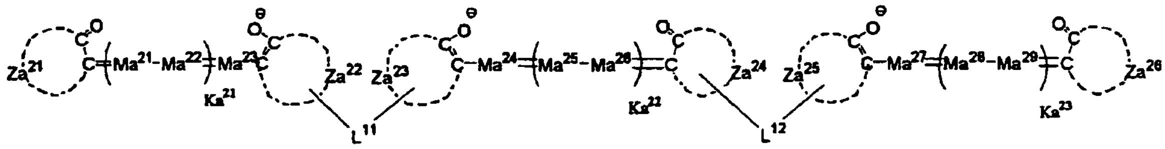

·3Q

(II')

wherein $Za^{21}$, $Za^{22}$, $Za^{23}$, $Za^{24}$, $Za^{25}$ and $Za^{26}$ each independently represents atoms forming an acidic nucleus, $Ma^{21}$, $Ma^{22}$, $Ma^{23}$, $Ma^{24}$, $Ma^{25}$, $Ma^{26}$, $Ma^{27}$, $Ma^{28}$ and $Ma^{29}$ each independently represents a substituted or unsubstituted methine group, $L^{11}$ and $L^{12}$ each independently represents a divalent linkage group forming no $\pi$-conjugated system in conjunction with its two bonds, $Ka^{21}$, $Ka^{22}$ and $Ka^{23}$ each independently represents an integer of 0 to 3, and Q represents a univalent cation for neutralizing an electric charge (2Q represents a divalent cation and 3Q represents a trivalent cation), wherein, when $Ka^{21}$, $Ka^{22}$ and $Ka^{23}$ are plural number each, more than one $Ma^{21}$, more than one $Ma^{22}$, more than one $Ma^{25}$, more than one $Ma^{26}$, more than one $Ma^{28}$ and more than one $Ma^{29}$ are the same or different each.

[16] An optical information-recording medium as described in [15], wherein the compound having a structure represented by formula (I') constitutes 80 to 99 (from 80 to 99 inclusive) mass % of all dyes used in the medium and the compound having a structure represented by formula (II') constitutes 1 to 20 (from 1 to 20 inclusive) mass % of all dyes used in the medium.

[17] An optical information-recording medium as described in any of [14] to [16], wherein the acidic nucleus containing each of $Za^{21}$, $Za^{22}$, $Za^{23}$, $Za^{24}$, $Za^{25}$ and $Za^{26}$ in formulae (I') and (II') is 1,3-dioxane-4,6-dione.

As a result of intensive studies by the present inventor, the above third problems can be achieved by the following means.

[18] An optical information-recording medium comprising a recording layer including a dye, wherein the dye in the recording layer is a mixture of an oxonol dye and a cyanine dye. The optical information-recording medium is preferably a heat-mode direct read after write information-recording medium comprising a transparent substrate, a recording layer containing the above-described mixture of dyes, and a reflective layer.

[19] The optical information-recording medium as described in [18], wherein the oxonol dye has a structure represented by the following formula (1'), and the cyanine dye has a structure represented by the following formula (2'):

Formula (1')

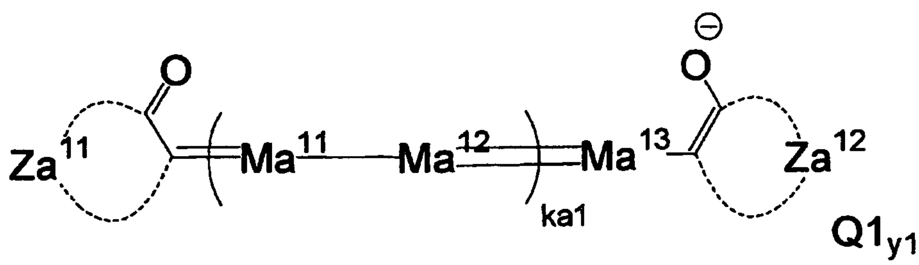

Formula (2')

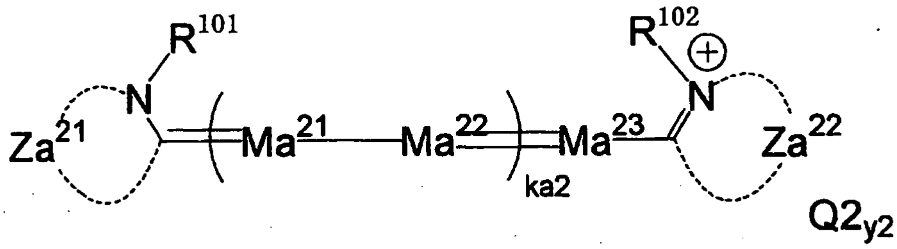

in formula (1'), $Za^{11}$ and $Za^{12}$ each represents an atomic group for forming an acidic nucleus; $Ma^{11}$, $Ma^{12}$ and $Ma^{13}$ each represents a substituted or unsubstituted methine group; ka1 represents an integer of from 0 to 3, and when ka1 represents 2 or more, more than one $Ma^{11}$ and more than one $Ma^{12}$ may be the same or different each; Q1 represents an ion for neutralizing electric charge; and y1 represents a number necessary for the neutralization of electric charge;

in formula (2'), $Za^{21}$ and $Za^{22}$ each represents an atomic group for forming a heterocyclic ring; $Ma^{21}$, $Ma^{22}$ and $Ma^{23}$ each represents a substituted or unsubstituted methine group; ka2 represents an integer of from 0 to 3, and when ka2 represents 2 or more, more than one $Ma^{21}$ and more than one $Ma^{22}$ may be the same or different each; $R^{101}$ and $R^{102}$ each represents a substituent; Q2 represents an ion for neutralizing electric charge; and y2 represents a number necessary for the neutralization of electric charge.

[20] The optical information-recording medium as described in [19], wherein the ion represented by Q1 has a structure represented by the following formula (3'):

Formula (3')

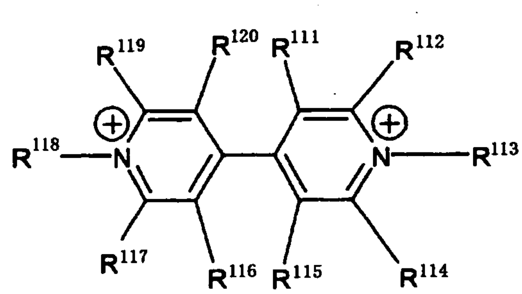

wherein $R^{111}$, $R^{112}$, $R^{114}$, $R^{115}$, $R^{116}$, $R^{117}$, $R^{119}$ and $R^{120}$ each represents a hydrogen atom or a substituent; and $R^{113}$ and $R^{118}$ each represents a substituent.

[21] The optical information-recording medium as described in any of [18] to [20], wherein the cyanine dye has a structure represented by the following formula (4'):

Formula (4')

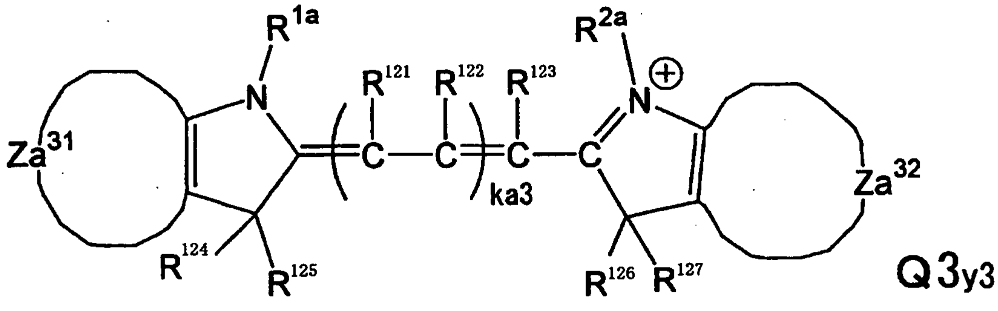

wherein $Za^{31}$ and $Za^{32}$ each represents an atomic group for forming a carbon ring or a heterocyclic ring; $R^{1a}$ and $R^{2a}$ each represents a substituent; $R^{121}$, $R^{122}$, $R^{123}$, $R^{124}$ $R^{125}$, RI26 and $R^{127}$ each represents a hydrogen atom or a substituent; ka3 represents an integer of from 0 to 3, and when ka3 represents 2 or more, more than one $R^{121}$ and more than one $R^{122}$ may be the same or different each; Q3 represents an ion for neutralizing electric charge; and y3 represents a number necessary for the neutralization of electric charge.

[22] The optical information-recording medium as described in any of [18] to [21], wherein the oxonol dye exhibits absorption maximum in a wavelength range of from 500 nm to shorter than 600 nm as an amorphous film, and the cyanine dye exhibits absorption maximum in a wavelength range of from 600 nm to shorter than 750 nm as an amorphous film.

[23] The optical information-recording medium as described in any of [18] to [22], which is (i) a heat-mode type medium having a thickness of 1.2±0.2 mm formed by bonding two laminates each of which comprises a transparent disc-like substrate having a pre-groove of from 0.6 to 0.9 μm track pitch formed thereon and having a diameter of 120±3 mm or 80±3 mm and a thickness of 0.6±0.1 mm and a recording layer containing a dye formed on the surface of the substrate on which the pre-groove is formed in a manner that the two laminates are bonded with the recording layers inside, or (ii) a heat-mode type medium having a thickness of 1.2±0.2 mm formed by bonding: a laminate which comprises a transparent disc-like substrate having a pre-groove of from 0.6 to 0.9 μm track pitch formed thereon and having a diameter of 120±3 mm or 80±3 mm and a thickness of 0.6±0.1 mm and a recording layer containing a dye formed on the surface of the substrate on which the pre-groove is formed; and a disc-like protective layer in a manner that the recording layer is inside.

As a result of intensive studies by the present inventor, the fourth problems can be achieved by the following means.

[24] An optical information-recording medium comprising a recording layer including a dye, wherein the dye in the recording layer is a mixture of an oxonol dye and an azo dye.

[25] The optical information-recording medium as described in [24], wherein the oxonol dye has a structure represented by the following formula (1'), and the azo dye is an azo metal chelate dye comprising an azo dye and a metal ion:

Formula (1')

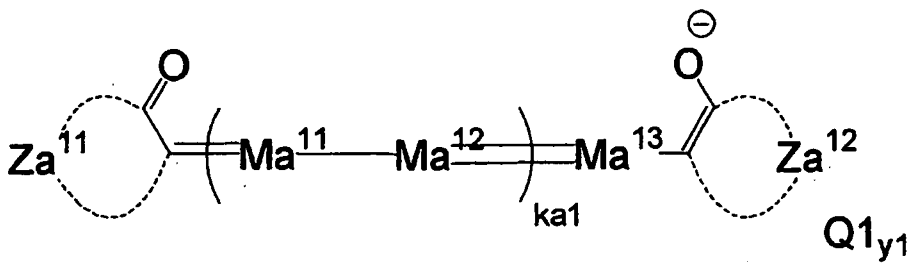

wherein $Za^{11}$ and $Za^{12}$ each represents an atomic group for forming an acidic nucleus; $Ma^{11}$, $Ma^{12}$ and $Ma^{13}$ each represents a substituted or unsubstituted methine group; ka1 represents an integer of from 0 to 3, and when ka1 represents 2 or more, more than one $Ma^{11}$ and more than one $Ma^{12}$ may be the same or different each; Q1 represents an ion for neutralizing electric charge; and y1 represents a number necessary for the neutralization of electric charge.

[26] The optical information-recording medium as described in [25], wherein the ion represented by Q has a structure represented by the following formula (3'):

Formula (3')

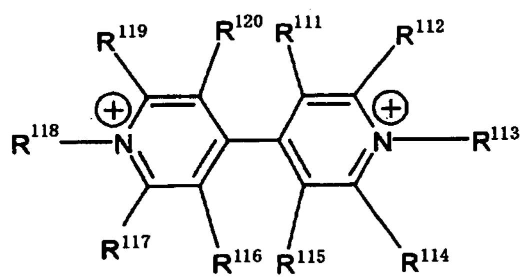

wherein $R^{111}$, $R^{112}$, $R^{114}$, $R^{115}$, $R^{116}$, $R^{117}$, $R^{119}$ and $R^{120}$ each represents a hydrogen atom or a substituent; and $R^{113}$ and $R^{118}$ each represents a substituent.

[27] The optical information-recording medium as described in any of [24] to [26], wherein the azo dye is a dye having a structure represented by the following formula (2"), or an azo metal chelate dye comprising a dye having a structure represented by formula (2") and a metal ion:

Formula (2") A-N=N-B

wherein A represents a univalent group derived from a coupler component, and B represents a univalent group derived from a diazonium salt.

[28] The optical information-recording medium as described in any of [24] to [27], wherein the azo dye is an azo metal chelate dye comprising a dye having a structure represented by the following formula (4") and a metal ion:

Formula (4")

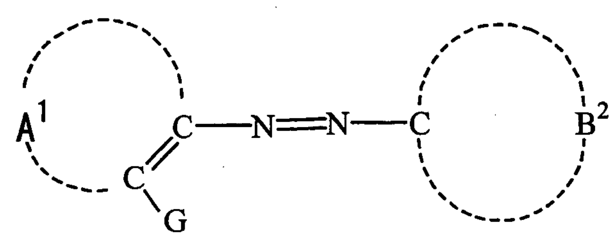

wherein $A^1$ and $B^2$ each represents an atomic group for forming a substituted or unsubstituted aromatic hydrocarbon ring or a substituted or unsubstituted aromatic heterocyclic ring; and G represents a univalent group capable of coordination on the metal ion.

[29] The optical information-recording medium as described in any of [24] to [28], wherein the oxonol dye exhibits absorption maximum in a wavelength range of from 500 nm to shorter than 600 nm as an amorphous film, and the azo dye exhibits absorption maximum in a wavelength range of from 600 nm to shorter than 700 nm as an amorphous film.

[30] The optical information-recording medium as described in [24] which is a heat-mode type medium having a thickness of $1.2\pm0.2$ mm formed by bonding two laminates each of which comprises a transparent disc-like substrate having a pre-groove of from 0.6 to 0.9 $\mu$m track pitch formed thereon and having a diameter of $120\pm3$ mm or $80\pm3$ mm and a thickness of $0.6\pm0.1$ mm and a recording layer containing a dye formed on the surface of the substrate on which the pre-groove is formed in a manner that the two laminates are bonded with the recording layers inside, or the optical information-recording medium as described in [24] to [29] which is a heat-mode type medium having a thickness of $1.2\pm0.2$ mm formed by bonding: a laminate which comprises a transparent disc-like substrate having a pre-groove of from 0.6 to 0.9 $\mu$m track pitch formed thereon and having a diameter of $120\pm3$ mm or $80\pm3$ mm and a thickness of $0.6\pm0.1$ mm and a recording layer containing a dye formed on the surface of the substrate on which the pre-groove is formed; and a disc-like protective layer in a manner that the recording layer is inside.

The invention can provide an optical recording medium that is high sensitivity throughout low speed recording to high speed recording, and having good recording characteristics.

By mixing two or more bis-oxonol dyes or by mixing two or more bis-oxonol dyes with a dye having a specific structure, the solubility of the dyes at the time of preparation of a dye coating solution for making an optical information-recording medium is heightened, solution ageing stability of a coating solution is enhanced, coating suitability is enhanced to improve smoothness of the coating formed, and a deposition problem of dyes in an optical recording medium is solved. In addition, the optical recording media obtained has improved light fastness, moisture resistance and heat resistance. Further, the foregoing dye mixtures have no deleterious effects on record/playback performances of the optical information-recording medium made. Furthermore, the optical information-recording medium made has satisfactory recording properties and offers excellent sensitivity and jitter characteristics even under high-speed recording.

According to the invention using a dye of a specific structure, modulation degree enhancement resulting from improvement in real part n of the complex refractive index is achieved as excellent performances, including jitter and storage stability characteristics, of a bis-oxonol dye in high-speed recording are maintained. In addition, by mixing a dye according to the invention with a bis-oxonol dye, the solubility of dyes in a dye coating solution used for producing an optical information-recording medium is heightened, the coating solution prepared has high solution ageing stability and

improved coating suitability, and the deposition problem of dyes in a recording medium is solved. Further, the optical recording medium obtained is increased in resistance to moisture and heat. Moreover, the dye mixture according to the invention has no deleterious effects on record/playback performances of the optical information-recording medium produced.

The invention can provide a high sensitivity optical recording medium suffering no degradations in light fastness and resistance to moisture and heat, avoiding damage to stability in a coating solution.

According to the invention, by the use of a mixture of oxonol dyes, more preferably bis-oxonol dyes, with azo dyes, the solubility of dyes in a coating solution can be improved, the solution aging stability of a coating solution can be improved, the coating suitability can be improved, thus, the invention can provide an information-recording medium free from the precipitation of dyes in the recording medium. Further, the invention can provide dyes capable of increasing the sensitivity of an optical recording medium, suffering no degradations in light fastness and resistance to moisture and heat, and avoiding damage to stability in a coating solution.

**Brief Description of the Drawings**

Fig. 1 is a typical drawing showing the layer constitution of the optical recording medium in the invention.

[Description of Reference Numerals]

10: Optical recording medium
12: First substrate
14: Recording layer
16: Reflective layer
18: Protective layer
20: Adhesive layer
22: Second substrate

**Best Mode For Carrying Out the Invention**

The invention is described below in detail. In the specification and claims, "a low numerical value" to "a high numerical value" means "a low numerical value" or more and "a high numerical value" or less.

The optical recording medium in the invention comprises a substrate having thereon a recording layer containing at least two kinds of dye A and dye B, and dye A and dye B satisfy the following conditions (1) and (2):

(1) the starting temperature of decomposition is from 150 to 250˚C,
(2) refractive index n (A) and extinction coefficient k (A) of dye A at the wavelength of recording laser ray, and refractive index n (B) and extinction coefficient k (B) of dye B at the same wavelength satisfy the following expressions:

$$n(B)/n(A) > 0.7$$

$$k(B)/k(A) > 10.$$

The optical recording medium of the invention is as one mode thereof a direct read after write optical recording medium capable of recording or reproducing information of, e.g., DVD-R. The optical recording medium of the invention takes a layer structure similar to that of DVD-R, and can also be applied to HD DVD-R for recording or reproducing with blue-violet laser rays.

An optical recording medium such as DVD-R comprises two substrates bonded (a first substrate, a second substrate), and an image-recording layer is formed on at least first substrate. In addition, it is preferred that a reflective layer and a protective layer are arbitrarily formed. The second substrate may also take a structure such that a recording layer and a light reflecting layer are formed in order, similarly to the first substrate, or may take a structure not forming a layer as a protective substrate (a dummy substrate).

An example of the layer structure of such a DVD-R type optical recording medium is shown in Fig. 1. In optical recording medium 10 shown in Fig. 1, recording layer 14, reflective layer 16 and protective layer 18 are laminated on first substrate 12, and protective layer 18 and second substrate 22 of the laminate are stuck facing each other with adhesive layer 20 between.

The substrate and each layer of the optical recording medium of the invention are described below taking optical recording medium such as DVD-R as an example. Incidentally, layer structures and materials here are mere exemplifications, and the invention is not limited thereto.

[Substrate]

As the substrate, various kinds of materials so far been used as the substrates of optical recording media can be arbitrarily used.

As specific examples, glass; polycarbonate; acrylic resins, e.g., polymethyl methacrylate; vinyl chloride resins, e.g., polyvinyl chloride and vinyl chloride copolymers; epoxy resins; amorphous polyolefin; polyester; and metals, e.g., aluminum can be exemplified, and these materials may be used in combination, if necessary.

Of the above materials, from the points of moisture resistance, dimensional stability and inexpensiveness, polycarbonate and amorphous polyolefin are preferred, and polycarbonate is especially preferred. The thickness of the substrate is preferably from 0.5 to 1.4 mm.

A guide groove for tracking or asperity representing information such as address signals (groove, land) is formed helically or in a state of concentric circle on the substrate. The track pitch of the groove is preferably from 0.4 to 0.9 μm, more preferably from 0.45 to 0.85 μm, and still more preferably from 0.50 to 0.80 μm. The depth of the groove (groove depth) is preferably from 50 to 150 nm, more preferably from 85 to 135 nm, and still more preferably from 100 to 130 nm. The half value width of the groove is preferably from 20 to 400 nm, more preferably from 280 to 380 nm, and still more preferably from 250 to 350 nm.

In general, land pre-pits (LPP) arranged in accordance with the prescribed rule are formed in the region called land between groove and groove. By detecting the position of LLP, acquisition of address information and positioning at the time of data recording are performed.

An undercoat layer may be provided on the side of the substrate surface on which a recording layer is provided for the purpose of the improvements of flatness and adhesion, and the prevention of deterioration of a recording layer. The examples of the materials for forming the undercoat layer include macromolecule substances, e.g., polymethyl methacrylate, acrylic acid-methacrylic acid copolymers, styrene-maleic acid anhydride copolymers, polyvinyl alcohol, N-methylolacrylamide, styrene-vinyltoluene copolymers, chlorosulfonated polyethylene, nitrocellulose, polyvinyl chloride, chlorinated polyolefin, polyester, polyimide, vinyl acetate-vinyl chloride copolymers, ethylene-vinyl acetate copolymers, polyethylene, polypropylene and polycarbonate; and surface modifiers, e.g., silane coupling agents. In forming the undercoat layer, a coating solution is prepared by dissolving or dispersing the above substance in an appropriate solvent, and then coating the resulting coating solution on the surface of a substrate in accordance with a coating method, e.g., spin coating, dip coating or extrusion coating. The thickness of the undercoat layer is generally in the range of from 0.005 to 20 μm, and preferably in the range of from 0.01 to 10 μm.

[Recording layer]

In the invention, a recording layer contains at least two kinds of dye A and dye B, and dye A and dye B satisfy the following conditions (1) and (2):

(1) the starting temperature of decomposition is from 150 to 250°C,
(2) refractive index n (A) and extinction coefficient k (A) of dye A at the wavelength of recording laser ray, and refractive index n (B) and extinction coefficient k (B) of dye B at the same wavelength satisfy the following expressions:

$$n(B)/n(A) > 0.7$$

$$k(B)/k(A) > 10.$$

In an optical recording medium, for making high speed recording possible, as described above, it is necessary to increase recording sensitivity of a recording medium, and the present inventor has found that it is effective to control the light absorption characteristics of a recording layer and the thermal decomposition characteristics of a dye as that

means. That is, as to the light absorption characteristics, it is effective to increase light absorption at the laser wavelength of a recorder (in the case of DVD-R, in the vicinity of 660 nm), so that the invention adopted a method of the addition of a dye having great light absorption in the vicinity of laser wavelength. With the method alone, however, recording sensitivity is improved on the one hand, the modulation factor at low speed recording lowers on the other hand due to reductions in reflectance and refractive index. Accordingly, the present inventor paid attention to the thermal decomposition characteristics of dyes. By satisfying condition (1), that is, by the use of two kinds of dyes having a decomposition starting temperature of from 150 to 250˚C, and at the same time, by satisfying condition (2) relating to the refractive indexes and extinction coefficients of the two dyes, high sensitivity throughout low speed recording to high speed recording and good recording characteristics can be realized.

The use of dye A and dye B both having a decomposition starting temperature of from 150 to 250˚C as in condition (1) can contribute to the increase in sensitivity. When the starting temperature of decomposition is less than 150˚C, recording marks are irregular, jitter worsens, and the storage stability at high temperature and high humidity lowers. While when the temperature exceeds 250˚C, sufficient recording sensitivity cannot be obtained. The decomposition starting temperature is preferably from 170 to 230˚C, and more preferably from 180 to 220˚C.

Condition (2) is a condition relating to the absorption characteristics of dyes. By satisfying condition (2), good absorption characteristics can be obtained, which contributes to excellent recording characteristics of the recording layer.

In condition (2), by satisfying n (B)/n (A) > 0.7, the modulation factor at low speed recording becomes high, so that good low speed recording characteristics can be obtained. When n (B)/n (A) is 0.7 or less, the modulation factor at low speed recording is low, so that sufficient characteristics cannot be obtained. The greatest lower bound of n (B)/n (A) is preferably 0.72 or more, and more preferably 0.74 or more. The least upper bound of n (B)/n (A) is 1.00.

Further, in condition (2), by satisfying k (B)/k (A) > 10, sufficient recording sensitivity at high speed recording can be obtained. When k (B)/k (A) is 10 or less, sufficient recording sensitivity at high speed recording cannot be obtained, which causes high error rate. The greatest lower bound of k (B)/k (A) is preferably 15 or more, and more preferably 20 or more. With respect to the least upper bound of k (B)/k (A), the least upper bound is not present, since there is a case where denominator k (A) is almost 0.

The examples of dyes for use in a recording layer include azo dyes (including metal chelate azo), oxonol dyes, cyanine dyes, phthalocyanine dyes, imidazoquinoxaline series dyes, pyrylium series, thiopyrylium series dyes, azulenium series dyes, squalylium series dyes, metal complex salt series dyes ofNi or Cr, naphthoquinone series dyes, anthraquinone series dyes, indophenol series dyes, indoaniline series dyes, triphenylmethane series dyes, merocyanine series dyes, oxonol series dyes, aminium series·diimmonium series dyes, and nitroso compounds. Of these dyes, oxonol dyes, cyanine dyes, phthalocyanine dyes, azulenium series dyes, squalylium series dyes, and imidazoquinoxaline series dyes are preferred, and oxonol dyes are especially preferred.

As the combinations of dye A and dye B, the following cases are preferably exemplified:

A case where dye A is an oxonol dye, and dye B is a cyanine dye;
A case where dye A is an oxonol dye, and dye B is an azo dye;
A case where dye A is an oxonol dye, and dye B is an oxonol dye;
A case where dye A is an oxonol dye, and dye B is a phthalocyanine dye;
A case where dye A is a cyanine dye, and dye B is a cyanine dye;
A case where dye A is a cyanine dye, and dye B is an azo dye;
A case where dye A is a cyanine dye, and dye B is a phthalocyanine dye;
A case where dye A is a cyanine dye, and dye B is an oxonol dye;
A case where dye A is an azo dye, and dye B is a phthalocyanine dye;
A case where dye A is an azo dye, and dye B is a cyanine dye;
A case where dye A is an azo dye, and dye B is an oxonol dye; and
A case where dye A is an azo dye, and dye B is an azo dye.

Of the above combinations of dye A and dye B,
A case where dye A is an oxonol dye, and dye B is a cyanine dye;
A case where dye A is an oxonol dye, and dye B is an azo dye;
A case where dye A is an oxonol dye, and dye B is an oxonol dye; and
A case where dye A is an oxonol dye, and dye B is a phthalocyanine dye, are more preferred.

Further, in the case where dye A is a cyanine dye and dye B is a cyanine dye, it is more preferred that dye A is a cyanine dye having three methine chains and dye B is a cyanine dye having five methine chains. Here, it is preferred that the cyanine dye having three methine chains and the cyanine dye having five methine chains are respectively represented by the later-described formula (2'). As the phthalocyanine dyes, the phthalocyanine compounds disclosed in JP-A-4-15263 are preferred.

In the invention, it is preferred to select dye A and Dye B so that the cationic part of dye A and the cationic part

of dye B, or the anionic part of dye A and the anionic part of dye B are the same. By the selection and use of dye A and Dye B in this manner, the preservation stability of recording layer becomes good.

In these dye A and dye B, as common anionic parts, e.g., organic anions such as the anionic parts of oxonol dyes, naphthalenedisulfonic acid, and inorganic anions, e.g., $ClO_4$-, $PF_6^-$ and $BF_4^-$ are exemplified, and the anionic parts of oxonol dyes are preferred above all.

In dye A and dye B, as common cationic parts, e.g., organic cations such as quaternary ammonium ion and bipyridinium cation, inorganic cations such as $Na^+$, $K^+$ and $Ca^+$, and metal chelates such as metal dithiolate complex are exemplified, and bipyridinium cation is especially preferred.

The above cationic part preferably has a structure represented by the following formula from the points of light fastness, preservation stability against humidity and heat, and the stability of the material.

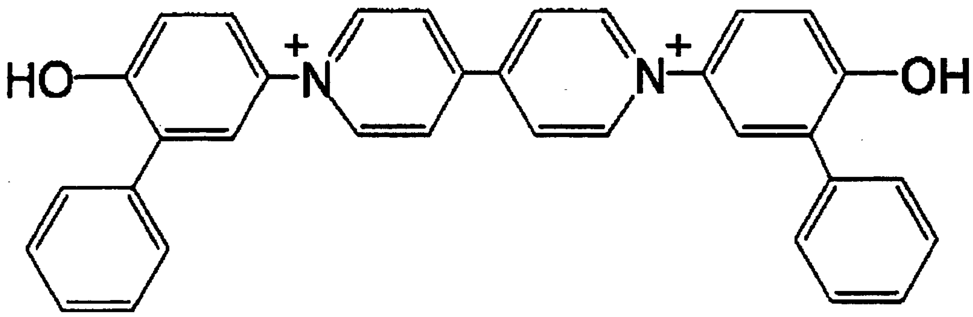

As the content ratio of dye A and dye B in a recording layer, the mass ratio of dye B to dye A is preferably from 1 to 10%, more preferably from 2 to 9%, and still more preferably from 3 to 7%. By making the mass ratio of dye B to dye A from 1 to 10%, heat interference, which causes the deterioration of recording signal quality at high speed recording, can be preferably reduced.

On the other hand, as described above, oxonol dyes are preferred as dye A, and of the oxonol dyes, a compound represented by the following formula (1) is preferred.

Formula (1)

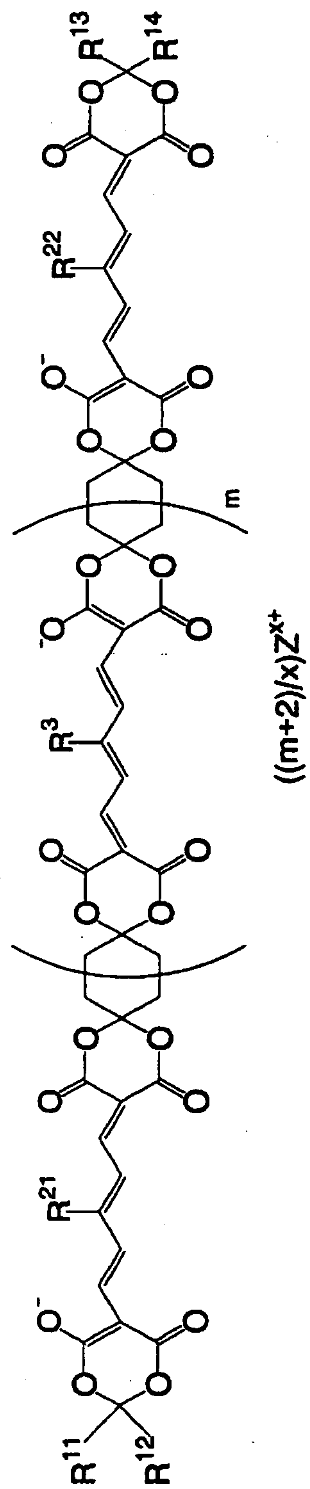

In formula (1), $R^{11}$, $R^{12}$, $R^{13}$ and $R^{14}$ each represents any of a hydrogen atom, a substituted or unsubstituted alkyl group, a substituted or unsubstituted aryl group, and a substituted or unsubstituted heterocyclic group; $R^{21}$, $R^{22}$

and $R^3$ each represents any of a hydrogen atom, a substituted or unsubstituted alkyl group, a substituted or unsubstituted alkoxyl group, a substituted or unsubstituted aryl group, a substituted or unsubstituted aryloxy group, a substituted or unsubstituted heterocyclic group, a halogen atom, a carboxyl group, a substituted or unsubstituted alkoxycarbonyl group, a cyano group, a substituted or unsubstituted acyl group, a substituted or unsubstituted carbamoyl group, an amino group, a substituted amino group, a sulfo group, a hydroxyl group, a nitro group, a substituted or unsubstituted alkylsulfonyl- amino group, a substituted or unsubstituted arylsulfonylamino group, a substituted or unsubstituted carbamoylamino group, a substituted or unsubstituted alkylsulfonyl group, a substituted or unsubstituted arylsulfonyl group, a substituted or unsubstituted alkylsulfinyl group, a substituted or unsubstituted arylsulfinyl group, and a substituted or unsubstituted sulfamoyl group; m represents an integer of 0 or more, and when m is 2 or more, a plurality of $R^3$ may be the same or different; $Z^{x+}$ represents a cation; and x represents an integer of 1 or more.

In formula (1), $R^{11}$, $R^{12}$, $R^{13}$ and $R^{14}$ each represents any of a hydrogen atom, a substituted or unsubstituted alkyl group, a substituted or unsubstituted aryl group, and a substituted or unsubstituted heterocyclic group. As the substituted or unsubstituted alkyl groups represented by $R^{11}$, $R^{12}$, $R^{13}$ and $R^{14}$, alkyl groups having from 1 to 20 carbon atoms (e.g., methyl, ethyl, propyl, butyl, 1-butyl, t-butyl, i-amyl, cyclopropyl, cyclohexyl, benzyl, phenethyl) are exemplified. When $R^{11}$, $R^{12}$, $R^{13}$ and $R^{14}$ each represents an alkyl group, these alkyl groups may be linked to form a carbon ring (e.g., cyclopropyl, cyclobutyl, cyclopentyl, cyclohexyl, 2-methylcyclohexyl, cycloheptyl, cyclooctyl, etc.), or a heterocyclic ring (e.g., piperidyl, chromanyl, morpholyl, etc.). As the alkyl group represented by $R^{11}$, $R^{12}$, $R^{13}$ and $R^{14}$, a chain alkyl group or a cyclic alkyl group having from 1 to 8 carbon atoms is preferred, and a chain alkyl group (straight chain or branched chain) having from 1 to 5 carbon atoms, a cyclic alkyl group having from 1 to 8 carbon atoms formed by $R^{11}$ and $R^{12}$, and $R^{13}$ and $R^{14}$ (preferably a cyclohexyl group), and a substituted alkyl group having from 1 to 20 carbon atoms (e.g., benzyl, phenethyl) are most preferred.

As the substituted or unsubstituted aryl groups represented by $R^{11}$, $R^{12}$, $R^{13}$ and $R^{14}$ in formula (1), aryl groups having from 6 to 20 carbon atoms (e.g., phenyl, naphthyl) are exemplified. As the aryl groups represented by $R^{11}$, $R^{12}$, $R^{13}$ and $R^{14}$, aryl groups having from 6 to 10 carbon atoms are preferred.

The substituted or unsubstituted heterocyclic groups represented by $R^{11}$, $R^{12}$, $R^{13}$ and $R^{14}$ in formula (1) are 5- or 6-membered saturated or unsaturated heterocyclic group constituted with a carbon atom, a nitrogen atom, an oxygen atom or a sulfur atom, e.g., a pyridyl group, a pyrimidyl group, a pyridazyl group, a piperidyl group, a triazyl group, a pyrrolyl group, an imidazolyl group, a triazolyl group, a furanyl group, a thiophenyl group, a thiazolyl group, an oxazolyl group, an isothiazolyl group, and an isooxazolyl group are exemplified. These groups may be benzo-condensed rings (e.g., a quinolyl group, a benzimidazolyl group, a benzo- thiazolyl group, a benzoxazolyl group). The substituted or unsubstituted heterocyclic groups represented by $R^{11}$, $R^{12}$, $R^{13}$ and $R^{14}$ are preferably substituted or unsubstituted heterocyclic groups having from 6 to 10 carbon atoms.

As the substituents of the substituted or unsubstituted alkyl groups represented by $R^{11}$, $R^{12}$, $R^{13}$ and $R^{14}$, the substituted or unsubstituted aryl groups, and the substituted or unsubstituted heterocyclic groups, the following substituent group S is exemplified.

Substituents S include an alkyl group having from 1 to 20 carbon atoms (e.g., methyl, ethyl, propyl, carboxymethyl, ethoxycarbonylmethyl), an aralkyl group having from 7 to 20 carbon atoms (e.g., benzyl, phenethyl), an alkoxyl group having from 1 to 8 carbon atoms (e.g., methoxy, ethoxy), an aryl group having from 6 to 20 carbon atoms (e.g., phenyl, naphthyl), an aryloxy group having from 6 to 20 carbon atoms (e.g., phenoxy, naphthoxy), a heterocyclic group (e.g., pyridyl, pyrimidyl, pyridazyl, benzimidazolyl, benzothiazolyl, benzoxazolyl, 2-pyrrolidinon-1-yl, 2-piperidon-1-yl, 2,4-dioxy- imidazolizin-3-yl, 2,4-dioxyoxazolizin-3-yl, succinimide, phthalimide, maleimide), a halogen atom (e.g., fluorine, chlorine, bromine, iodine), a carboxyl group, an alkoxycarbonyl group having from 2 to 10 carbon atoms (e.g., methoxycarbonyl, ethoxycarbonyl), a cyano group, an acyl group having from 2 to 10 carbon atoms (e.g., acetyl, pivaloyl), a carbamoyl group having from 1 to 10 carbon atoms (e.g., carbamoyl, methylcarbamoyl, morpholinocarbamoyl), an amino group, a substituted amino group having from 1 to 20 carbon atoms (e.g., dimethylamino, diethylamino, bis (methylsulfonylethyl)amino, N-ethyl-N'-sulfoethylamino), a sulfo group, a hydroxyl group, a nitro group, an alkylsulfonylamino group having from 1 to 10 carbon atoms (e.g., methylsulfonyl- amino), a carbamoylamino group having from 1 to 10 carbon atoms (e.g., carbamoylamino, methylcarbamoylamino), a sulfonyl group having from 1 to 10 carbon atoms (e.g., methanesulfonyl, ethanesulfonyl), a sulfinyl group having from 1 to 10 carbon atoms (e.g., methanesulfinyl), and a sulfamoyl group having from 0 to 10 carbon atoms (e.g., sulfamoyl, methanesulfamoyl). In the case of a carboxyl group and a sulfo group, they may be the form of a salt.

$R^{21}$, $R^{22}$ and $R^3$ in formula (1) each represents any of a hydrogen atom, a substituted or unsubstituted alkyl group, a substituted or unsubstituted alkoxyl group, a substituted or unsubstituted aryl group, a substituted or unsubstituted aryloxy group, a substituted or unsubstituted heterocyclic group, a halogen atom, a carboxyl group, a substituted or unsubstituted alkoxycarbonyl group, a cyano group, a substituted or unsubstituted acyl group, a substituted or unsubstituted carbamoyl group, an amino group, a substituted amino group, a sulfo group, a hydroxyl group, a nitro group, a substituted or unsubstituted alkylsulfonylamino group, a substituted or unsubstituted carbamoylamino group, a substituted or unsubstituted alkylsulfonyl group, a substituted or unsubstituted arylsulfonyl group, a substituted or unsubstituted sulfinyl group, and a substituted or unsubstituted sulfamoyl group. $R^{21}$, $R^{22}$ and $R^3$ each preferably represents a hydrogen atom, a substituted or unsubstituted alkyl group having from 1 to 20 carbon atoms, a substituted or unsubstituted heterocyclic group having from 2 to 20 carbon atoms, a substituted or unsubstituted alkoxyl group having from 1 to 20 carbon atoms, a substituted or unsubstituted aryl group having from 6 to 20 carbon atoms, or a halogen atom, more preferably a hydrogen atom, a substituted or unsubstituted alkyl group having from 1 to 10 carbon atoms, a substituted or unsubstituted alkoxyl group having from 1 to 10 carbon atoms, a substituted or unsubstituted heterocyclic group having from 2 to 10 carbon atoms, or a halogen atom, and most preferably a hydrogen atom, an unsubstituted alkyl group having from 1 to 5 carbon atoms, an unsubstituted alkoxyl group having from 1 to 5 carbon atoms, a substituted or unsubstituted heterocyclic group having from 2 to 6 carbon atoms, or a halogen atom. $R^{21}$, $R^{22}$ and $R^3$ may further have a substituent, and as the substituents, the above substituent group S is exemplified.

It is preferred that m is 0 and both $R^{21}$ and $R^{22}$ represent a hydrogen atom. It is also preferred that m is 1 and all of $R^{21}$, $R^{22}$ and $R^{23}$ represent a hydrogen atom.

In formula (1), m represents an integer of 0 or more, preferably an integer of from 0 to 5 (0 or more and 5 or less), more preferably an integer of from 0 to 3, and especially preferably an integer of from 0 to 2.

In formula (1), when m is 2 or more, a plurality of $R^3$ may be the same or different, and each represents a hydrogen atom or any of the above substituents.

In formula (1), $Z^{x+}$ represents a cation, and x represents an integer of 1 or more.

As the cations represented by $Z^{x+}$, quaternary ammonium ion is preferred, and 4,4'-bipyridinium cation represented by formula (I-4) in JP-A-2000-52658 and 4,4'-bipyridinium cation disclosed in JP-A-2002-59652 are more preferred. In formula (I), x is preferably 1 or 2.

The specific examples of preferred compounds represented by formula (1) are shown below, but the invention is not limited thereto.

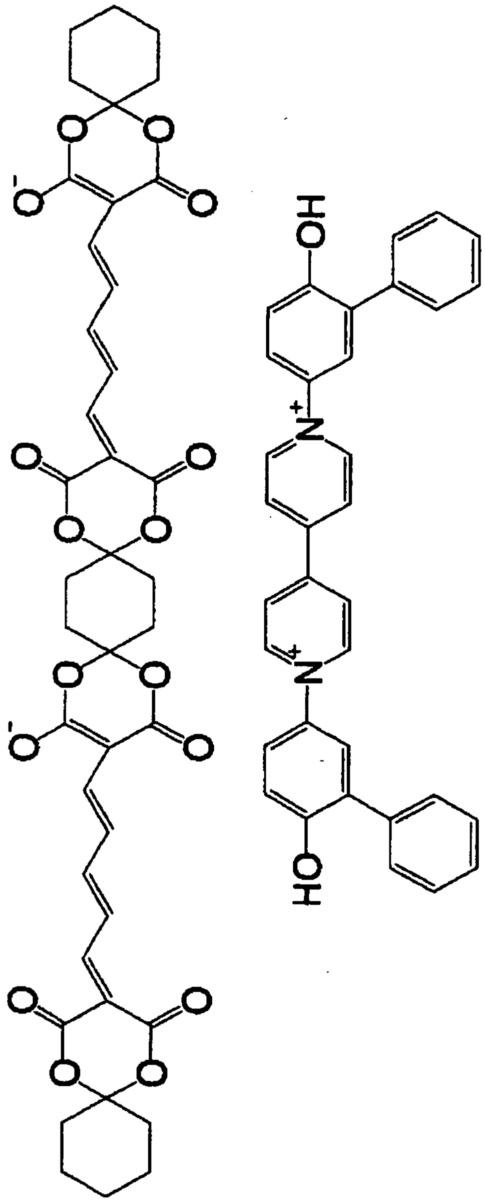

(1)

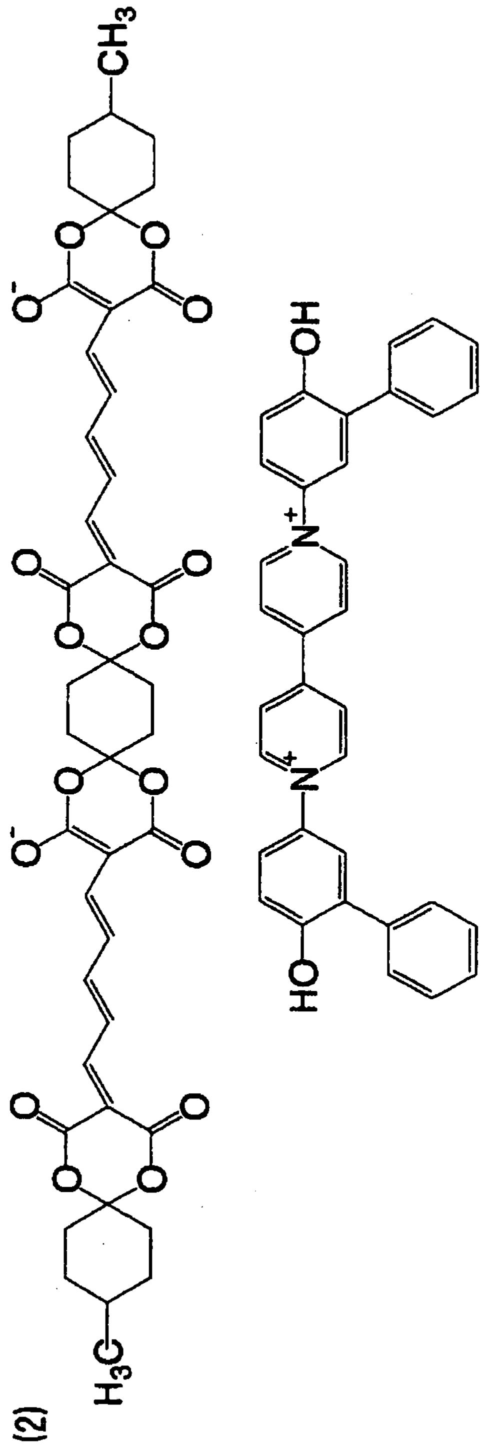

(2)

(3)

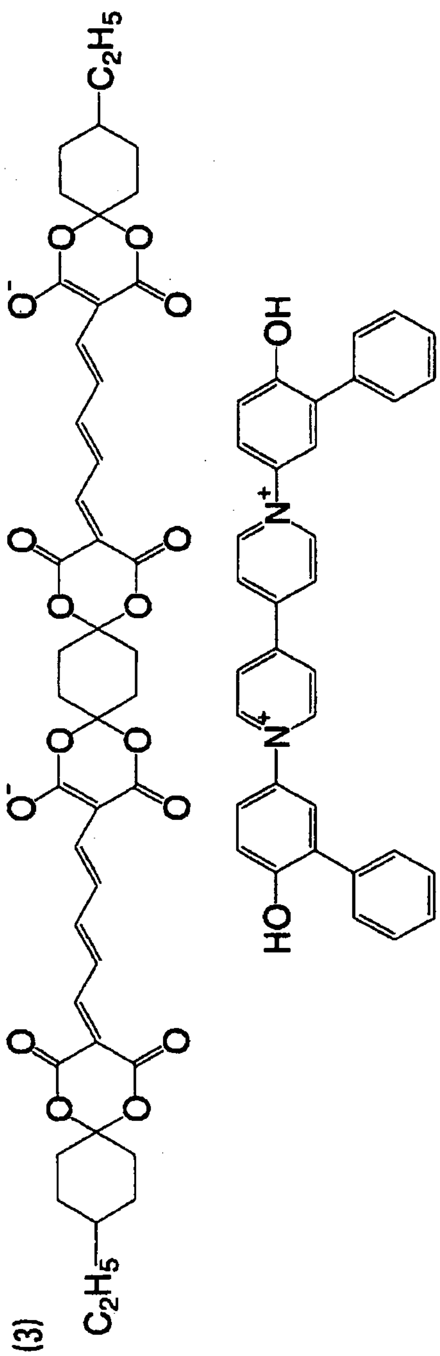

(4)

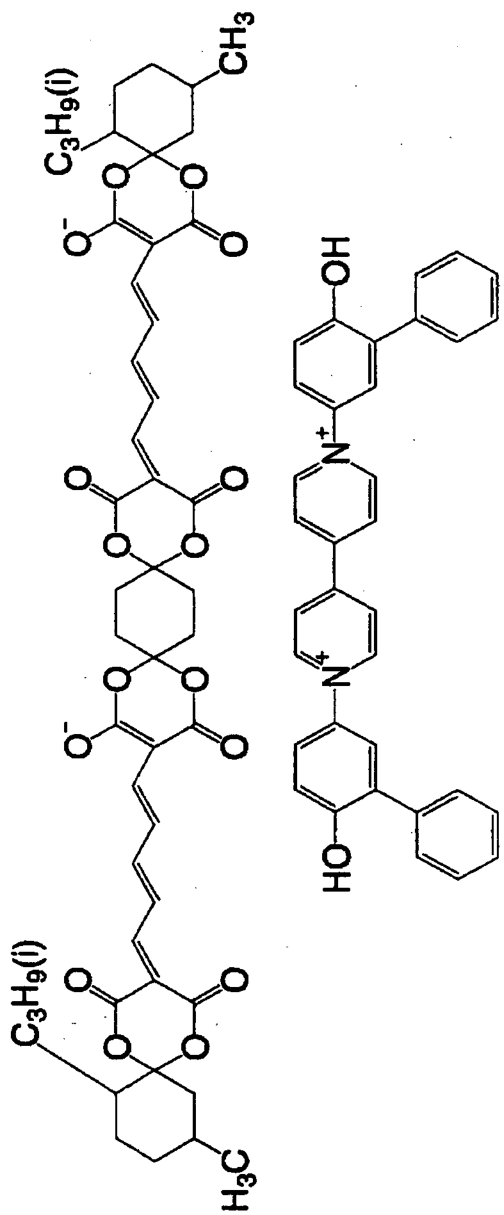

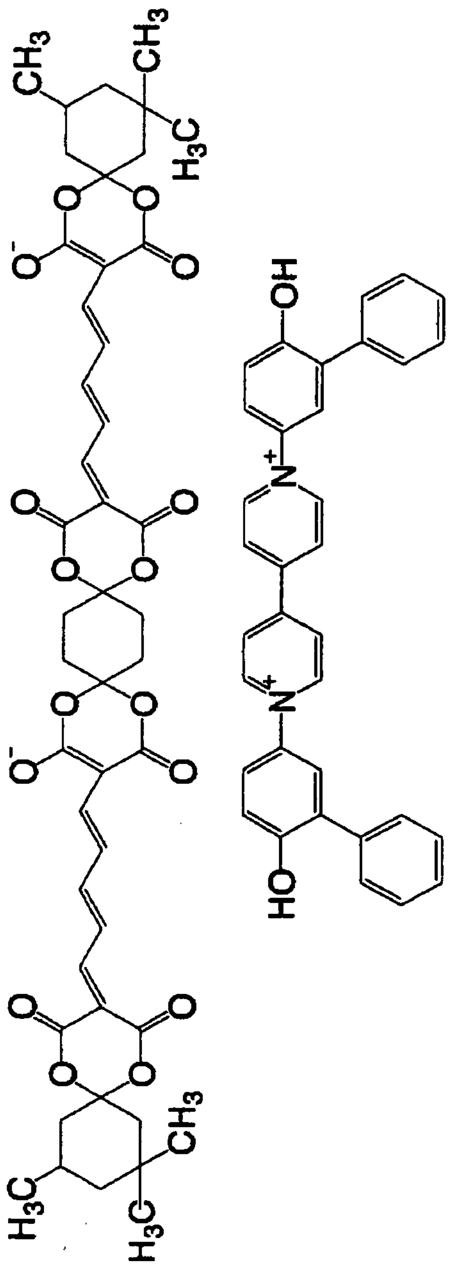

(5)

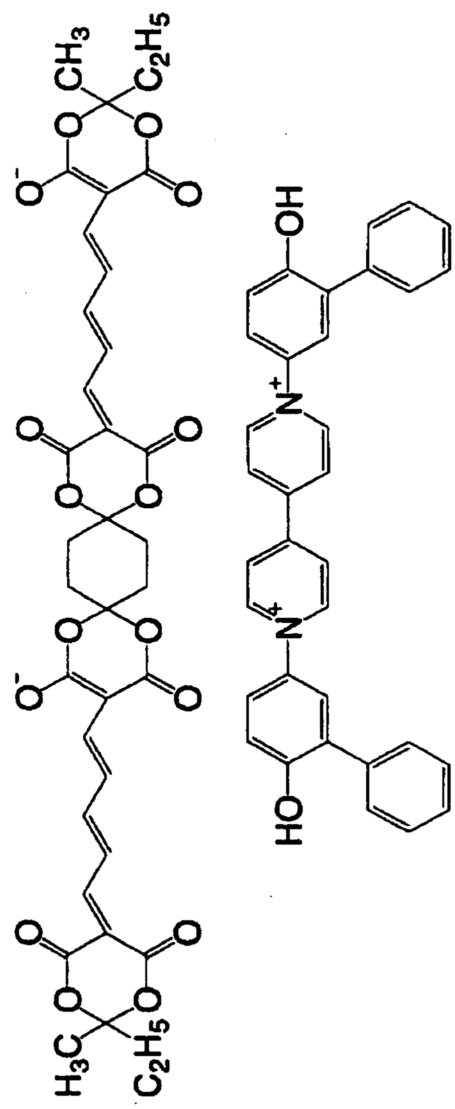

(6)

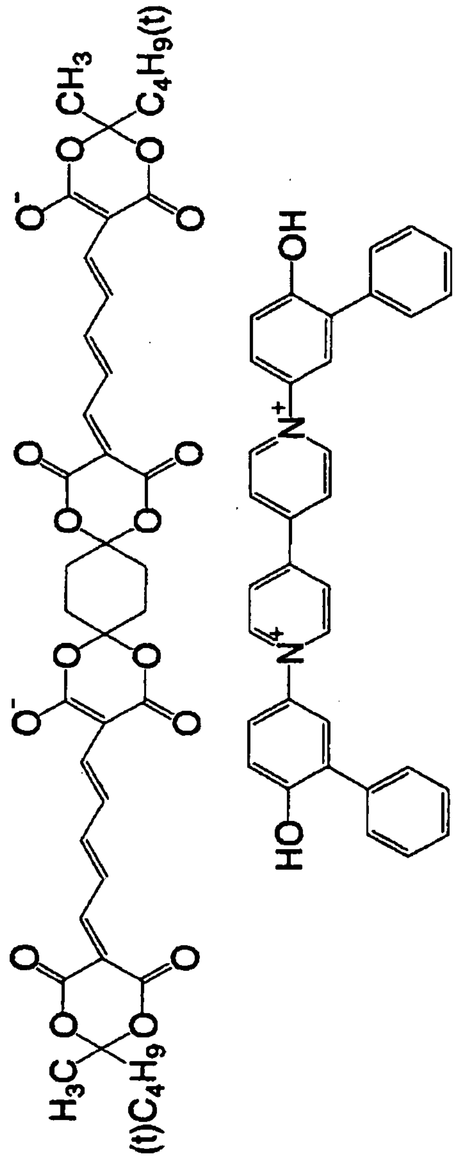

(7)

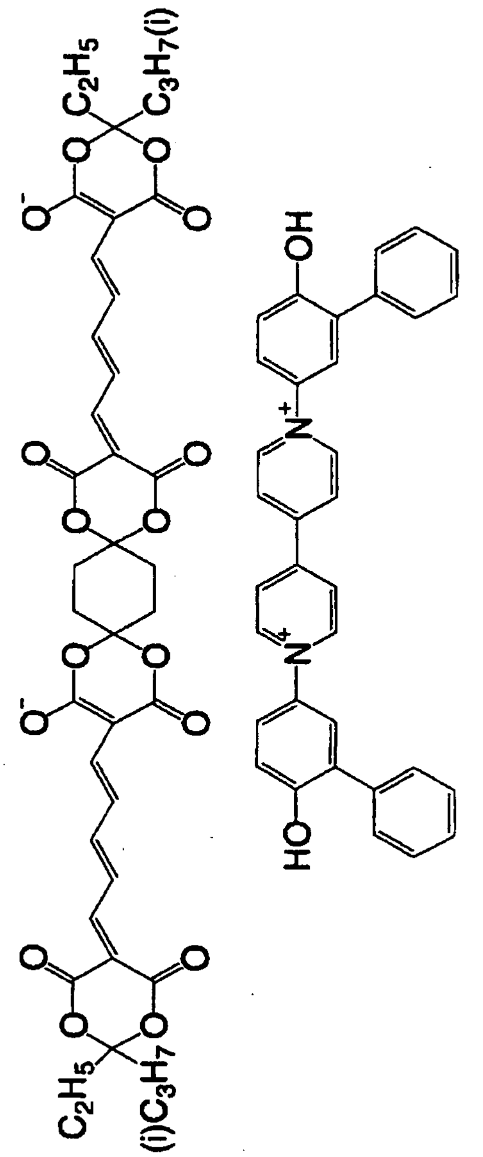

(8)

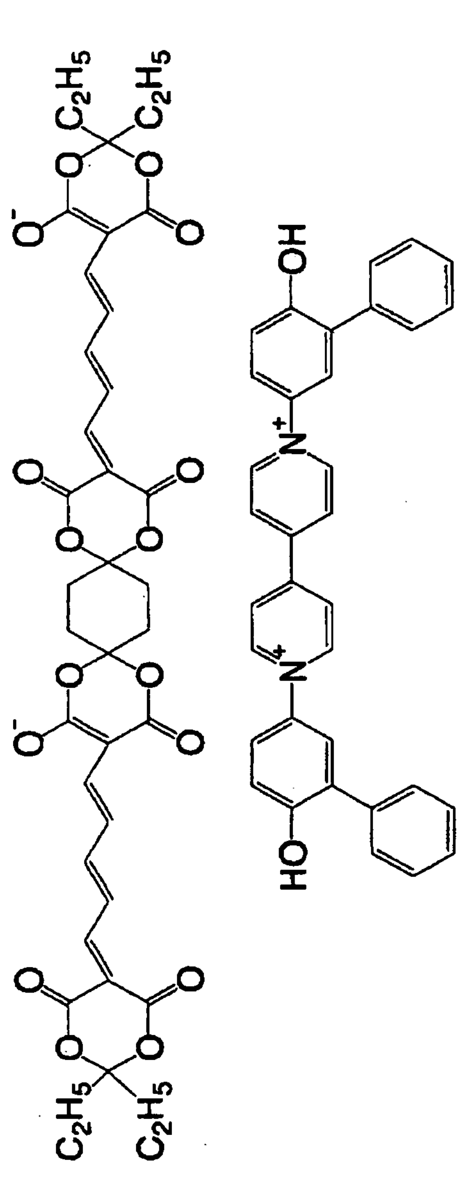

(9)

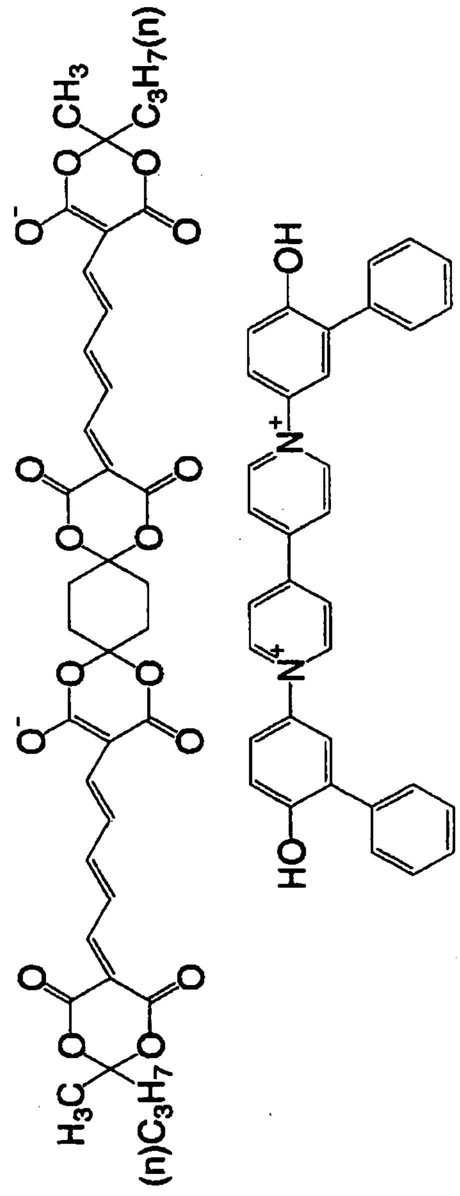

(10)

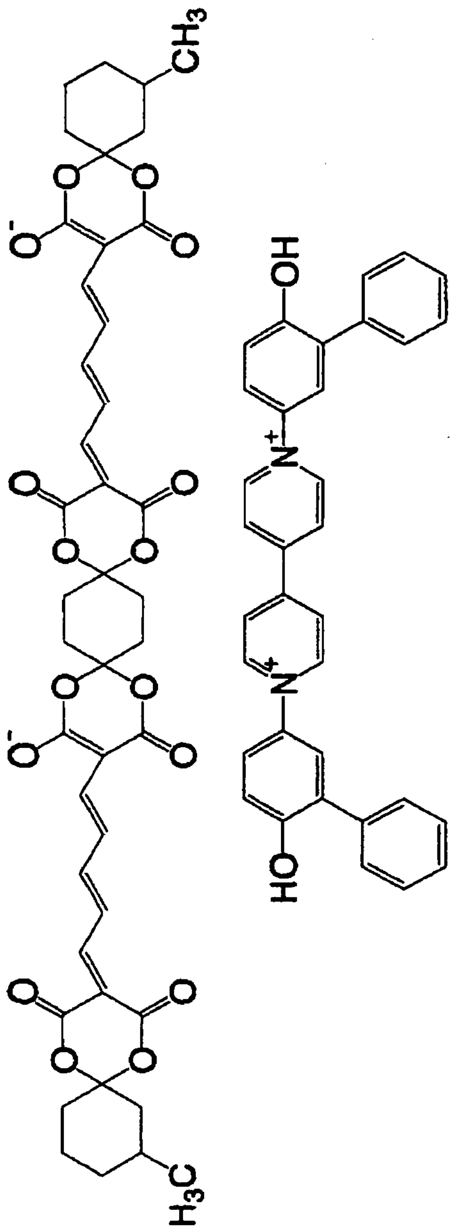

(11)

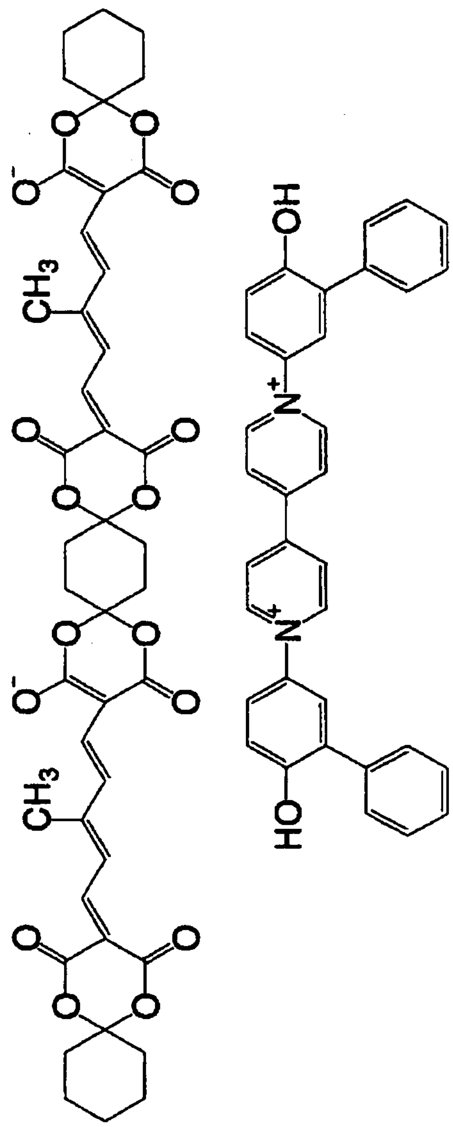

(12)

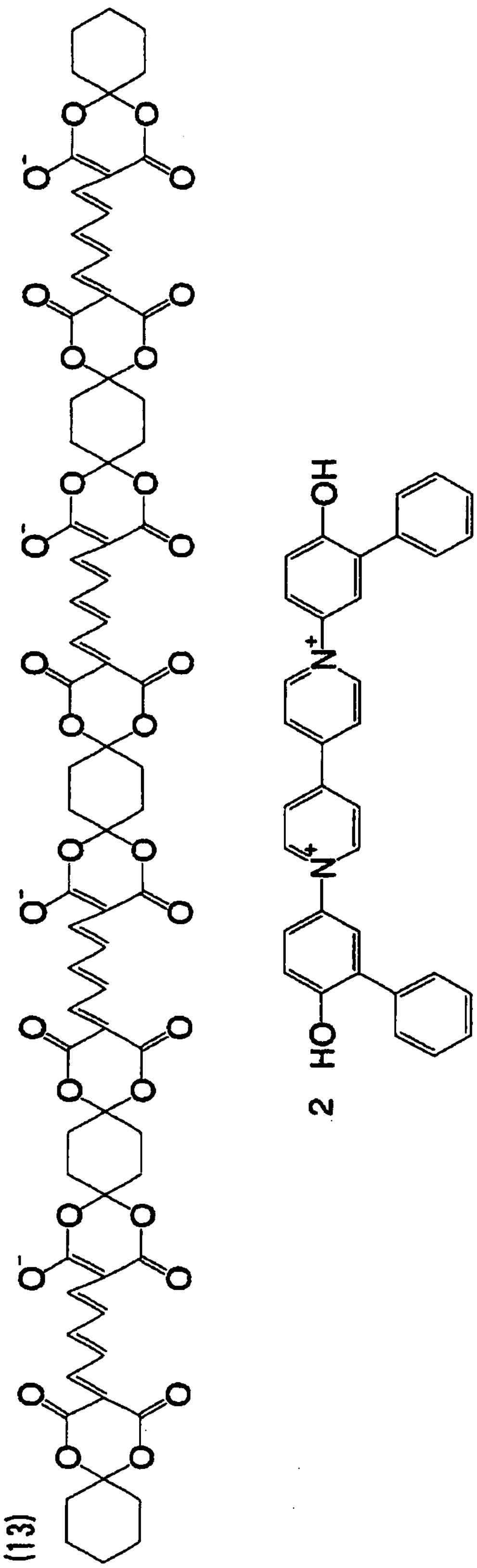

(13)

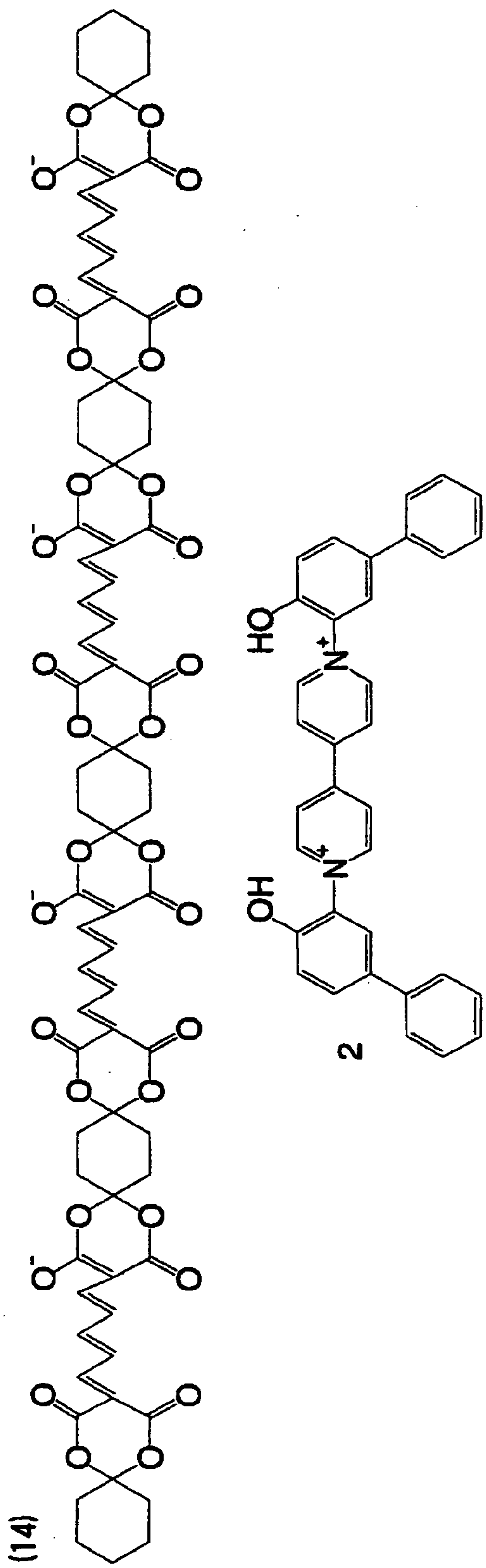

(14)

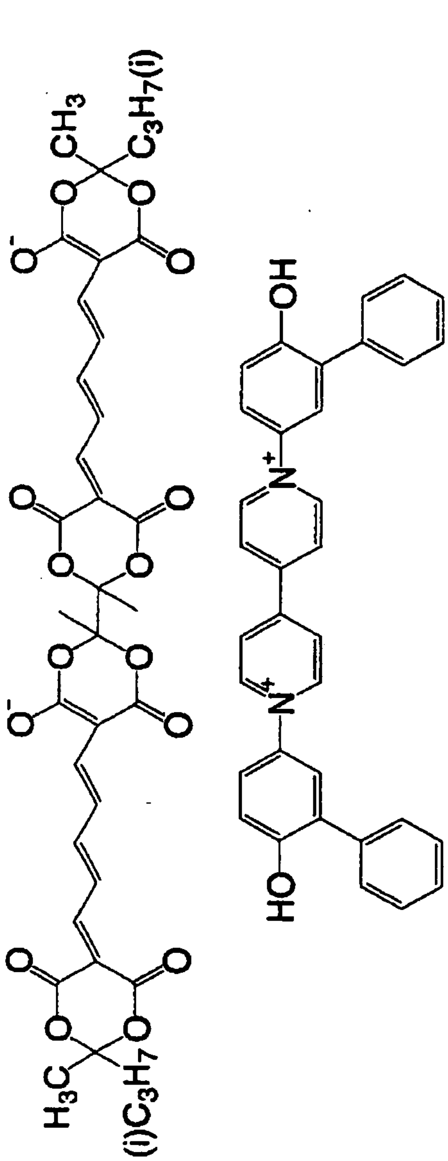

(15)

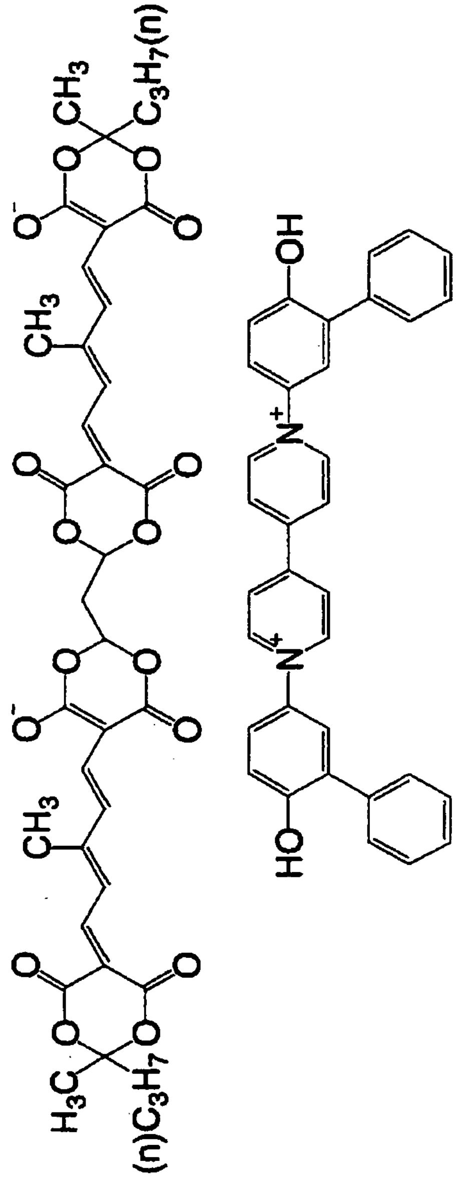

(16)

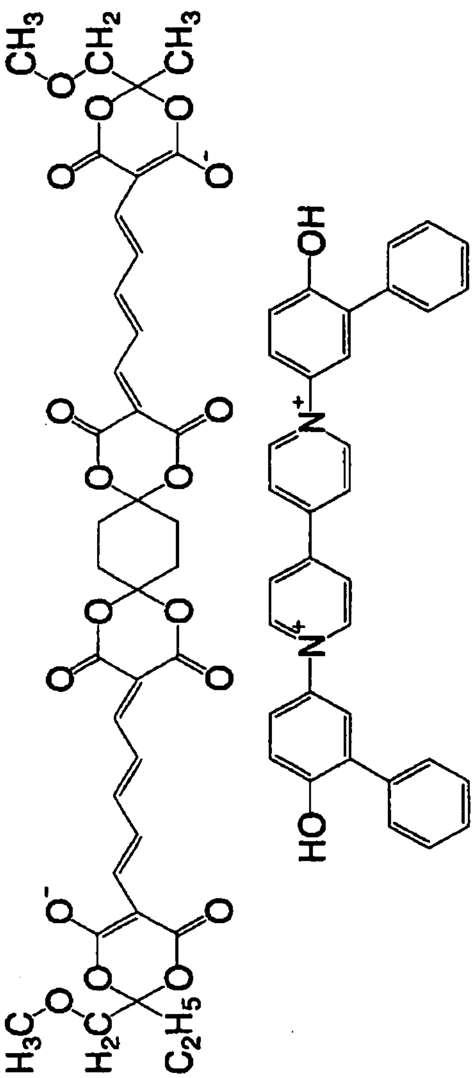

(17)

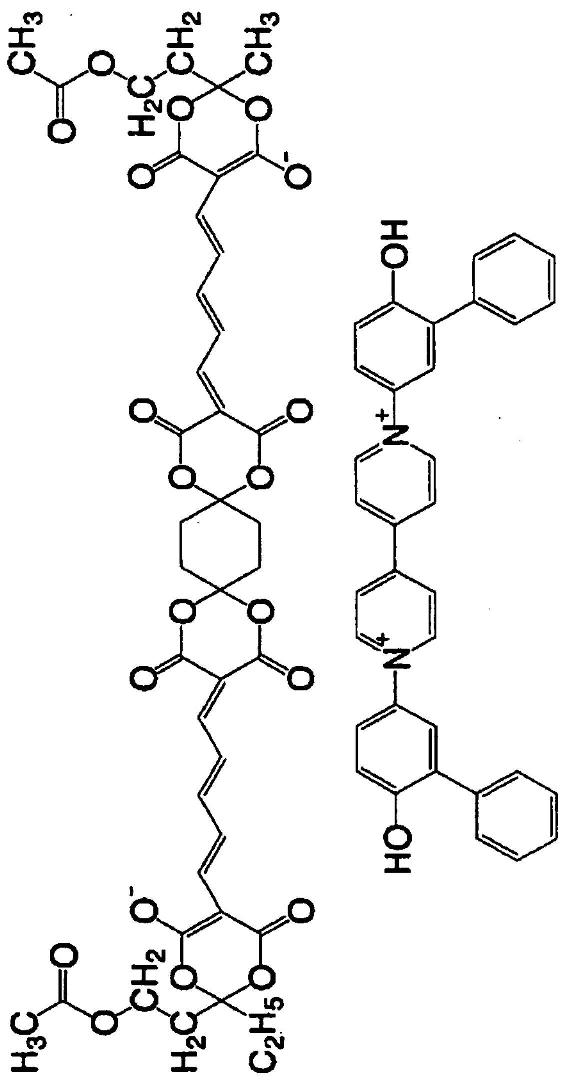

(18)

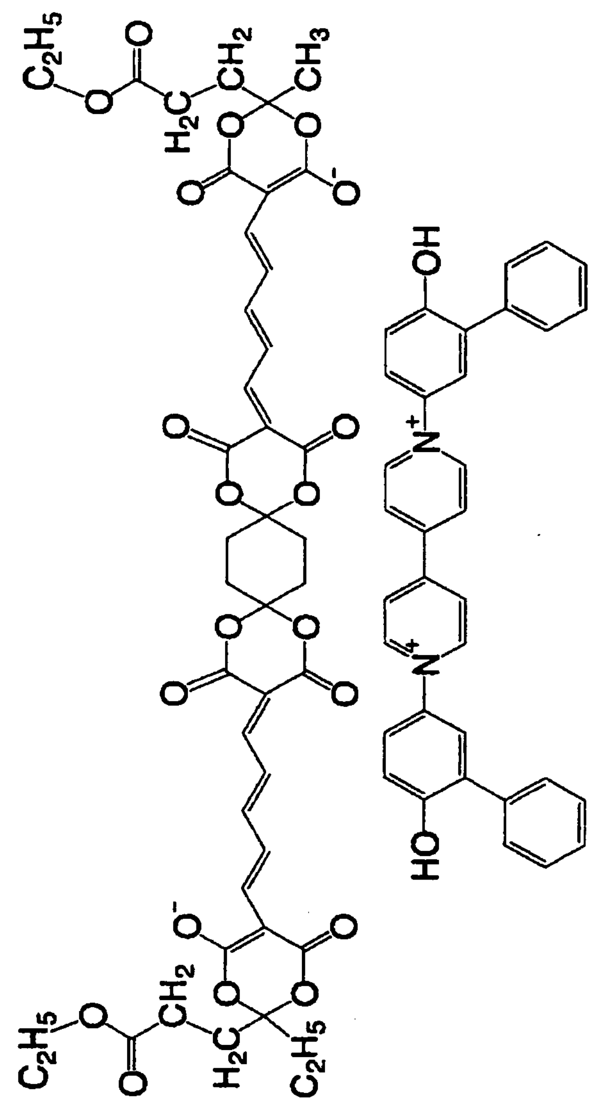

(19)

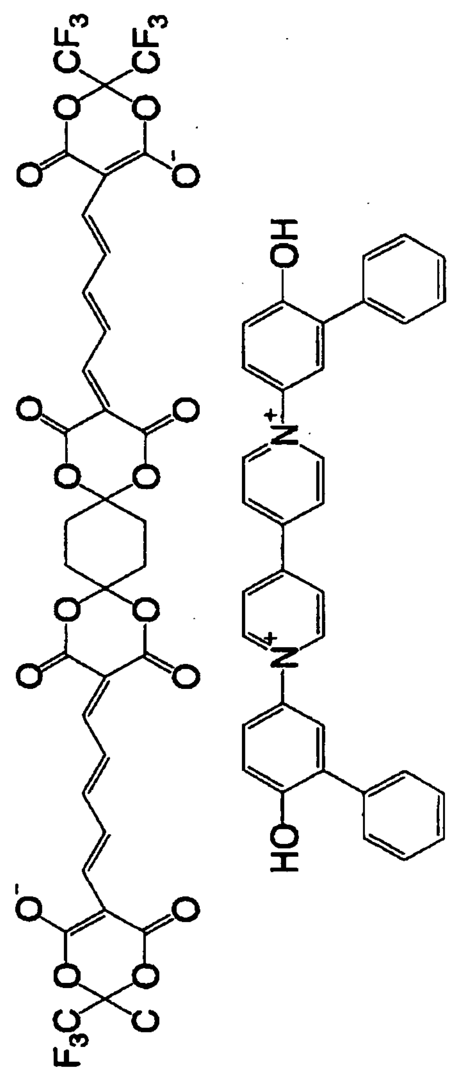

(20)

(21)

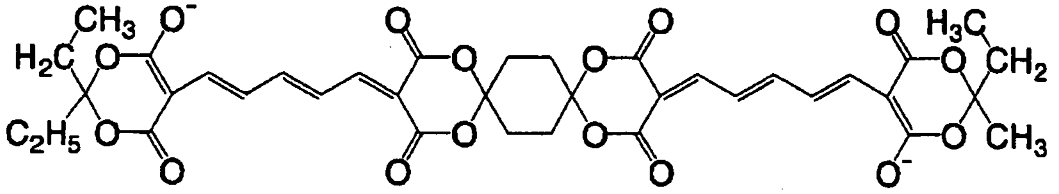

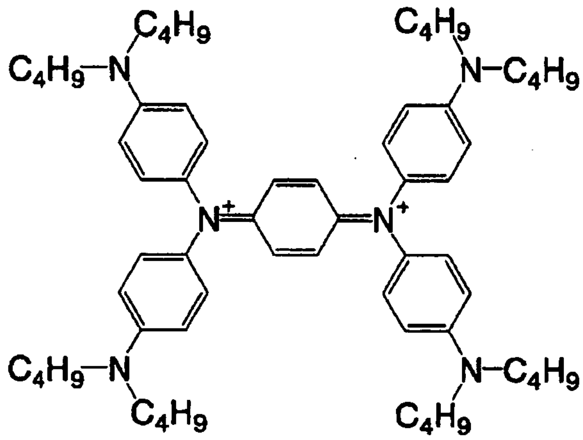

(22)

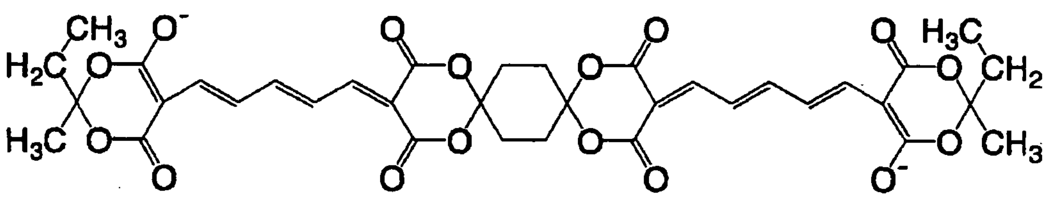

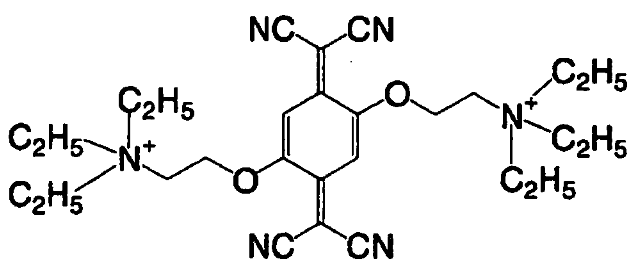

(23)

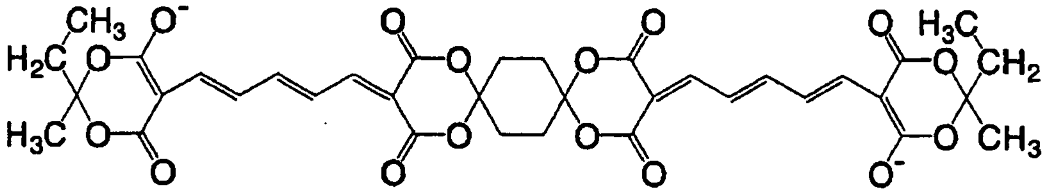

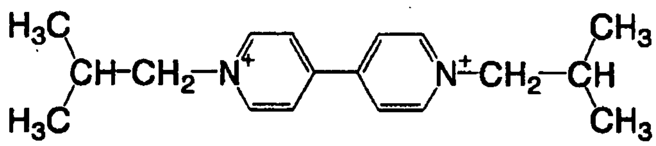

(24)

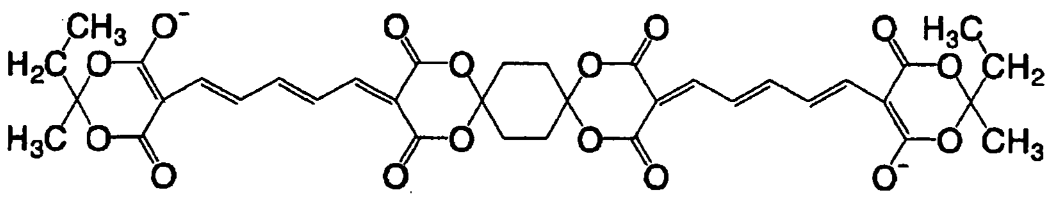

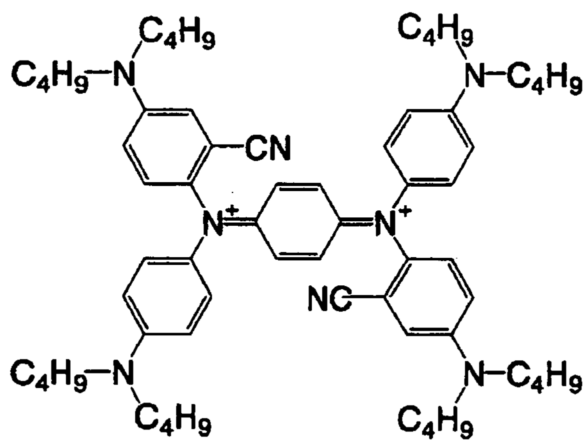

(25)

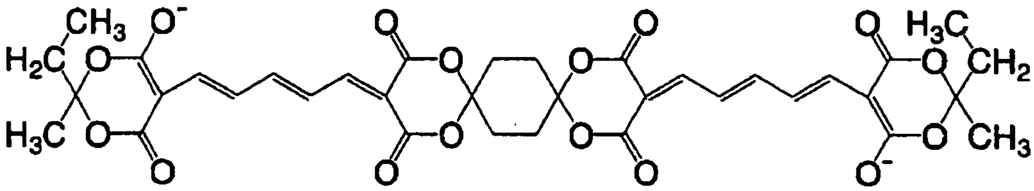

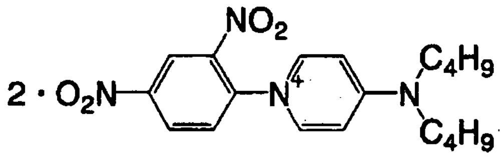

(26)

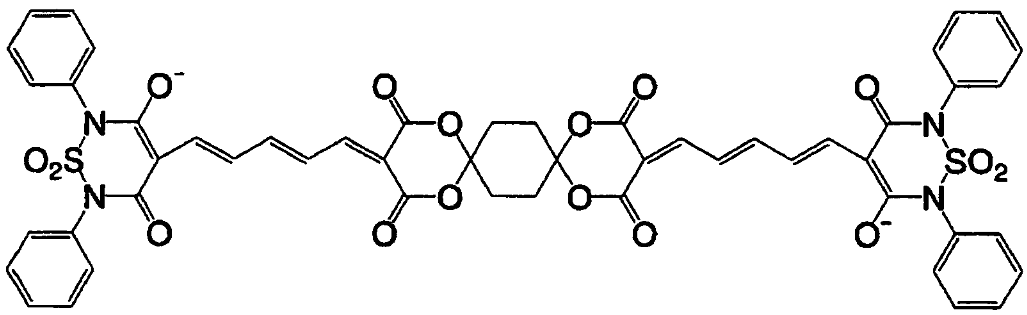

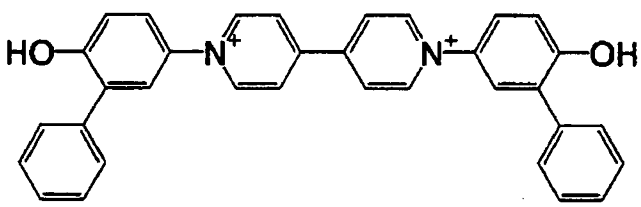

(27)

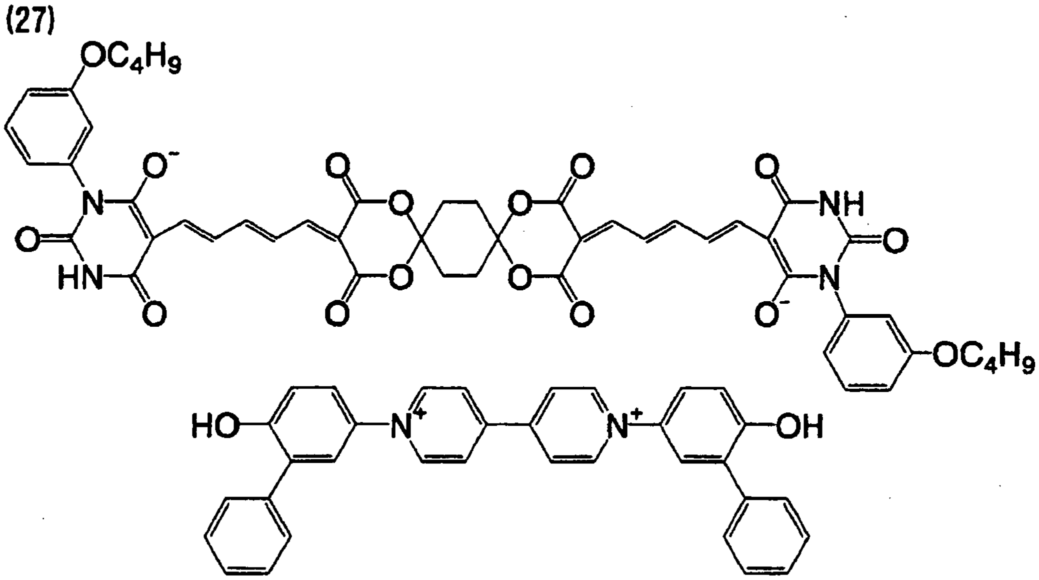

(28)

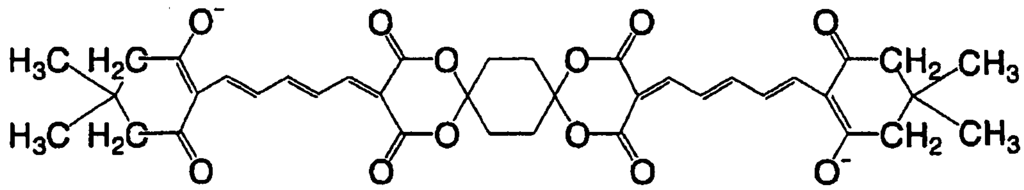

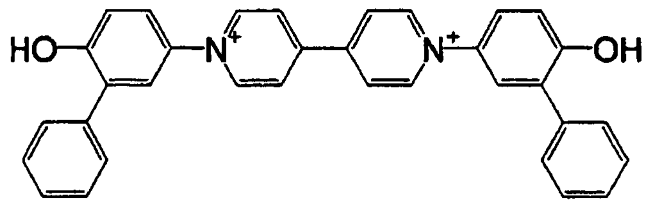

(29)

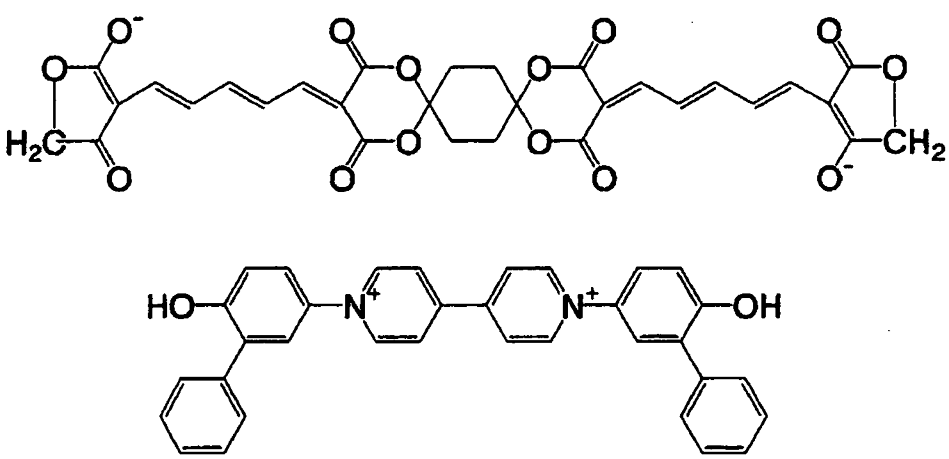

(30)

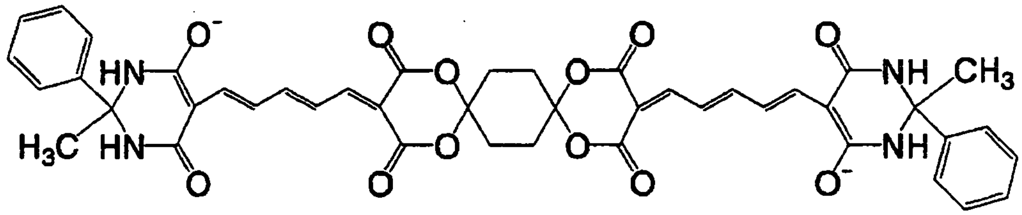

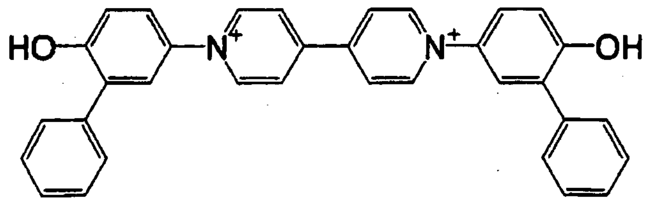

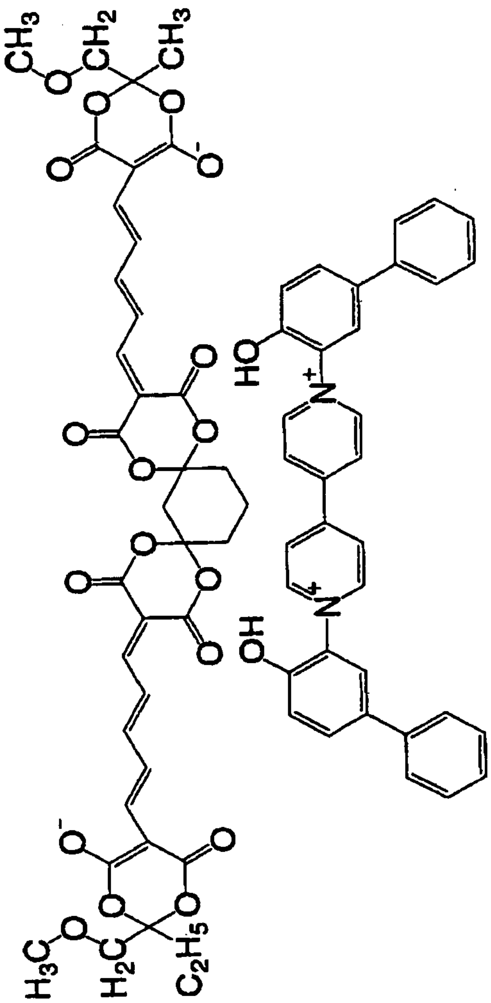

(31)

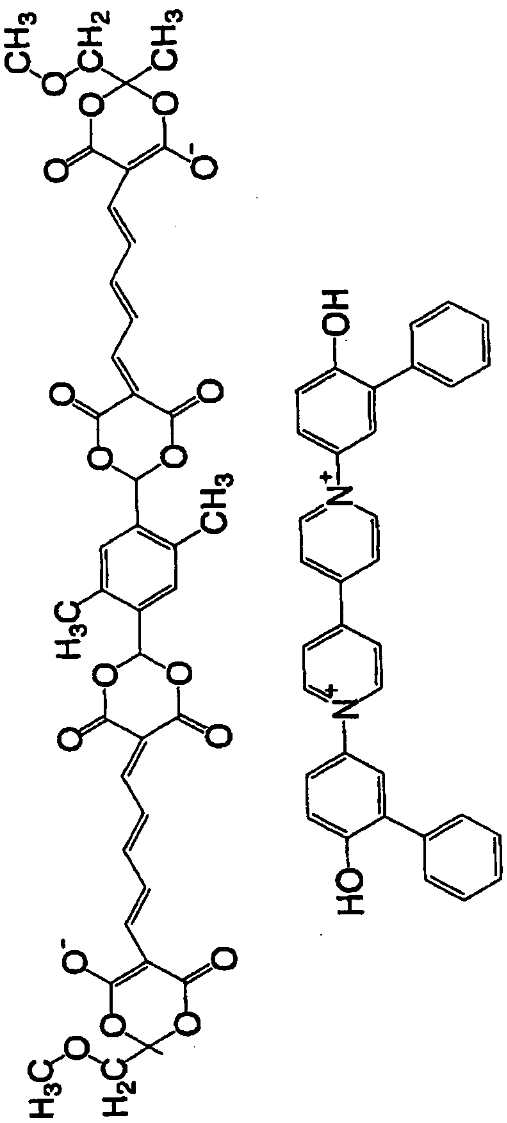

(32)

(33)

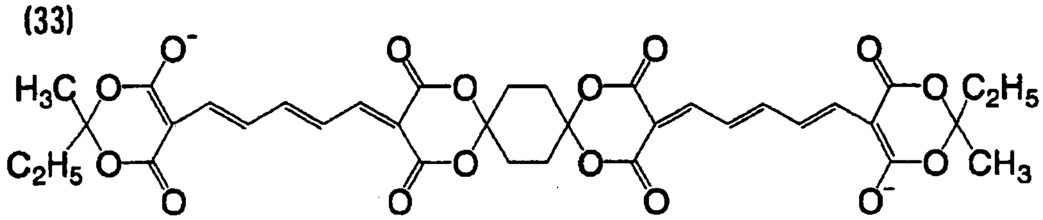

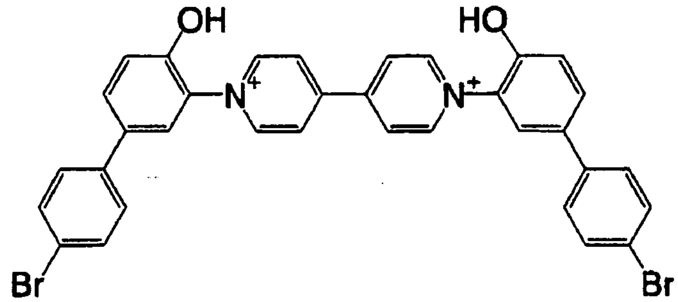

(34)

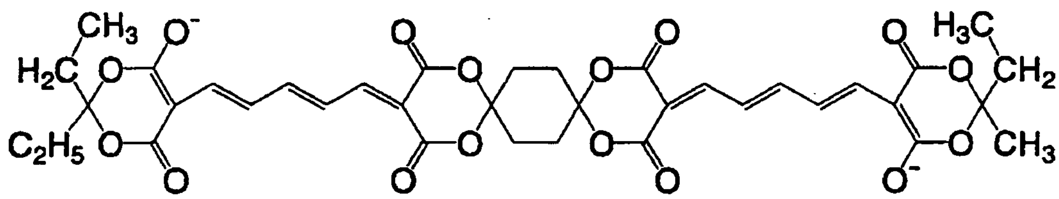

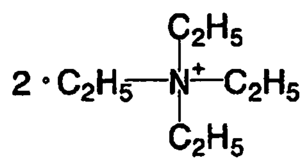

(35)

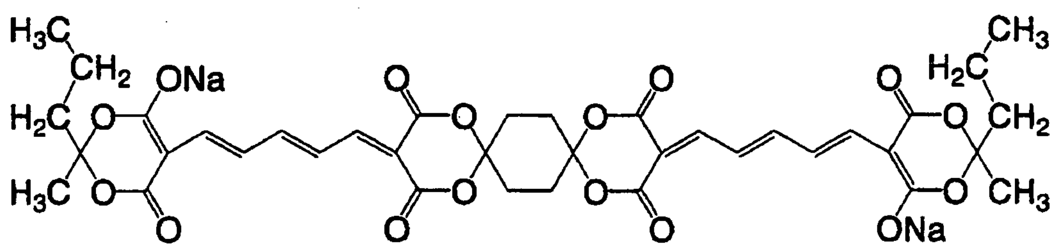

(36)

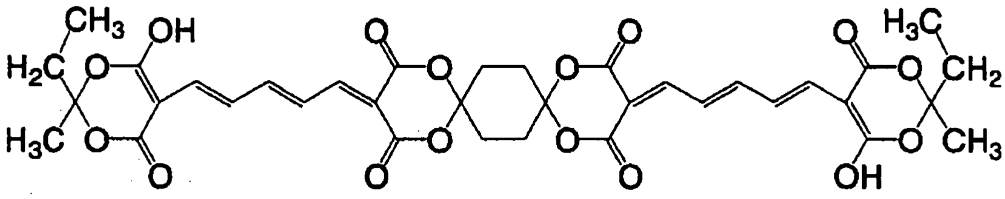

(37)

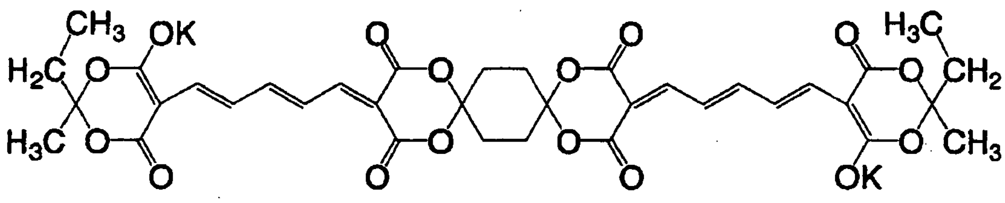

As dye B, an oxonol dye is preferred. When dye B is an oxonol dye, a compound represented by formula (II) described later is preferred.

The invention is described below in detail.

The dyes having a structure represented by formula (I) are illustrated in detail. $Za^{21}$, $Za^{22}$, $Za^{23}$ and $Za^{24}$ in formula (I) each independently represents atoms forming an acidic nucleus, examples of which are described in The Theory of the Photographic Process, 4th edition edited by James, page 198, Macmillan Publishing Co., Inc. (1977). More specifically, such an acidic nucleus, which may be substituted, includes pyrazolone-5-one, pyrazolidine-3,5-dione, imidazoline-5-one, hydantoin, 2- or 4-thiohydantoin, 2-iminooxazolidine-4-one, 2-oxazoline-5-one, 2-thiooxazoline-2,4-dione, isorhodanine, rhodanine, indane-1,3-dione, thiophene-3-one, thiophene-3 -one- 1, 1 -dioxide, 3,3-dioxo[1,3]oxathiolane-5-one, indoline-2-one, indoline-3-one, 2-oxoindazolium, 5,7-dioxo-6,7-dihydrothiazolo[3,2-a]pyrimidine, 3,4-dihydroisoquinoline-4-one, 1,3-dioxane-4,6-dione (e.g., merdramic acid), barbituric acid, 2-thiobarbituric acid, coumarin-2,4-dione, indazoline-2-one, pyrido[1,2-a]pyrimidine-1,3-dione, pyrazolo[1,5-b]quinazolone, pyrazolopyridone and 5- or 6-membered carbon rings (e.g., hexane-1,3-dione, pentane-1,3-dione, indane-1,3-dione). Of these nuclei, pyrazole-5-one, pyrazolidine-3,5-dione, barbituric acid, 2-thiobarbituric acid and 3,3-dioxo[1,3]oxathiolane-5-one, which each may be substituted, are preferred over the others.

As $Za^{21}$, $Za^{22}$, $Za^{23}$ and $Za^{24}$ each, a substituted or unsubstituted 1,3-dioxane-4,6-dione is most suitable.

Examples of a substituent by which each acidic nucleus can be substituted include a halogen atom, an alkyl group (including a cycloalkyl group and a bicycloalkyl group), an alkenyl group (including a cycloalkenyl group and a bicycloalkenyl group), an alkynyl group, an aryl group, a heterocyclic group, a cyano group, a hydroxyl group, a nitro group, a carboxyl group, an alkoxy group, an aryloxy group, a silyloxy group, a heterocyclyloxy group, an acyloxy group, a carbamoyloxy group, an alkoxycarbonyloxy group, an aryloxycarbonyloxy group, an amino group (including an anilino group), an acylamino group, an aminocarbonylamino group, an alkoxycarbonylamino group, an aryloxycarbonylamino group, a sulfamoylamino group, an alkylsulfonylamino group, an arylsulfonylamino group, a mercapto group, an alkylthio group, an arylthio group, a heterocyclylthio group, a sulfamoyl group, a sulfo group, an alkylsulfinyl group, an arylsulfinyl group, an alkylsulfonyl group, an arylsulfonyl group, an acyl group, an aryloxycarbonyl group, an alkoxycarbonyl group, a carbamoyl group, an arylazo group, a heterocyclylazo group, an imido group, a phosphino group, a phosphinyl group, a phosphinyloxy group, a phosphinylamino group and a silyl group. Of these groups, 1-20C substituted or unsubstituted alkyl groups and 6-20C substituted or unsubstituted aryl groups are preferred over the others.

The suitable acidic nuclei are acidic nuclei having no substituents, those substituted by 1-20C substituted or unsubstituted alkyl groups, or those substituted by 6-20C substituted or unsubstituted aryl groups.

As the acidic nuclei formed by $Za^{21}$, $Za^{22}$, $Za^{23}$ and $Za^{24}$, indanedione, pyrazolone, pyrazolinedione, and benzothiophen- one dioxide are preferred, and pyrazolone is most preferred of them.

Each of $Ma^{21}$, $Ma^{22}$, $Ma^{23}$, $Ma^{24}$, $Ma^{25}$ and $Ma^{26}$ represents independently a substituted or unsubstituted

methine group. Suitable examples of a radical by which the methine group may be substituted include a 1-20C alkyl group (e.g., methyl, ethyl, isopropyl), a halogen atom (e.g., chlorine, bromine, iodine, fluorine), a 1-20C alkoxy group (e.g., methoxy, ethoxy, isopropoxy), a 6-26C aryl group (e.g., phenyl, 2-naphthyl), a 0-20C heterocyclic group (e.g., 2-pyridyl, 3-pyridyl), a 6-20C aryloxy group (e.g., phenoxy, 1-naphthoxy, 2-naphthoxy), a 1-20C acylamino group (e.g., acetylamino, benzoylamino), a 1-20C carbamoyl group (e.g., N,N-dimethylcarbamoyl), a sulfo group, a hydroxyl group, a carboxyl group, a 1-20C alkylthio group (e.g., methylthio) and a cyano group. Alternatively, each methine group may combine with another methine group to form a ring structure, or it may combine with a constituent atom of $Za^{21}$, $Za^{22}$, $Za^{23}$ or $Za^{24}$ to form a ring structure.

Each of $Ma^{21}$, $Ma^{22}$, $Ma^{23}$, $Ma^{24}$, $Ma^{25}$ and $Ma^{26}$ is preferably an unsubstituted methine group or a methine group substituted by an ethyl group, a methyl group or a phenyl group, especially preferably an unsubstituted methine group.

L is a divalent linkage group forming no $\pi$-conjugated system in conjunction with its two bonds. The divalent linkage group has no particular restriction except that it forms no $\pi$-conjugated system between the chromophores to which it is bonded, but it preferably represents a 0-100C, preferably 1-20C, linkage group made up of one group or a combination of two or more groups selected from alkylene groups (containing 1 to 20 carbon atoms, such as methylene, ethylene, propylene, butylene and pentylene groups), arylene groups (containing 6 to 26 carbon atoms, such as phenylene and naphthylene groups), alkenylene groups (containing 2 to 20 carbon atoms, such as ethenylene and propenylene groups), alkynylene groups (containing 2 to 20 carbon atoms, such as ethynylene and propynylene groups), $-CO-N(R^{101})-$, -CO-O-, $-SO_2-N(R^{102})-$, $-SO_2-O-$, - $N(R^{103})-CO-N(R^{104})-$, $-SO_2-$, -SO-, -S-, -O-, -CO-, $-N(R^{105})-$ or heterylene groups (containing 1 to 26 carbon atoms, such as 6-chloro-1,3,5-triazine-2,4-diyl and pyrimidine-2,4-diyl groups). Therein, $R^{101}$, $R^{102}$, $R^{103}$, $R^{104}$ and $R^{105}$ each represent a hydrogen atom, a substituted or unsubstituted alkyl group, or a substituted or unsubstituted aryl group. Additionally, more than one linkage group represented by L may be present between the two chromophores connecting thereto, and two or more Ls (preferably two Ls) may form a ring in conjunction with each other.

L is preferably a group constituting a ring formed by conjunction of two alkylene groups (preferably two ethylene groups). Herein, the ring formed is preferably a 5- or 6-membered ring (especially a cyclohexane ring).

Each of $Ka^{21}$ and $Ka^{22}$ in formula (I) is an integer of 0 to 3.

More than one $Ma^{21}$, more than one $Ma^{22}$, more than one $Ma^{25}$ and more than one $Ma^{26}$ present when $Ka^{21}$ and $Ka^{22}$ are plural number each may be the same or different each.

It is preferable in formula (I) that both $Ka^{21}$ and $Ka^{22}$ are 2.

Q represents a univalent cation for neutralizing an electric charge. Therefore, 2Q represents a divalent cation. The ion represented by Q has no particular restrictions, but it may be an ion derived from an inorganic compound or an ion derived from an organic compound. Examples of a cation represented by Q include metallic ions, such as sodium ion and potassium ion, and onium ions such as quaternary ammonium ions, oxonium ions, sulfonium ions, phosphonium ions, selenonium ions and iodonium ions.

The cation represented by Q is preferably an onium ion, far preferably a quaternary ammonium ion. As quaternary ammonium ions, the 4,4'-bipyridinium cations represented by formula (I-4) in JP-A-2000-52658 and the 4,4'-bipyridinium cations disclosed in JP-A-2002-59652 are especially suitable. In the case of dicationic compounds like 4,4'-bipyridinium cations, Q corresponds to half a dicationic compound.

In formula (I), it is preferable that the acidic nucleus $Za^{21}$, $Za^{22}$, $Za^{23}$ and $Za^{24}$ form each individually is pyrazole-5-one, pyrazolidine-3,5-dione, barbituric acid, 2-thiobarbituric acid, 1,3-dioxane-4,6-dione or 3,3-dioxo[1,3]oxathiolane-5-one, which is unsubstituted or substituted by a 1-20C substituted or unsubstituted alkyl group or a 6-20C substituted or unsubstituted aryl group, $Ma^{21}$, $Ma^{22}$, $Ma^{23}$, $Ma^{24}$, $Ma^{25}$ and $Ma^{26}$ are each independently an unsubstituted methine group or a methine group substituted by an ethyl group, a methyl group or a phenyl group, L is a group constituting a 5- or 6-membered ring formed by conjunction of two alkylene groups (preferably two ethylene groups), both $Ka^{21}$ and $Ka^{22}$ are 2 and the cation represented by 2Q is the 4,4'-bipyridinium cation represented by formula (I-4) in JP-A-2000-52658 or the 4,4'-bipyridinium cation disclosed in JP-A-2002-59652.

The skeletons of acidic nuclei in two dyes selected from compounds having structures represented by formula (I) may be the same or different, but it is preferable that a combination of dyes having the same skeletons of acidic nuclei is selected.

It is preferable by far that the two dyes selected from compounds having structures represented by formula (I) are a dye having a structure represented by formula (IIIa) and a dye having a structure represented by formula (IIIb).

The formula (IIIa) is described below in detail.

In formula (IIIa), $R^1$ and $R^2$ are independent of each other, and each represents a hydrogen atom, an unsubstituted alkyl group or an unsubstituted aryl group. It is preferable that $R^1$ and $R^2$ independently represent unsubstituted alkyl groups. And it is preferable by far that $R^1$ and $R^2$ are different 1-6C unsubstituted alkyl groups. $R^3$, $R^4$ and $R^5$ are independent of one another, and each represents a hydrogen atom or a substituent. Each of $R^3$, $R^4$ and $R^5$ is preferably a hydrogen atom, a substituted or unsubstituted alkyl group, a substituted or unsubstituted aryl group, or a substituted

or unsubstituted heterocyclic group. And it is preferable by far that each of $R^3$, $R^4$ and $R^5$ is a hydrogen atom, an ethyl group, a methyl group or a phenyl group. Each $R^6$ is a hydrogen atom, a substituted or unsubstituted alkyl group or a substituted or unsubstituted aryl group. And in a preferred case, two $R^6$s combine with each other to form a divalent linkage group.

$L^1$ represents a divalent linkage group, preferably a substituted or unsubstituted alkylene group. As to $L^1$ and $R^6$, a case in which $L^1$ and two $R^6$s form a ring structure in conjunction with one another is most suitable. The ring structure in this case is preferably a 5- or 6-membered ring structure. n and m each independently represents an integer of 0 to 2. Herein, it is preferable that both n and m are 2. Q represents a univalent cation for neutralizing a charge or 2Q represents a divalent cation. When n and m are each more than one, more than one $R^3$ and more than one $R^4$ are the same or different each.

The formula (IIIb) is described below in detail.

$R^3$, $R^4$, $R^5$, $R^6$, n, m, $L^1$ and Q in formula (IIIb) have the same meanings in formula (IIIa), respectively, and suitable examples thereof are the same as in formula (IIIa). However, $R^3$, $R^4$, $R^5$, $R^6$, n, m, $L^1$ and Q in formula (IIIb) needn't be concurrently identical with those in formula (IIIa), respectively. $R^{1b}$ represents a hydrogen atom, a substituted or unsubstituted alkyl group, or a substituted or unsubstituted aryl group, preferably a substituted or unsubstituted 1-12C alkyl group. $R^{2b}$ represents a substituted alkyl group or a substituted aryl group, preferably a substituted 1-12C alkyl group. Examples of a substituent with which the alkyl group is substituted include a halogen atom, an alkyl group (including a cycloalkyl group and a bicycloalkyl group), an alkenyl group (including a cycloalkenyl group and a bicycloalkenyl group), an alkynyl group, an aryl group, a heterocyclic group, a cyano group, a hydroxyl group, a nitro group, a carboxyl group, an alkoxy group, an aryloxy group, a silyloxy group, a heterocyclyloxy group, an acyloxy group, a carbamoyloxy group, an alkoxycarbonyloxy group, an aryloxycarbonyloxy group, an amino group (including an anilino group), an acylamino group, an aminocarbonylamino group, an alkoxycarbonylamino group, an aryloxycarbonylamino group, a sulfamoylamino group, an alkylsulfonylamino group, an arylsulfonylamino group, a mercapto group, an alkylthio group, an arylthio group, a heterocyclylthio group, a sulfamoyl group, a sulfo group, an alkylsulfinyl group, an arylsulfinyl group, an alkylsulfonyl group, an arylsulfonyl group, an acyl group, an aryloxycarbonyl group, an alkoxycarbonyl group, a carbamoyl group, an arylazo group, a heterocyclylazo group, an imido group, a phosphino group, a phosphinyl group, a phosphinyloxy group, a phosphinylamino group and silyl group. Of these substituents, 1-24C alkoxy groups, 6-12C aryloxy groups, 2-12C alkoxycarbonyl groups and 6-20C substituted or unsubstituted acyloxy groups are preferred over the others.

Formula (III) is described below in detail. $R^1$ and $R^2$ are independent of each other, and each represents a hydrogen atom, a substituted or unsubstituted alkyl group, or a substituted or unsubstituted aryl group. Alternatively, $R^1$ and $R^2$ may combine with each other to form a ring structure. It is preferable that each of $R^1$ and $R^2$ represents independently a substituted or unsubstituted alkyl group. And it is preferable by far that $R^1$ and $R^2$ are different 1-6C unsubstituted alkyl groups. $R^3$, $R^4$ and $R^5$ are independent of one another, and each represents a hydrogen atom or a substituent. Each of $R^3$, $R^4$ and $R^5$ is preferably a hydrogen atom, a substituted or unsubstituted alkyl group, a substituted or unsubstituted aryl group, or a substituted or unsubstituted heterocyclic group. It is preferable by far that each of $R^3$, $R^4$ and $R^5$ is a hydrogen atom, an ethyl group, a methyl group or a phenyl group, and it is especially preferable that all of $R^3$, $R^4$ and $R^5$ are hydrogen atoms. Each $R^6$ is a hydrogen atom, a substituted or unsubstituted alkyl group or a substituted or unsubstituted aryl group. And in a preferred case, two $R^6$s combine with each other to form a divalent linkage group. $L^1$ is a divalent linkage group, preferably a substituted or unsubstituted alkylene group. As to $L^1$ and $R^6$, a case in which $L^1$ and two $R^6$s form a ring structure in conjunction with one another is most suitable. The ring structure in this case is preferably a 5- or 6-membered ring structure. n and m each independently represents an integer of 0 to 2. Herein, it is preferable that both n and m are 2. Each Q represents a univalent cation for neutralizing a charge, so 2Q represents a divalent cation. When n and m are more than one each, more than one $R^3$ and more than one $R^4$ are the same or different each.

Oxonol dyes exhibiting their absorption maxima in a wavelength range of 600 nm to shorter than 720 nm when formed into amorphous film are described below. The term "oxonol dye" is defined as a compound represented by the following formula (A), and it has no particular restrictions as to its structure so far as its absorption maximum is in the wavelength range of 600 nm to shorter than 720 nm. However, it is preferable that the oxonol dye is a dye having a linear or cyclic acidic nucleus in which the number of methine groups is from 5 to 7. In formula (A), n is preferably an integer of 1 to 3. The oxonol dye having a cyclic acidic nucleus as recited in the description of formula (I), preferably a dye represented by formula (I) or formula (II), especially a dye represented by formula (II), is advantageous over the others.

Formula (A):

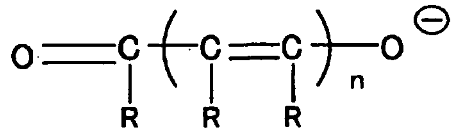

R: hydrogen or substituent, n: integer of 0 or above

The substituents of the dye which is represented by formula (I) and exhibits its absorption maximum in a wavelength range of 600 nm to shorter than 720 have the same meanings as the substituents in formula (I) of the embodiment [1]. The acidic nucleus of the dye is preferably an indanedione, a pyrazolone, a pyrazolinedione or a benzothiopheneone dioxide, especially preferably a pyrazolone. $Ma^{21}$ to $Ma^{26}$, L, $Ka^{21}$ and $Ka^{22}$ are the same as those in formula (I) of the embodiment [1].

Formula (II) is described below in detail. In formula (II), $Za^{25}$ and $Za^{26}$ each independently represents atoms forming an acidic nucleus. The acidic nucleus has the same meaning as the nucleus formed by $Za^{21}$, $Za^{22}$, $Za^{23}$ or $Za^{24}$ in formula (I), and examples thereof include the same ones. The acidic nucleus formed by each of $Za^{25}$ and $Za^{26}$ is preferably an indanedione, a pyrazolone, a pyrazolinedione or benzothiopheneone dioxide, especially preferably a pyrazolone.

$Ma^{27}$, $Ma^{28}$ and $Ma^{29}$ are independent of one another, and each represents a substituted or unsubstituted methine group. They have the same meanings as $Ma^{21}$, $Ma^{22}$, $Ma^{23}$, $Ma^{24}$, $Ma^{25}$ and $Ma^{26}$ in formula (I), and their examples and suitable ones thereof are the same as those in formula (I). And it is preferable that all of $Ma^{27}$, $Ma^{28}$ and $Ma^{29}$ are unsubstituted methine groups.

$Ka^{23}$ represents an integer of 0 to 3, and it has the same meaning as $Ka^{21}$ and $Ka^{22}$ in formula (I). It is preferable in formula (I) that $Ka^{23}$ is 2. Q represents a univalent cation.

When $Ka^{23}$ is plural number, more than one $Ma^{27}$ and more than one $Ma^{28}$ are the same or different each.

The dye having a structure represented by formula (II) is preferably a dye represented by formula (IV), (V), (VI) or (VII).

In formulae (IV), (V), (VI) and (VII), $R^{11}$, $R^{12}$, $R^{13}$, $R^{14}$, $R^{15}$, $R^{16}$, $R^{17}$, $R^{18}$, $R^{21}$, $R^{22}$, $R^{23}$, $R^{24}$, $R^{25}$, $R^{26}$, $R^{27}$, $R^{28}$, $R^{32}$ and $R^{33}$ (which all are represented collectively by the symbol "R" in some cases) are independent of one another, and each represent a hydrogen atom or a substitutent. Examples of such a substituent include a halogen atom, a substituted or unsubstituted alkyl group (including cycloalkyl and bicycloalkyl groups), a substituted or unsubstituted alkenyl group (including cycloalkenyl and bicycloalkenyl groups), a substituted or unsubstituted alkynyl group, a substituted or unsubstituted aryl group, a substituted or unsubstituted heterocyclic group, a cyano group, a hydroxyl group, a nitro group, a carboxyl group, a substituted or unsubstituted alkoxy group, a substituted or unsubstituted aryloxy group, a substituted or unsubstituted silyloxy group, a substituted or unsubstituted heteocyclyloxy group, a substituted or unsubstituted acyloxy group, a substituted or unsubstituted carbamoyloxy group, a substituted or unsubstituted alkoxycarbonyloxy group, a substituted or unsubstituted aryloxycarbonyloxy group, a substituted or unsubstituted amino group (including anilino group), a substituted or unsubstituted acylamino group, a substituted or unsubstituted aminocarbonylamino group, a substituted or unsubstituted alkoxycarbonylamino group, a substituted or unsubstituted aryloxycarbonylamino group, a substituted or unsubstituted sulfamoylamino group, a substituted or unsubstituted alkylsulfonylamino group, a substituted or unsubstituted arylsulfonylamino group, a substituted or unsubstituted mercapto group, a substituted or unsubstituted alkylthio group, a substituted or unsubstituted arylthio group, a substituted or unsubstituted heterocyclylthio group, a substituted or unsubstituted sulfamoyl group, a sulfo group, a substituted or unsubstituted alkylsulfinyl group, a substituted or unsubstituted arylsulfinyl group, a substituted or unsubstituted alkylsulfonyl group, a substituted or unsubstituted arylsulfonyl group, a substituted or unsubstituted acyl group, a substituted or unsubstituted aryloxycarbonyl group, a substituted or unsubstituted alkoxycarbonyl group, a substituted or unsubstituted carbamoyl group, a substituted or unsubstituted arylazo group, a substituted or unsubstituted heterocyclylazo group, a substituted or unsubstituted imido group, a substituted or unsubstituted phosphino group, a substituted or unsubstituted phosphinyl group, a substituted or unsubstituted phosphinyloxy group, a substituted or unsubstituted phosphinylamino group, and a substituted or unsubstituted silyl group.

More specifically, the substituent that R can represent includes a halogen atom (e.g., a chlorine atom, a bromine atom or an iodine atom), an alkyl group [which specifically represents a linear, branched or cyclic, substituted or unsubstituted alkyl group, with examples including an alkyl group (preferably a 1-30C alkyl group, such as methyl, ethyl, n-propyl, isopropyl, t-butyl, n-octyl, eicosyl, 2-chloroethyl, 2-cyanoethyl or 2-ethylhexyl), a cycloalkyl group (preferably a 3-30C substituted or unsubstituted cycloalkyl group, such as cyclohexyl, cyclopentyl or 4-n-dodecylcyclohexyl), a bicycloalkyl group (preferably a 5-30C substituted or unsubstituted bicycloalkyl group, namely a univalent group formed by

removing one hydrogen atom from a 5-30C bicycloalkane, such as bicyclo[1,2,2]heptane-2-yl or bicyclo[2,2,2]octane-3-yl) and an alkyl group having more ring structures including a tricycloalkyl group. This concept of an alkyl group is applied to the alkyl moieties in substituents recited below (e.g., the alkyl moiety of an alkylthio group.)], an alkenyl group [which specifically represents a linear, branched or cyclic, substituted or unsubstituted alkenyl group, with examples including an alkenyl group (preferably a 2-30C substituted or unsubstituted alkenyl group, such as vinyl, allyl, prenyl, geranyl or oleyl), a cycloalkenyl group (preferably a 3-30C substituted or unsubstituted cycloalkenyl group, namely a univalent group formed by removing one hydrogen atom from a 3-30C cycloalkene, such as 2-cyclopentene-1-yl or 2-cyclohexene-1-yl), and a bicycloalkenyl group (a substituted or unsubstituted bicycloalkenyl group, preferably a 5-30C substituted or unsubstituted bicycloalkenyl group, namely a univalent group formed by removing one hydrogen atom from a bicycloalkene having one double bond, such as bicyclo[2,2,1]hepto-2-ene-1-yl or bicyclo[2,2,2]octo-2-ene-4-yl)], an alkynyl group (preferably a 2-30C substituted or unsubstituted alkynyl group, such as ethynyl, propargyl or trimethylsilylethynyl), an aryl group (preferably 6-30C substituted or unsubstituted aryl group, such as phenyl, p-tolyl, naphthyl, m-chlorophenyl or o-hexadecanoylaminophenyl), a heterocyclic group (preferably a univalent group formed by removing one hydrogen atom from a 5- or 6-membered, substituted or unsubstituted, aromatic or non-aromatic heterocyclic compound, far preferably a 3-30C 5- or 6-membered aromatic heterocyclic group, such as 2-furyl, 2-thienyl, 2-pyrimidinyl or 2-benzothiazolyl), a cyano group, a hydroxyl group, a nitro group, a carboxyl group, an alkoxy group (preferably a 1-30C substituted or unsubstituted alkoxy group, such as methoxy, ethoxy, isopropoxy, t-butoxy, n-octyloxy or 2-methoxyethoxy), an aryloxy group (preferably a 6-30C substituted or unsubstituted aryloxy group, such as phenoxy, 2-methylphenoxy, 4-t-butylphenoxy, 3-nitrophenoxy or 2-tetradecanoylaminophenoxy), a silyloxy group (preferably a 3-20C silyloxy group, such as trimethylsilyloxy or t-butyldimethylsilyloxy), a heterocyclyloxy group (preferably a 2-30C substituted or unsubstituted heterocyclyloxy group, such as 1-phenyltetrazole-5-oxy or 2-tetrhydropyranyloxy), an acyloxy group (preferably a formyloxy group, a 2-30C substituted or unsubstituted alkylcarbonyloxy group or a 6-30C substituted or unsubstituted arylcarbonyloxy group, such as formyloxy, acetyloxy, pivaroyloxy, stearoyloxy, benzoyloxy or p-methoxyphenylcarbonyloxy), a carbamoyloxy group (preferably a 1-30C substituted or unsubstituted carbamoyloxy group, such as N,N-dimethylcarbamoyloxy, N,N-diethylcarbamoyloxy, morpholinocarbonyloxy, N,N-di-n-octylaminocarbonyloxy, N-n-octylcarbamoyloxy), an alkoxycarbonyloxy group (preferably a 2-30C substituted or unsubstituted alkoxycarbonyloxy group, such as methoxycarbonyloxy, ethoxycarbonyloxy, t-butoxycarbonyloxy or n-octylcarbonyloxy), an aryloxycarbonyloxy group (preferably a 7-30C substituted or unsubstituted aryloxycarbonyloxy group, such as phenpoxycarbonyloxy, p-methoxyphenoxycarbonyloxy or p-n-hexadecyloxyphenoxycarbonyloxy), an amino group (preferably an amino group, a 1-30C substituted or unsubstituted alkylamino group or a 6-30C substituted or unsubstituted arylamino group, such as amino, methylamino, dimethylamino, anilino, N-methyl-anilino or diphenylamino), an acylamino group (preferably a formylamino group, a 1-30C substituted or unsubstituted alkylcarbonylamino group or a 6-30C substituted or unsubstituted arylcarbonylamino group, such as formylamino, acetylamino, pivaroylamino, lauroylamino, benzoylamino or 3,4,5-tri-n-octyloxyphenylcarbonylamino), an aminocarbonylamino group (preferably a 1-30C substituted or unsubstituted aminocarbonylamino group, such as carbamoylamino, N,N-dimethylaminocarbonylamino, N,N-diethylaminocarbonylamino or morpholinocarbonylamino), an alkoxycarbonylamino group (preferably a 2-30C substituted or unsubstituted alkoxycarbonylamino group, such as methoxycarbonylamino, ethoxycarbonylamino, t-butoxycarbonylamino, n-octadecyloxycarbonylamino or N-methyl-methoxycarbonylamino), an aryloxycarbonylamino group (preferably a 7-30C substituted or unsubstituted aryloxycarbonylamino group, such as phenoxycarbonylamino, p-chlorophenoxycarbonylamino or m-n-octyloxyphenoxycarbonylamino), a sulfamoylamino group (preferably a 0-30C substituted or unsubstituted sulfamoylamino group, such as sulfamoylamino, N,N-dimethylaminosulfonylamino or N-n-octylaminosulfonylamino), alkyl- and arylsulfonylamino groups (preferably a 1-30C substituted or unsubstituted alkylsulfonylamino group and a 6-30C substituted or unsubstituted arylsulfonylamino group, such as methylsulfonylamino, butylsulfonylamino, phenylsulfonylamino, 2,3,5-trichlorophenylsulfonylamino and p-methylphenylsulfonylamino), a mercapto group, an alkylthio group (preferably a 1-30C substituted or unsubstituted alkylthio group, such as methylthio, ethylthio or n-hexadecylthio), an arylthio group (preferably a 6-30C substituted or unsubstitued arylthio group, such as phenylthio, p-chlorophenylthio or m-methoxyphenylthio), a heterocyclylthio group (preferably a 2-30C substituted or unsubstituted heterocyclylthio group, such as 2-benzothiazolylthio or 1-phenyltetrazole-5-ylthio), a sulfamoyl group (preferably a 0-30C substituted or unsubstituted sulfamoyl group, such as N-ethylsulfamoyl, N-(3-dodecyloxypropyl)sulfamoyl, N,N-dimethylsulfamoyl, N-acetylsulfamoyl, N-benzoylsulfamoyl or N-(N'-phenylcarbamoyl)sulfamoyl), a sulfo group, alkyl- and arylsulfinyl groups (preferably a 1-30C substituted or unsubstituted alkylsulfinyl group and a 6-30C substituted or unsubstituted arylsulfinyl group, such as methylsulfinyl or ethylsulfinyl, and phenylsulfinyl or p-methylphenylsulfinyl), alkyl- and arylsulfonyl groups (preferably a 1-30C substituted or unsubstituted alkylsulfonyl group and a 6-30C substituted or unsubstituted arylsulfonyl group, such as methylsulfonyl or ethylsulfonyl, and phenylsulfonyl or p-methylphenylsulfonyl), an acyl group (preferably a formyl group, a 2-30C substituted or unsubstituted alkylcarbonyl group, a 7-30C substituted or unsubstituted arylcarbonyl group or a 4-30C substituted or unsubstituted heterocyclylcarbonyl group the carbonyl moiety of which is attached to a carbon atom in the ring, such as acetyl, pivaroyl, 2-chloroacetyl, stearoyl, benzoyl, p-n-octyloxyphenylcarbonyl, 2-pyridylcarbonyl or 2-furylcarbonyl), an aryloxycarbonyl group (preferably a 7-30C substituted or unsubstituted aryloxycarbonyl group, such as phenoxycarbonyl, o-chlorophenoxycarbonyl, m-nitorphenoxycarbonyl or p-t-butylphenoxycarbonyl), an alkoxycarbonyl group (preferably a 2-30C substituted or unsubstituted alkoxycarbonyl group, such as methoxycarbonyl, ethoxycarbonyl, t-butoxycarbonyl or n-octadecyloxycarbonyl), a carbamoyl group (preferably a 1-30C substituted or unsubstituted carbamoyl group, such as carbamoyl, N-methylcarbamoyl, N,N-dimethylcarbamoyl, N,N-di-n-octylcarbamoyl or N-(methylsulfonyl)carbamoyl), aryl-and heterocyclylazo groups (preferably a 6-30C substituted or unsubstituted arylazo group and a 3-30C substituted or unsubstituted heterocyclylazo group, such as phenylazo or p-chlorophenylazo and 5-ethylthio-1,3,4-thiadiazole-2-ylazo), an imido group (preferably N-succinimido or N-phthalimido), a phosphino group (preferably a 2-30C substituted or unsubstituted phosphino group, such as dimethylphosphino, diphenylphosphino or methylphenoxyphosphino), a phosphinyl group (preferably a 2-30C substituted or unsubstituted phosphinyl group, such as phosphinyl, dioctyloxyphosphinyl or diethoxyphosphinyl), a phosphinyloxy group (preferably a 2-30C substituted or unsubstituted phosphinyloxy group, such as diphenoxyphosphinyloxy or dioctyloxyphosphinyloxy), a phosphinylamino group (preferably a 2-30C substituted or unsubstituted phosphhinylamino group, such as dimethoxyphosphinylamino or dimethylphosphonylamino) and a silyl group (preferably a 3-30C substituted or unsubstituted silyl group, such as trimethylsilyl, t-butyldimethylsilyl or phenyldimethylsilyl).

As $R^{11}$, $R^{12}$, $R^{13}$, $R^{14}$, $R^{15}$, $R^{16}$, $R^{17}$, $R^{18}$, $R^{21}$, $R^{22}$, $R^{23}$, $R^{24}$, $R^{25}$, $R^{26}$, $R^{27}$ and $R^{28}$ each, a hydrogen atom is most suitable.

Each of $R^{31}$, $R^{34}$, $R^{41}$, $R^{42}$, $R^{43}$ and $R^{44}$, though the substituent it can represent includes the same ones as recited above as those R can represent, is preferably a hydrogen atom, a substituted or unsubstituted alkyl group, or a substituted or unsubstituted aryl group, especially preferably a substituted or unsubstituted aryl group.

$Ma^{27}$, $Ma^{28}$ and $Ma^{29}$ are independent of one another, and each represents a substituted or unsubstituted methine group. They have the same meanings as $Ma^{27}$, $Ma^{28}$ and $Ma^{29}$ in formula (II), respectively, and their examples and suitable ones thereof are also the same as those in formula (II). $Ka^{23}$ in each formula represents an integer of 0 to 3. Q represents a univalent cation for neutralizing an electric charge. When $Ka^{23}$ is plural number, more than one $Ma^{27}$ and more than one $Ma^{28}$ are the same or different each.

Of the dyes having structures represented by formula (II), dyes of structures represented by the following formula (VIII) are most suitable.

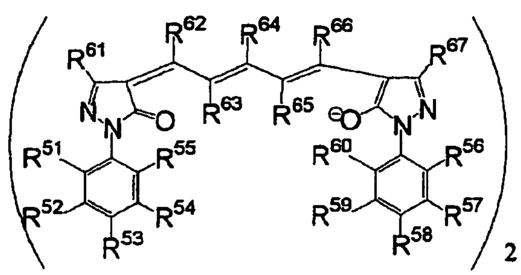
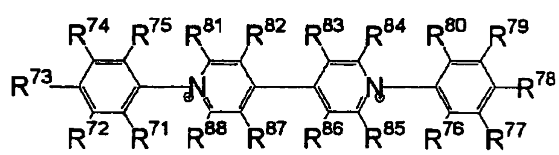

(VIII)

The dyes of the structures represented by formula (VIII) are described in detail.

In formula (VIII), $R^{51}$, $R^{52}$, $R^{53}$, $R^{54}$, $R^{55}$, $R^{56}$, $R^{57}$, $R^{58}$, $R^{59}$ and $R^{60}$ are independent of one another, and each represents a hydrogen atom or a substituent. The substituent is preferably a substituted or unsubstituted alkyl group, a substituted or unsubstituted alkoxy group, a halogen atom, a substituted or unsubstituted carbamoyl group, or a substituted or unsubstituted acylamino group. What is particularly suitable is a case in which all of them are hydrogen atoms or a case in which $R^{51}$, $R^{53}$, $R^{55}$, $R^{56}$, $R^{58}$ and $R^{60}$ are halogen atoms and, at the same time, $R^{52}$, $R^{54}$, $R^{57}$ and $R^{59}$ are hydrogen atoms. Each of $R^{61}$ and $R^{67}$ represents a hydrogen atom, a substituted or unsubstituted alkyl group, a substituted or unsubstituted aryl group, a cyano group, a substituted or unsubstituted carbamoyl group, a substituted or unsubstituted alkoxy group, a substituted or unsubstituted alkoxycarbonyl group, a substituted or unsubstituted aryloxycarbonyl group, or a substituted or unsubstituted acylamino group. Of these groups, substituted and unsubstituted alkoxycarbonyl groups, especially unsubstituted alkoxycarbonyl groups, are preferred over the others.

$R^{62}$, $R^{63}$, $R^{64}$, $R^{65}$ and $R^{66}$ are independent of one another, and each represents a hydrogen atom, a substituted or unsubstituted alkyl group, a substituted or unsubstituted aryl group, a substituted or unsubstituted acylamino group, or a substituted or unsubstituted heterocyclic group. As to $R^{62}$, $R^{63}$, $R^{65}$ and $R^{66}$, it is preferable that all of them are hydrogen atoms. On the other hand, $R^{64}$ is preferably a hydrogen atom, or a substituted or unsubstituted aryl group.

$R^{71}$, $R^{72}$, $R^{73}$, $R^{74}$, $R^{75}$, $R^{76}$, $R^{77}$, $R^{78}$, $R^{79}$, $R^{80}$, $R^{81}$, $R^{82}$ $R^{83}$, $R^{84}$, $R^{85}$ $R^{86}$, $R^{87}$ and $R^{88}$ are independent of one another, and each represents a hydrogen atom or a substituent. The substituent is preferably a substituted or unsubstituted alkyl group, a substituted or unsubstituted aryl group, a hydroxyl group, or a substituted or unsubstituted acylamino group. As to $R^{71}$, $R^{72}$, $R^{75}$, $R^{76}$, $R^{77}$ and $R^{80}$, it is preferable that all of them are hydrogen atoms. As to $R^{73}$

and $R^{78}$, it is preferable that each of them is a hydroxyl group. As to $R^{74}$ and $R^{79}$, it is preferable that each of them is a phenyl group.

As to $_R81$, $R^{82}$, $R^{83}$, $R^{84}$, $R^{85}$, $R^{86}$, $R^{87}$ and $R^{88}$, it is preferable that all of them are hydrogen atoms.

The wavelengths of absorption maxima that the dyes of structures represented by formula (I) exhibit in the form of dye films are preferably from 500 nm to shorter than 600 nm, far preferably from 550 nm to shorter than 590 nm, especially preferably from 570 nm to shorter than 580 nm.

The wavelengths of absorption maxima that the dyes of structures represented by formula (II) exhibit in the form of dye films are preferably from 600 nm to shorter than 720 nm, far preferably from 650 nm to shorter than 710 nm, especially preferably from 670 nm to shorter than 700 nm.

Suitable examples of a compound represented by formula (I) according to the invention are illustrated below, but these examples should not be construed as limiting the scope of the invention.

Compounds (I)-1 to (I)-22 are compound examples of a bis-oxonol dye that is represented by formula (I) and exhibits in amorphous film form its absorption maximum in a wavelength range of 500 nm to shorter than 600 nm. Compounds (I)-23 to (I)-24 and Compounds (II)-1 to (II)-25 as compound examples of a dye represented by formula (II) are compounds that exhibit in amorphous film form their absorption maxima in a wavelength range of 600 nm to shorter than 720 nm.

(I) -1

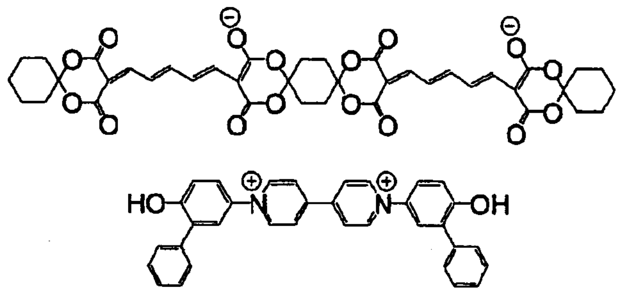

(I) -2

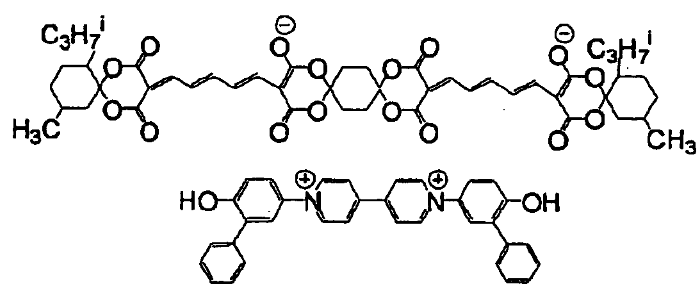

(I) -3

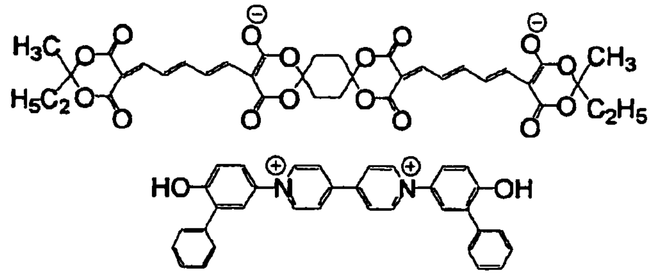

(I) −4

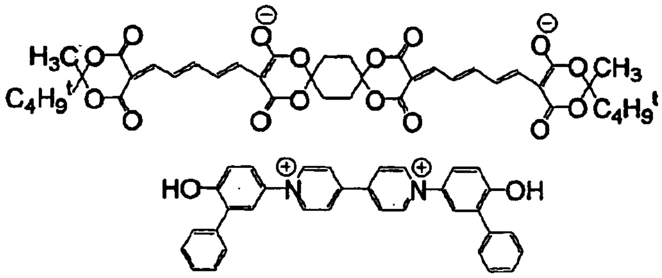

(I) −5

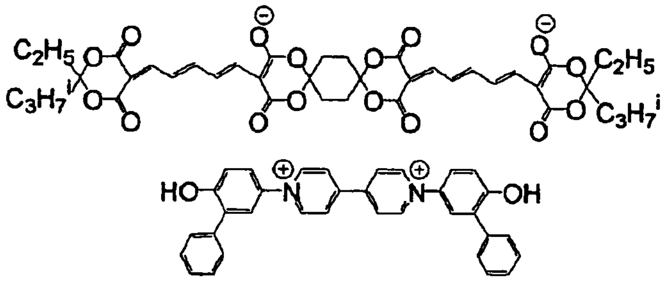

(I) −6

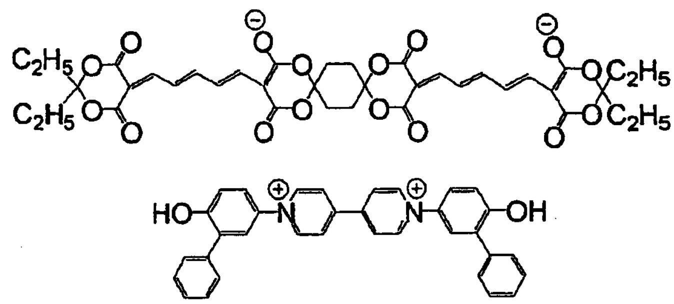

(I) −7

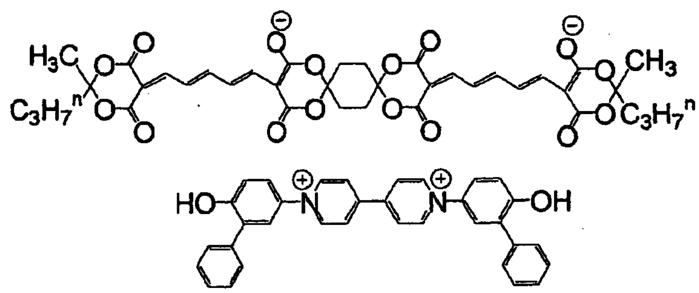

(I) −8

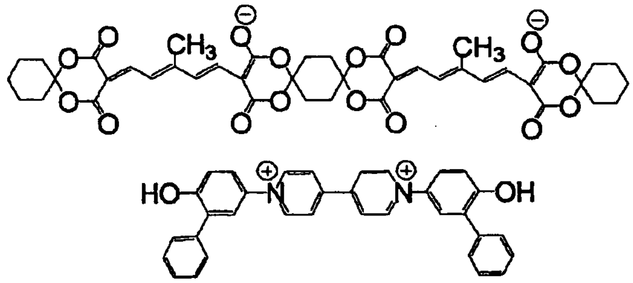

(I) −9

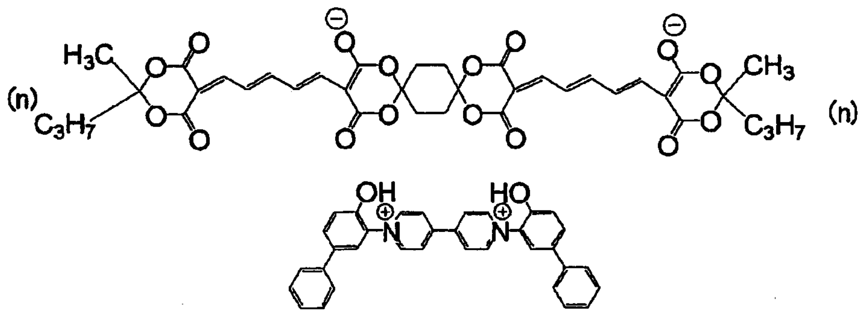

(I) −10

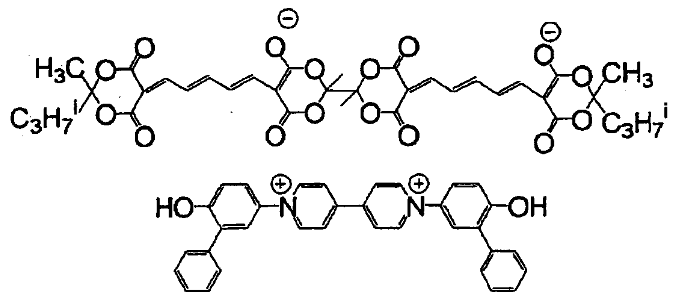

(I) −11

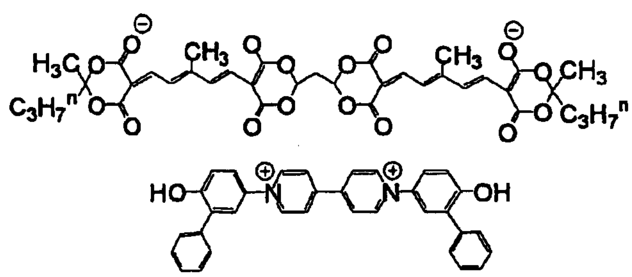

(I) −1 2

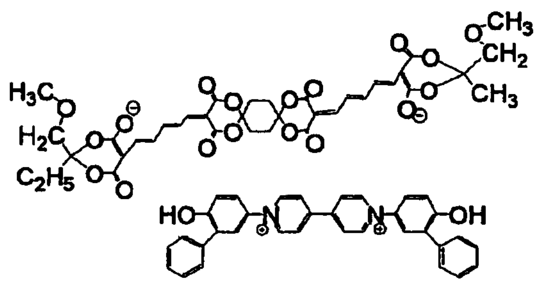

(I) −1 3

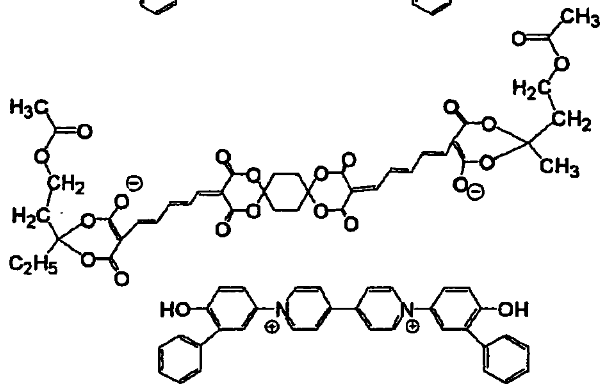

(I) −1 4

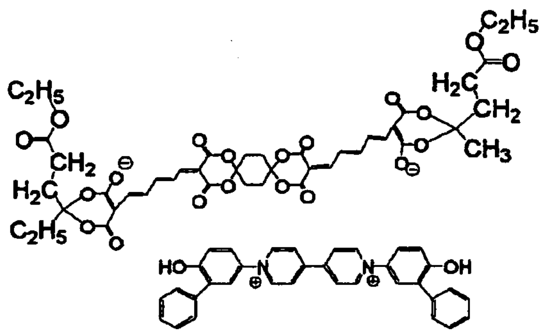

(I) −1 5

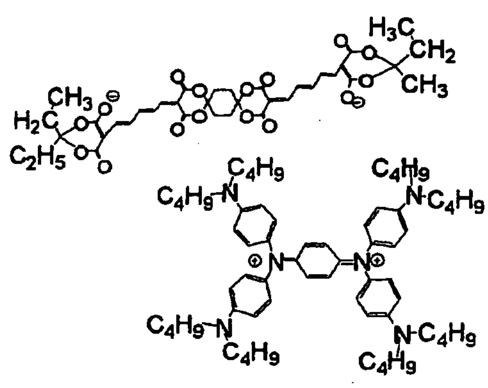

(I) －16

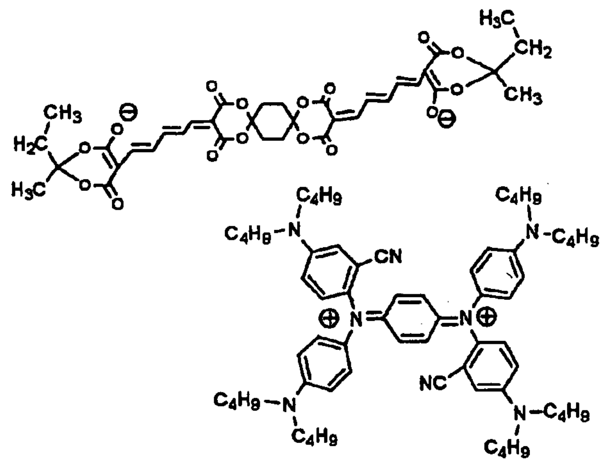

(I) －17

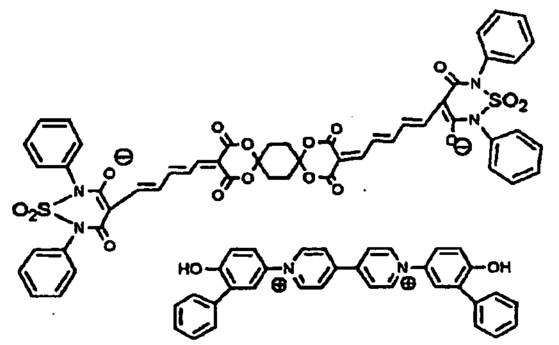

(I) －18

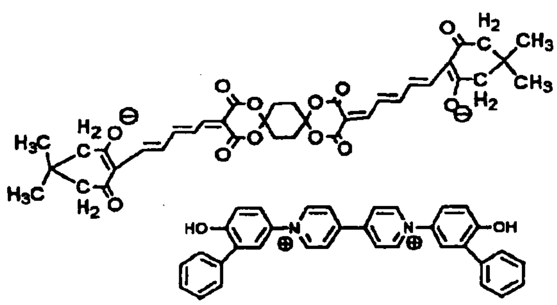

(I) －19

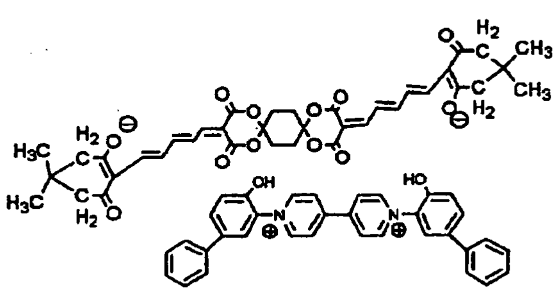

(I) −20

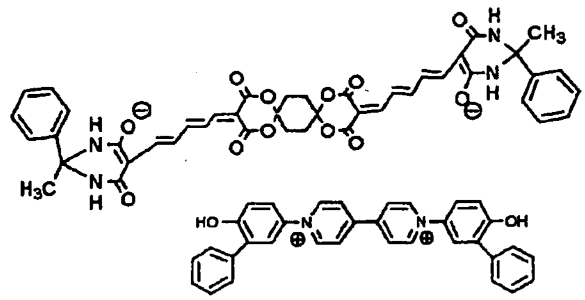

(I) −21

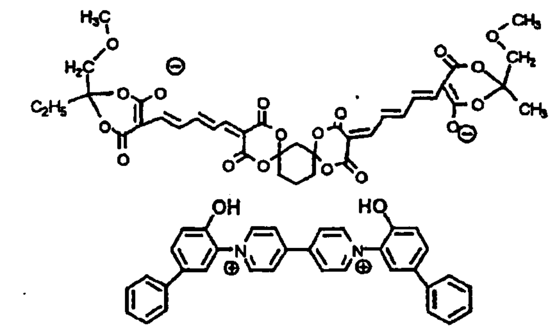

(I) −22

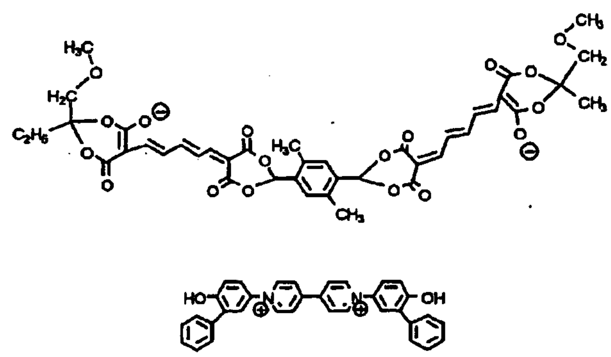

(I)-123

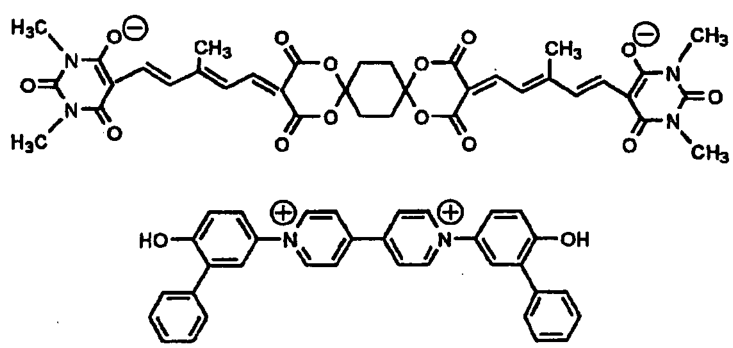

(I)-124

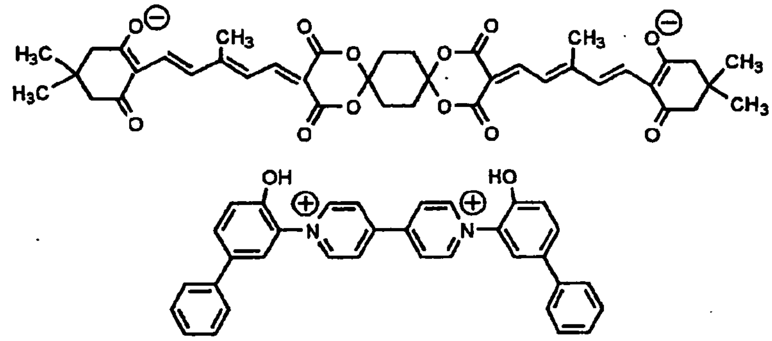

(I) -125

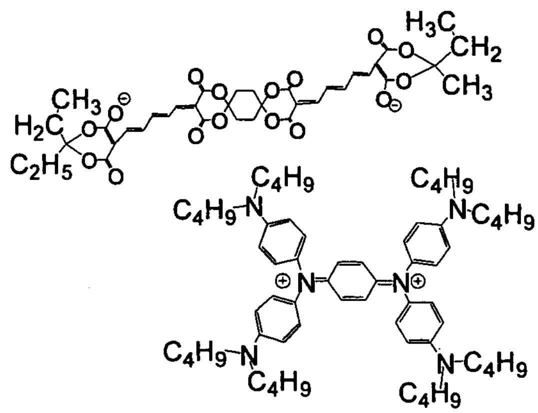

(II) -1

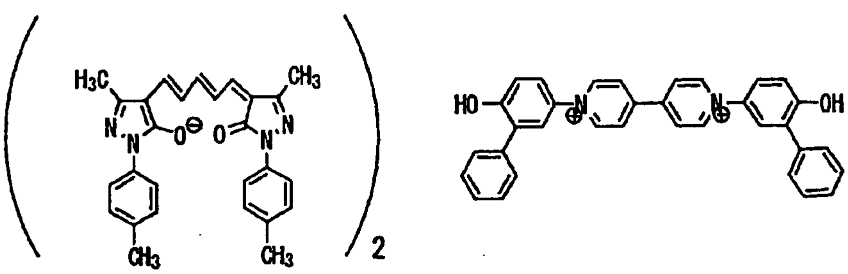

(II) -2

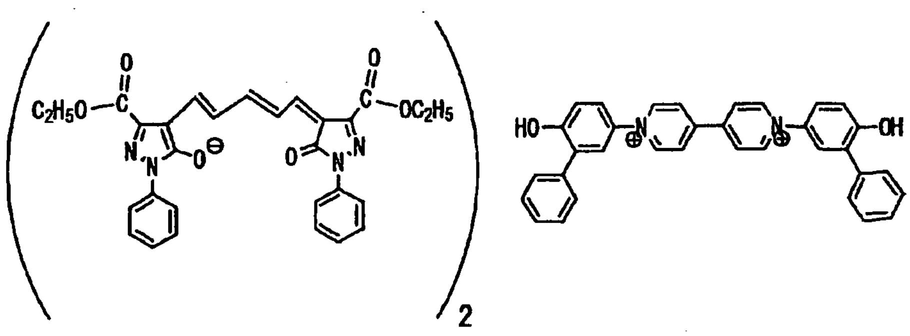

(II) −3

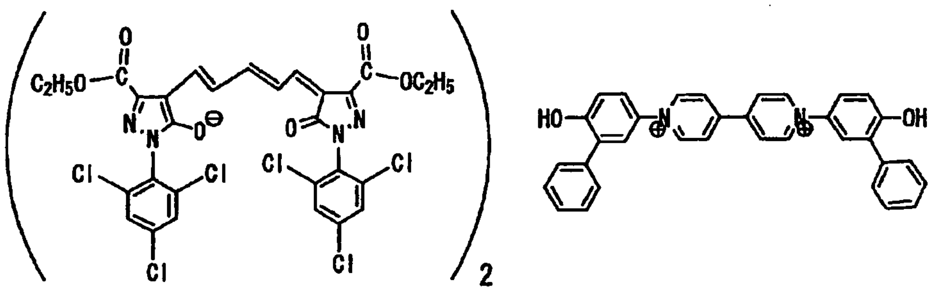

(II) −4

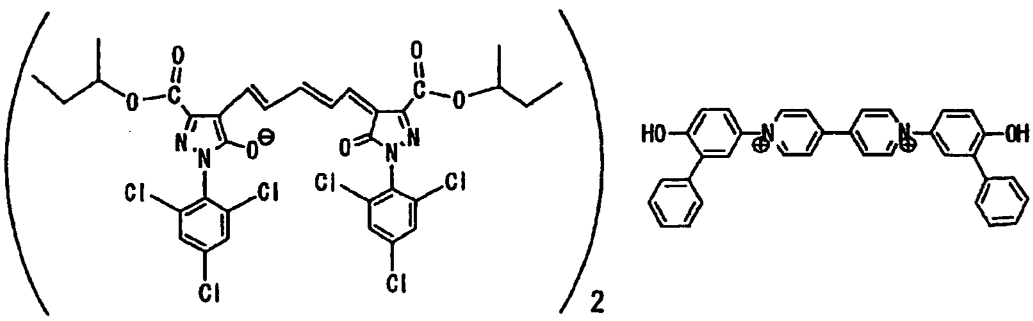

(II) −5

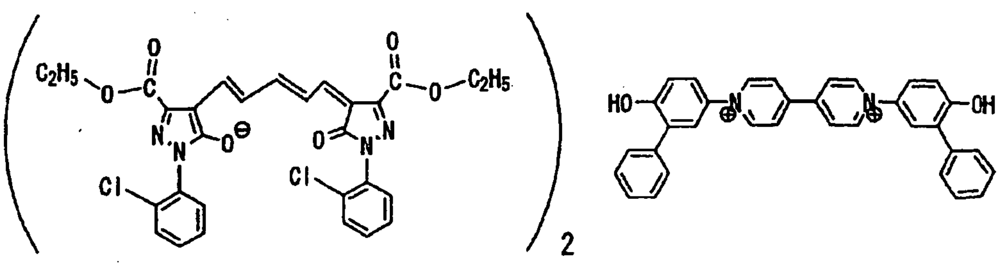

(II) −6

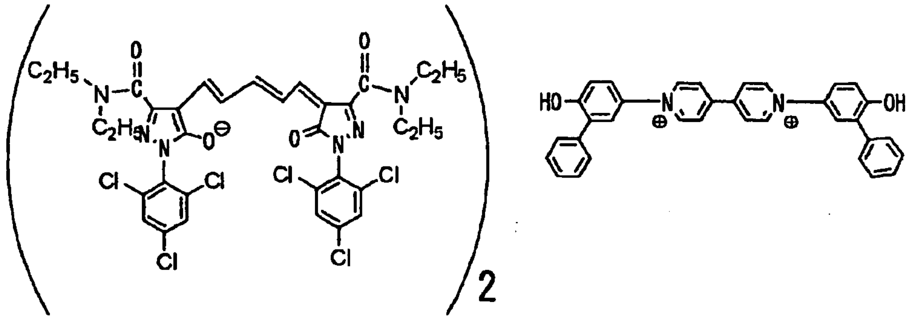

(II) －7

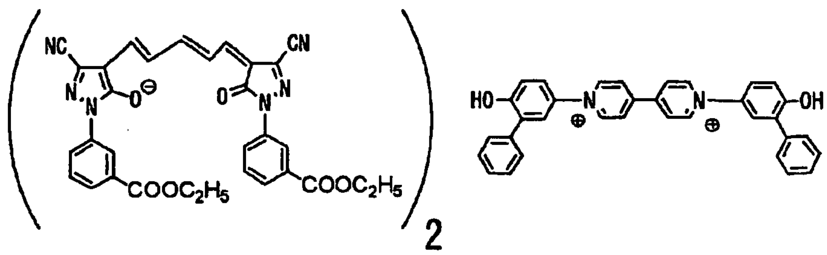

(II) －8

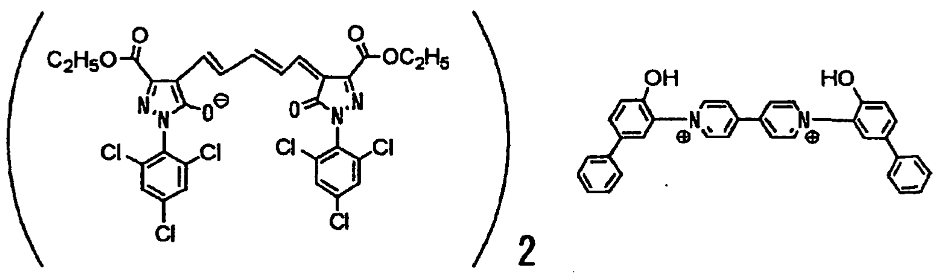

(II) －9

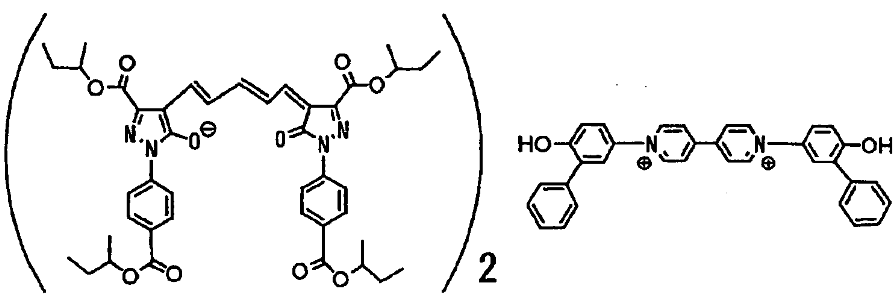

(II) －10

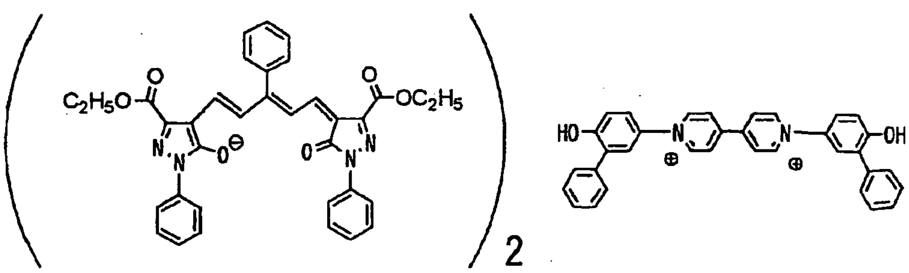

(II)－11

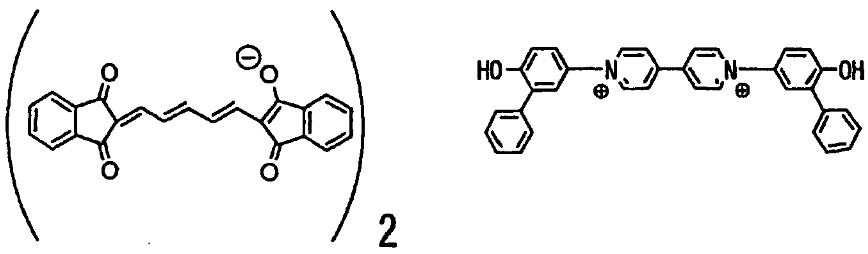

(II)－12

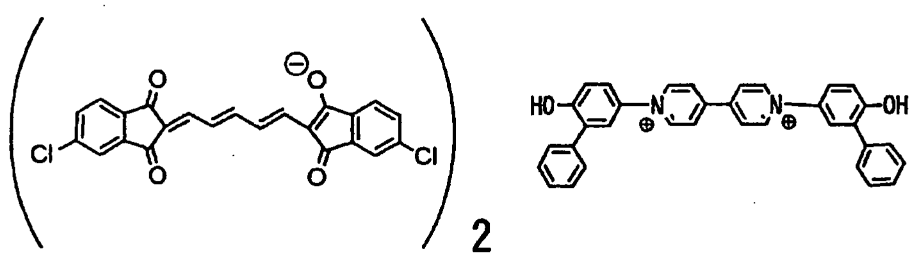

(II)－13

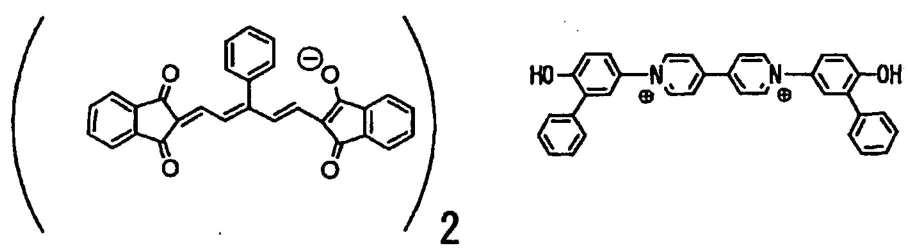

(II)－14

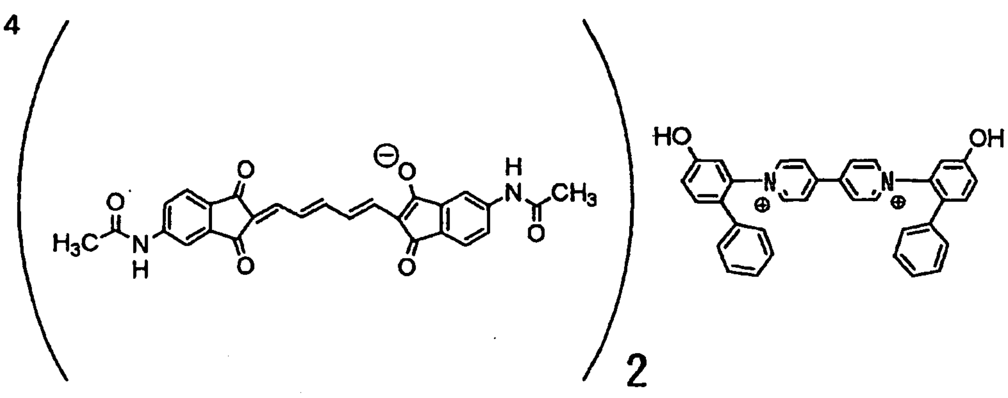

(II) -15

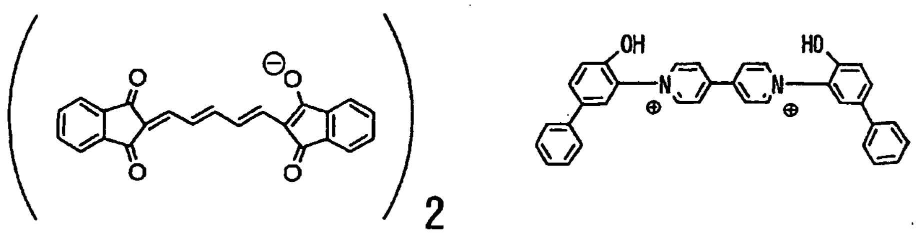

(II) -16

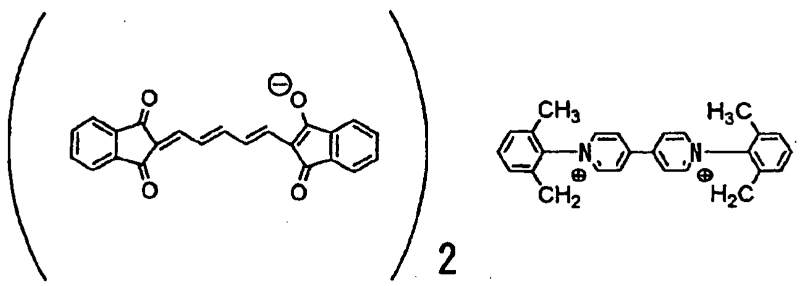

(II) -17

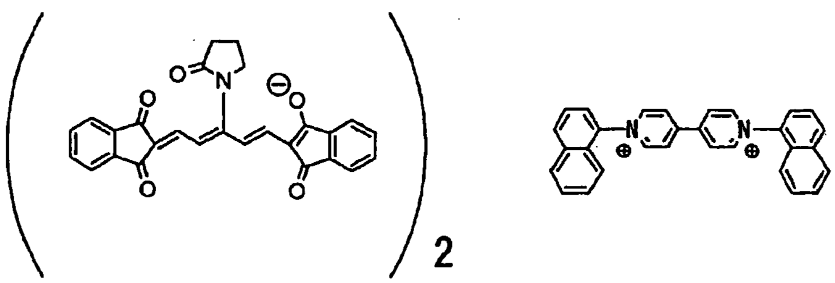

(II) -18

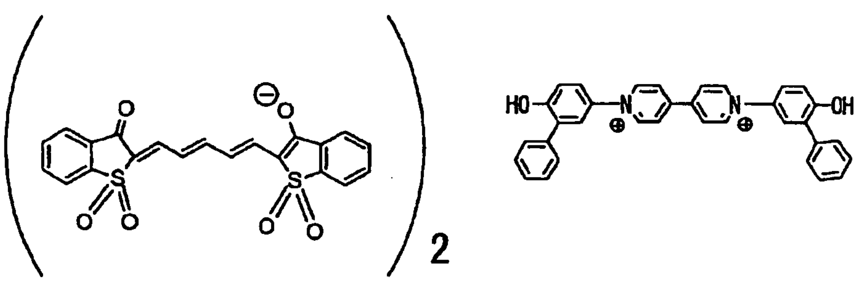

(II) -19

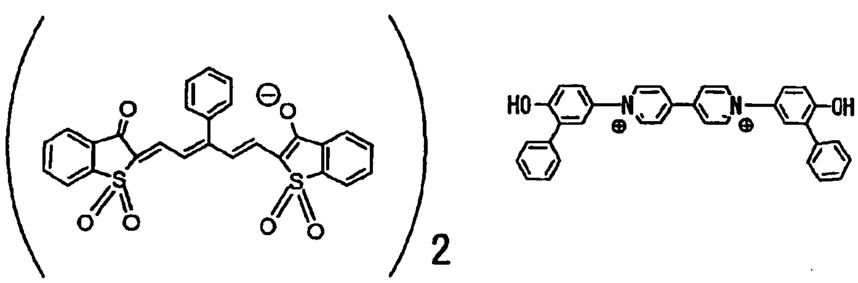

(Ⅱ) －２０

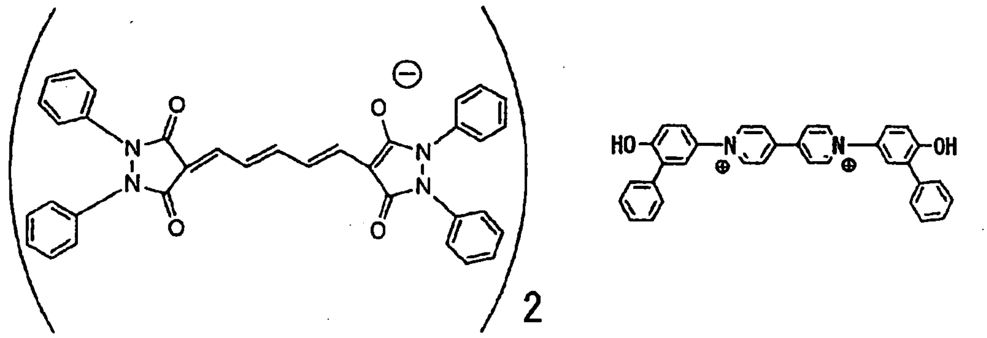

(Ⅱ) －２１

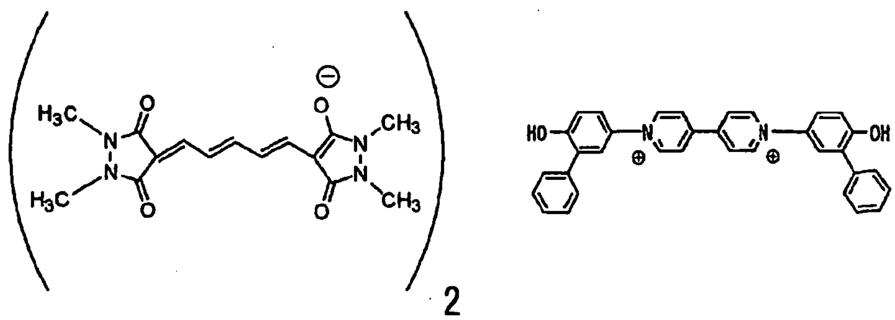

(Ⅱ) －２２

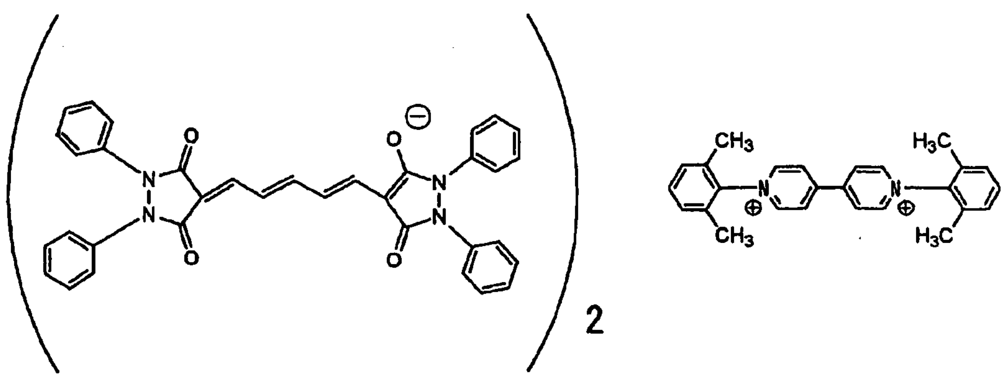

(Ⅱ) －２３

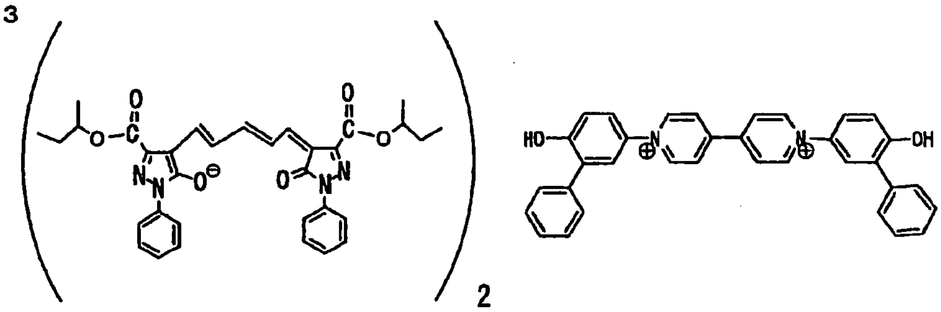

(Ⅱ) －２４

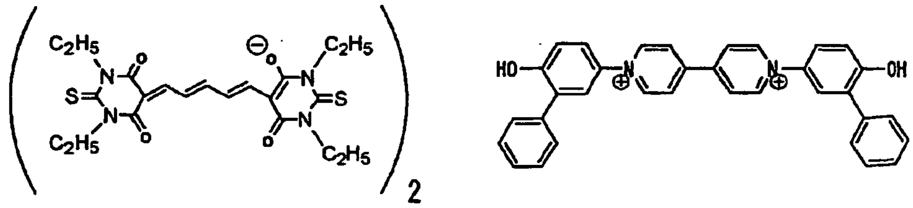

(Ⅱ) －２５

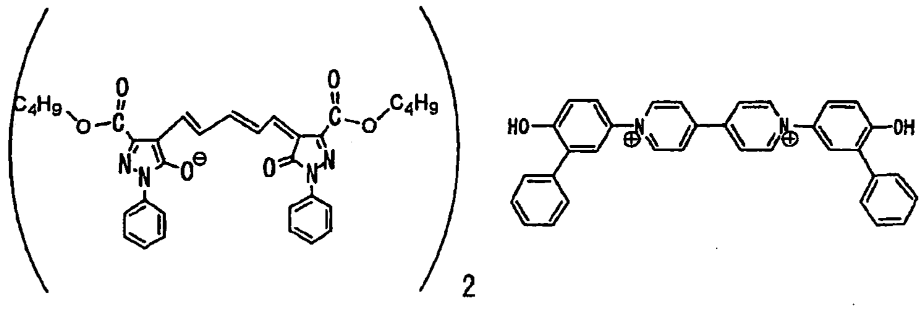

Typical oxonol dyes can be synthesized by condensation reaction between their corresponding active methylene compounds and methine sources (compounds used for introduction of methine groups into methine dyes). For details of the compounds of these kinds, JP-B-39-22069, JP-B-43-3504, JP-B-52-38056, JP-B-54-38129, JP-B-55-10059, JP-B-58-35544, JP-A-49-99620, JP-A-52-92716, JP-A-59-16834, JP-A-63-316853, JP-B-64-40827, British Patent No. 1,133,986, and U.S. Patent Nos. 3,247,127, 4,042,397, 4,181,225, 5,213,956 and 5,260,179 can be referred to. These compounds are also disclosed in JP-A-63-209995, JP-A-10-309871 and JP-A-2002-249674.

Synthesis methods of bis-oxonol dyes are disclosed in EP-A2-1424691.

In the present optical information-recording medium, each of two dyes that concern the invention and exhibit in amorphous film form their absorption maxima in the wavelength range of 500 nm to shorter than 600 nm constitutes 1 to 98 mass % of the total dyes, and a dye that relates to the invention and exhibits in amorphous film form its absorption maximum in the wavelength range of 600 nm to shorter than 720 nm constitutes 1 to 20 mass % of the total dyes. It is preferable that each of the two dyes whose absorption maxima are in the range of 500 nm to shorter than 600 nm constitutes 10 to 95 mass % of the total dyes and the dye whose absorption maximum is in the range of 600 nm to shorter than 720 nm constitutes 2 to 10 mass % of the total dyes. And it is especially preferable that each of the two dyes whose absorption maxima are in the range of 500 nm to shorter than 600 nm constitutes 20 to 95 mass % of the total dyes and the dye whose absorption maximum is in the range of 600 nm to shorter than 720 nm constitutes 2 to 6 mass % of the total dyes. The suitable mixing ratio between two dyes that concern the invention and exhibit in amorphous film form their absorption maxima in the wavelength range of 500 nm to shorter than 600 nm is from 1:1 to 1:5, preferably from 1:1 to 1:4, particularly preferably from 1:1 to 1:3.

Further, the three dyes of the foregoing types may be used in combination with another dye. Herein, it is preferable that the dye further used in combination is also an oxonol dye.

The present information-recording medium has no particular restriction except that it includes the dyes of structures represented by formulae (I) and (II) as a recording layer. When it is applied to CD-R, however, the present optical information-recording medium is preferred to have a configuration that the recording layer made up of dyes having structures represented by formulae (I) and (II), a light reflecting layer and a protective layer are provided in order of mention on a 1.2±0.2 mm-thick transparent disk-shape substrate wherein is formed a pregroove having a track pitch of 1.4 μm to 1.8 μm. On the other hand, when the present recording medium is applied to DVD-R, On the other hand, when the present information-recording medium is applied to DVD-R, preferred embodiments thereof are the following (1) and (2):

(1) An optical information-recording medium made up of two laminates, each of which has a recording layer including the dyes of structures represented by formulae (I) and (II) and a light reflecting layer on a 0.6±0.1 mm-thick transparent disk-shape substrate having a pregroove formed with a track pitch of 0.6 to 0.9 μm, bonded together with

the recording layers inside so as to have a total thickness of 1.2±0.2 mm.

(2) An optical information-recording medium formed by bonding a laminate, which is formed of a 0.6±0.1 mm-thick transparent disk-shape substrate having a pregroove formed with a track pitch of 0.6 to 0.9 μm, a recording layer made up of the dyes having structures represented by formulae (I) and (II) and a light reflecting layer, to a disk-shape protective substrate having the same dimensions as the laminate with the recording layer inside so as to have a total thickness of 1.2±0.2 mm.

Incidentally, the above optical information-recording media of DVD-R type can also be so structured that protective layers are further provided on their respective light reflecting layers.

The dye of a structure represented by formula (II') is illustrated in detail.

In formula (II'), $Za^{21}$, $Za^{22}$, $Za^{23}$, $Za^{24}$, $Za^{25}$ and $Za^{26}$ each independently represents atoms forming an acidic nucleus, examples of which are described in The Theory of the Photographic Process, 4th edition edited by James, page 198, Macmillan Publishing Co., Inc. (1977). More specifically, such an acidic nucleus includes pyrazolone-5-one, pyrazolidine-3,5-dione, imidazoline-5-one, hydantoin, 2- or 4-thiohydantoin, 2-iminooxazolidine-4-one, 2-oxazoline-5-one, 2-thiooxazoline-2,4-dione, isorhodanine, rhodanine, thiophene-3-one, thiophene-3-one-1,1-dioxide, indoline-2-one, indoline-3-one, 2-oxoindazolium, 5,7-dioxo-6,7-dihydrothiazolo[3,2-a]pyrimidine, 3,4-dihydroisoquinoline-4-one, 1,3-dioxane-4,6-dione (e.g., merdramic acid), barbituric acid, 2-thiobarbituric acid, coumarin-2,4-dione, indazoline-2-one, pyrido[1,2-a]pyrimidine-1,3-dione, pyrazolo[1,5-b]quinazolone, pyrazolopyridone, 3-dicyanomethylidynyl-3-phenylpropionitrile, and 5- or 6-membered carbon rings (e.g., hexane-1,3-dione, pentane-1,3-dione, indane-1,3-dione). Of these nuclei, pyrazole-5-one, barbituric acid, 2-thiobarbituric acid and 1,3-dioxane-4,6-dione are preferred over the others.

As $Za^{21}$, $Za^{22}$, $Za^{23}$, $Za^{24}$, $Za^{25}$ and $Za^{26}$ each, 1,3-dioxane-4,6-dione is most suitable.

Examples of a substituent by which each of the acidic nuclei as recited above can be substituted include a halogen atom, an alkyl group (including a cycloalkyl group and a bicycloalkyl group), an alkenyl group (including a cycloalkenyl group and a bicycloalkenyl group), an alkynyl group, an aryl group, a heterocyclic group, a cyano group, a hydroxyl group, a nitro group, a carboxyl group, an alkoxy group, an aryloxy group, a silyloxy group, a heterocyclyloxy group, an acyloxy group, a carbamoyloxy group, an alkoxycarbonyloxy group, an aryloxycarbonyloxy group, an alkylamino group, an arylamino group, an acylamino group, an aminocarbonylamino group, an alkoxycarbonylamino group, an aryloxycarbonylamino group, a sulfamoylamino group, an alkylsulfonylamino group, an arylsulfonylamino group, a mercapto group, an alkylthio group, an arylthio group, a heterocyclylthio group, a sulfamoyl group, a sulfo group, an alkylsulfinyl group, an arylsulfinyl group, an alkylsulfonyl group, an arylsulfonyl group, an acyl group, an aryloxycarbonyl group, an alkoxycarbonyl group, a carbamoyl group, an arylazo group, a heterocyclylazo group, an imido group, a phosphino group, a phosphinyl group, a phosphinyloxy group, a phosphinylamino group and a silyl group. Of these groups, 1-20C substituted or unsubstituted alkyl groups and 6-20C substituted or unsubstituted aryl groups are preferred over the others.

The suitable acidic nuclei are acidic nuclei having no substituents, those substituted by 1-20C substituted or unsubstituted alkyl groups, or those substituted by 6-20C substituted or unsubstituted aryl groups.

Each of $Ma^{21}$, $Ma^{22}$, $Ma^{23}$, $Ma^{24}$, $Ma^{25}$, $Ma^{26}$, $Ma^{27}$, $Ma^{28}$ and $Ma^{29}$ represents independently a substituted or unsubstituted methine group. Suitable examples of a radical by which the methine group may be substituted include a 1-20C alkyl group (e.g., methyl, ethyl, isopropyl), a halogen atom (e.g., chlorine, bromine, iodine, fluorine), a 1-20C alkoxy group (e.g., methoxy, ethoxy, isopropoxy), a 6-26C aryl group (e.g., phenyl, 2-naphthyl), a 0-20C heterocyclic group (e.g., 2-pyridyl, 3-pyridyl), a 6-20C aryloxy group (e.g., phenoxy, 1-naphthoxy, 2-naphthoxy), a 1-20C acylamino group (e.g., acetylamino, benzoylamino), a 1-20C carbamoyl group (e.g., N,N-dimethylcarbamoyl), a sulfo group, a hydroxyl group, a carboxyl group, a 1-20C alkylthio group (e.g., methylthio) and a cyano group. Alternatively, each methine group may combine with another methine group to form a ring structure, or it may combine with a constituent atom of $Za^{21}$, $Za^{22}$, $Za^{23}$, $Za^{24}$, $Za^{25}$ or $Za^{26}$ to form a ring structure.

It is preferable that each of $Ma^{21}$, $Ma^{22}$, $Ma^{23}$, $Ma^{24}$, $Ma^{25}$, $Ma^{26}$, $M^{27}$, $M^{28}$ and $M^{29}$ is independently an unsubstituted methine group or a methine group substituted by an ethyl group, a methyl group or a phenyl group, especially an unsubstituted methine group.

$L^{11}$ and $L^{12}$ are independent of each other, and each is a divalent linkage group forming no π-conjugated system in conjunction with its two bonds. The divalent linkage group has no particular restriction except that it forms no π-conjugated system between the chromophores to which it is bonded, but it preferably represents a 0-100C, preferably 1-20C, linkage group made up of one group or a combination of two or more groups selected from alkylene groups (containing 1 to 20 carbon atoms, such as methylene, ethylene, propylene, butylene and pentylene), arylene groups (containing 6 to 26 carbon atoms, such as phenylene and naphthylene), alkenylene groups (containing 2 to 20 carbon atoms, such as ethenylene and propenylene), alkynylene groups (containing 2 to 20 carbon atoms, such as ethynylene and propypylene), $-CO-N(R^{101})-$, -CO-O-, $-SO_2N(R^{102})-$, $-SO_2-O-$, $-N(R^{103})$ $CO-N(R^{104})-$, $-SO_2-$, -SO-, -S-, -O-, -CO-, $-N(R^{105})-$ or heterylene groups (containing 1 to 26 carbon atoms, such as 6-chloro-1,3,5-triazine-2,4-diyl and pyrimidine-2,4-diyl groups). Therein, each of $R^{101}$, $R^{102}$, $R^{103}$, $R^{104}$ and $R^{105}$ independently represent a hydrogen atom, a substituted or unsubstituted alkyl group, or a substituted or unsubstituted aryl group. Additionally, more than one linkage group represented by $L^{11}$ or $L^{12}$ may be present between the two chromophores connecting thereto, and more than one $L^{11}$ or $L^{12}$ (preferably two $L^{11}$s or two $L^{12}$s) may form a ring in conjunction with each other.

Each of $L^{11}$ and $L^{12}$ is preferably a group constituting a ring formed by conjunction of two alkylene groups (preferably two ethylene groups). Herein, the ring formed is preferably a 5- or 6-membered ring (especially a cyclohexane ring).

In formula (II'), $Ka^{21}$, $Ka^{22}$ and $Ka^{23}$ are independent of one another, and each is an integer of 0 to 3. When $Ka^{21}$, $Ka^{22}$ and $Ka^{23}$ are plural number each, more than one $Ma^{21}$, more than one $Ma^{22}$, more than one $Ma^{25}$, more than one $Ma^{26}$, more than one $Ma^{28}$ and more than one $Ma^{29}$ may be the same or different each. It is preferable in formula (II') that $Ka^{21}$, $Ka^{22}$ and $Ka^{23}$ are all 2.

Q represents a univalent cation for neutralizing an electric charge. The wording "univalent cation" is a representation of half a divalent cation. Therefore, 2Q represents a divalent cation, and 3Q represents a trivalent cation. The ion represented by Q has no particular restrictions, but it may be an ion derived from an inorganic compound or an ion derived from an organic compound. Examples of a cation represented by Q include metallic ions, such as sodium ion and potassium ion, and onium ions such as quaternary ammonium ions, oxonium ions, sulfonium ions, phosphonium ions, selenonium ions and iodonium ions.

The cation represented by Q is preferably an onium ion, far preferably a quaternary ammonium ion. As quaternary ammonium ions, the 4,4'-bipyridinium cations represented by formula (I-4) in JP-A-2000-52658 and the 4,4'-bipyridinium cations disclosed in JP-A-2002-59652 are especially suitable.

In formula (II'), it is preferable that the acidic nucleus $Za^{21}$, $Za^{22}$, $Za^{23}$, $Za^{24}$, $Za^{25}$ and $Za^{z6}$ form each individually is pyrazole-5-one, barbituric acid, 2-thiobarbituric acid or 1,3-dioxane-4,6-dione, which is unsubstituted or substituted by a 1-20C substituted or unsubstituted alkyl group or a 6-20C substituted or unsubstituted aryl group, $Ma^{21}$, $Ma^{22}$, $Ma^{23}$, $Ma^{24}$, $Ma^{25}$, $Ma^{26}$, $Ma^{27}$, $Ma^{28}$ and $Ma^{29}$ are each independently an unsubstituted methine group or a methine group substituted by an ethyl group, a methyl group or a phenyl group, each of $L^{11}$ and $L^{12}$ is a group constituting a 5- or 6-membered ring formed by conjunction of two alkylene groups (preferably two ethylene groups), $Ka^{21}$, $Ka^{22}$ and $Ka^{23}$ are all 2 and the cation represented by Q is one-half the 4,4'-bipyridinium cation represented by formula (I-4) in JP-A-2000-52658 or one-half the 4,4'-bipyridinium cation disclosed in JP-A-2002-59652.

In the compound represented by formula (I'), $Za^{21}$, $Za^{22}$, $Za^{23}$ and $Za^{24}$, $Ma^{21}$, $Ma^{22}$, $Ma^{23}$, $Ma^{24}$, $Ma^{25}$, $Ma^{26}$, $L^{11}$, $Ka^{21}$, $Ka^{22}$ and Q in formula (I') have the same meanings as in formula (II'), respectively, and suitable ranges of groups represented by each individual symbols are also the same.

Suitable examples of the present compound represented by formula (II') are illustrated below, but these examples should not be construed as limiting the scope of the invention.

(II')-1

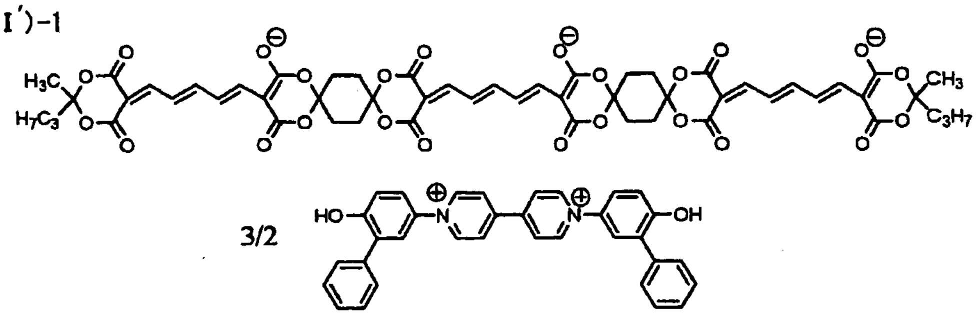

(II')-2

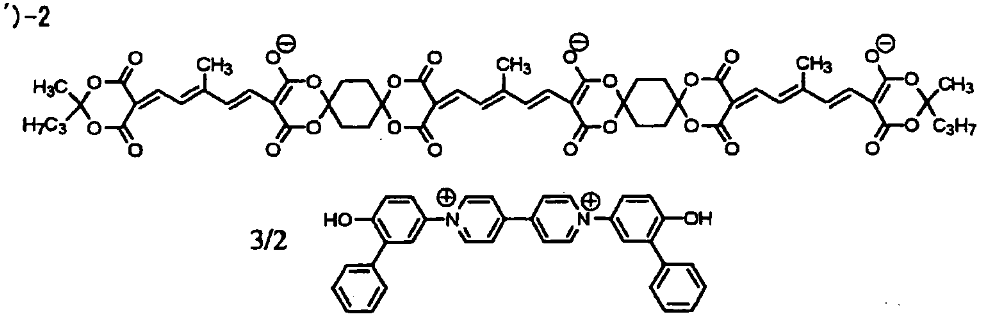

(II')-3

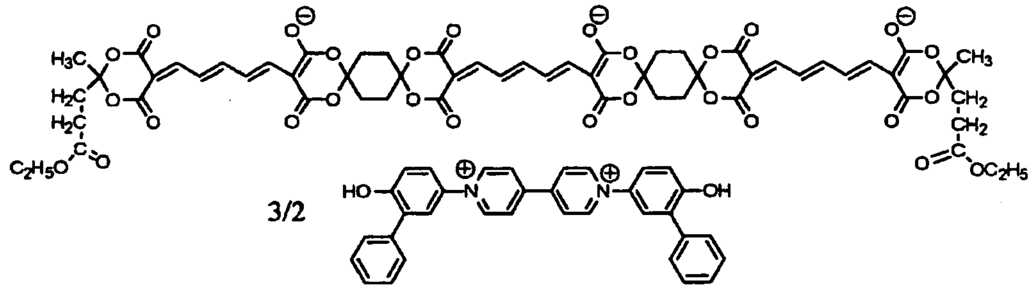

(II')-4

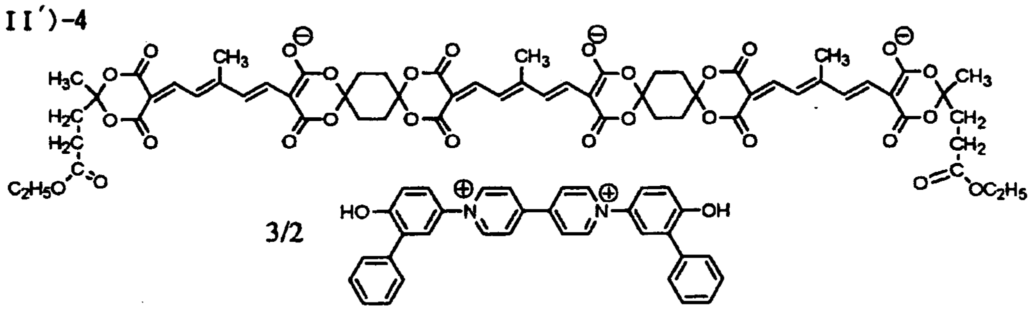

(II')-5

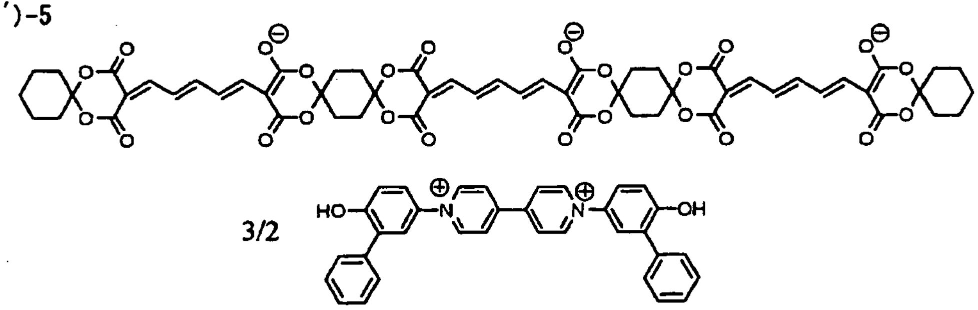

(II')-6

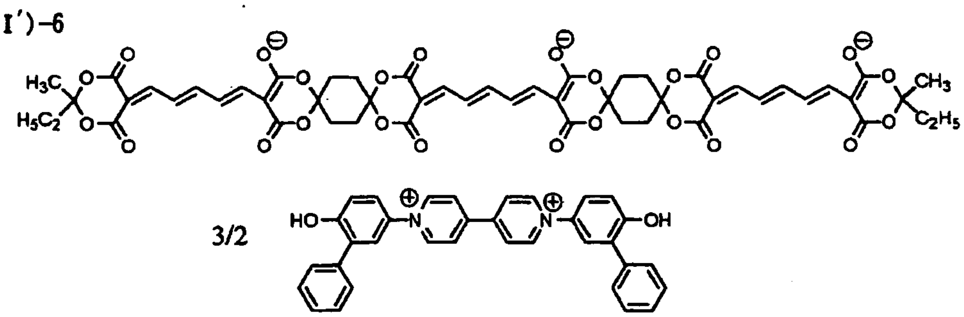

(II')-7

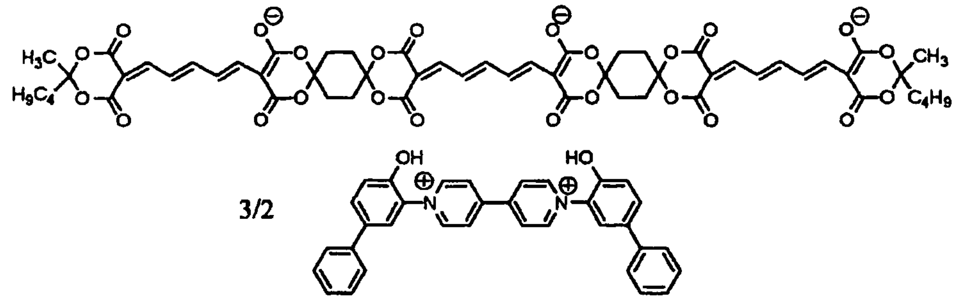

3/2

(II')-8

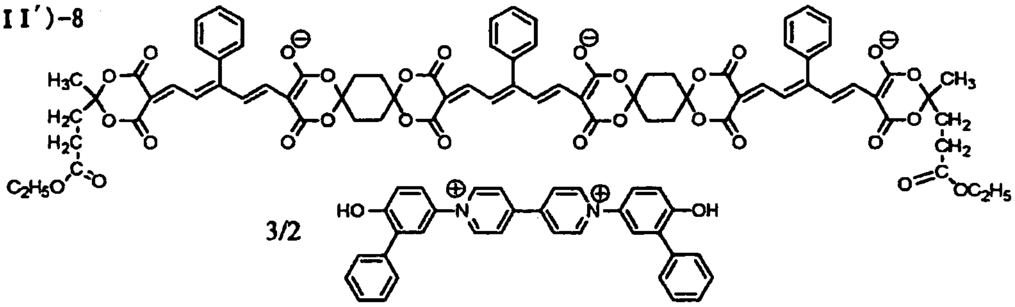

3/2

(II')-9

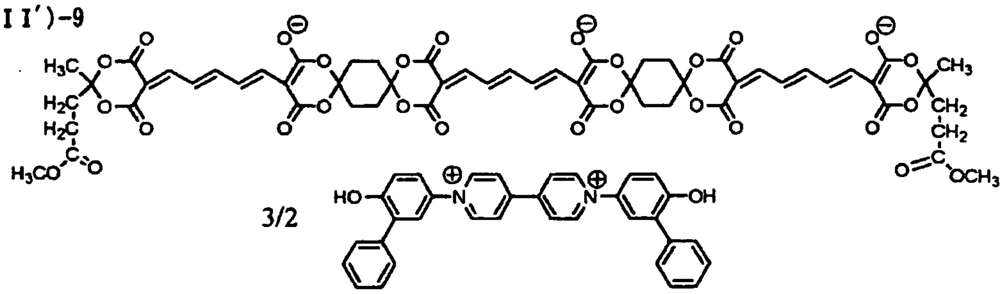

3/2

(II')-10

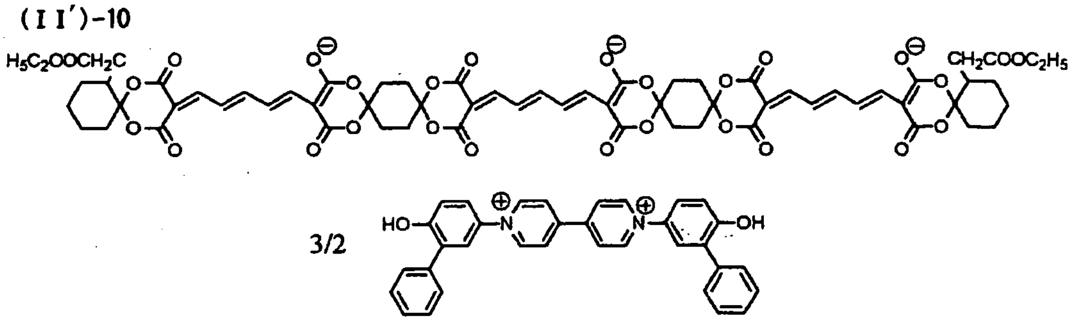

3/2

(II')-11

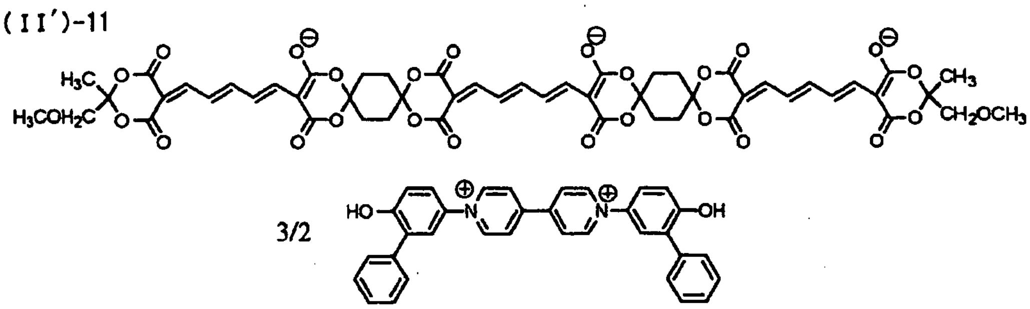

3/2

(II')-12

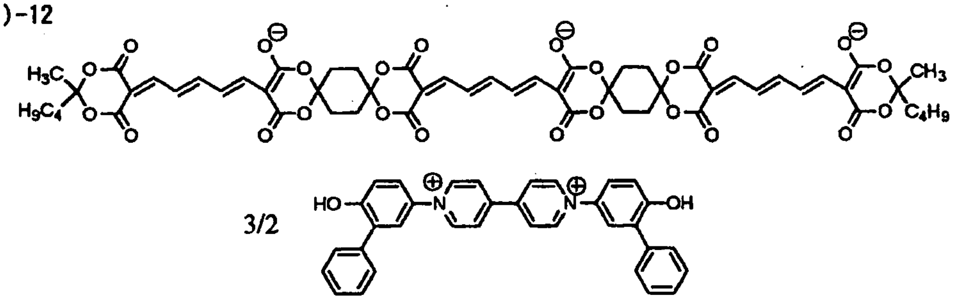

3/2

(II')-13

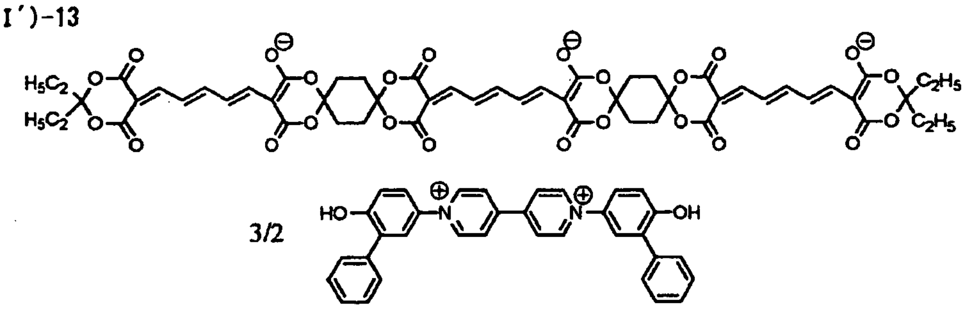

3/2

(II')-14

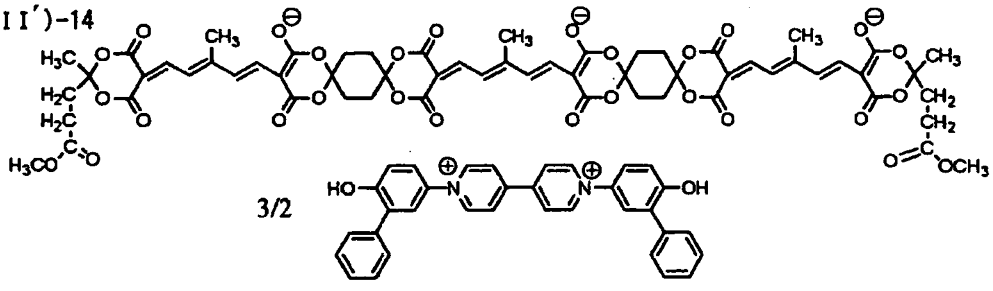

3/2

(II')-15

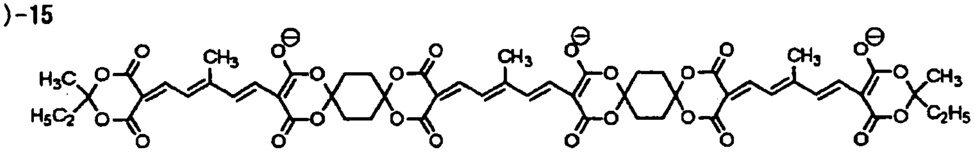

3/2

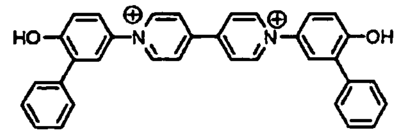

(II')-16

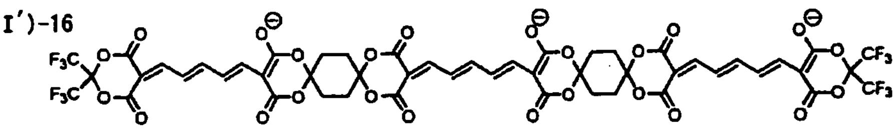

3/2

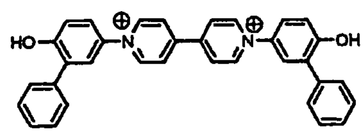

(II')-17

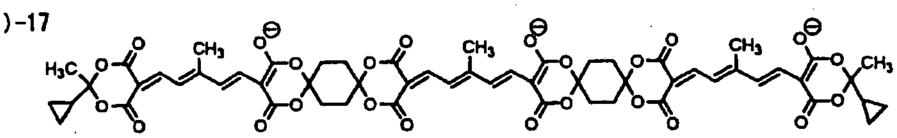

3/2

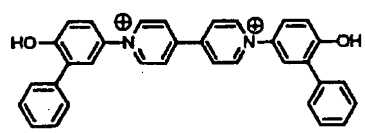

(II')-18

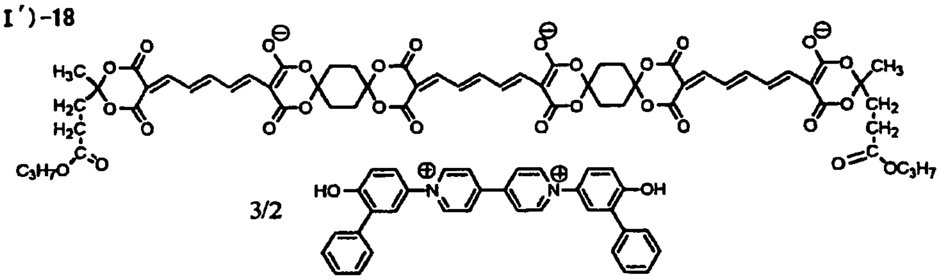

(II')-19

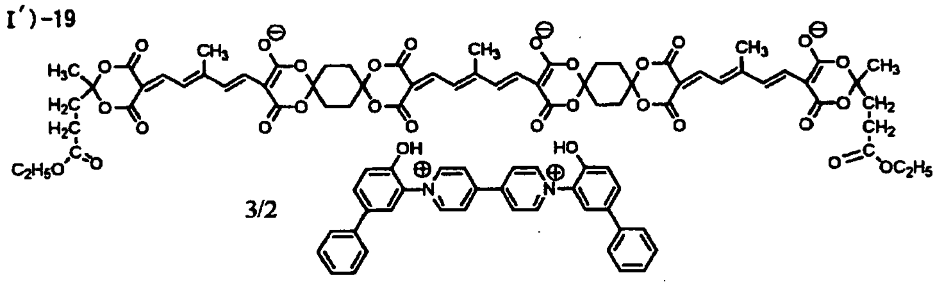

3/2

(II')-20

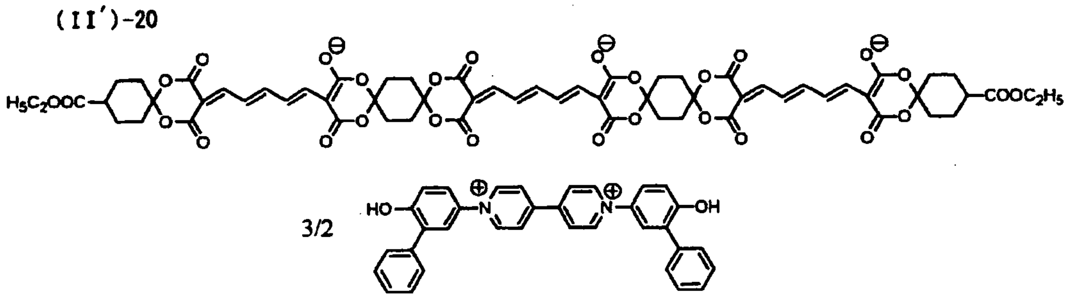

3/2

(II')-21

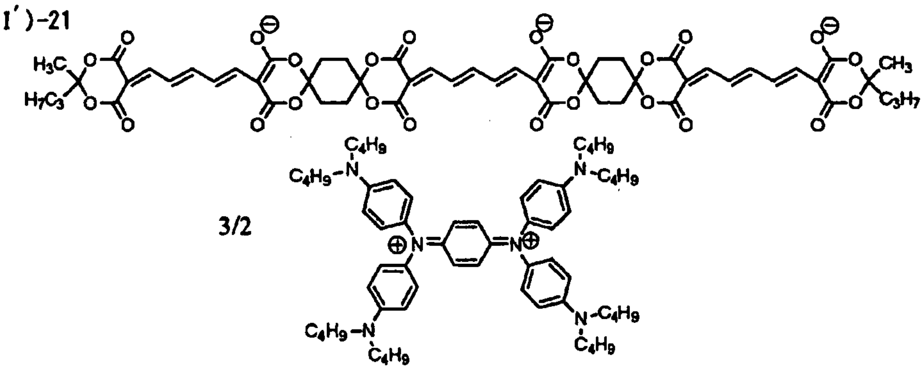

3/2

(II')-22

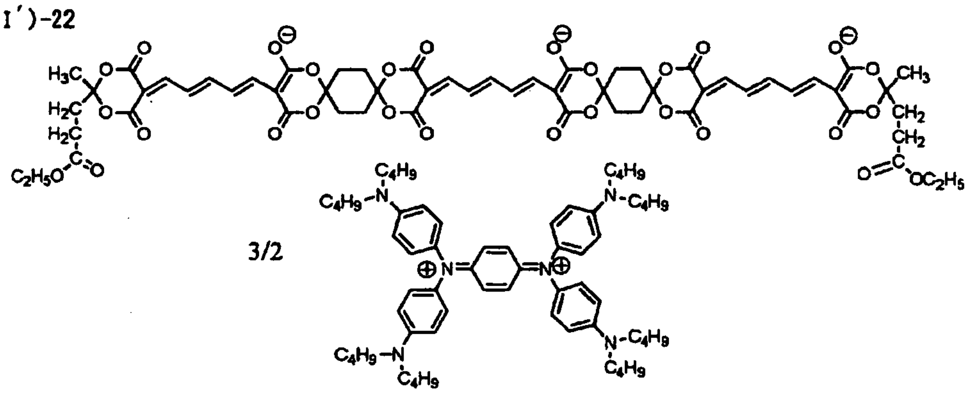

3/2

(II')-23

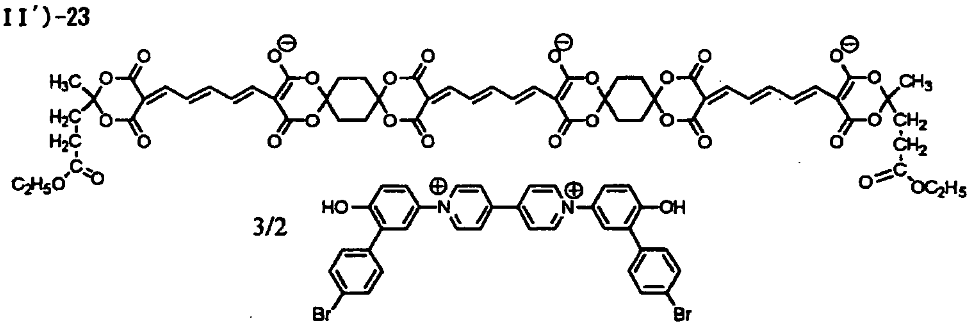

3/2

(II')-24

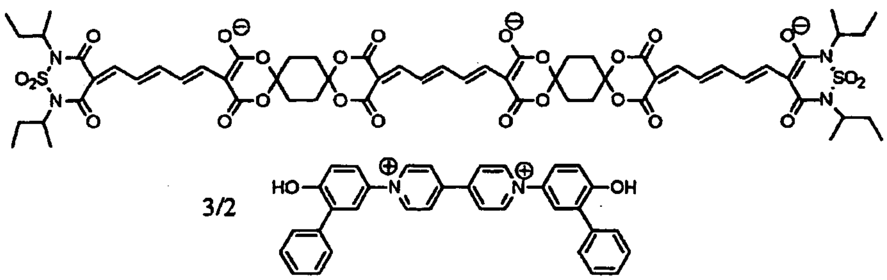

3/2

Suitable examples of a compound that is used in the invention and represented by formula (I') are illustrated below, but these examples should not be construed as limiting the scope of the invention.

1.

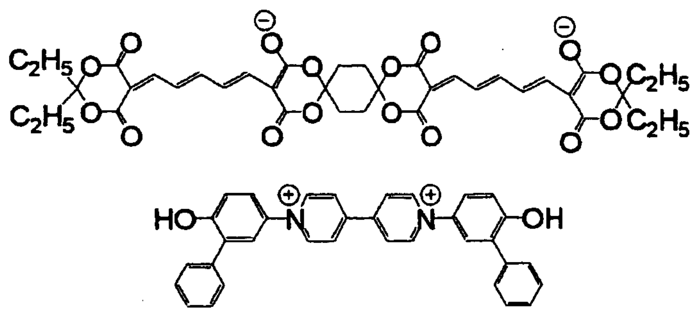

2.

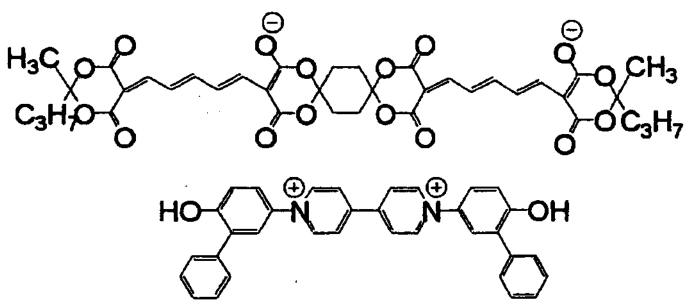

3.

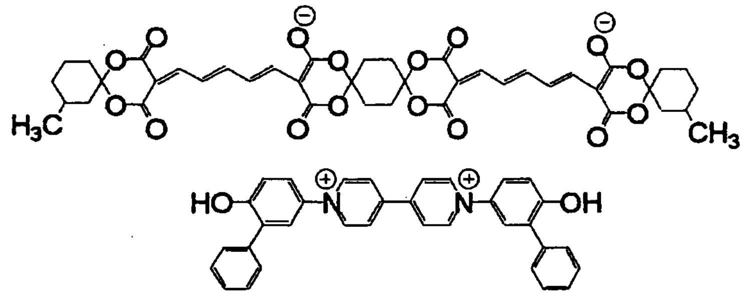

4.

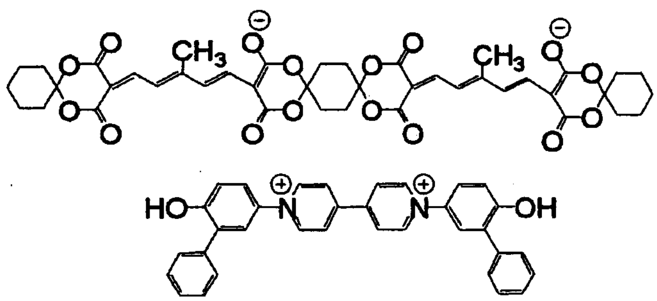

5.

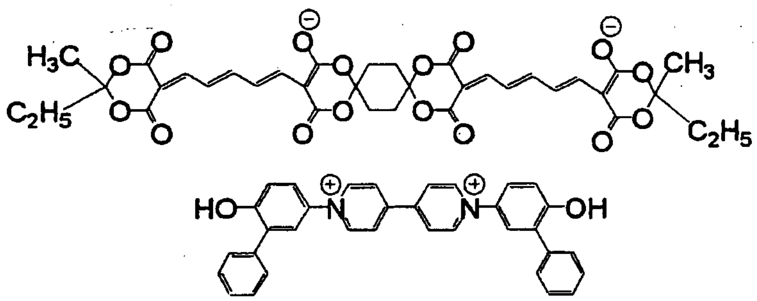

6.

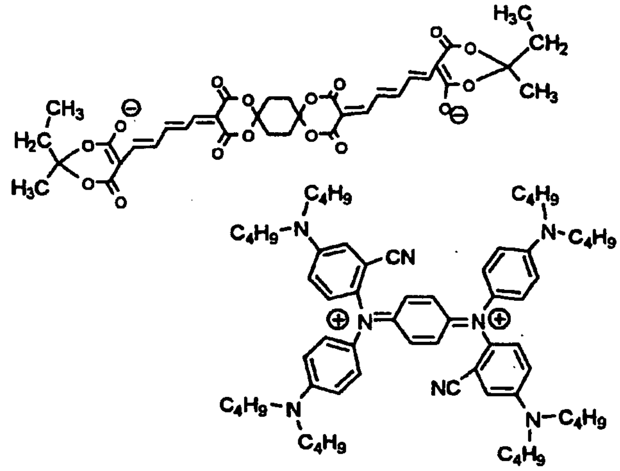

7.

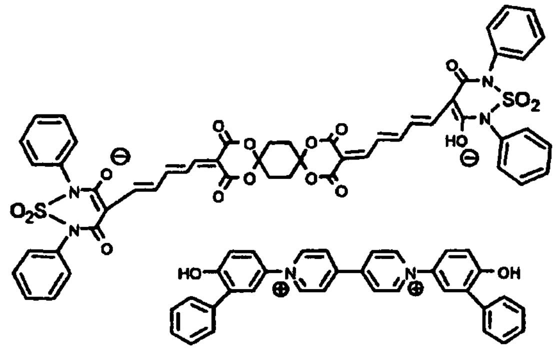

8.

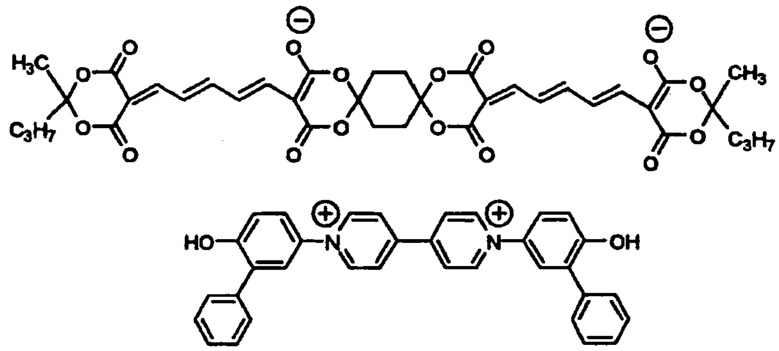

9.

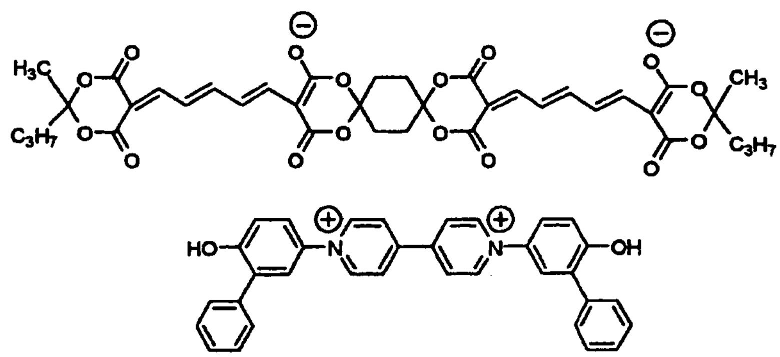

10.

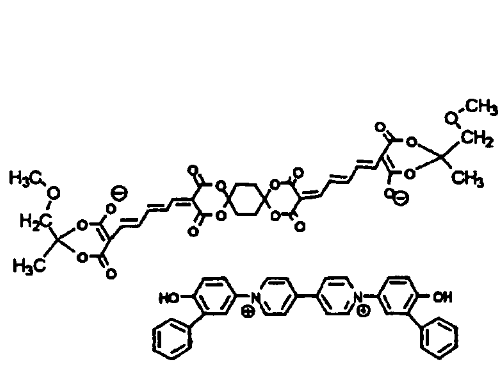

11.

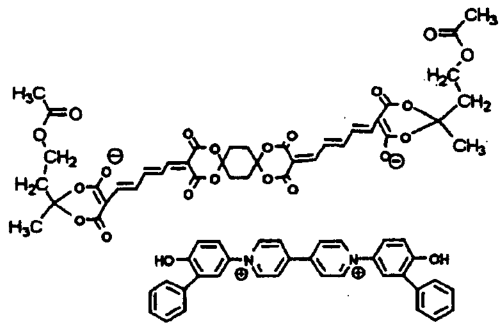

12.

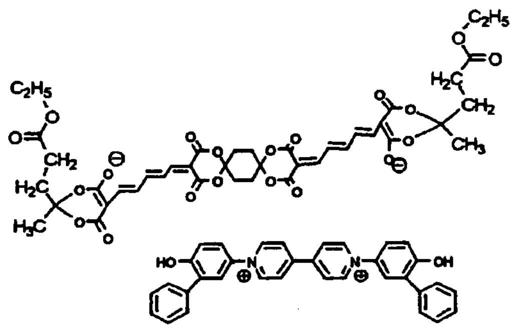

13.

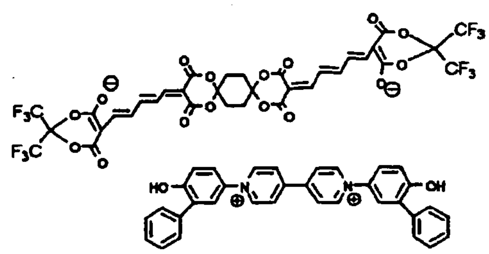

14.

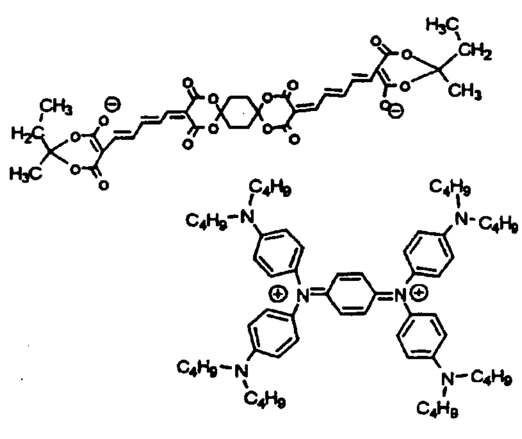

The moiety of a typical oxonol dye can be synthesized by condensation reaction between its corresponding active methylene compound and a methine source (a compound used for introduction of methine groups into methine dyes). For details of the compounds of these kinds, JP-B-39-22069, JP-B-43-3504, JP-B-52-38056, JP-B-54-38129, JP-B-55-10059, JP-B-58-35544, JP-A-49-99620, JP-A-52-92716, JP-A-59-16834, JP-A-63-316853, JP-B-64-40827, British Patent No. 1,133,986, and U.S. Patent Nos. 3,247,127, 4,042,397, 4,181,225, 5,213,956 and 5,260,179 can be referred to.

Although the compound that concerns the invention and has a structure represented by formula (II') can be used alone, a mixture of the compound with the dye having a structure represented by formula (I') may also be used. When they are used in mixture form, it is preferable that the dye of a structure represented by formula (I') constitutes 80 to 99 mass % of the total dyes used and the dye of a structure represented by formula (II') constitutes 1 to 20 mass % of the total dyes used.

It is preferable by far that the dye of a structure represented by formula (I') constitutes 85 to 97 mass % of the total dyes used and the dye of a structure represented by formula (II') constitutes 3 to 10 mass % of the total dyes used, and it is especially preferable that the dye of a structure represented by formula (I') constitutes 85 to 95 mass % of the total dyes used and the dye of a structure represented by formula (II') constitutes 3 to 8 mass % of the total dyes used.

A third dye may further be used in combination with the foregoing mixture. In this case, it is preferable that the third dye is also an oxonol dye.

There are cases where the dyes that concern the invention and have structures represented by formula (II') can be formed as by-products in syntheses of the dyes of structures represented by formula (I'). In these cases, the reaction products can be used for production of optical recording media as they are in mixture form without isolation of the dyes of formula (II') from the dyes of formula (I') and purification thereof. The use of such reaction products is advantageous from the viewpoint of productivity of dyes.

The present information-recording medium has no particular restriction except that it includes the dye compound represented by formula (II') (preferably in combination with the dye represented by formula (I')) as a recording layer. When it is applied to CD-R, however, the present optical information-recording medium is preferred to have a configuration that the recording layer including the dye of a structure represented by formula (II') (preferably in combination with the dye of a structure represented by formula (I')), a light reflecting layer and a protective layer are provided in order of mention on a 1.2±0.2 mm-thick transparent disk-shape substrate wherein is formed a pregroove having a track pitch of 1.4 μm to 1.8 μm. On the other hand, when the present information-recording medium is applied to DVD-R, preferred embodiments thereof are the following (1) and (2):

(1) An optical information-recording medium formed of two laminates, each of which has a recording layer including the dye represented by formula (II') (preferably in combination with the dye represented by formula (I')) and a light reflecting layer on a 0.6±0.1 mm-thick transparent disk-shape substrate having a pregroove formed with a track pitch of 0.6 to 0.9 μm, bonded together with the recording layers inside so as to have a total thickness of 1.2±0.2 mm.

(2) An optical information-recording medium formed by bonding a laminate, which is formed of a 0.6±0.1 mm-thick transparent disk-shape substrate having a pregroove formed with a track pitch of 0.6 to 0.9 μm, a recording layer including the dye represented by formula (II') (preferably in combination with the dye represented by formula (I')) and a light reflecting layer, to a disk-shape protective substrate having the same dimensions as the laminate with the recording layer inside so as to have a total thickness of 1.2±0.2 mm. Incidentally, the above optical information-recording media of DVD-R type can also be so structured that protective layers are further provided on their respective light reflecting layers.

In the next place, the optical information-recording medium in the invention where the dye in the recording layer is a mixture of an oxonol dye and a cyanine dye is described.

The oxonol dyes for use in the optical information- recording medium in the invention suffice if they are oxonol dyes. As the specific examples of oxonol dyes, those described in F.M. Harmer, Heterocyclic Compounds-Cyanine Dyes and Related Compounds, John & Wiley & Sons, New York, London (1964) are exemplified. Of oxonol dyes, oxonol dyes having a structure represented by the following formula (1') is preferred.

Formula (1')

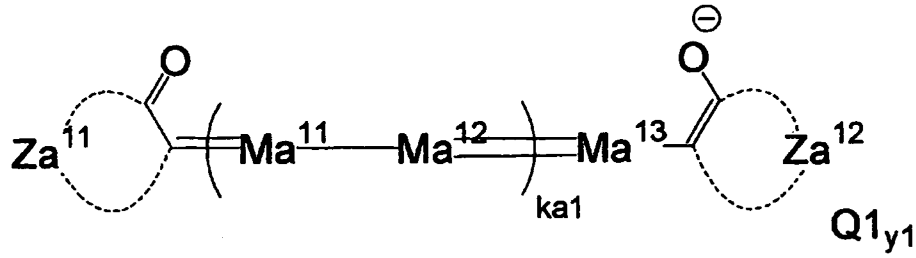

In formula (1'), $Za^{11}$ and $Za^{12}$ each represents an atomic group for forming an acidic nucleus.

As the specific examples of $Za^{11}$ and $Za^{12}$, the compounds described in James, The Theory of the Photographic Process, 4th Ed., p. 198, Macmillan Publishing Co., Inc. (1977) are exemplified. Specifically, nuclei such as pyrazol-5-one, pyrazolidine-3,5-dione, imidazolin-5-one, hydantoin, 2- or 4-thiohydantoin, 2-iminooxazolidin-4-one, 2-oxazolin-5-one, 2-thiooxazoline-2,4-dione, isorhodanine, rhodanine, a 5- or 6-membered carbon ring (e.g., indane-1,3-dione), thiophen- 3-one, thiophen-3-one-1,1-dioxide, indolin-2-one, indolin- 3-one, 2-oxoindazolium, 5,7-dioxo-6,7-dihydrothiazolo- [3,2-a]pyrimidine, 3,4-dihydroisoquinolin-4-one, 1,3- dioxane-4,6-dione (e.g., merdramic acid), barbituric acid, 2-thiobarbituric acid, coumarin-2,4-dione, indazolin-2-one, pyrido[1,2-a]pyrimidine-1,3-dione, pyrazolo[1,5-b]- quinazolone, pyrazolopyridone, 3-dicyanomethylidynyl-3-phenylpropionitrile, and merdramic acid are exemplified, and pyrazol-5-one, barbituric acid, 2-thiobarbituric acid, and 1,3-dioxane-4,6-dione are more preferred.

$Za^{11}$ and $Za^{12}$ may be substituted with a substituent. The examples of the substituents of $Za^{11}$ and $Za^{12}$ include a substituted or unsubstituted alkyl group, a substituted or unsubstituted alkoxyl group, a substituted or unsubstituted aryl group, a substituted or unsubstituted aryloxy group, a substituted or unsubstituted heterocyclic group, a halogen atom, a carboxyl group, a substituted or unsubstituted alkoxycarbonyl group, a cyano group, a substituted or unsubstituted acyl group, a substituted or unsubstituted carbamoyl group, an amino group, a substituted amino group, a sulfo group, a hydroxyl group, a nitro group, a substituted or unsubstituted sulfonamido group, a substituted or unsubstituted ureido group, a substituted or unsubstituted alkylsulfonyl group, a substituted or unsubstituted arylsulfonyl group, a substituted or unsubstituted sulfinyl group, and a substituted or unsubstituted sulfamoyl group.

The preferred substituents include a substituted or unsubstituted alkyl group having from 1 to 20 carbon atoms, a substituted or unsubstituted heterocyclic group having from 2 to 20 carbon atoms, a substituted or unsubstituted alkoxyl group having from 1 to 20 carbon atoms, a substituted or unsubstituted aryl group having from 6 to 20 carbon atoms, and a halogen atom, more preferred substituents are a substituted or unsubstituted alkyl group having from 1 to 10 carbon atoms, a substituted or unsubstituted alkoxyl group having from 1 to 10 carbon atoms, a substituted or unsubstituted heterocyclic group having from 2 to 10 carbon atoms, and a halogen atom, and most preferred substituents are an unsubstituted alkyl group having from 1 to 5 carbon atoms, an unsubstituted alkoxyl group having from 1 to 5 carbon atoms, a substituted or unsubstituted heterocyclic group having from 2 to 6 carbon atoms, and a halogen atom.

$Ma^{11}$, $Ma^{12}$ and $Ma^{13}$ each represents a substituted or unsubstituted methine group. As the substituents for substituting $Ma^{11}$, $Ma^{12}$ and $Ma^{13}$, those described as the substituents for substituting $Za^{11}$ and $Za^{12}$ are exemplified. $Ma^{11}$, $Ma^{12}$ and $Ma^{13}$ each preferably represents an unsubstituted methine group, an unsubstituted alkyl group having from 1 to 5 carbon atoms, an unsubstituted alkoxyl group having from 1 to 5 carbon atoms, a substituted or unsubstituted heterocyclic group having from 2 to 6 carbon atoms, a methine group substituted with a halogen atom, or an unsubstituted methine group.

ka1 represents an integer of from 0 to 3, and more preferably an integer of from 1 to 2. When ka1 is 2 or more, a plurality of $Ma^{11}$ and $Ma^{12}$ may be the same or different.

Q1 represents an ion for neutralizing electric charge, and y1 represents a number necessary for the neutralization of electric charge.

The ion represented by Q1 is not especially restricted, and the ion may be an ion derived from an inorganic compound or an ion derived from an organic compound. The electric charge of the ion represented by Q1 may be univalent or polyvalent. The examples of the cations represented by Q1 include metallic ions, such as sodium ion and potassium ion, and onium ions such as quaternary ammonium ion, oxonium ion, sulfonium ion, phosphonium ion, selenonium ion and iodonium ion.

The cation represented by Q1 is preferably an onium ion, and more preferably a quaternary ammonium ion. As quaternary ammonium ions, 4,4'-bipyridinium cations represented by formula (1-4) in JP-A-2000-52658 and 4,4'-bipyridinium cations disclosed in JP-A-2002-59652 are especially preferred.

Of the dyes represented by formula (1'), those dyes in which the ion represented by Q1 has a structure represented by the following formula (3') are preferred. When Q1 is a divalent cation, taking y1 as 1/2, Q1y1 means to represent a univalent cation as a whole.

Formula (3')

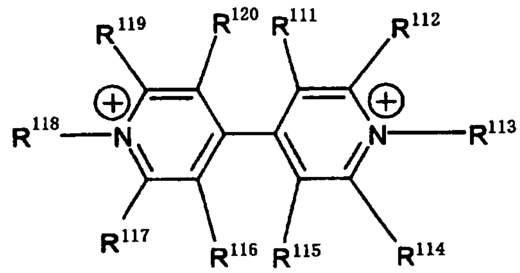

In formula (3'), $R^{111}$, $R^{112}$, $R^{114}$, $R^{115}$, $R^{116}$, $R^{117}$, $R^{119}$ and $R^{120}$ each represents a hydrogen atom or a substituent. The examples of the substituents include a halogen atom, an alkyl group (including a cycloalkyl group and a bicycloalkyl group), an alkenyl group (including a cycloalkenyl group and a bicycloalkenyl group), an alkynyl group, an aryl group, a heterocyclic group, a cyano group, a hydroxyl group, a nitro group, a carboxyl group, an alkoxyl group, an aryloxy group, a silyloxy group, a heterocyclic oxy group, an acyloxy group, a carbamoyloxy group, an alkoxycarbonyloxy group, an aryloxycarbonyloxy group, an amino group (including an anilino group), an acylamino group, an aminocarbonylamino group, an alkoxy- carbonylamino group, an aryloxycarbonylamino group, a sulfamoylamino group, alkyl- and arylsulfonylamino groups, a mercapto group, an alkylthio group, an arylthio group, a heterocyclic thio group, a sulfamoyl group, a sulfo group, alkyl- and arylsulfinyl groups, alkyl- and arylsulfonyl groups, an acyl group, an aryloxycarbonyl group, an alkoxycarbonyl group, a carbamoyl group, aryl- and heterocyclic azo groups, an imido group, a phosphino group, a phosphinyl group, a phosphinyloxy group, a phosphinylamino group, and a silyl group.

More specifically, $R^{111}$, $R^{112}$, $R^{114}$, $R^{115}$ , $R^{116}$, $R^{117}$, $R^{119}$ and $R^{120}$ each represents a halogen atom (e.g., a chlorine atom, a bromine atom, an iodine atom), an alkyl group [which represents a straight chain, branched, or cyclic, substituted or unsubstituted alkyl group, with the examples including an alkyl group (preferably an alkyl group having from 1 to 30 carbon atoms, e.g., methyl, ethyl, n-propyl, isopropyl, t-butyl, n-octyl, eicosyl, 2-chloroethyl, 2-cyanoethyl, 2-ethylhexyl), a cycloalkyl group (preferably a substituted or unsubstituted cycloalkyl group having from 3 to 30 carbon atoms, e.g., cyclohexyl, cyclopentyl, 4-n-dodecylcyclohexyl), a bicycloalkyl group (preferably a substituted or unsubstituted bicycloalkyl group having from 5 to 30 carbon atoms, that is, a univalent group formed by removing one hydrogen atom from a bicycloalkane having from 5 to 30 carbon atoms, e.g., bicyclo[1,2,2]heptan-2-yl, bicyclo[2,2,2]octan-3-yl), and an alkyl group having more ring structures including a tricycloalkyl group, and this concept of an alkyl group is also applied to the alkyl moieties in substituents exemplified below (e.g., the alkyl moiety of an alkylthio group.)], an alkenyl group [which represents a straight chain, branched or cyclic, substituted or unsubstituted alkenyl group, with the examples including an alkenyl group (preferably a substituted or unsubstituted alkenyl group having from 2 to 30 carbon atoms, e.g., vinyl, allyl, pulenyl, geranyl or oleyl), a cycloalkenyl group (preferably a substituted or unsubstituted cycloalkenyl group having from 3 to 30 carbon atoms, that is, a univalent group formed by removing one hydrogen atom from a cycloalkene having from 3 to 30 carbon atoms, e.g., 2-cyclopenten-1-yl, 2-cyclohexen-1-yl), and a bicycloalkenyl group (a substituted or unsubstituted bicycloalkenyl group, preferably a substituted or unsubstituted bicycloalkenyl group having from 5 to 30 carbon atoms, that is, a univalent group formed by removing one hydrogen atom from a bicycloalkene having one double bond, e.g., bicyclo[2,2,1]hepto-2-en-1-yl, bicyclo-[2,2,2]octo-2-en-4-yl)], an alkynyl group (preferably a substituted or unsubstituted alkynyl group having from 2 to 30 carbon atoms, e.g., ethynyl, propargyl, trimethylsilylethynyl), an aryl group (preferably a substituted or unsubstituted aryl group having from 2 to 30 carbon atoms, e.g., phenyl, p-tolyl, naphthyl, m-chlorophenyl, o-hexadecanoylaminophenyl), a heterocyclic group (preferably a univalent group formed by removing one hydrogen atom from a 5- or 6-membered, substituted or unsubstituted, aromatic or non-aromatic heterocyclic compound, more preferably a 5- or 6-membered aromatic heterocyclic group having from 3 to 30 carbon atoms, e.g., 2-furyl, 2-thienyl, 2-pyrimidinyl, 2-benzothiazolyl) a cyano group, a hydroxyl group, a nitro group, a carboxyl group, an alkoxyl group (preferably a substituted or unsubstituted alkoxyl group having from 1 to 30 carbon atoms, e.g., methoxy, ethoxy, isopropoxy, t-butoxy, n-octyloxy, 2-methoxyethoxy), an aryloxy group (preferably a substituted or unsubstituted aryloxy group having from 6 to 30 carbon atoms, e.g., phenoxy, 2-methylphenoxy, 4-t-butylphenoxy, 3-nitrophenoxy, 2-tetradecanoylaminophenoxy), a silyloxy group (preferably a silyloxy group having from 3 to 20 carbon atoms, e.g., trimethylsilyloxy, t-butyldimethyl- silyloxy), a heterocyclic oxy group (preferably a substituted or unsubstituted heterocyclic oxy group having from 2 to 30 carbon atoms, e.g., 1-phenyltetrazol-5-oxy, 2-tetrhydro- pyranyloxy), an acyloxy group (preferably a formyloxy group, a substituted or unsubstituted alkylcarbonyloxy group having from 2 to 30 carbon atoms, a substituted or unsubstituted arylcarbonyloxy group having from 6 to 30 carbon atoms, e.g., formyloxy, acetyloxy, pivaloyloxy, stearoyloxy, benzoyloxy, p-methoxyphenylcarbonyloxy), a carbamoyloxy group (preferably a substituted or unsubstituted carbamoyloxy group having from 1 to 30 carbon atoms, e.g., N,N-dimethylcarbamoyloxy, N,N-diethylcarbamoyloxy, morpholinocarbonyloxy, N,N-di- n-octylaminocarbonyloxy, N-n-octylcarbamoyloxy), an alkoxy- carbonyloxy group (preferably a substituted or unsubstituted alkoxycarbonyloxy group having from 2 to 30 carbon atoms, e.g., methoxycarbonyloxy, ethoxycarbonyloxy, t-butoxycarbonyloxy, n-octylcarbonyloxy), an aryloxycarbonyloxy group (preferably a substituted or unsubstituted aryloxycarbonyloxy group having from 7 to 30 carbon atoms, e.g., phenoxycarbonyloxy, p-methoxyphenoxycarbonyloxy, p-n-hexadecyloxyphenoxycarbonyloxy), an amino group (preferably an amino group, a substituted or unsubstituted alkylamino group having from 1 to 30 carbon atoms, a substituted or unsubstituted anilino group having from 6 to 30 carbon atoms, e.g., amino, methylamino, dimethylamino, anilino, N-methylanilino, diphenylamino), an acylamino group (preferably a formylamino group, a substituted or unsubstituted alkylcarbonylamino group having from 1 to 30 carbon atoms, a substituted or unsubstituted arylcarbonyl- amino group having from 6 to 30 carbon atoms, e.g., formylamino, acetylamino, pivaloylamino, lauroylamino, benzoylamino, 3,4,5-tri-n-octyloxyphenylcarbonylamino), an aminocarbonyl- amino group (preferably a substituted or unsubstituted aminocarbonylamino group having from 1 to 30 carbon atoms, e.g., carbamoylamino, N,N-dimethylaminocarbonylamino, N, N-diethylaminocarbonylamino, morpholinocarbonylamino), an alkoxycarbonylamino group (preferably a substituted or unsubstituted alkoxycarbonylamino group having from 2 to 30 carbon atoms, e.g., methoxycarbonylamino, ethoxycarbonyl- amino, t-butoxycarbonylamino, n-octadecyloxycarbonylamino, N-methylmethoxycarbonylamino), an aryloxycarbonylamino group (preferably a substituted or unsubstituted aryloxycarbonylamino group having from 7 to 30 carbon atoms, e.g., phenoxy- carbonylamino, p-chlorophenoxycarbonylamino, m-n-octyloxy- phenoxycarbonylamino), a sulfamoylamino group (preferably a substituted or unsubstituted sulfamoylamino group having from 0 to 30 carbon atoms, e.g., sulfamoylamino, N,N-dimethylamino- sulfonylamino, N-n-octylaminosulfonylamino), alkyl- and arylsulfonylamino groups (preferably a substituted or unsubstituted alkylsulfonylamino group having from 1 to 30 carbon atoms, a substituted or unsubstituted arylsulfonyl- amino group having from 6 to 30 carbon atoms, e.g., methylsulfonylamino, butylsulfonylamino, phenylsulfonylamino, 2,3,5-trichlorophenylsulfonylamino, p-methylphenylsulfonyl- amino), a mercapto group, an alkylthio group (preferably a substituted or unsubstituted alkylthio group having from 1 to 30 carbon atoms, e.g., methylthio, ethylthio, n-hexadecyl- thio), an arylthio group (preferably a substituted or unsubstituted arylthio group having from 6 to 30 carbon atoms, e.g., phenylthio, p-chlorophenylthio, m-methoxyphenylthio), a heterocyclic thio group (preferably a substituted or unsubstituted heterocyclic thio group having from 2 to 30 carbon atoms, e.g., 2-benzothiazolylthio, 1-phenyltetrazol- 5-ylthio), a sulfamoyl group (preferably a substituted or unsubstituted sulfamoyl group having from 0 to 30 carbon atoms, e.g., N-ethylsulfamoyl, N-(3-dodecyloxypropyl)sulfamoyl, N,N-dimethylsulfamoyl, N-acetylsulfamoyl, N-benzoyl- sulfamoyl, N-(N'-phenylcarbamoyl)sulfamoyl), a sulfo group, alkyl- and arylsulfinyl groups (preferably a substituted or unsubstituted alkylsulfinyl group having from 1 to 30 carbon atoms, a substituted or unsubstituted arylsulfinyl group having from 6 to 30 carbon atoms, e.g., methylsulfinyl, ethylsulfinyl, phenylsulfinyl, p-methylphenylsulfinyl), an arylsulfinyl group, alkyl- and arylsulfonyl groups (preferably a substituted or unsubstituted alkylsulfonyl group having from 1 to 30 carbon atoms, a substituted or unsubstituted arylsulfonyl group having from 6 to 30 carbon atoms, e.g., methylsulfonyl, ethylsulfonyl, phenylsulfonyl, p-methylphenylsulfonyl), an acyl group (preferably a formyl group, a substituted or unsubstituted alkylcarbonyl group having from 2 to 30 carbon atoms, a substituted or unsubstituted arylcarbonyl group having from 7 to 30 carbon atoms, a substituted or unsubstituted heterocyclic carbonyl group having from 4 to 30 carbon atoms whose carbonyl moiety is bonded to a carbon atom, e.g., acetyl, pivaloyl, 2-chloroacetyl, stearoyl, benzoyl, p-n-octyloxyphenylcarbonyl, 2-pyridylcarbonyl, 2-furylcarbonyl), an aryloxycarbonyl group (preferably a substituted or unsubstituted aryloxycarbonyl group having from 7 to 30 carbon atoms, e.g., phenoxycarbonyl, o-chlorophenoxycarbonyl, m-nitorphenoxycarbonyl, p-t-butyl-phenoxycarbonyl), an alkoxycarbonyl group (preferably a substituted or unsubstituted alkoxycarbonyl group having from 2 to 30 carbon atoms, e.g., methoxycarbonyl, ethoxycarbonyl, t-butoxycarbonyl, n-octadecyloxycarbonyl), a carbamoyl group (preferably a substituted or unsubstituted carbamoyl group having from 1 to 30 carbon atoms, e.g., carbamoyl, N-methyl- carbamoyl, N,N-dimethylcarbamoyl, N,N-di-n-octylcarbamoyl, N-(methylsulfonyl)carbamoyl), aryl- and heterocyclic azo groups (preferably a substituted or unsubstituted arylazo group having from 6 to 30 carbon atoms, a substituted or unsubstituted heterocyclic azo group having from 3 to 30 carbon atoms, e.g., phenylazo, p-chlorophenylazo, 5-ethylthio- 1,3,4-thiadiazol-2-ylazo), an imido group (preferably N- succinimido, N-phthalimido), a phosphino group (preferably a substituted or unsubstituted phosphino group having from 2 to 30 carbon atoms, e.g., dimethylphosphino, diphenylphosphino, methylphenoxyphosphino), a phosphinyl group (preferably a substituted or unsubstituted phosphinyl group having from 2 to 30 carbon atoms, e.g., phosphinyl, dioctyloxyphosphinyl, diethoxyphosphinyl), a phosphinyloxy group (preferably a substituted or unsubstituted phosphinyloxy group having from 2 to 30 carbon atoms, e.g., diphenoxyphosphinyloxy, dioctyl- oxyphosphinyloxy), a phosphinylamino group (preferably a substituted or unsubstituted phosphinylamino group having from 2 to 30 carbon atoms, e.g., dimethoxyphosphinylamino, dimethylaminophosphinylamino), or a silyl group (preferably a substituted or unsubstituted silyl group having from 3 to 30 carbon atoms, e.g., trimethylsilyl, t-butyldimethylsilyl, phenyldimethylsilyl).

In the above functional groups having a hydrogen atom, the hydrogen atom may be removed and substituted with the above substituents. As such functional groups, an alkylcarbonyl- aminosulfonyl group, an arylcarbonylaminosulfonyl group, an alkylsulfonylaminocarbonyl group, and an arylsulfonylamino- carbonyl group are exemplified, and the

examples thereof, methylsulfonylaminocarbonyl, p-methylphenylsulfonylamino- carbonyl, acetylaminosulfonyl, and benzoylaminosulfonyl groups are exemplified.

It is preferred that all of $R^{111}$, $R^{112}$, $R^{114}$, $R^{115}$, $R^{116}$, $R^{117}$, $R^{119}$ and $R^{120}$ represent a hydrogen atom.

$R^{113}$ and $R^{118}$ each represents a substituent. $R^{113}$ and $R^{118}$ each preferably represents a substituted or unsubstituted alkyl group, a substituted or unsubstituted aryl group, or a substituted or unsubstituted heterocyclic group. Of these groups, a substituted or unsubstituted aryl group is more preferred. A substituted aryl group is still more preferred. When $R^{113}$ and $R^{118}$ each represents a substituted aryl group, the preferred substituents are a hydroxyl group, a substituted or unsubstituted aryl group, a substituted or unsubstituted alkyl group, and a halogen atom.

Oxonol dyes having a structure that two or more molecules are linked via a covalent bond or a divalent linking group are preferred.

The most preferred structure of the oxonol dyes for use in the invention is a structure represented by the following formula (5').

Formula (5')

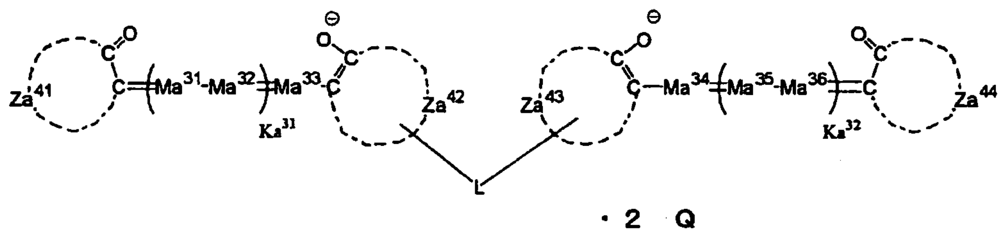

In formula (5'), $Za^{41}$, $Za^{42}$, $Za^{43}$ and $Za^{44}$ each represents an atomic group for forming an acidic nucleus; $Ma^{31}$, $Ma^{32}$, $Ma^{33}$, $Ma^{34}$, $Ma^{35}$ and $Ma^{36}$ each represents a substituted or unsubstituted methine group; L represents a divalent linking group that does not form a $\pi$ conjugated system with two bonds; $Ka^{31}$ and $Ka^{32}$ each represents an integer of from 0 to 3; Q represents a univalent cation for neutralizing electric charge, or 2Q represents a divalent cation.

When $Ka^{31}$ and $Ka^{32}$ represent a plural number, a plurality of $Ma^{31}$, $Ma^{32}$, $Ma^{35}$ and $Ma^{36}$ may be the same or different.

$Za^{41}$, $Za^{42}$, $Za^{43}$ and $Za^{44}$ have the same meaning as $Za^{11}$ and $Za^{12}$ in formula (1'), and preferred examples are also the same. $Ma^{31}$, $Ma^{32}$, $Ma^{33}$, $Ma^{34}$, $Ma^{35}$ and $Ma^{36}$ have the same meaning as $Ma^{11}$, $Ma^{12}$ and $Ma^{13}$ in formula (1'), and preferred examples are also the same. L preferably represents a substituted or unsubstituted alkylene group, a substituted or unsubstituted arylene group, a substituted or unsubstituted alkenylene group, or a substituted or unsubstituted alkynylene group, or a divalent linking group formed by combining the above groups and one or more groups selected from -CO-, -O-, -S-, -SO-, - $SO_2$- and -N(R)-. R represents a hydrogen atom, a substituted or unsubstituted alkyl group, a substituted or unsubstituted aryl group, a substituted or unsubstituted alkenyl group, or a substituted or unsubstituted alkynyl group, and preferably a hydrogen atom or a substituted or unsubstituted alkyl group. Q has the same meaning as Q1 in formula (1'), and preferred examples are also the same.

In the next place, a dye represented by formula (2') is described. $Ma^{21}$, $Ma^{22}$ and $Ma^{23}$ in formula (2') have the same meaning as $Ma^{11}$, $Ma^{12}$ and $Ma^{13}$ in formula (1'), and preferred examples are also the same. $R^1$ and $R^2$ each represents a substituent, and preferably a substituted or unsubstituted alkyl group, a substituted or unsubstituted aryl group, a substituted or unsubstituted alkenyl group, a substituted or unsubstituted alkynyl group, or a substituted or unsubstituted heterocyclic group. These groups may further be substituted, and as the substituents of these groups, the substituents as described in $R^{111}$, $R^{112}$, $R^{114}$, $R^{115}$, $R^{116}$, $R^{117}$ and $R^{119}$ in formula (3') are exemplified, and the specific examples of the substituents are also the same. $R^{101}$ and $R^{102}$ each preferably represents a substituted or unsubstituted alkyl group, more preferably a substituted or unsubstituted alkyl group having from 1 to 8 carbon atoms, and still more preferably an unsubstituted alkyl group having from 1 to 8 carbon atoms. $R^{101}$ and $R^{102}$ may be different from each other or may be the same, but they are preferably the same. ka2 has the same meaning as ka1 in formula (1'), and preferred examples are also the same.

Q2 represents an ion for neutralizing electric charge, and y2 represents a number necessary for the neutralization of electric charge. The ion represented by Q2 represents an anion according to the electric charge of the corresponding dye molecule. The ion represented by Q2 is not especially restricted, and the ion may be an ion comprising an inorganic compound or may be an organic compound. The electric charge of the ion represented by Q2 may be univalent or polyvalent. As the anion represented by Q2, halogen anions, e.g., a chloride ion, a bromide ion, and a fluoride ion; heteropoly-acid ions, e.g., a sulfate ion, a phosphate ion, and a hydrogenphosphate ion; organic polyvalent anions, e.g., a succinate ion, a maleate ion, a fumarate ion, and an aromatic disulfonate ion; a tetrafluoroborate ion and

a hexafluorophosphate ion are exemplified.

y2 represents a number necessary for the neutralization of electric charge. y2 has the same meaning as y1 in formula (1'). When Q2 is a divalent anion, taking y2 as 1/2, Q2y2 means to represent a univalent anion as a whole.

In the next place, a dye represented by formula (4') is described. $R^{121}$, $R^{122}$ and $R^{123}$ in formula (4') each represents a hydrogen atom or a substituent. The substituents are the same as those for substituting $Ma^{11}$, $Ma^{12}$ and $Ma^{13}$ in formula (1'), and preferred examples are also the same. $R^{124}$, $R^{125}$, $R^{126}$ and $R^{127}$ each represents a hydrogen atom or a substituent. The substituents are the same as the substituents of the following $R^{1a}$ and $R^{2a}$, and preferred examples are also the same. $R^{1a}$ and $R^{2a}$ have the same meaning as $R^{101}$ and $R^{102}$ in formula (2'), and preferred examples are also the same. ka3 has the same meaning as ka2 in formula (2'), and preferred examples are also the same.

Q3 represents an ion for neutralizing electric charge, and y3 represents a number necessary for the neutralization of electric charge. The ion represented by Q3 represents an anion according to the electric charge of the corresponding dye molecule. The ion represented by Q3 is not especially restricted, and the ion may be an ion comprising an inorganic compound or may be an organic compound. The electric charge of the ion represented by Q3 may be univalent or polyvalent. As the anion represented by Q3, halogen anions, e.g., a chloride ion, a bromide ion, and a fluoride ion; heteropoly-acid ions, e.g., a sulfate ion, a phosphate ion, and a hydrogenphosphate ion; organic polyvalent anions, e.g., a succinate ion, a maleate ion, a fumarate ion, and an aromatic disulfonate ion; a tetrafluoroborate ion and a hexafluorophosphate ion are exemplified.

y3 represents a number necessary for the neutralization of electric charge, and is the same meaning as y2 in formula (2'). y3 has the same meaning as y1 in formula (1'). When Q3 is a divalent anion, taking y3 as 1/2, Q3y3 means to represent a univalent anion as a whole.

In the cyanine dyes represented by formula (2') or (4') for use in the invention, $Ma^{21}$, $Ma^{22}$ and $Ma^{23}$ each preferably represents an unsubstituted methine group, $R^{102}$ and $R^{102}$ each preferably represents an unsubstituted alkyl group having from 1 to 8 carbon atoms, $R^{124}$, $R^{125}$, $R^{126}$ and $R^{127}$ each preferably represents a substituted or unsubstituted alkyl group, ka3 preferably represents 1 or 2, Q3 preferably represents an inorganic or organic anion, and y3 preferably represents 1, and it is most preferred that all of the above preferred embodiments are satisfied.

As the compounds corresponding to formulae (1') and (5'), the above-shown compounds (I)-1 to (I)-22, (I)-123 to (I)-125 can be exemplified.

The examples of the compounds not corresponding to formula (5') but corresponding to formula (1') are shown below.

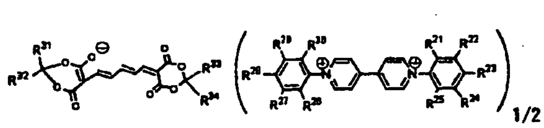

| Compound | $R^{31}$ | $R^{32}$ | $R^{33}$ | $R^{34}$ | $R^{21}$ | $R^{22}$ | $R^{23}$ | $R^{24}$ | $R^{25}$ | $R^{26}$ | $R^{27}$ | $R^{28}$ | $R^{29}$ | $R^{30}$ |
|---|---|---|---|---|---|---|---|---|---|---|---|---|---|---|
| (I)-23 | 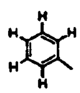 | $H_3C-$ | 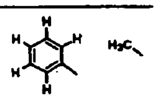 | $H_3C-$ | -H | 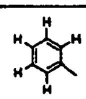 | -OH | -H | -H | -H | 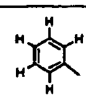 | -OH | -H | -H |
| (I)-24 | $C_2H_5$ | $H_3C-$ | $C_2H_5-$ | $H_3C-$ | 〃 | 〃 | 〃 | 〃 | 〃 | 〃 | 〃 | 〃 | 〃 | 〃 |
| (I)-25 | 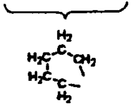 | | 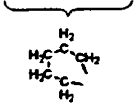 | | 〃 | 〃 | 〃 | 〃 | 〃 | 〃 | 〃 | 〃 | 〃 | 〃 |
| (I)-26 | 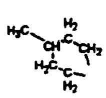 | | 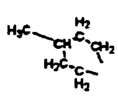 | | 〃 | 〃 | 〃 | 〃 | 〃 | 〃 | 〃 | 〃 | 〃 | 〃 |
| (I)-27 | 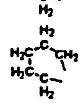 | | 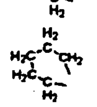 | | -H | 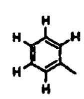 | -H | -H | -OH | -H | 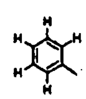 | -H | -H | -OH |
| (I)-28 | 〃 | | 〃 | | -H | 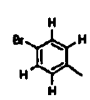 | -H | -H | -OH | -H | 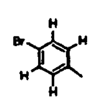 | -H | -H | -OH |

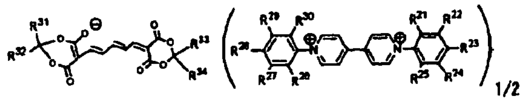

| Compound | R31 | R32 | R33 | R34 | R21 | R22 | R23 | R24 | R25 | R26 | R27 | R28 | R29 | R30 |
|---|---|---|---|---|---|---|---|---|---|---|---|---|---|---|
| (I)-29 | $C_3H_7$ | $H_3C$ | $C_3H_7$ | $H_3C$ | -H | | -OH | -H | -H | -H | | -OH | -H | -H |
| (I)-30 | $C_2H_5$ | $C_2H_5$ | $C_2H_5$ | $C_2H_5$ | 〃 | 〃 | 〃 | 〃 | 〃 | 〃 | 〃 | 〃 | 〃 | 〃 |
| (I)-31 | | | | | 〃 | | 〃 | 〃 | 〃 | 〃 | | 〃 | 〃 | 〃 |
| (I)-32 | | | | | -OH | -H | -H | | -H | -OH | -H | -H | | -H |
| (I)-33 | | | | | -H | | -H | -H | -OH | -H | | -H | -H | -OH |
| (I)-34 | 〃 | | 〃 | | -H | | -H | -H | -OH | -H | | -H | -H | -OH |

(I) -35

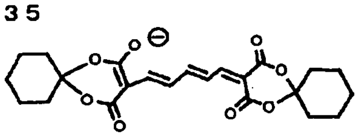

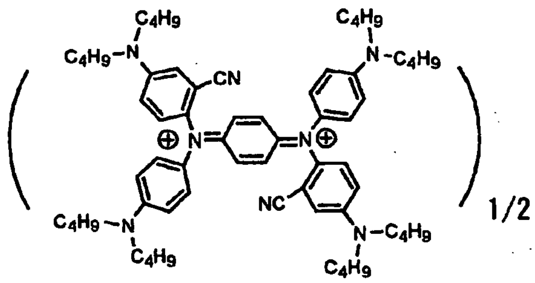

The specific examples of the cyanine compounds having a structure represented by formula (2') for use in the invention are shown below, but the invention is not restricted to these specific examples.

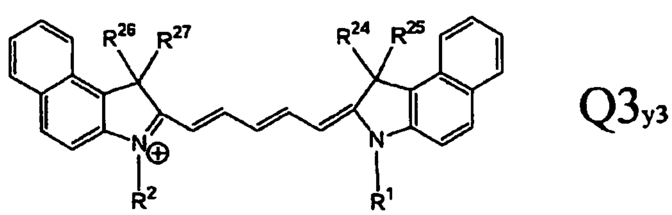

| | $R^1$ | $R^2$ | $R^{24}$ | $R^{25}$ | $R^{26}$ | $R^{27}$ | $Q3y_3$ |
|---|---|---|---|---|---|---|---|
| C-1 | $-CH_3$ | $-CH_3$ | $-CH_3$ | $-CH_3$ | $-CH_3$ | $-CH_3$ | $ClO_4^-$ |
| C-2 | $-C_2H_5$ | $-C_2H_5$ | $-CH_3$ | $-CH_3$ | $-CH_3$ | $-CH_3$ | $ClO_4^-$ |
| C-3 | (n) $-C_3H_7$ | $-C_3H_7^{(n)}$ | $-CH_3$ | $-CH_3$ | $-CH_3$ | $-CH_3$ | $ClO_4^-$ |
| C-4 | $-C_4H_9^{(n)}$ | $-C_4H_9^{(n)}$ | $-CH_3$ | $-CH_3$ | $-CH_3$ | $-CH_3$ | $ClO_4^-$ |

(continued)

| | $R^1$ | $R^2$ | $R^{24}$ | $R^{25}$ | $R^{26}$ | $R^{27}$ | Q3y3 |
|---|---|---|---|---|---|---|---|
| C-5 | $-C_4H_9^{(n)}$ | $-CH_3$ | $-CH_3$ | $-CH_3$ | $-CH_3$ | $-CH_3$ | $ClO_4^-$ |
| C-6 | $-CH_3$ | $-CH_3$ | $-CH_3$ | $-CH_3$ | $-CH_3$ | $-CH_3$ | r |
| C-7 | $-CH_3$ | $-CH_3$ | $-CH_3$ | $-CH_3$ | $-CH_3$ | $-CH_3$ | 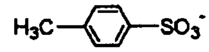 |
| C-8 | $-CH_3$ | 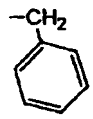 | $-CH_3$ | $-CH_3$ | $-CH_3$ | $-CH_3$ | 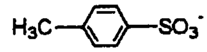 |

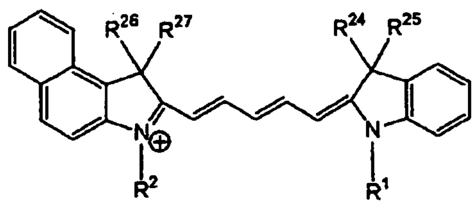

Q3y3

| | $R^1$ | $R^2$ | $R^{24}$ | $R^{25}$ | $R^{26}$ | $R^{27}$ | Q3y3 |
|---|---|---|---|---|---|---|---|
| C-9 | $-CH_3$ | $-CH_3$ | $-CH_3$ | $-CH_3$ | $-CH_3$ | $-CH_3$ | $BF_4^-$ |
| C-10 | $-C_2H_5$ | $-C_2H_5$ | $-CH_3$ | $-CH_3$ | $-CH_3$ | $-CH_3$ | $BF_4^-$ |
| C-11 | (n) $-C_3H_7$ | $-C_3H_7^{(n)}$ | $-CH_3$ | $-CH_3$ | $-CH_3$ | $-CH_3$ | $ClO_4^-$ |
| C-12 | (n) $-C_4H_9$ | (n) $-C_4H_9$ | $-CH_3$ | $-CH_3$ | $-CH_3$ | $-CH_3$ | $Cl^-$ |
| C-13 | $-C_4H_9^{(n)}$ | $-CH_3$ | $-CH_3$ | $-CH_3$ | $-CH_3$ | $-CH_3$ | 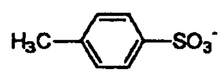 |
| C-14 | $-CH_3$ | $-CH_3$ | $-CH_3$ | $-C_2H_5$ | $-CH_3$ | $-C_2H_5$ | r |
| C-15 | $-CH_3$ | $-CH_3$ | $-CH_3$ | $-CH_3$ | $-CH_3$ | $-CH_3$ | 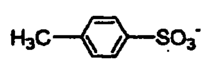 |
| C-16 | $-CH_3$ | 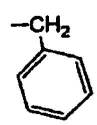 | $-CH_3$ | $-CH_3$ | $-CH_3$ | $-CH_3$ | 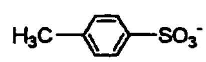 |

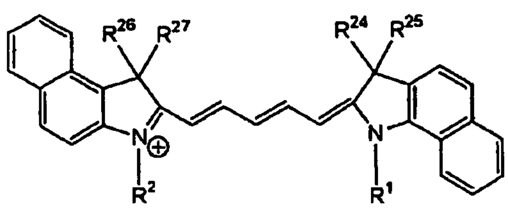

Q3y3

(continued)

| | $R^1$ | $R^2$ | $R^{24}$ | $R^{25}$ | $R^{26}$ | $R^{27}$ | Q3y3 |
|---|---|---|---|---|---|---|---|
| C-17 | $-CH_3$ | $-CH_3$ | $-CH_3$ | $-C_2H_5$ | $-CH_3$ | $-CH_3$ | $ClO_4^-$ |
| C-18 | $-C_2H_5$ | $-C_2H_5$ | $-CH_3$ | $-CH_3$ | $-CH_3$ | $-CH_3$ | $BF_4^-$ |
| C-19 | $-C_3H_7$ (n) | (n) $-C_3H_7$ | $-CH_3$ | $-CH_3$ | $-CH_3$ | $-CH_3$ | $ClO_4^-$ |
| C-20 | $-C_4H_9^{(n)}$ | (n) $-C_4H_9$ | $-CH_3$ | $-CH_3$ | $-CH_3$ | $-CH_3$ | $Cl^-$ |
| C-21 | (n) $-C_4H_9$ | $-CH_3$ | $-CH_3$ | $-CH_3$ | $-CH_3$ | $-CH_3$ | 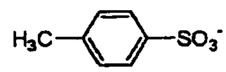 |
| C-22 | $-CH_3$ | $-CH_3$ | $-CH_3$ | $-CH_3$ | $-CH_3$ | $-CH_3$ | r |
| C-23 | $-CH_3$ | $-CH_3$ | $-CH_3$ | $-CH_3$ | $-CH_3$ | $-CH_3$ | 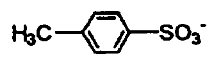 |
| C-24 | $-CH_3$ | 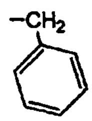 | $-CH_3$ | $-CH_3$ | $-CH_3$ | $-CH_3$ | 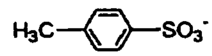 |

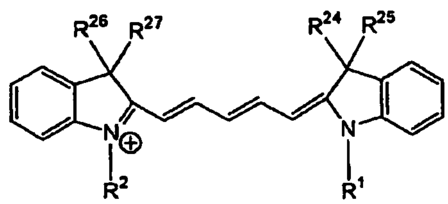

Q3y3

| | $R^1$ | $R^2$ | $R^{24}$ | $R^{25}$ | $R^{26}$ | $R^{27}$ | $Q3y_3$ |
|---|---|---|---|---|---|---|---|
| C-25 | $-C_4H_9$ | $-C_2H_5$ | $-CH_3$ | $-C_2H_5$ | $-CH_3$ | $-CH_3$ | $ClO_4^-$ |
| C-26 | $-C_2H_5$ | $-C_2H_5$ | $-CH_3$ | $-CH_3$ | $-CH_3$ | $-CH_3$ | 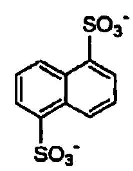 |
| C-27 | $-C_3H_7^{(n)}$<br>$-C_3H_7^{(n)}$ | $-C_3H_7^{(n)}$ | $-CH_3$ | $-CH_3$ | $-CH_3$ | $-CH_3$ | $ClO_4^-$ |
| C-28 | $-C_4H_9$ | (n) $-C_4H_9$ | $-CH_3$ | $-CH_3$ | $-CH_3$ | $-CH_3$ | $Cl^-$ |
| C-29 | $-C_4H_9^{(n)}$ | $-CH_3$ | $-CH_3$ | $-CH_3$ | $-CH_3$ | $-CH_3$ | 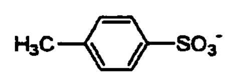 |
| C-30 | $-CH_3$ | $-CH_3$ | $-CH_3$ | (n) $-C_3H_7$ | $-CH_3$ | (n) $-C_3H_7$ | r |
| C-31 | $-CH_3$ | $-C_4H_9^{(n)}$ | $-CH_3$ | $-CH_3$ | $-CH_3$ - | $-CH_3$ | 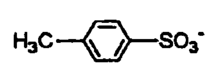 |

(continued)

| | $R^1$ | $R^2$ | $R^{24}$ | $R^{25}$ | $R^{26}$ | $R^{27}$ | $Q3y_3$ |
|---|---|---|---|---|---|---|---|
| C-32 | $-CH_3$ | 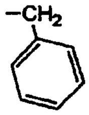 | $-CH_3$ | $-CH_3$ | $-CH_3$ | $-CH_3$ | 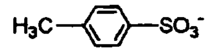 |

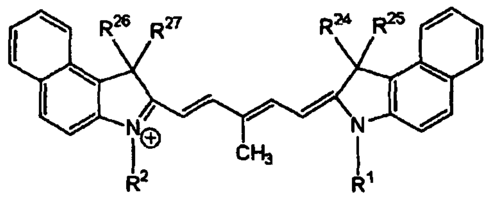

$Q3_{y3}$

| | $R^1$ | $R^2$ | $R^{24}$ | $R^{25}$ | $R^{26}$ | $R^{27}$ | $Q3y_3$ |
|---|---|---|---|---|---|---|---|
| C-33 | $-CH_3$ | $-CH_3$ | $-CH_3$ | $-CH_3$ | $-CH_3$ | $-CH_3$ | 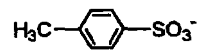 |
| C-34 | $-C_2H_5$ | $-C_2H_5$ | $-CH_3$ | $-CH_3$ | $-CH_3$ | $-CH_3$ | $ClO_4^-$ |
| C-35 | $-C_3H_7^{(n)}$ | $-C_3H_7^{(n)}$ | $-CH_3$ | $-CH_3$ | $-CH_3$ | $-CH_3$ | $ClO_4^-$ |
| C-36 | $-C_4N_9^{(n)}$ | $-C_4H_9^{(n)}$ | $-CH_3$ | $-CH_3$ | $-CH_3$ | $-CH_3$ | $ClO_4^-$ |
| C-37 | $(n)\ -C_4H_9$ | $-CH_3$ | $-CH_3$ | $-CH_3$ | $-CH_3$ | $-CH_3$ | $ClO_4^-$ |
| C-38 | $-CH_3$ | $-CH_3$ | $-CH_3$ | $-CH_3$ | $-CH_3$ | $-CH_3$ | 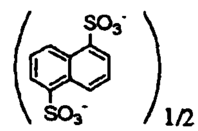 |
| C-39 | $-CH_3$ | $-CH_3$ | $-CH_3$ | $-CH_3$ | $-CH_3$ | $-CH_3$ | 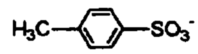 |
| C-40 | $-CH_3$ | 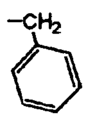 | $-CH_3$ | $-CH_3$ | $-CH_3$ | $-CH_3$ | 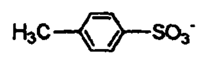 |

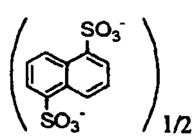

C-41

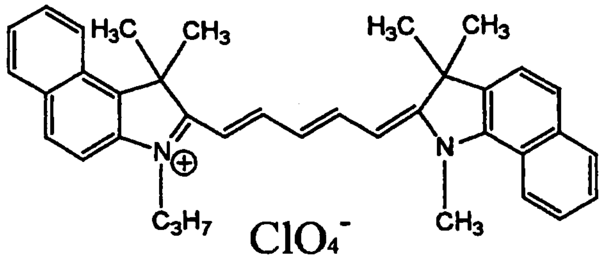

Typical oxonol dyes can be synthesized by condensation reaction between their corresponding active methylene compounds and methine sources (compounds used for introduction of methine groups into methine dyes). For details of the compounds of these kinds, JP-B-39-22069, JP-B-43-3504, JP-B-52-38056, JP-B-54-38129, JP-B-55-10059, JP-B-58-35544, JP-A-49-99620, JP-A-52-92716, JP-A-59-16834, JP-A-63-316853, JP-A-64-40827, British Patent No. 1,133,986, and U.S. Patent Nos. 3,247,127, 4,042,397, 4,181,225, 5,213,956 and 5,260,179 can be referred to. These compounds are also disclosed in JP-A-63-209995, JP-A-10-309871 and JP-A-2002-249674.

Typical cyanine dyes are described in The Chemistry of Heterocyclic Compounds, "Cyanine Dyes and Related Compounds", John Wiley & Sons, New York, London (1964).

In oxonol dyes in the invention (preferably dye compounds represented by formula (1')), from the viewpoint of optical characteristics of an amorphous film, coefficient n (a real part, a refractive index) and coefficient k (an imaginary part, an extinction coefficient) of a complex refractive index at a recording laser wavelength are preferably $2.0 \leqq n \leqq 3.0$ and $0.00 \leqq k \leqq 0.20$, more preferably $2.1 \leqq n \leqq 2.7$ and $0.00 \leqq k \leqq 0.10$, and most preferably $2.15 \leqq n \leqq 2.50$ and $0.00 \leqq k \leqq 0.05$.

Oxonol dyes exhibiting absorption maximum in a wavelength range of from 500 nm to shorter than 600 nm when formed into amorphous films are preferred, and more preferably from 550 nm to shorter than 590 nm. Oxonol dyes having a thermal decomposition temperature of from 100 to 350˚C are preferred, more preferably from 150 to 300˚C, and still more preferably from 200 to 300˚C.

In cyanine dyes in the invention (preferably dye compounds represented by formula (2')), from the viewpoint of optical characteristics of an amorphous film, coefficient n (a real part, a refractive index) and coefficient k (an imaginary part, an extinction coefficient) of a complex refractive index at a recording laser wavelength are preferably $1.50 \leqq n \leqq 3.0$ and $0.9 \leqq k \leqq 3.00$, more preferably $1.50 \leqq n \leqq 2.00$ and $0.90 \leqq k \leqq 2.00$, and most preferably $1.60 \leqq n \leqq 1.90$ and $1.20 \leqq k \leqq 1.50$.

Cyanine dyes exhibiting absorption maximum in a wavelength range of from 600 nm to shorter than 750 nm when formed into amorphous films are preferred, and more preferably from 650 nm to shorter than 730 nm. Cyanine dyes having a thermal decomposition temperature of from 100 to 350˚C are preferred and more preferably from 150 to 300˚C, and still more preferably from 200 to 300˚C.

The mixing ratio (mass ratio) of the oxonol dye (preferably a dye represented by formula (1')) and the cyanine dye (preferably a dye represented by formula (2')) according to the invention is preferably from 99/1 to 90/10, more preferably from 98/3 to 93/7, and most preferably from 97/3 to 95/5.

Besides the dyes represented by formulae (1') and (2'), other dyes may be used as the third component. As such dyes, azo dyes (including complexes with metallic ions) and pyrromethene dyes are exemplified. The preferred mixing ratio in this case is calculated with the sum of the dye represented by formula (2') and the third dye being corresponding to formula (2').

The optical information-recording medium in the invention is not especially restricted so long as the medium has the mixture of dyes as a recording layer. When the optical information-recording medium in the invention is applied to CD-R, the constitution of the medium comprising a transparent disc-like substrate having a thickness of 1.2±0.2 mm having a pre-groove having from 1.4 to 1.8 μm track pitch, having formed thereon a recording layer containing the dye compounds represented by formulae (1') and (2'), a light reflective layer, and a protective layer in this order is preferred. Further, when the medium is applied to DVD-R, the following two embodiments are preferred.

(1) An optical information-recording medium having a thickness of 1.2±0.2 mm formed by bonding two laminates each having a thickness of 0.6±0.1 mm comprising a transparent disc-like substrate having formed thereon a pre-groove having from 0.6 to 0.9 μm track pitch, a recording layer containing the dye mixture, and a light reflective layer with the recording layers inside,

(2) An optical information-recording medium having a thickness of 1.2±0.2 mm formed by bonding a laminate having a thickness of 0.6±0.1 mm comprising a transparent disc-like substrate having formed thereon a pre-groove having

from 0.6 to 0.9 μm track pitch, a recording layer containing the dye mixture, and a light reflective layer, and a transparent disc-like protective substrate having the same shape as the disc-like substrate of the laminate with the recording layer inside. In the above DVD-R optical information-recording medium, a protective layer may further be provided on the light reflective layer.

It is preferred for the optical information-recording medium in the invention to be used as a high speed recording or reproducing medium of more than octuple-speed, more preferably a high speed recording or reproducing medium of more than decuple-speed, still more preferably a high speed recording or reproducing medium of more than dodecuple-speed, and most preferably a high speed recording or reproducing medium of more than hexadecuple-speed.

Data transfer speed is preferably 80 Mbps or higher, more preferably 110 Mbps, still more preferably 130 Mbps or higher, and most preferably 170 Mbps or higher.

The optical information-recording media in the invention can be manufactured by the following method. The substrates of the media (including the protective substrate also) can be arbitrarily selected from various materials hitherto used for substrates of information-recording media. The examples of substrate materials usable in the invention include glass; polycarbonate; acrylic resins, e.g., polymethyl methacrylate; vinyl chloride resins, e.g., polyvinyl chloride and vinyl chloride copolymers; epoxy resins; amorphous polyolefin; and polyester, and these materials may be used in combination, if necessary. Incidentally, these materials may be used in film form or rigid-plate form. Of the above materials, from the points of moisture resistance, dimensional stability and inexpensiveness, polycarbonate and amorphous polyolefin are preferred, and polycarbonate is especially preferred.

In the next place, the optical information-recording medium where the dye in the recording layer is a mixture of an oxonol dye and a cyanine dye is described.

The oxonol dyes for use in the optical information- recording medium in the invention suffice if they are oxonol dyes.

As the specific examples of oxonol dyes, those described in F.M. Harmer, Heterocyclic Compounds-Cyanine Dyes and Related Compounds, John & Wiley & Sons, New York, London (1964) are exemplified.

Of oxonol dyes, oxonol dyes having a structure represented by the following formula (1') is preferred, and formula (5') is more preferred. The specific examples are as described above.

Azo dyes for use in the invention are described in detail below. Azo dyes are dyes synthesized by the reaction of aryl- or heteroaryl diazonium salt (diazo component) and a compound having acidic hydrogen atoms that form a dye by azo coupling reaction (coupler component) with the diazonium salt. Azo dyes for use in the invention are preferably dyes having a structure represented by formula (2").

Dyes having a structure represented by formulae (2") and (4") are described. A dye having a structure represented by formula (2") is preferably a dye represented by formula (4"). A is a residue of a compound having acidic hydrogen atoms that form a dye by azo coupling reaction (coupler component) with a diazonium salt, i.e., a univalent group derived from the coupler component. A preferably represents a substituted or unsubstituted aryl group, a nitrogen-containing 5-membered heterocyclic group having from 1 to 20 carbon atoms, or a nitrogen-containing 6-membered heterocyclic group having from 2 to 20 carbon atoms. In a dye having a structure represented by formula (4"), $A^1$ represents an atomic group for forming an aromatic hydrocarbon ring or an aromatic heterocyclic ring together with the bonded carbon atom. The ring formed by $A^1$ is preferably an aromatic hydrocarbon ring having a substituent (preferably a benzene ring having a substituent), a nitrogen-containing 5-membered heterocyclic ring having from 1 to 20 carbon atoms, or a nitrogen-containing 6-membered heterocyclic ring having from 2 to 20 carbon atoms, and more preferably an aromatic hydrocarbon ring having a substituent (preferably a benzene ring having a substituent).

The examples of the structures formed by substituents A or $A^1$ are shown below.

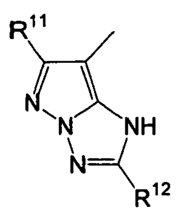
(IV)

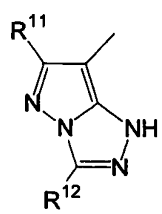
(V)

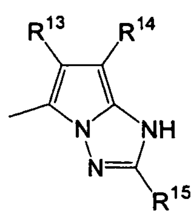
(VI)

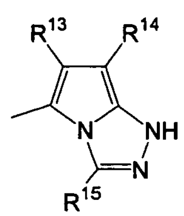
(VII)

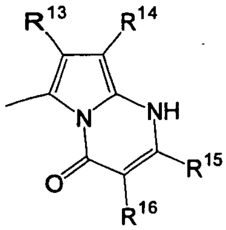

(VIII)

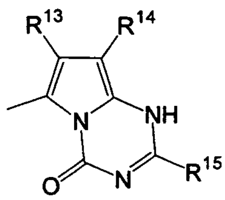

(IX)

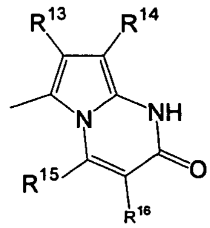

(X)

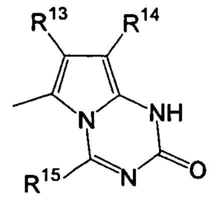

(XI)

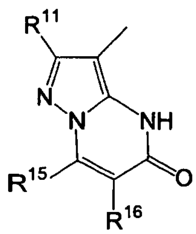

(XII)

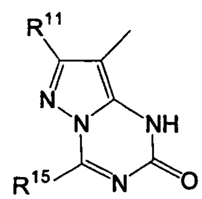

(XIII)

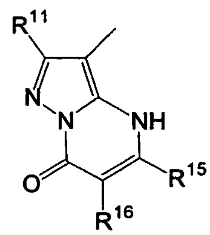

(XIV)

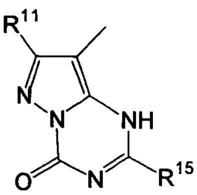

(XV)

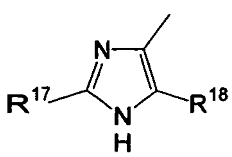

(XVI)

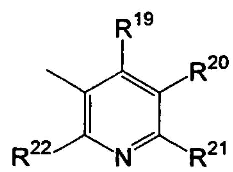

(XVII)

$R^{11}$, $R^{12}$, $R^{13}$, $R^{14}$, $R^{15}$, $R^{16}$, $R^{17}$, $R^{18}$, $R^{19}$, $R^{20}$, $R^{21}$ and $R^{22}$ each represents a hydrogen atom or a substituent. As the specific examples of these groups, those described in $R^{111}$, $R^{112}$ , $R^{114}$ , $R^{115}$, $R^{116}$, $R^{117}$, $R^{119}$ and $R^{120}$ in formula (3') can be exemplified.

Of the above ring structures, (IV), (V) and (VI) are preferred.

In the above formulae $R^{11}$ and $R^{13}$ each preferably represents a substituted or unsubstituted alkyl group having from 1 to 20 carbon atoms, a substituted or unsubstituted aryl group having from 6 to 20 carbon atoms, a cyano group, a substituted or unsubstituted alkoxycarbonyl group having from 1 to 20 carbon atoms, or a substituted or unsubstituted aminocarbonyl group having from 2 to 20 carbon atoms. $R^{14}$ preferably represents a cyano group, a substituted or unsubstituted alkoxycarbonyl group having from 1 to 20 carbon atoms, a substituted or unsubstituted aryloxy group having from 6 to 20 carbon atoms, or a substituted or unsubstituted aminocarbonyl group having from 2 to 20 carbon atoms. $R^{15}$ preferably represents a substituted or unsubstituted alkyl group having from 1 to 20 carbon atoms, an aryl group having from 6 to 20 carbon atoms, or a substituted or unsubstituted aminocarbonylamino group having from 1 to 20 carbon atoms.

Especially preferably, $R^{13}$ represents a cyano group, $R^{14}$ represents an alkoxycarbonyl group having from 1 to 20 carbon atoms, $R^{15}$ represents a substituted or unsubstituted alkyl group having from 1 to 20 carbon atoms, or a substituted or unsubstituted aryl group having from 6 to 20 carbon atoms.

B represents a univalent group derived from a diazonium salt, preferably a substituted or unsubstituted aryl group, or a substituted or unsubstituted heterocyclic group. That is, B is a diazo component. A diazo component means a partial structure capable of converting a heterocyclic compound having an amino group as a substituent or a benzene derivative to a diazo compound (a diazonium salt), and introducing by diazo coupling reaction with a coupler, which is a concept often used in the field of azo dyes. In other words, a diazo component is a substituent that is a univalent group obtained by removing an amino group from an amino-substitutetd heterocyclic compound or a benzene derivative capable of diazotation. B is preferably a ring formed by $B^2$. $B^2$ represents an atomic group for forming a substituted or unsubstituted aromatic hydrocarbon ring or a substituted or unsubstituted aromatic heterocyclic ring. The ring formed

by $B^2$ is preferably an aromatic hydrocarbon ring having a substituent (preferably a benzene ring having a substituent), a nitrogen-containing 5-membered heterocyclic ring having from 1 to 20 carbon atoms, or a nitrogen-containing 6-membered heterocyclic ring having from 2 to 20 carbon atoms, more preferably a nitrogen- containing 5-membered heterocyclic ring having from 1 to 20 carbon atoms, or a nitrogen-containing 6-membered heterocyclic ring having from 2 to 20 carbon atoms, and still more preferably a nitrogen-containing 5-membered heterocyclic ring having from 1 to 20 carbon atoms.

As the examples of univalent heterocyclic groups represented by A and B, the following (AB-1) to (AB-25) can be exemplified.

(AB-1)

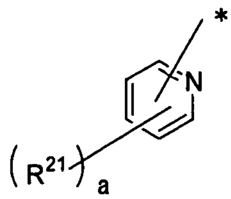

(AB-2)

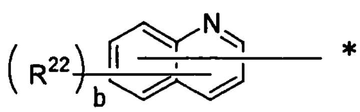

(AB-3)

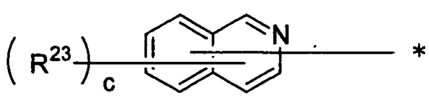

(AB-4)

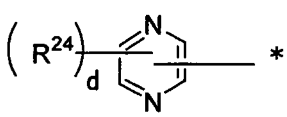

(AB-7)

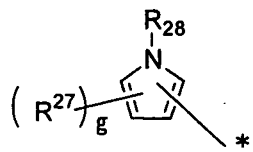

(AB-8)

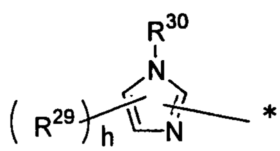

(AB-9)

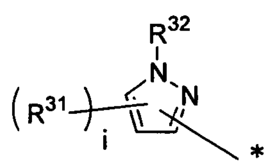

(AB-10)

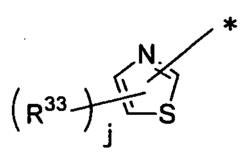

(AB－５)

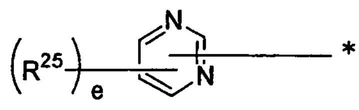

(AB－６)

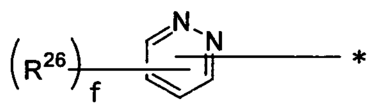

(AB－１１)

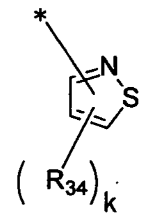

(AB－１２)

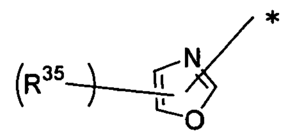

(AB－１３)

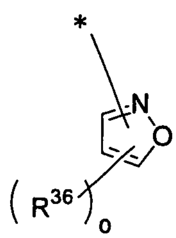

(AB－１４)

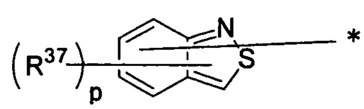

(AB－１５)

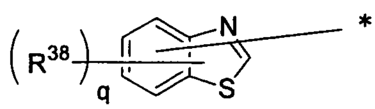

(AB－１６)

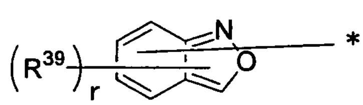

(AB－１９)

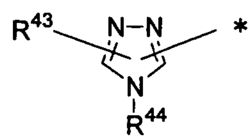

(AB－２０)

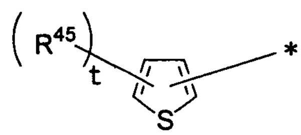

(AB－２１)

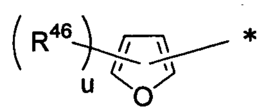

(AB－２２)

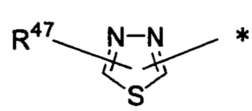

(AB-17)

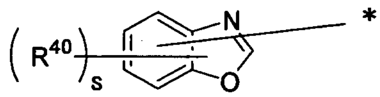

(AB-18)

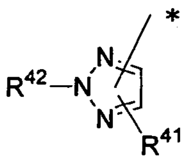

(AB-23)

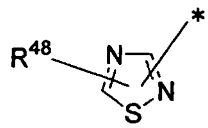

(AB-24)

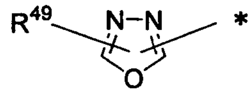

(AB-25)

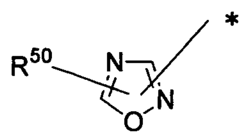

In the above formulae, $R^{21}$ to $R^{50}$ each represents a hydrogen atom or a substituent. The examples of the substituents are the same as those described in $R^{111}$.
b and c each represents an integer of from 0 to 6.
a, p, q and r each represents an integer of from 0 to 4.
d, e, f, g, t and u each represents an integer of from 0 to 3.
h, i, j, k, 1 and o each represents an integer of from 0 to 2.
When a to u is 2 or higher, two or more substituents represented by $R^{21}$ to $R^{50}$ may be the same or different.
Of the structures of B, the structures of the following (a)-1, (a)-2, (b) to (1) are preferred.

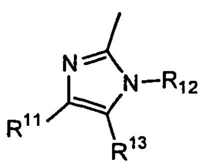
(a)-1

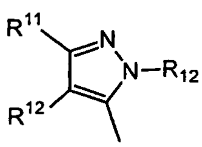
(a)-2

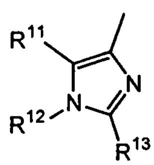
(b)

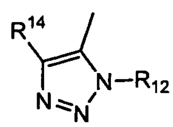
(c)

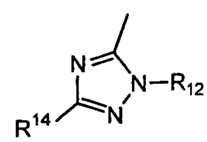
(d)

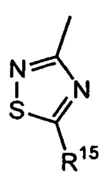
(e)

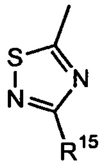
(f)

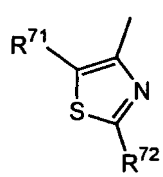
(g)

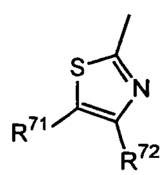
(h)

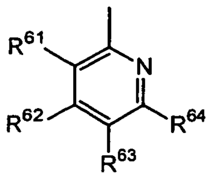

(i)

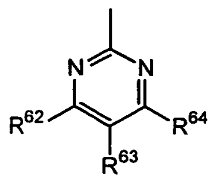

(j)

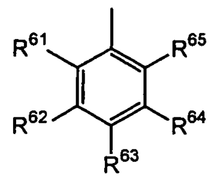

(k)

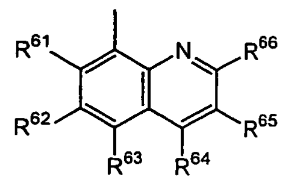

(l)

In the above formulae, $R^{11}$, $R^{12}$, $R^{13}$, $R^{14}$, $R^{15}$, $R^{61}$ to $R^{66}$, $R^{71}$ and $R^{72}$ each represents a hydrogen atom or a substituent. The examples of the substituents are the same as those described in $R^{111}$.

G represents a univalent group capable of coordination with a metallic ion. The examples of G include a hydroxyl group, a carboxyl group, an amino group (including an alkylamino group), an acylamino group, an aminocarbonylamino group, an alkoxycarbonylamino group, an aryloxycarbonylamino group, a sulfamoylamino group, an alkyl- or arylsulfonylamino group, a mercapto group, a sulfamoyl group, a sulfo group, alkyl- and arylsulfinyl group, a carbamoyl group, aryl- and heterocyclic azo groups, a phosphino group and a phosphinyl group, and G preferably represents an alkylsulfonylamino group.

As the azo dye compounds according to the invention, azo metal chelate dyes formed by coordination with metallic ions are also preferred. Chelate dyes are more excellent in light fastness and preferred. Metallic ions such as Ni, Cu, Zn, Al, Ti, Fe, B, Cr and Co are preferably used as metal chelate dyes, and Ni, Co and Al are especially preferred.

When a stable complex cannot be formed for insufficient ligands to the central metal in a chelate structure, it is also preferred to add molecules other than the dye represented by formula (2") as ligands to thereby form a stable chelate dye. As the ligands additionally added, compounds containing nitrogen, oxygen and sulfur atoms are preferred. Of such compounds, amine compounds (including aniline), and heterocyclic compounds containing at least one or more nitrogen atoms are preferred, and 5- or 6-membered amine compounds having from 3 to 20 carbon atoms are most preferred.

The specific examples of azo dyes for use in the invention are shown below. The invention is not restricted to these specific examples.

A－1.

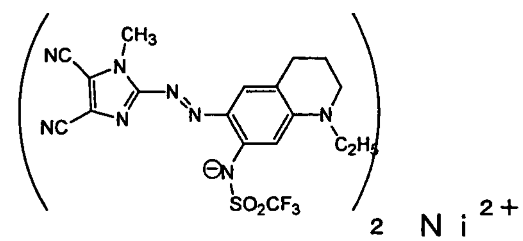

A－2.

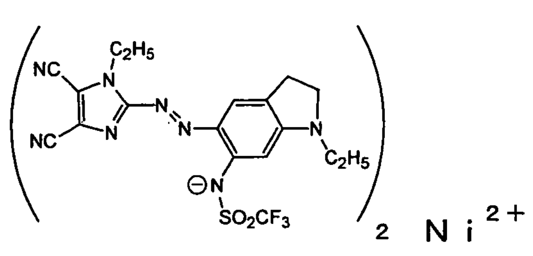

A－6.

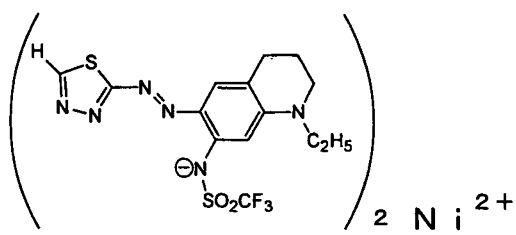

A－7.

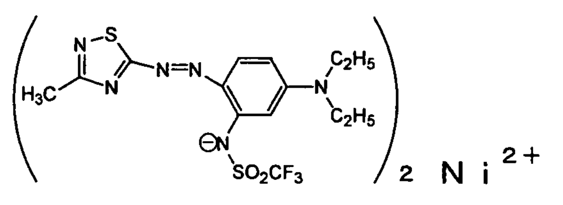

A－3.

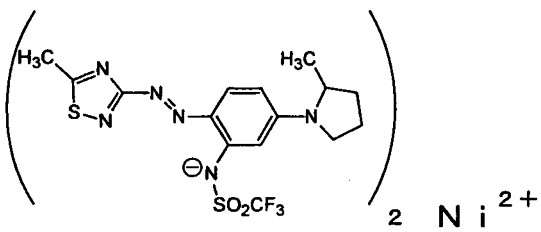

A－8.

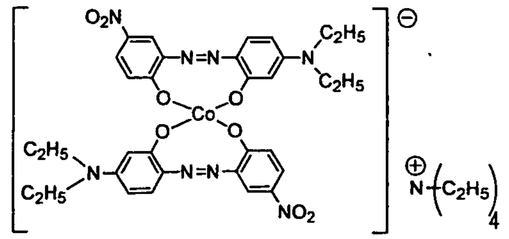

A－4.

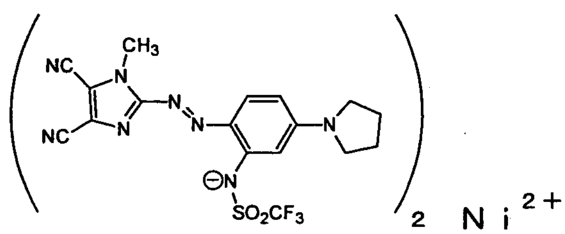

A－9.

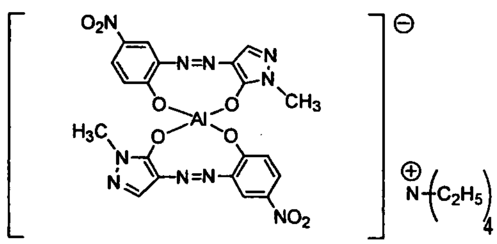

A－5.

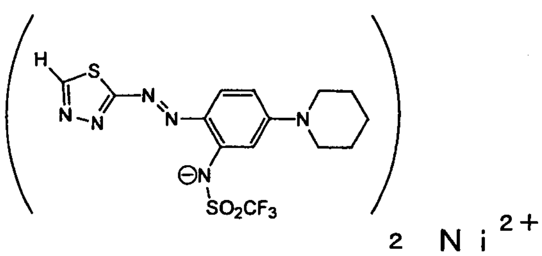

A－10.

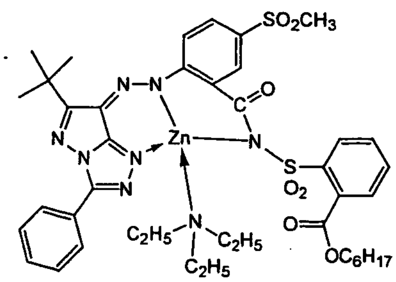

A－11.

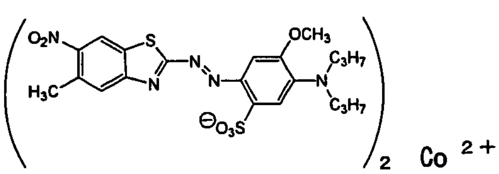

A－16.

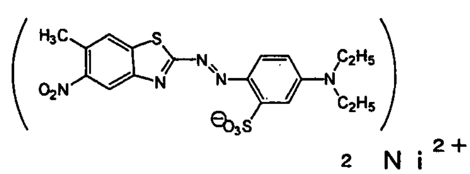

A－12.

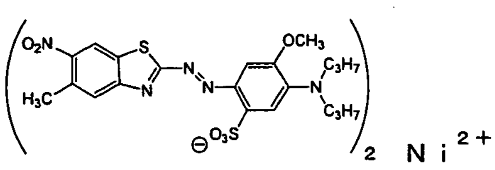

A－17.

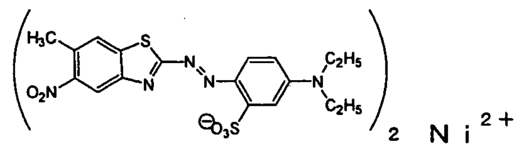

A－13.

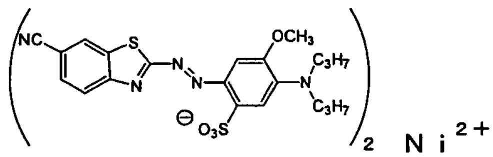

A－18.

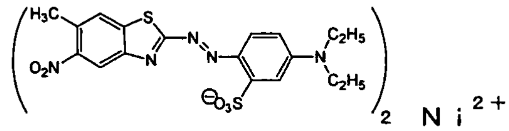

A－14.

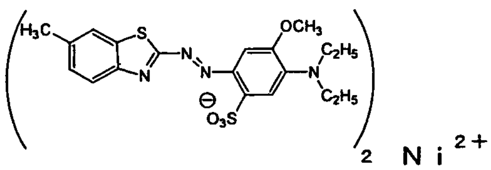

A－19.

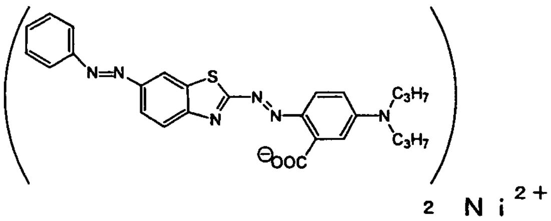

A－15.

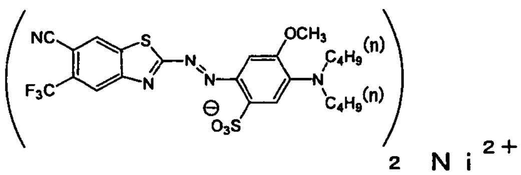

A－20.

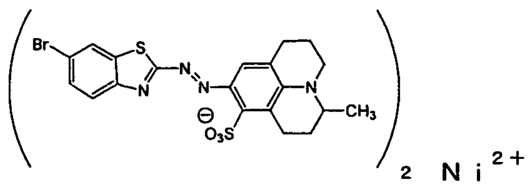

The synthesizing methods of azo dyes are disclosed in JP-A-3-268994, JP-A-361088, JP-A-7-161069, JP-A-7-251567, JP-A-10-204070, JP-A-11-12483, JP-A-11-166125, JP-A-2001- 199169, JP-A-2001-152040, and JP-A-2002-114922.

In the dye compound represented by formula (1') of the invention, from the viewpoint of optical characteristics of an amorphous film, coefficient n (a real part, a refractive index) and coefficient k (an imaginary part, an extinction coefficient) of a complex refractive index at a recording laser wavelength are preferably $2.0 \leqq n \leqq 3.0$ and $0.00 \leqq k \leqq 0.20$, more preferably $2.1 \leqq n \leqq 2.7$ and $0.00 \leqq k \leqq 0.10$, and most preferably $2.15 \leqq n \leqq 2.50$ and $0.00 \leqq k \leqq 0.05$.

Dyes exhibiting absorption maximum in a wavelength range of from 500 nm to shorter than 600 nm when formed into amorphous films are preferred, and more preferably from 550 nm to shorter than 590 nm. Dyes having a thermal decomposition temperature of from 100 to 350˚C are preferred, more preferably from 150 to 300˚C, and still more preferably from 200 to 300˚C.

Azo dyes exhibiting absorption maximum in a wavelength range of from 600 nm to shorter than 750 nm when formed into amorphous films are preferred, and more preferably from 650 nm to shorter than 730 nm. Azo dyes having a thermal decomposition temperature of from 100 to 350˚C are preferred, more preferably from 150 to 300˚C, and still more preferably from 200 to 300˚C.

The mixing ratio (mass ratio) of the oxonol dye (preferably a dye represented by formula (1')) and the azo dye (preferably a dye represented by formula (2")) according to the invention is preferably from 99/1 to 90/10, more preferably from 98/3 to 93/7, and most preferably from 97/3 to 95/5.

Besides the oxonol dyes and azo dyes, other dyes may be used as the third component. As such dyes, pyrromethene dyes and cyanine dyes are exemplified. The preferred mixing ratio in this case is calculated with the sum of the azo dye and the third dye being corresponding to formula (2").

The optical information-recording medium in the invention is not especially restricted so long as the medium has the oxonol dye and the azo dye as a recording layer. When the optical information-recording medium in the invention is applied to CD-R, the constitution of the medium comprising a transparent disc-like substrate having a thickness of

1.2±0.2 mm having a pre-groove having from 1.4 to 1.8 μm track pitch, having formed thereon a recording layer containing the dye compounds represented by formulae (1') and (2"), a light reflective layer, and a protective layer in this order is preferred. Further, when the medium is applied to DVD-R, the following two embodiments are preferred.

(1) An optical information-recording medium having a thickness of 1.2±0.2 mm formed by bonding two laminates each having a thickness of 0.6±0.1 mm comprising a transparent disc-like substrate having formed thereon a pre-groove having from 0.6 to 0.9 μm track pitch, a recording layer containing the dye compound represented by formula (1'), and a light reflective layer with the recording layers inside,
(2) An optical information-recording medium having a thickness of 1.2±0.2 mm formed by bonding a laminate having a thickness of 0.6±0.1 mm comprising a transparent disc-like substrate having formed thereon a pre-groove having from 0.6 to 0.9 μm track pitch, a recording layer containing the dye compound represented by formula (1'), and a light reflective layer, and a transparent disc-like protective substrate having the same shape as the disc-like substrate of the laminate with the recording layer inside. In the above DVD-R optical information-recording medium, a protective layer may further be provided on the light reflective layer.

It is preferred for the optical information-recording medium in the invention to be used as a high speed recording or reproducing medium of more than octuple-speed, more preferably a high speed recording or reproducing medium of more than decuple-speed, still more preferably a high speed recording or reproducing medium of more than dodecuple-speed, and most preferably a high speed recording or reproducing medium of more than hexadecuple-speed.
Data transfer speed is preferably 80 Mbps or higher, more preferably 110 Mbps, still more preferably 130 Mbps or higher, and most preferably 170 Mbps or higher.
The present information-recording media can be produced using, e.g., the methods as described below. The substrates of the present media (including the protective substrate also) can be arbitrarily selected from various materials hitherto used for substrates of information-recording media. Examples of a substrate material usable herein include glass, polycarbonate, acrylic resins such as polymethyl methacrylate, vinyl chloride resins such as polyvinyl chloride and vinyl chloride copolymers, epoxy resin, amorphous polyolefin and polyester. These materials may be used in combination of two or more thereof, if desired. Incidentally, they may be used in film form or rigid-plate form. Of those materials, polycarbonate is preferred over the others from the viewpoints of moisture resistance, dimensional stability and price.
On the side of the substrate surface where the recording layer is provided, an undercoating layer may be coated for the purposes of improving flatness, enhancing adhesion and preventing the recording layer from deteriorating. Examples of a material for forming the undercoating layer include macromolecular substances, such as polymethyl methacrylate, acrylic acid-methacrylic acid copolymer, styrene-maleic acid anhydride copolymer, polyvinyl alcohol, N-methylolacrylamide, styrene-vinyltoluene copolymer, chlorosulfonated polyethylene, nitrocellulose, polyvinyl chloride, chlorinated polyolefin, polyester, polyimide, vinyl acetate-vinyl chloride copolymer, ethylene-vinyl acetate copolymer, polyethylene, polypropylene and polycarbonate; and surface modifiers such as silane coupling agents. In forming the undercoating layer, a coating composition is prepared first by dissolving or dispersing a substance as recited above in an appropriate solvent, and then applied to a substrate surface in accordance with a coating method such as spin coating, dip coating or extrusion coating.
Further, a tracking groove or asperity representing information such as address signals (pregroove) is formed on the substrate (or the undercoating layer). It is preferable that the pregroove is formed directly on the substrate with the foregoing track pitch at the time of injection or extrusion molding of a resin material such as polycarbonate. Alternatively, the pregroove may be provided by formation of a pregroove layer. As a material for the pregroove layer, a mixture of at least one monomer (or oligomer) chosen from monoesters, diesters, triesters or tetraesters of acrylic acid with a photo-polymerization initiator can be used. The pregroove layer can be formed, e.g., in the following manner: Firstly a solution of the foregoing mixture of an acrylic acid ester and a photo-polymerization initiator is coated on a precisely formed matrix (stamper), and then a substrate is mounted on the coating solution layer and further irradiated with ultraviolet rays via the substrate or the stamper, thereby curing the coating layer and fixing the substrate to the coating layer. Thereafter, the substrate is peeled from the stamper.
On the pregroove-formed surface of the substrate (or the undercoating layer), a recording layer containing the dyes (mixture) according to the invention is provided.
The recording layer can further contain various types of discoloration inhibitors for the purpose of obtaining an improvement in light resistance. The representatives of discoloration inhibitors usable therein include the metal complexes, the diimmonium salts and the aminium salts represented by formulae (III), (IV) and (V), respectively, in JP-A-3-224793, the nitroso compounds disclosed in JP-A-2-300287 and JP-A-2-300288, and the TCNQ derivatives disclosed in JP-A-10-151861.
The recording layer can be formed in a process that a combination of dyes relating to the invention and, if needed, a quencher and a binder are dissolved in a solvent to prepare a coating solution, and the coating solution is

coated on a substrate surface and then dried. Examples of a solvent of the coating solution used for forming the dye recording layer include esters, such as butyl acetate, ethyl lactate and cellosolve acetate; ketones, such as methyl ethyl ketone, cyclohexanone and methyl isobutyl ketone; chlorinated hydrocarbons, such as dichloromethane, 1,2-dichloroethane and chloroform; amides, such as dimethylformamide; hydrocarbons, such as cyclohexane; ethers, such as tetrahydrofuran, ethyl ether and dioxane; alcohol compounds, such as ethanol, n-propanol, isopropanol, n-butanol and diacetone alcohol; fluorine-containing solvents, such as 2,2,3,3-tetrafluoropropanol; and glycol ethers, such as ethylene glycol monomethyl ether, ethylene glycol monoethyl ether and propylene glycol monomethyl ether. These solvents can be used alone or as combinations of two or more thereof with consideration for solubility of compounds to be dissolved therein. Preferred solvents are fluorine solvents, e.g., 2,2,3,3-tetrapropanol, etc. Incidentally, a discoloration inhibitor and a binder may be added to a coating solution, if necessary. Further, various additives, e.g., an antioxidant, a UV absorber, a plasticizer and a lubricant may be added to a coating solution according to purpose.

As representative discoloration inhibitors, a nitroso compound, a metal complex, a diimmonium salt and an aminium salt can be exemplified. These additives are disclosed, e.g., in JP-A-2-300288, JP-A-3-224793 and JP-A-4-146189.

Examples of a binder usable in the recording layer include naturally occurring organic macromolecular substances, such as gelatin, cellulose derivatives, dextran, rosin and rubber; and synthetic organic polymers, such as hydrocarbon resins (e.g., polyethylene, polypropylene, polystyrene, polyisobutylene), vinyl resins (e.g., polyvinyl chloride, polyvinylidene chloride, vinyl chloride-vinyl acetate copolymer), acrylic resins (e.g., polymethyl acrylate, polymethyl methacrylate), polyvinyl alcohol, chlorinated polyethylene, epoxy resin, butyral resin, rubber derivatives, and initial condensation products of thermosetting resins such as phenol-formaldehyde resin. When such a binder is used as an additional constituent material of the recording layer, the amount of the binder used is generally from 0.01 to 50 times (by mass), preferably from 0.1 to 5 times (by mass), that of the total dyes used. In other words, when a binder is used, the use amount thereof is generally from 0.2 to 20 mass parts per 100 mass parts of the dye, preferably from 0.5 to 10 mass parts, and more preferably from 1 to 5 mass parts. The dye concentration in the thus prepared coating solution is generally from 0.01 to 10 mass %, preferably from 0.1 to 5 mass %.

Examples of a coating method applicable herein include a spray method, a spin coating method, a dip method, a roll coating method, a blade coating method, a doctor roll method and a screen printing method. The recording layer may be a single layer or a double layer. The thickness of the recording layer is generally from 20 to 500 nm, preferably from 30 to 300 nm, more preferably from 50 to 300 nm and most preferably from 50 to 200 nm

As the coating temperature, 23 to 50˚C will suffice, preferably from 24 to 40˚C, and more preferably from 25 to 37˚C.

Various discoloration inhibitors may be added to a recording layer for the purpose of the improvement of light fastness of the recording layer.

As the discoloration inhibitor, singlet acid quenchers are generally used. Well-known singlet acid quenchers described in publications, e.g., patent specifications, can be used.

The specific examples are described in JP-A-58-175693, JP-A-59-81194, JP-A-60-18387, JP-A-60-19586, JP-A-60-19587, JP-A-60-35054, JP-A-60-36190, JP-A-60-36191, JP-A-60-44554, JP-A-60-44555, JP-A-60-44389, JP-A-60-44390, JP-A-60-54892, JP-A-60-47069, JP-A-63-209995, JP-A-4-25492, JP-B-1-38680, JP-B-6-26028, German Patent 350,399, and Nippon Kagaku-kai Shi, the October issue, p. 1141 (1992).

The use amount of discoloration inhibitors, e.g., singlet acid quenchers, is generally from 0.1 to 50 mass% to the amount of compound used for recording, preferably from 0.5 to 45 mass%, more preferably from 3 to 40 mass%, and especially preferably from 5 to 25 mass%.

[Reflective layer]

On the recording layer, a reflective layer is provided for the purpose of improving the reflectivity at the time of reproduction of information. The light-reflecting substance as a constituent material of the reflective layer is a substance having a high laser-light reflectivity, with examples including metals or semimetals, such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn, Bi and Nd; and stainless steel. Of these substances, Cr, Ni, Pt, Cu, Ag, Au, Al and stainless steel are preferred over the others, and Ag in particular is advantageous. These substances may be used alone, or as combinations or alloys of two or more thereof. The reflective layer can be formed on the recording layer by vapor deposition, sputtering or ion-plating of a reflective substance as recited above. The thickness of the reflective layer is generally from 10 to 800 nm, preferably from 10 to 300 nm (or from 20 to 500 nm), more preferably from 50 to 300 nm, and most preferably from 50 to 200 nm.

[Adhesive layer]

An adhesive layer is a layer formed between a reflective layer and a protective layer or a protective substrate.

As adhesives constituting an adhesive layer, UV-curable resins are preferred, and those small in a curing shrinkage factor are especially preferred for preventing discs from warping. As such UV-curing resins, e.g., UV-curing resins (UV-curing adhesives), e.g., "SD-640", "SD6802", "SD6830" and "SD-347" (manufactured by Dainippon Inks and Chemicals Inc.) can be exemplified. For providing elasticity, the thickness of an adhesive layer is preferably from 1 to 1,000 μm, more preferably from 5 to 500 μm, and especially preferably from 10 to 100 μm.

Other examples of adhesives constituting an adhesive layer are exemplified. The adhesives are resins curable by radiation exposure and they are resins having two or more radiation functional double bonds in a molecule, e.g., acrylates, acrylamides, methacrylates, methacrylic acid amides, allyl compounds, vinyl ethers, and vinyl esters are exemplified. Bifunctional or higher functional acrylate compounds and methacrylate compounds are preferably used.

As the specific examples of bifunctional or higher acrylate and methacrylate compounds, compounds obtained by the addition of acrylic acid or methacrylic acid to aliphatic diols can be used, and as the representative examples, e.g., ethylene glycol diacrylate, propylene glycol diacrylate, butadienediol diacrylate, hexanediol diacrylate, diethylene glycol diacrylate, triethylene glycol diacrylate, tetraethyleen glycol diacrylate, neopentyl glycol diacrylate, tripropylene glycol diacrylate, ethylene glycol dimethacrylate, propylene glycol dimethacrylate, butanediol dimethacrylate, hexanediol dimethacrylate, diethylene glycol dimethacrylate, triethylene glycol dimethacrylate, tetraethylene glycol dimethacrylate, neopentyl glycol dimethacrylate, tripropylene glycol dimethacrylate are exemplified.

In addition, polyether acrylate, polyether methacrylate obtained by the addition of acrylic acid or methacrylic acid to polyether polyol such as polyethylene glycol, polypropylene glycol, or polytetramethylene glycol, well-known dibasic acid, and polyester acrylate, polyester methacrylate obtained by the addition of acrylic acid or methacrylic acid to polyester polyol obtained from glycol can also be used.

Further, polyurethane acrylate and polyurethane methacrylate obtained by the addition of acrylic acid or methacrylic acid to polyurethane formed by the reaction of well-known polyol or diol with polyisocyanate may be used.

Those obtained by the addition of acrylic acid or methacrylic acid to bisphenol A, bisphenol F, hydrogenated bisphenol A, hydrogenated bisphenol F, or alkylene oxide adducts thereof, and compounds having a cyclic structure, e.g., isocyanuric acid alkylene oxide-modified diacrylate, isocyanuric acid alkylene oxide-modified dimethacrylate, tricyclodecane dimethanol diacrylate, and tricyclodecane dimethanol dimethacrylate can also be used.

As the radiations, electron beams and ultraviolet rays can be used. When ultraviolet rays are used, it is necessary to add a photo-polymerization initiator to the following shown compounds. As the photo-polymerization initiator, aromatic ketones are used. Aromatic ketones are not especially restricted, but those having relatively large absorption coefficients at wavelengths of 254, 313, 865 nm generating spectrums of luminescent spots of mercury lamps generally used as UV irradiation light sources are preferably used. The representative examples of such aromatic ketones include acetophenone, benzophenone, benzoin ethyl ether, benzyl methyl ketal, benzoin isobutyl ketone, hydroxydimethyl phenyl ketone, 1-hydroxycyclohexyl phenyl ketone, 2-2-diethoxy acetophenone, and Michler's ketone, and various ketones can be used. The mixing ratio of aromatic ketones is from 0.5 to 20 mass parts per 100 mass parts of UV-curable resin, preferably from 2 to 15 mass parts, and more preferably from 3 to 10 mass parts. Products as UV-curable type adhesives containing a photo-polymerization initiator in advance are commercially available and they may be used. As ultraviolet light sources, a mercury lamp and a metal halide lamp are used. As the lamps, those having a capacity of 20 to 300 W/cm are used, and irradiation time is from 0.1 to 20 seconds. The distance between a substrate and a lamp is generally preferably from 1 to 30 cm.

As electron beam accelerators, a scanning system, a double scanning system or a curtain beam system can be adopted, but a curtain beam system is preferred for capable of obtaining large output relatively inexpensively. As electron beam characteristics, accelerating voltage is from 100 to 1,000 kV, and preferably from 150 to 300 kV, absorbed dose is from 0.5 to 20 Mrad, and preferably from 1 to 10 Mrad. When accelerating voltage is 10 kV or less, the amount of transmission of energy is insufficient, and when it exceeds 1,000 kV, the energy efficiency used for polymerization lowers, so that economically disadvantageous.

[Protective layer, protective substrate]

On the reflective layer, a protective layer may be provided for the purpose of protecting the recording layer from physical and chemical damages. For the purpose of enhancing scratch resistance and moisture resistance, such a protective layer may also be provided on the side of the substrate where the recording layer is not provided. Examples of a substance usable for the protective layer include inorganic substances, such as SiO, $SiO_2$, $MgF_2$, $SnO_2$ and $Si_3N_4$; and organic substances, such as thermoplastic resins, thermosetting resins and UV-curable resins. The protective layer can be formed, e.g., by laminating a film obtained by extrusion of plastic on the reflective layer and/or the substrate via an adhesive layer. Alternatively, the protective layer may be formed using a vacuum deposition, sputtering or coating method. In the case of using a thermoplastic resin or a thermosetting resin, the protective layer can be formed by dissolving the resin in an appropriate solvent to prepare a coating solution, coating the coating solution and then drying the solution coated. In the case of a UV-curable resin, the resin as it is or a solution prepared by dissolving the resin in

an appropriate solvent is coated, and then irradiated with UV rays to cure the resin, resulting in formation of a protective layer. To those coating solutions, various additives, such as an antistatic agent, an antioxidant and a UV absorber, may further be added according to the desired purposes. The thickness of the protective layer is generally from 0.1 to 100 μm. Under the process mentioned above, a laminate having on the substrate the recording layer, the reflective layer and, if needed, the protective layer can be formed. And a DVD-R information-recording medium having two recording layers can be produced by forming two laminates under the foregoing process and bonding them together with their respective recording layers inside. In addition, a DVD-R information-recording medium having the recording layer on one side alone can be produced by bonding one laminate formed under the above process to a disk-shape protective substrate having the same dimensions as the substrate of the laminate with the recording layer inside.

A protective layer and a protective substrate are used for preventing the penetration of moisture content and the generation of scratches. As the materials constituting a protective layer, UV-curable resins, visible ray-curable resins, thermoplastic resins, and silicon dioxide are preferably used, and UV-curable resins are especially preferred. As UV-curable resins, for example, "SD-640" (manufactured by Dainippon Inks and Chemicals Inc.) can be exemplified. Further, SD-347 (manufactured by Dainippon Inks and Chemicals Inc.), SD-694 (manufactured by Dainippon Inks and Chemicals Inc.), and SKCD1051 (manufactured by SKC) can be used. The thickness of a protective layer is preferably in the range of from 1 to 200 μm, and more preferably from 5 to 150 μm.

In a layer constitution of using a protective layer as the optical path of laser, the protective layer is required to have transparency. Here, "transparency" means to be transparent in a degree so as to be capable of transmitting recording light and reproducing light (transmittance of 90% or higher).

A protective layer can be formed by a spin coating method. The number of rotation in spin coating is preferably from 50 to 8,000 rpm, and more preferably from 100 to 5,000 rpm, from the viewpoint of the prevention of uniform layer forming.

When a UV-curable resin is used in a protective layer, after forming the protective layer by spin coating, the UV-curable resin is cured by irradiation with UV-ray of a UV irradiation lamp (a metal halide lamp) on the protective layer.

For getting rid of the thickness unevenness of the protective layer to be formed, treatment, e.g., allowing the resin to stand for a certain period of time before curing, may be arbitrarily performed.

In the case of DVD-R, in place of a protective layer, an adhesive layer comprising UV-curable resins and the like and a substrate as a protective substrate (thickness is 0.6 mm or so, materials are the same as the above-described substrates) can be laminated.

That is, after forming a reflective layer, a UV-curable resin (SD640, SD661, SD694, SD6802, SD6830, etc., manufactured by Dainippon Inks and Chemicals Inc.) is discharged on a disc and, for example, a polycarbonate substrate as a protective substrate (thickness: 0.6 mm) is put thereon, and after shaking off the UV-curable resin by high rotation similar to spin coating, the UV-curable resin is cured by UV irradiation from above the substrate to thereby stick the laminates. The thickness of an adhesive layer is from 20 to 60 μm.

In the invention, information recording on the thus produced information-recording media is performed, e.g., in the following manner. While rotating an information-recording medium at a constant linear velocity or a constant angular velocity, laser light for recording, such as semiconductor laser light, is applied to the information-recording medium from the substrate side. By this exposure to laser light, it is thought that cavities are formed at the interface between the recording layer and the reflective layer (cavities are formed as the recording layer or the reflective layer, or both of them undergo deformation), or swelling deformations are caused in the substrate, or discoloration or change of association state is caused in the recording layer, and thereby changes in refractive index are achieved to result in recording of information. As the recording light, semiconductor laser beams having oscillation wavelengths in the range of 770 to 790 nm are used in the case of CD-R type of recording media, and those having oscillation wavelengths in the range of 600 to 700 nm (preferably 620 to 680 nm, far preferably 630 to 660 nm) are used in the case of DVD-R type of recording media. The information thus recorded can be reproduced by irradiating the substrate side of the information-recording medium with semiconductor laser light having the same wavelength as the light used at the time of recording while rotating the recording medium at the same constant linear velocity as set for the recording, and detecting the light reflected from the recording medium.

## Examples

The invention will now be illustrated in more detail by reference to the following examples.

[Manufacture of optical recording medium]

(Example 1)

A substrate having a spiral groove (depth: 120 nm, width: 350 nm, track pitch: 0.74 μm), a thickness of 0.6

mm, and a diameter of 120 mm was formed by injection molding with a polycarbonate resin. A coating solution was prepared by dissolving 0.95 g of dye A shown below and 0.05 g of dye B shown below in 100 ml of 2,2,3,3-tetrafluoropropanol, and the obtained coating solution was coated by spin coating on the surface of the side on which the groove was formed of the above substrate, whereby a recording layer was formed.

Dye A

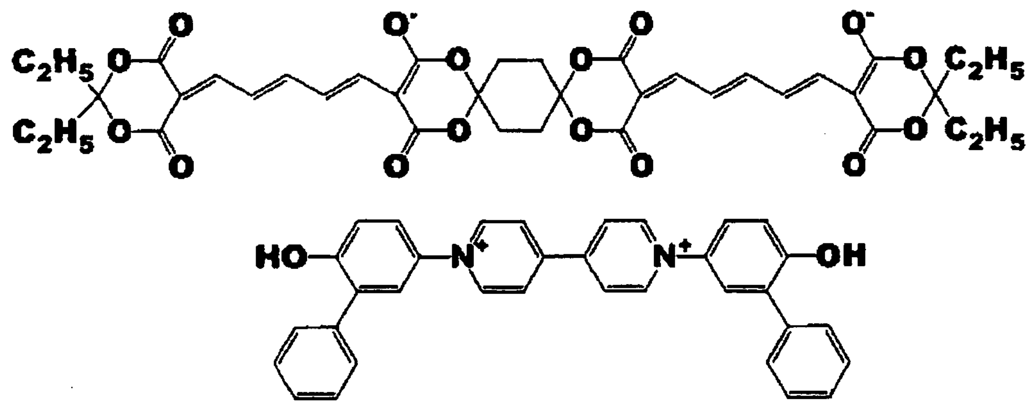

Dye B

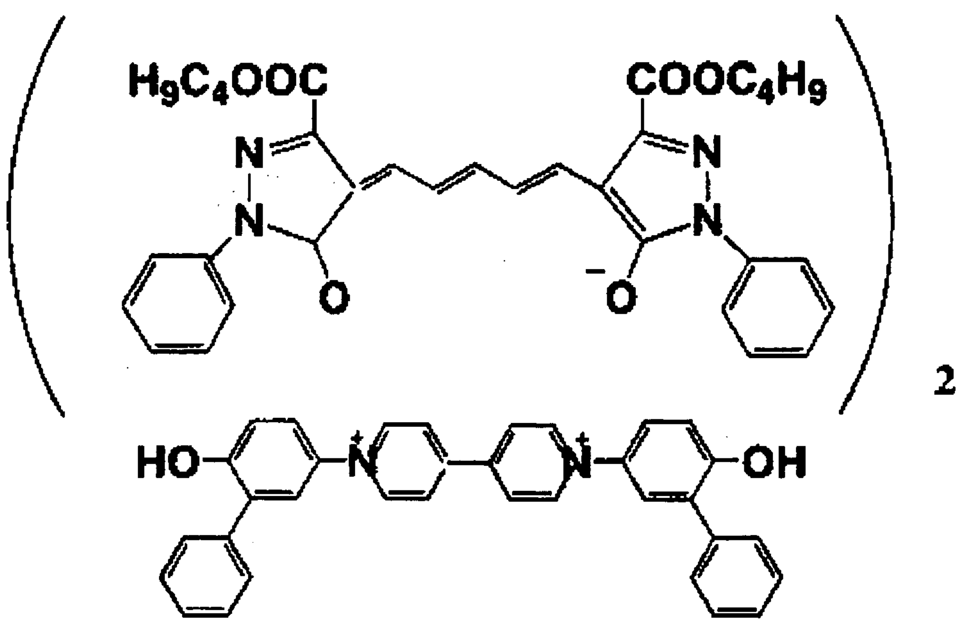

After that, silver was sputtered on the dye-coated surface to form a reflective layer having a thickness of about 120 nm, and then the substrate was stuck to a dummy substrate having the same shape as the above substrate with a UV-curable resin as an adhesive to thereby prepare a DVD-R disc (an optical recording medium).

(Comparative Example 1)

A DVD-R disc in Comparative Example 1 was manufactured in the same manner as in Example 1, except for using dye C shown below in place of dye A.

Dye C

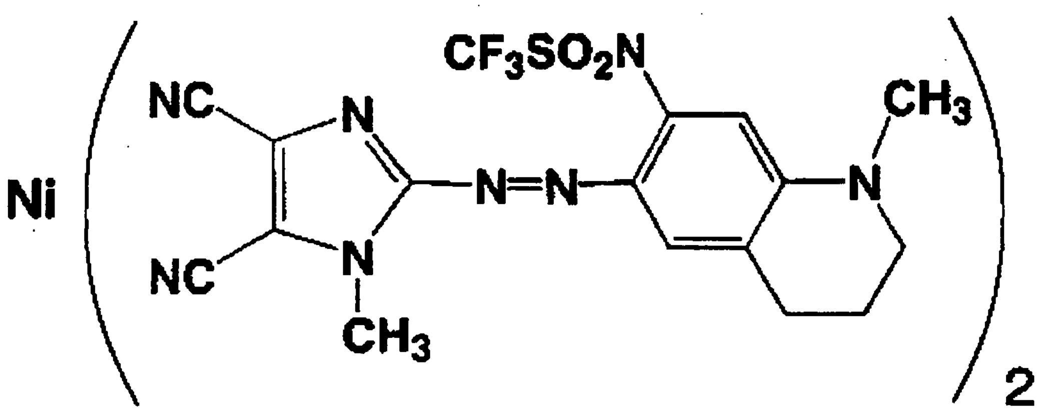

(Comparative Example 2)

A DVD-R disc in Comparative Example 2 was manufactured in the same manner as in Example 1, except for using dye D shown below in place of dye B.

Dye D

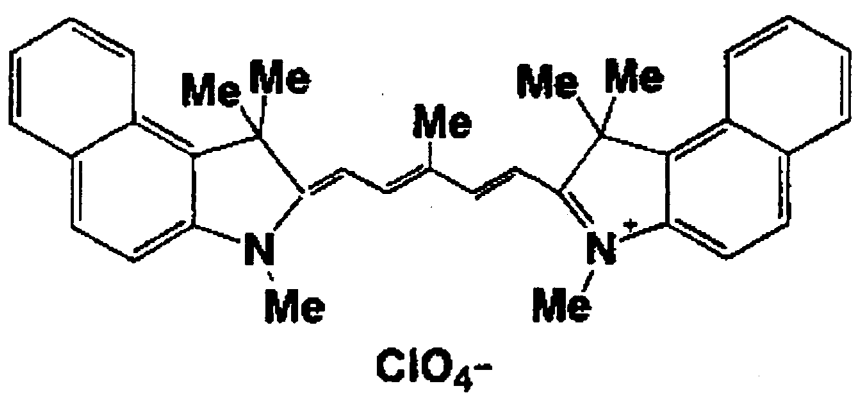

[Evaluation of initial characteristics of optical recording medium]

With the prepared optical recording media and disc drive DDU1000 (a product of Pulse Tech Products Corporation, laser wavelength: 660 nm, aperture rate: 0.60), 8-16 modulating signals were recorded at each of data transfer rates of 11.08 Mbps (an equivalent-speed) and 177.28 Mbps (a hexadecuple- speed). The recording power was set so as to make the amount of jitter least (optimal recording power) in recording on the optical recording media in each

example (comparative examples), and jitter, 14T modulation factor and reflectance were measured. The results obtained are shown in Table 1 below.

[Evaluation of preservation stability of optical recording medium]

After recording at quadruple-speed with DVDT-R (a product of Expert Magnetics), and PI error was measured with DVD-CATS (a product of Audio Development), each sample was put to the following preservation environments, and PI error was measured again after finishing the preservation tests.

(1) High temperature high humidity acceleration test (preserved at 80˚C 85% RH for 96 hours)
(2) Degradation test by light irradiation (subjected to xenon lamp exposure of 4 Mlx·Hr)

The results obtained are shown in Table 1 below.

In Table 1, the case where the cationic part or the anionic part is the same between dye A and dye B is marked "o", and the different case is marked "×".

(Table 1)

| | | Example 1 | Comparative Example 1 | Comparative Example 2 |
|---|---|---|---|---|
| Dye | | Dye A + Dye B | Dye C + Dye B | Dye A + Dye D |
| Starting temperature of decomposition (˚C) | | Dye A = 200 | Dye C = 280 | Dye A = 200 |
| | | Dye B = 210 | Dye B = 210 | Dye D = 280 |
| n (B)/n (A) | | 0.74 | 0.70 | 0.69 |
| k (B)/k (A) | | 20.4 | 17.4 | 49.0 |
| Cationic part or anionic part of two dyes are the same | | o | x | x |
| Equivalent-speed recording | Optimal recording power Jitter (%) | 8.3 | 8.4 | 8.3 |
| | | 7.8 | 9.2 | 8.9 |
| | 14T factor 14T modulation factor | 0.52 | 0.5 | 0.45 |
| | Reflectance (%) | 48 | 48 | 46 |
| Hexadecuple-speed recording | Optimal recording power | 42 | 45 | 42 |
| | Jitter (%) | 7.9 | 9.3 | 8.5 |
| | 14T modulation factor | 0.74 | 0.75 | 0.70 |
| | Reflectance (%) | 48 | 47 | 46 |
| Preservation stability (variation of PI error at quadruple-speed recording | 80˚C 85% RH, 96 Hr | 12→28 | 15 → 200 | 15 → 500 |
| | Light irradiation (4 Mlx·Hr) | 12→200 | 12 → measurement impossible | 15 → measurement impossible |

From Table 1, it can be seen that the optical recording medium in Example 1 is high sensitivity, and excellent in each of recording characteristics of jitter, 14T modulation factor and reflectance in both equivalent-speed recording (low speed recording) and hexadecuple-speed recording (high speed recording) as compared with the optical recording media in Comparative Examples 1 and 2. Further, there was conspicuous difference in preservation stability between Example and Comparative Examples.

(Example 1-1)

Evaluation of Spin Coating Suitability:

Dyes (in the total amount of 0.2 g) mixed in a ratio shown in Table 1 were dissolved in 10 ml of 2,2,3,3-tetrafluoropropanol, spin-coated on a polycarbonate substrate, and then examined for the presence or absence of coating streaks by visual observation.

(Example 1-2)

Test of Solution Ageing Stability:

A 1.0 mass % 2,2,3,3-tetrafluoropropanol solution of the combination of dyes shown in Table 1 was prepared, and allowed to stand for one week at 20˚C. The resulting solution was inspected for precipitation of crystals by visual observation.
The results obtained are shown in Table 1-1.
The state of precipitation of crystals was rated on a A-to-D scale (A being the best), and the criterion adopted herein is as follows.

A: No precipitation of crystals is observed at all.
B: No precipitation of crystals is virtually observed.
C: Precipitation of crystals is slightly observed.
D: Considerable precipitation of crystals is observed.

Table 1-1

| Level No. | Dyes exhibiting absorption maxima in range of 500-600 nm (Percentage by mass) | | Dye exhibiting absorption maximum in range of 600-720 nm (percentage by mass) | Extent of coating streaks (by visual observation) | solution ageing stability |
|---|---|---|---|---|---|
| | Dye-1 | Dye-2 | | | |
| (Invention) | I-7 (50%) | I-14(45%) | II-3 (5%) | observed | A |

As can be seen from the results shown in Table 1-1, no coating streak was observed in the case of using the dye mixture of three-component system, and flat good-quality coating layer was obtained. This trend was also observed in the cases of using other dye mixtures according to the invention. In addition, the three-component systems were found to be remarkably superior in solution ageing stability also.

(Example 1-3)

Tests on an optical information-recording medium were carried out.

<Preparation of Optical Information-Recording Medium>

By extrusion molding, polycarbonate resin was formed into a 0.6 mm-thick, 120 mm-diametral substrate having a spiral groove (depth: 130 nm, width: 310 nm, track pitch: 0.74 μm).
A coating solution prepared by dissolving 1.25 g of a mixture of Dye 1-7, Dye 1-14 and Dye II-3 (50/45/5) corresponding to Level No. 201 in table 1-4 into 100 ml of 2,2,3,3-tetrafluoropropanol was coated on the groove-formed surface of the substrate by use of a spin coating method, thereby forming a dye layer.
Onto the dye-coated surface, silver was sputtered to form a reflective layer having a thickness of about 150 nm. And the reflective layer thus formed was bonded to a 0.6 mm-thick dummy substrate by using as an adhesive a UV-curable resin (Daicureclear SD640, produced by DAINIPPON INK AND CHEMICALS, INCORPORATED), thereby forming a disc.

<Evaluations of Optical Information-Recording Medium>

By use of DDU-1000 and a multisignal generator (made by Pulstec Industrial Co., Ltd.; laser wavelength: 660 nm, aperture rate: 0.60), 8-16 modulating signals were recorded at each of equivalent-speed (11.08 Mbps, a speed equivalent to the standard speed), octuple-speed (88.64 Mbps) and decuple-speed (110.8 Mbps) transfer rates.

The recording strategies used are shown in Table 1-2. The equivalent-speed recording and the decuple-speed recording were each performed using one kind of recording strategy, while the octuple-speed recording was performed using two kinds of recording strategies greatly different in pulse width.

The recording power was set so as to minimize the amount of jitter in each recording on the medium. Thereafter, the signals recorded were reproduced with laser of the same wavelength as that used for recording, and therein the amount of jitter was measured. The results obtained are shown in Table 1-3.

Table 1-2: Recording Strategies

| Recording Speed | 1X | 8X | 8X | 10X |
|---|---|---|---|---|
| Recording Strategy | A | B | C | D |
| 3Ttop | 1.55 | 2.55 | 1.85 | 2.75 |
| 4Ttop | 1.50 | 2.92 | 2.12 | 3.20 |
| nTtop | 1.55 | 1.70 | 1.30 | 1.90 |
| Tmp | 0.65 | - | - | - |
| nTwt | - | 0.50 | -0.30 | 0.55 |
| nTlp | - | 1.40 | 0.60 | 1.40 |
| 3-nTld | - | -0.03 | -0.05 | -0.03 |
| 3Tdtop | - | -0.15 | -0.05 | -0.15 |
| 4Tdtop | - | - 0.20 | 0.35 | 0.20 |
| nTdtop | - | 0.00 | 0.00 | 0.00 |
| STtop2 | - | -0.15 | -0.05 | -0.20 |
| 5Tlp2 | - | -0.10 | -0.15 | -0.20 |
| 5Tdlp2 | - | 0.00 | 0.00 | 0.00 |
| Po/Pm | - | 1.48 | 1.58 | 1.36 |

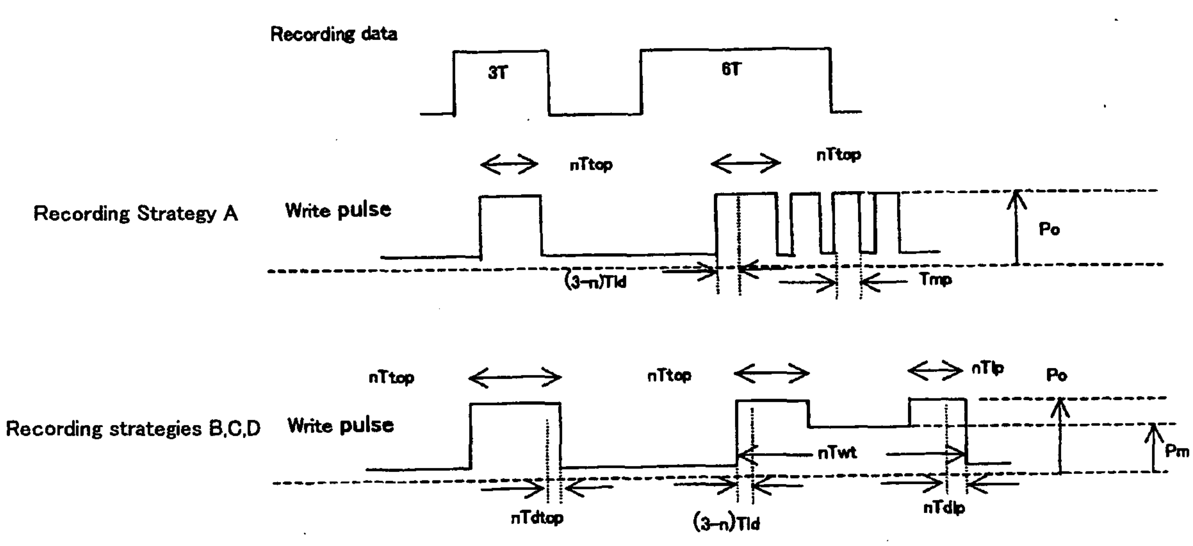

Table 1-3

| | Example | | | |
|---|---|---|---|---|
| Recording speed | 1X | 8X | 8X | 10X |
| Recording strategy | A | B | C | D |
| Optimum recording power (mW) | 10 | 26 | 32 | 32 |
| Reflectivity (%) | 51.2 | 52.1 | 51.8 | 51.7 |
| Jitter (%) | 6.7 | 6.8 | 6.9 | 6.9 |
| 14T modulation factor | 0.52 | 0.71 | 0.77 | 0.78 |
| PI error | 23 | 18 | 11 | 16 |
| AR (%) | 50 | 35 | 28 | 26 |

(Example 1-4)

DVD-R discs were produced in the same manner as in Example 1-3, except that dye species or/and mixing ratios thereof were changed to accord with Level Nos. 202 to 207, respectively, shown in Table 1-4. Each of these disc samples was submitted to recording and reproduction tests at 10X. As a result, the discs of Level Nos. 201 to 207, each of which used a mixture of three dyes (according to the invention), were found to be outstanding for all of sensitivity, jitter and solution ageing stability.

Table 1-4

| Level No. | Dyes exhibiting absorption maxima in range of 500-600 nm (percentage by mass) | | Dye exhibiting absorption maximum in range of 600-720 nm (percentage by mass) | Sensitivity (mW) | Jitter | Solution ageing stability |
|---|---|---|---|---|---|---|
| | Dye-1 | Dye-2 | | | | |
| 201 (invention) | I-7 (50%) | I-14 (45%) | II-3 (5%) | 32 | 6.9 | A |
| 202 (invention) | I-7 (75%) | I-14 (20%) | II-3(5%) | 30 | 6.7 | A |
| 203 (invention) | I-9 (50%) | I-14 (45%) | II-3 (5%) | 33 | 6.8 | A |
| 204 (invention) | I-5 (55%) | I-14 (40%) | II-3 (5%) | 31 | 6.7 | A |
| 205 (invention) | I-7 (50%) | I-12 (45%) | II-3(5%) | 32 | 6.9 | A |
| 206 (invention) | I-7 (50%) | I-13 (45%) | II-3(5%) | 34 | 6.6 | A |
| 207 (invention) | I-7 (50%) | I-14 (45%) | II-4(5%) | 32 | 7.0 | A |

(Example 2-1)

Synthesis of Dye Compound (II')

The following is a reaction scheme for synthesizing Dye Compound (II')-1:

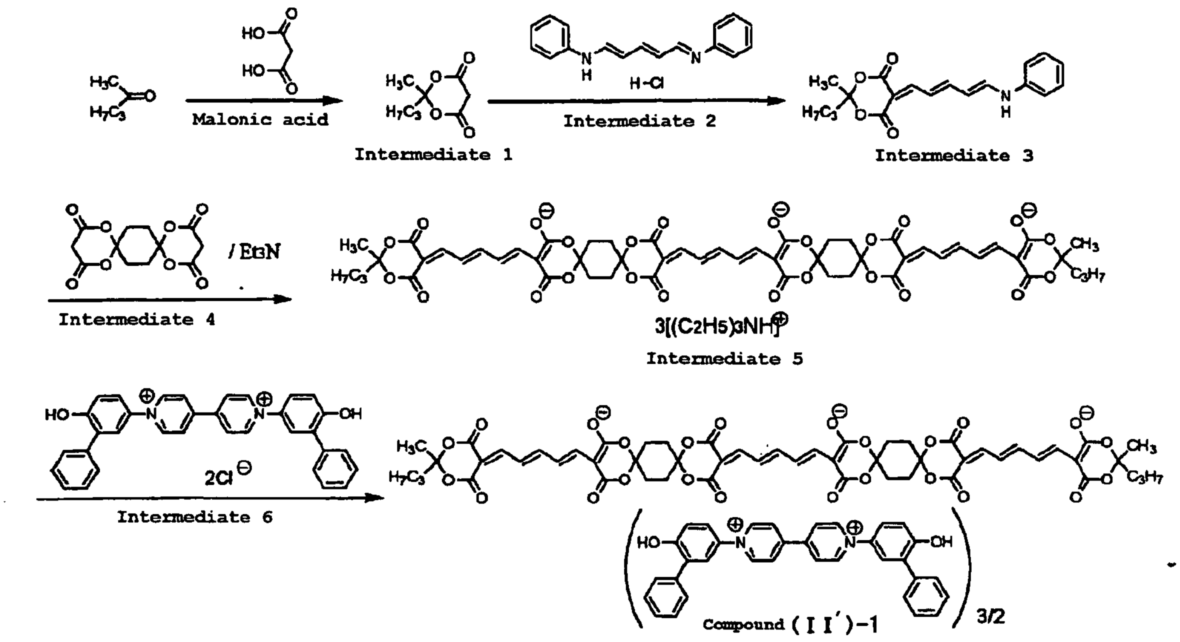


<Process Step 1>

Malonic acid (5.2 g, 0.05 mol) and concentrated sulfuric acid (0.5 ml) were added to acetic anhydride (10 ml), and the starting compound was thoroughly dissolved with stirring at room temperature. The resulting solution was cooled in an ice bath with stirring, and thereto 2-pentanone (4.3 g, 0.05 mol) was slowly added dropwise. Further, the stirring was continued for additional 4 hours at room temperature. The reaction mixture thus obtained was extracted with ethyl acetate, washed twice with water, dried, and then transferred into an evaporator. And the solvent was distilled away under reduced pressure. Thus, 7.15 g of Intermediate 1 was obtained as oily matter (in a 83 % yield, 0.414 mol).

<Process Step 2>

Methanol (100 ml) was added to Intermediate 2 (5.70 g, 0.02 mol), and thereto pyridine (15.8 g, 0.2 mol) was further added. While stirring the resulting mixture at room temperature, a solution containing Intermediate 1 (3.44 g, 0.02 mol) in methanol (20 ml) was added dropwise thereto over a 30-minute period. And the stirring was continued for additional 3 hours at room temperature. As a result, violet crystals separated out. These crystals were filtered off, washed with methanol. Thus, 4.5 g of Intermediate 3 was obtained as violet crystals (in a 68.7 % yield, 0.0137 mol).

«Synthesis of Intermediate 4»

1,4-Cyclohexanedione (22.43 g, 0.2 mol) and malonic acid (41.62 g, 0.4 mol) were dissolved in acetic anhydride (85 ml), and concentrated sulfuric acid (1.2 ml, 0.02 mol) was added thereto and stirred in an ice bath. The stirring was continued for additional 3 hours at room temperature. Then, light brown crystals separated out as the reaction progressed. These crystals were filtered off, washed with ice-cold distilled water, and dried. Thus, 12.5 g of Intermediate 4 was obtained as light brown crystals (in a 22.0% yield).

<Process Step 3>

The Intermediate 3 (6.5 g, 16.9 mmol) and the Intermediate 4 obtained in the foregoing Synthesis (2.40 g, 8.44 mmol) were added to dimethylformamide (30 ml), and thereto triethylamine (3.5 ml, 25 mmol) was added dropwise. The resulting admixture was stirred for 3 hours at 50°C, and further stirred for 1 hour at room temperature. Thereafter, the reaction solution obtained was mixed with 100 ml of ethyl acetate and distilled water, and further stirred. The ethyl acetate layer separated was washed twice with water, and then the ethyl acetate was distilled away under reduced pressure. The residue thus obtained was purified by column chromatography (ethyl acetate/methanol=6/1) on silica gel to give

0.57 g of violet powder corresponding to Intermediate 5 (in a 4.8% yield).

<Process Step 4>

Intermediate 6 (0.37 g, 0.66 mmol) used as a counter cation was dissolved in 120 ml of methanol heated at 40˚C with stirring. To this solution as it was maintained at 40˚C and stirred, a solution containing Intermediate 5 (0.92 g, 0.66 mmol) in 20 ml of methanol was added dropwise. Thus, crystals separated out, and they were filtered off to give 0.85 g of the intended Compound (II')-1 as green powder (in a 92.2% yield).
The structure of Compound (II')-1 thus obtained was confirmed by $^1$H-NMR measurement. $^1$H-NMR (DMSO-d6): 0.89 (t, 6H), 1.32-1.46(m, 4H), 1.51(s, 6H), 1.72-1.85(m, 4H), 1.99 (s, 16H), 7.05-7.32(m, 9H), 7.35-7.56(m, 12H), 7.57-7.83 (m, 15H), 7.90(s, 3H), 9.00(d, 6H), 9.66(d, 6H), 10.71(s, 3H)
Other dyes that concern the invention can be synthesized with ease according to the Synthesis Example mentioned above. And the dyes represented by formula (I') can be synthesized using the methods described in JP-A-2004-188968.

(Example 2-2)

Evaluation of Optical Constants:

Optical characteristic values (the real part n and the imaginary part k of a complex refractive index) of each of dye compounds according to the invention were evaluated by reflex spectroscopic ellipsometry. As each of samples for evaluations of optical characteristics by the spectroscopic ellipsometry, a spin coating film formed on a glass substrate was adopted. This spin coating film was formed by dissolving a desired dye compound into 2,2,3,3-tetrafluoropropanol so that the resulting solution reached a concentration of 25 mM, and then by casting this solution on a spinning glass substrate.

<Formation of Spin Coating Film containing Comparative Compound>

As comparative examples, spin coating films were formed from comparative compounds capable of ensuring satisfactory recording characteristics in equivalent-speed recording (recording at a speed equivalent to the standard speed). Herein, the comparative compounds used were compounds represented by formula (I').
Optical characteristics evaluations of the spin coating films formed from Exemplified Compounds (II')-1 to (II')-7, respectively, were made, and n and k values at 660 nm were determined from the evaluation results obtained. These values are shown in Table 2-1.

Table 2-1

| Compound | n | k |
|---|---|---|
| Compound (II')-1 | 2.38 | 0.043 |
| Compound (II')-2 | 2.40 | 0.065 |
| Compound (II')-3 | 2.37 | 0.041 |
| Compound (II')-4 | 2.41 | 0.064 |
| Compound (II')-5 | 2.38 | 0.041 |
| Compound (II')-6 | 2.36 | 0.040 |
| Compound (II')-7 | 2.37 | 0.043 |
| Compound 2 as Comparative Example | 2.26 | 0.036 |
| Compound 5 as Comparative Example | 2.27 | 0.038 |
| Compound 10 as Comparative Example | 2.24 | 0.034 |

Results of light fastness tests on dyes having an amorphous film form are shown below.

(Example 2-3)

Each of dye combinations set forth in Table 2 was prepared into a 1.0 weight % tetrafluoropropanol solution.

Each of the solutions prepared was coated on a glass substrate by means of a spin coater, and dried to form an amorphous film. Light fastness tests on these films were carried out by means of a 100,000 lux of merry-go-round-type xenon fade-o-meter. In the area having a transmission density of 1.0 before the irradiation with the xenon light, a residual dye rate of each film sample was determined from the ratio between the transmission optical density before irradiation and the effective density after irradiation.

The dyes used were found to be excellent in solubility when they were prepared into coating solutions. And when these coating solutions were coated with a spin coater, they were able to form films in uniform surface condition.

Table 2-2

| Test No. | 1st Dye | Content (mass %) | 2nd Dye | Content (mass %) | Light Fastness (%) | Solution Ageing Stability | note |
|---|---|---|---|---|---|---|---|
| 1 | 1 | 90 | (II')-1 | 10 | 85 | B | Invention |
| 2 | 1 | 100 | - | - | 86 | C | Comparison |
| 3 | 2 | 90 | (II')-1 | 10 | 84 | B | Invention |
| 4 | 2 | 100 | - | - | 82 | C | Comparison |
| 5 | 5 | 95 | (II')-1 | 5 | 88 | B | Invention |
| 6 | 5 | 100 | - | - | 88 | C | Comparison |
| 7 | 7 | 80 | (II')-1 | 20 | 87 | B | Invention |
| 8 | 7 | 100 | - | - | 86 | C | Comparison |
| 9 | 12 | 95 | (II')-1 | 5 | 83 | B | Invention |
| 10 | 12 | 50 | (II')-3 | 50 | 84 | B | Invention |
| 11 | 12 | 100 | - | - | 85 | C | Comparison |
| 12 | 2 | 90 | (A) | 10 | 64 | C | Comparison |

«Conditions for Evaluations»

[1] Test of Solution Ageing Stability

A 1.0 mass % 2,2,3,3-tetrafluoropropanol solution of the dye combination as shown in Table 2 was prepared, and allowed to stand for one week at 20˚C. The resulting solution was inspected for precipitation of crystals by visual observation.

The state of precipitation of crystals was rated on a 1-to-3 scale (3 being the best), and the criterion adopted herein is as follows.

B: No precipitation of crystals is observed at all.
C: Precipitation of crystals is slightly observed.
D: Considerable precipitation of crystals is observed.

[2] Light Fastness Test

Each dye combination shown in Table 2 was prepared into a 1.0 mass % 2,2,3,3-tetrafluoropropanol solution, and coated on a glass substrate according to a spin coating method. Thereafter, each coating thus formed was subjected to a forced discoloration test by one-week irradiation with xenon light (100,000 lux) from a merry-go-round-type xenon fade-o-meter. And the ratio between transmission optical densities before and after the forced test was calculated, and therefrom the residual dye rate was determined.

Comparative Dye (A):

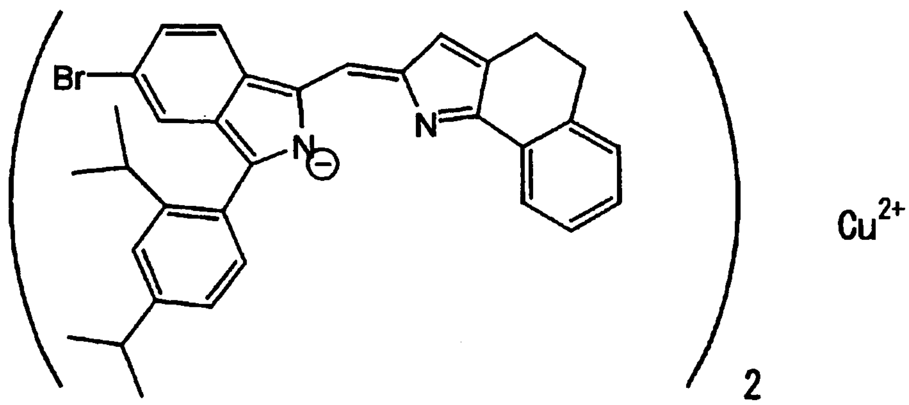

Compound disclosed in JP-A-2002-211136

(Example 2-4)

Optical Recording Test:

«Preparation of Optical Recording Medium»

By extrusion molding, polycarbonate resin was formed into a 0.6 mm-thick, 120 mm-diametral substrate having a spiral groove (depth: 130 nm, width: 310 nm, track pitch: 0.74 μm).

A coating solution was prepared by dissolving 1.25 g of the mixture of Compound 2 and Compound (II ')-1 (90/10) according to the invention, which corresponds to Test No. 3 in Table 2-2 of Example 2-3, into 100 ml of 2,2,3,3-tetrafluoropropanol, and coated on the groove-formed surface of the substrate by use of a spin coating method, thereby forming a dye layer.

Onto the dye-coated surface, silver was sputtered to form a reflective layer having a thickness of about 150 nm. And the reflective layer thus formed was bonded to a 0.6 mm-thick dummy substrate by using as an adhesive a UV-curable resin (Daicureclear SD640, produced by DAINIPPON INK AND CHEMICALS, INCORPORATED), thereby forming a disc.

«Evaluations of Optical Recording Medium»

By use of DDU-1000 and a multisignal generator (made by Pulstec Industrial Co., Ltd.; laser wavelength: 660 nm, aperture rate: 0.60), 8-16 modulating signals were recorded at each of equivalent-speed (11.08 Mbps), octuple-speed (88.64 Mbps) and decuple-speed (110.8 Mbps) transfer rates.

The recording strategies used are shown in Table 2-3. The equivalent-speed recording and the decuple-speed recording were each performed using one kind of recording strategy, while the octuple-speed recording was performed using two kinds of recording strategies greatly different in pulse width.

The recording power was set so as to minimize the amount of jitter in each recording on the medium. Thereafter, the signals recorded were reproduced with laser of the same wavelength as that used for recording, and therein the amount of jitter was measured. The results obtained are shown in Table 2-4.

The disc made in this Example was low in jitter and high in reflectivity at all the equivalent-speed, octuple-speed and decuple-speed transfer rates.

As to the octuple-speed recording characteristics, satisfactory jitter was achieved under both the recording strategies greatly different in pulse width.

Table 2-3: Recording Strategies

| Recording Speed | 1X | 8X | 8X | 10X |
|---|---|---|---|---|
| Recording Strategy | A | B | C | D |
| 3Ttop | 1.55 | 2.55 | 1.85 | 2.75 |
| 4Ttop | 1.50 | 2.92 | 2.12 | 3.20 |
| nTtop | 1.55 | 1.70 | 1.30 | 1.90 |
| Tmp | 0.65 | - | - | - |
| nTwt | - | 0.50 | -0.30 | 0.55 |
| ntlp | - | 1.40 | 0.60 | 1.40 |
| 3-nTld | - | -0.03 | -0.05 | -0.03 |
| 3Tdtop | - | -0.15 | -0.05 | -0.15 |
| 4Tdtop | - | 0.20 | 0.35 | 0.20 |
| nTdtop | - | 0.00 | 0.0 | 0.00 |
| 5Ttop2 | - | -0.15 | -0.05 | -0.20 |
| 5T1p2 | - | -0.10 | -0.15 | -0.20 |
| 5Td1p2 | - | 0.00 | 0.00 | 0.00 |
| Po/Pm | - | 1.48 | 1.58 | 1.36 |

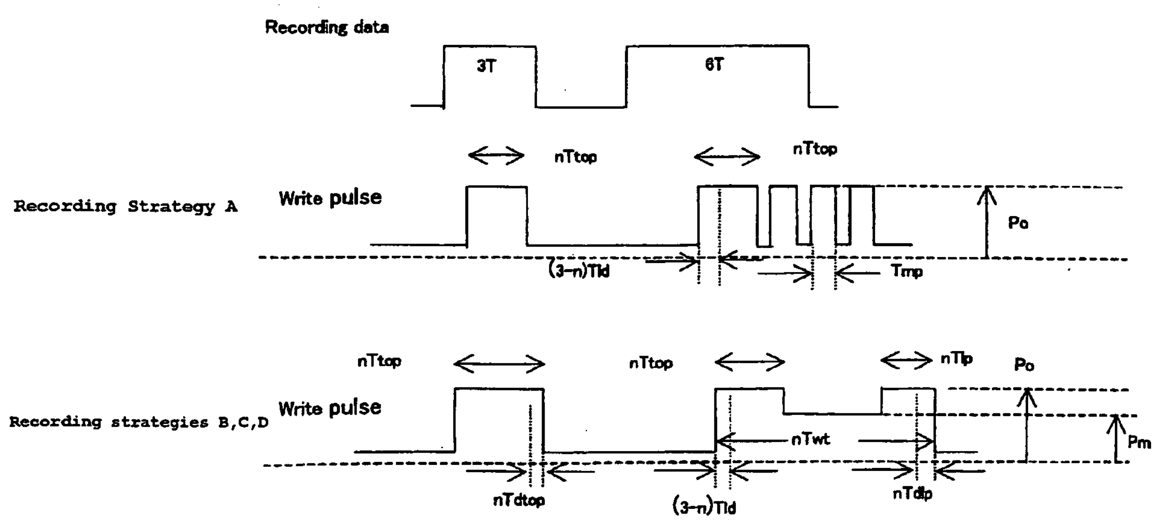


Table 2-4

| | Example | | | |
|---|---|---|---|---|
| Recording speed | 1X | 8X | 8X | 10X |
| Recording strategy | A | B | C | D |
| Optimum recording power (mW) | 11 | 27.5 | 34.3 | 33.5 |
| Reflectivity (%) | 52.2 | 51.8 | 51.2 | 51.4 |
| Jitter (%) | 6.2 | 6.8 | 6.6 | 6.9 |
| 14T modulation factor | 0.54 | 0.71 | 0.77 | 0.76 |

(continued)

| | Example | | | |
|---|---|---|---|---|
| Recording speed | 1X | 8X | 8X | 10X |
| Recording strategy | A | B | C | D |
| PI error | 21 | 18 | 11 | 15 |
| AR (%) | 50 | 32 | 28 | 25 |

(Example 2-5)

DVD-R discs were produced using the dyes or dye combinations corresponding to Test Nos. 1 to 12 listed in Table 2-2 instead of the dye combination used in Test No. 3 of Example 2-3, as shown in Table 2-5. Each of these disc samples was submitted to recording and reproduction tests. As a result, it was found that the discs of Test Nos. 1, 3, 5, 7 and 9, each of which used two dyes in mixed form according to the invention, delivered excellent performances and were in no way inferior to the discs of Test Nos. 2, 4, 6, 8 and 11 using dyes singly. On the other hand, the disc of Test No. 12 using the mixture of two dyes beyond the scope of the invention underwent deterioration in jitter. The jitter data shown in Table 2-5 are values determined under the decuple-speed recording and reproduction.

Table 2-5

| Sample No. | Test No. of Example 2-3 | 1st Dye (Content by mass) | 2nd Dye (Content by mass) | Reflectivity (%) | Jitter | 14T Modulation Degree | note |
|---|---|---|---|---|---|---|---|
| 201’ | 1 | 1 (90) | (II’)-1 (10) | 50.9 | 8.1 | 0.76 | Invention |
| 202’ | 2 | 1 (100) | - | 52.0 | 8.2 | 0.78 | Comparative Example |
| 203’ | 3 | 2 (90) | (II’)-1 (10) | 512 | 69 | 0.76 | Invention (Example 2-3) |
| 204’ | 4 | 2 (100) | - | 52.2 | 8.1 | 0.77 | Comparative Example |
| 205’ | 5 | 5 (95) | (II’)-1 | 52.4 | 7.6 | 0.78 | Invention |
| 206’ | 6 | 5 100 (100) | - | 53.1 | 7.8 | 0.77 | Comparative Example |
| 207’ | 7 | 7 (80) | (II’)-1 (2)0 | 52.1 | 7.9 | 0.76 | Invention |
| 208’ | 8 | 7 (100) | - | 53.9 | 8.4 | 0.75 | Comparative Example |
| 209’ | 9 | 12 (95) | (II’)-1 (5) | 52.8 | 7.6 | 0.76 | Invention |
| 210’ | 10 | 12 | (II’)-12 (50) | 52.9 | 8.9 | 0.72 | Invention |
| 211’ | 11 | 12 (100) | - | 53.0 | 7.8 | 0.79 | Comparative Example |
| 212’ | 12 | 2 (90) | (A)(10) | 48.2 | 10.2 | 0.78 | Comparative Example |

(Example 3-1)

A 1.0 wt% 2,2,3,3-tetrafluoropropanol solution of the dyes shown in the following table was prepared as a coating solution. The coating solution was coated on a glass substrate with a spin coater and dried to prepare a dye amorphous film, and the film was tested for light fastness and solution aging stability. The results obtained are shown in Table 1. The absorption maximum wavelengths of the amorphous films of main dyes are shown in Table 3-2 below.

In the time of preparing coating solutions, it was found that dye mixtures of Test Nos. 1 to 10 of the invention

were excellent in solubility. Further, in spin coating, dye films of uniform flatness could be prepared.

[Evaluation conditions]

[1] Test of solution aging stability

A 1.0 mass% 2,2,3,3-tetrafluoropropanol solution of the dyes was prepared and allowed to stand for one week at 20˚C. The resulting solution was inspected for precipitation of crystals by visual observation.
o: Precipitation of crystals is not observed at all.
Δ: Precipitation of crystals is slightly observed.
×: Considerable precipitation of crystals is observed.

[2] Light fastness test

A 1.0 mass% 2,2,3,3-tetrafluoropropanol solution of dyes was prepared and coated on a glaubstrate with a spin coater. After that, each coating thus formed was subjected to a forced discoloration test by irradiation for two days with xenon light (100,000 lux) from a merry-go-round-type xenon fade-o-meter through a UV cut filter of cutting the transmittance of light of 360 nm to 1/2. And the ratio between transmission optical densities before and after the forced test was calculated, from which the residual rate of dye was determined.

Table 3-1

| Test No. | First Dye | Content (mass%) | Second Dye | Content (mass%) | Solution Aging Stability | Residual Rate of Dye | Remarks |
|---|---|---|---|---|---|---|---|
| 1 | (I)-7 | 95 | C-4 | 5 | o | 90 | Invention |
| 2 | (I)-7 | 95 | C-33 | 5 | o | 91 | Invention |
| 3 | (I)-7 | 97 | C-38 | 3 | o | 90 | Invention |
| 4 | (I)-10 | 93 | C-41 | 7 | o | 91 | Invention |
| 5 | (I)-12 | 98 | C-4 | 2 | o | 91 | Invention |
| 6 | (I)-13 | 93 | C-33 | 7 | o | 90 | Invention |
| 7 | (I)-14 | 95 | C-38 | 5 | o | 91 | Invention |
| 8 | (I)-14 | 95 | C-41 | 5 | o | 92 | Invention |
| 9 | (I)-14 | 95 | C-3 | 5 | o | 90 | Invention |
| 10 | (I)-7 | 95 | C-4/C-33 | 3/2 | o | 90 | Invention |
| 11 | (I)-7 | 100 | - | - | △ | 90 | Comparison |

Table 3-2

| Compound No. | Absorption Maximum (nm) | n | k |
|---|---|---|---|
| (I)-7 | 578 | 2.20 | 0.02 |
| (I)-14 | 577 | 2.15 | 0.02 |
| C-4 | 720 | 1.51 | 1.38 |
| C-33 | 699 | 1.77 | 1.14 |
| C-38 | 706 | 1.85 | 1.20 |
| C-41 | 732 | 1.69 | 1.40 |

[Results]

Every test (110) of using a dye represented by formula (1') in combination with a dye represented by formula (2') showed improvement in solution aging stability as compared with the time of using a dye alone.

(Example 3-2)

Optical recording test

[Manufacture of optical recording medium]

A substrate having a spiral groove (depth: 130 nm, width: 310 nm, track pitch: 0.74 μm), a thickness of 0.6 mm, and a diameter of 120 mm was formed by injection molding with a polycarbonate resin.

A coating solution was prepared by dissolving 1.25 g of dye (I)-7/dye C-4 (95/5) corresponding to Test No. 1 shown in Table 3-1 in Example 3-1 in 100 ml of 2,2,3,3-tetrafluoro- propanol, and the obtained coating solution was coated by spin coating on the surface of the side on which the groove was formed of the above substrate, whereby a dye layer was formed.

After that, silver was sputtered on the dye-coated surface to form a reflective layer having a thickness of about 150 nm, and then the substrate was stuck to a dummy substrate having a thickness of 0.6 mm with a UV-curable resin (DAICURE® CLEAR SD640, manufactured by Dainippon Inks and Chemicals Inc.) as an adhesive to thereby prepare a disc.

[Evaluation of optical recording medium]

By use of DDU 1000 and a multisignal generator (a product of Pulse Tech Products Corporation, laser wavelength: 660 nm, aperture rate: 0.60), 8-16 modulating signals were recorded at each of data transfer rates of an equivalent-speed (11.08 Mbps), an octuple-speed (88.64 M), and a decuple-speed (110.8 Mbps).

The recording strategies used are shown in Table 3-3. The equivalent-speed recording and the decuple-speed recording were each performed with one kind of recording strategy, while the octuple-speed recording was performed with two kinds of recording strategies greatly different in pulse width.

The recording power was set so as to make the amount of jitter least in each recording on the medium. Thereafter, the signals recorded were reproduced with laser of the same wavelength as that used for recording, and therein the amount of jitter was measured. The results obtained are shown in Table 3-4. As compared with the Comparative Example, the Example showed low jitter and high reflectance in every recording of equivalent-speed recording, octuple-speed recording and decuple-speed recording.

As for the octuple-speed recording characteristics, the Example achieved satisfactory jitter under the recording strategies greatly different in pulse width.

Table 3-3 Recording Strategies

| Recording Speed | 1X | 8X | 8X | 10X |
|---|---|---|---|---|
| Recording Strategy | A | B | C | D |
| 3Ttop | 1.55 | 2.55 | 1.85 | 2.75 |
| 4Tto | 1.50 | 2.92 | 2.12 | 3.20 |
| nTtop | 1.55 | 1.70 | 1.30 | 1.90 |
| Tmp | 0.65 | - | - | - |
| nTwt - | - | 0.50 | -0.30 | 0.55 |
| nTlp | - | 1.40 | 0.60 | 1.40 |
| 3-nTld | - | -0.03 | -0.05 | -0.03 |
| 3Tdtop - -0.15 -0.05 -0.15 | - | | | |
| 4Tdtop | - | 0.20 | 0.35 | 0.20 |
| nTdtop | - | 0.00 | 0.00 | 0.00 |
| 5Ttop2 | - | -0.15 | -0.05 | -0.20 |

(continued)

| Recording Speed | 1X | 8X | 8X | 10X |
|---|---|---|---|---|
| Recording Strategy | A | B | C | D |
| 5Tlp2 | - | -0.10 | -0.15 | -0.20 |
| 5Tdlp2 | - | 0.00 | 0.00 | 0.00 |
| Po/Pm | - | 1.48 | 1.58 | 1.36 |

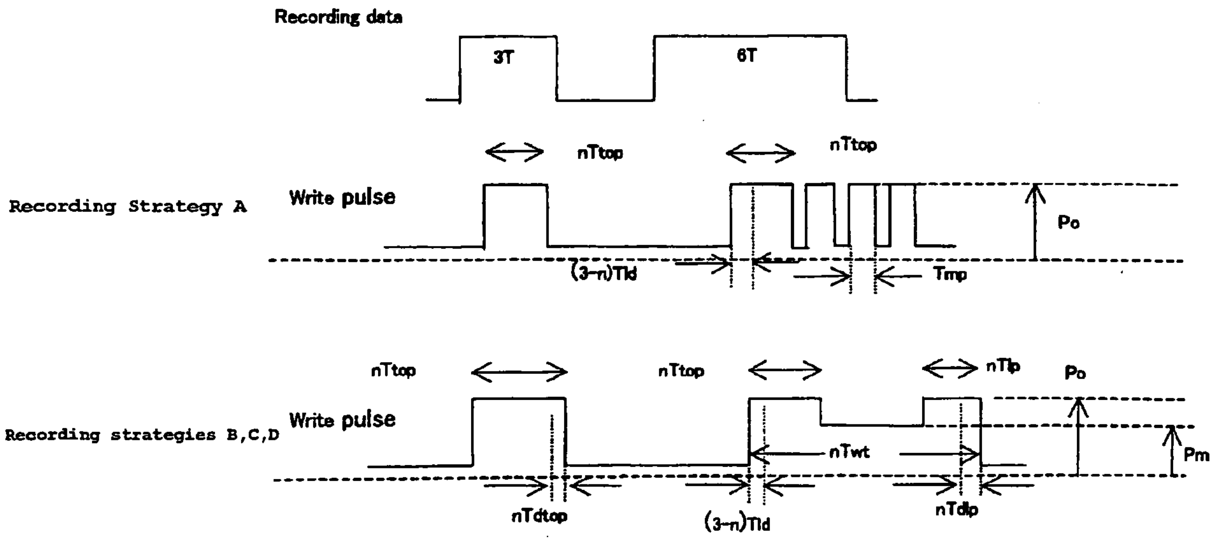


Table 3-4

| | Example | | | |
|---|---|---|---|---|
| Recording speed | 1X | 8X | 8X | 10X |
| Recording strategy | A | B | C | D |
| Optimum recording power (mW) | 10 | 26 | 32 | 32 |
| Reflectance (%) | 48 | 48 | 49 | 48 |
| Jitter (%) | 6.7 | 6.8 | 6.8 | 6.7 |
| 14T modulation factor | 0.50 | 0.72 | 0.79 | 0.78 |
| PI error | 21 | 19 | 11 | 13 |
| AR (%) | 52 | 42 | 28 | 25 |

(Example 3-3)

DVD-R discs were manufactured with the dyes of Test Nos. 1 to 11 of Example 3-1 as shown in Table 3-5 below (before solution aging). Decuple-speed recording and reproduction were performed with each of the prepared samples. As a result, it can be seen that in discs of Test Nos. 1 to 10 (invention) of using two kinds of dyes as mixture, sensitivity is improved as compared with the disc of Test No. 11 of using a dye alone. At this time, the solution aging stability of the dye coating solutions is increased as described above.

(Table 3-5)

| Sample No. | Test No. in Example 3-1 | First Dye (content by mass) | | Second Dye (content by mass) | | Sensitivity (mW) | Remarks |
|---|---|---|---|---|---|---|---|
| 201" | 1 | (I)-7 | 95 | C-4 | 5 | 32 | Invention (Example 3-2) |
| 202" | 2 | (I)-7 | 95 | C-33 | 5 | 33 | Invention |
| 203" | 3 | (I)-7 | 97 | C-38 | 3 | 32 | Invention |
| 204" | 4 | (I)-10 | 93 | C-41 | 7 | 31 | Invention |
| 205" | 5 | (I)-12 | 98 | C-4 | 2 | 32 | Invention |
| 206" | 6 | (I)-13 | 93 | C-33 | 7 | 32 | Invention |
| 207" | 7 | (I)-14 | 95 | C-38 | 5 | 32 | Invention |
| 208" | 8 | (I)-14 | 95 | C-41 | 5 | 31 | Invention |
| 209" | 9 | (I)-14 | 95 | C-3 | 5 | 32 | Invention |
| 210" | 10 | (I)-14 | 95 | C-4/C-33 | 3/2 | 31 | Invention |
| 211" | 11 | (I)-7 | 100 | - | - | 35 | Comparison |

(Example 4-1)

A 1.0 mass% 2,2,3,3-tetrafluoropropanol solution of the dyes shown in the following table was prepared as a coating solution. The coating solution was coated on a glass substrate with a spin coater and dried to prepare a dye amorphous film, and the film was tested for light fastness and solution aging stability.

In the time of preparing coating solutions, it was found that dye mixtures of Test Nos. 1 to 10 of the invention were excellent in solubility. Further, in spin coating, dye films of uniform flatness could be prepared.

[Evaluation condition]

[1] Test of solution aging stability

A 1.0 mass% 2,2,3,3-tetrafluoropropanol solution of the dyes was prepared and allowed to stand for one week at 20˚C. The resulting solution was inspected for precipitation of crystals by visual observation.
o: Precipitation of crystals is not observed at all.
△: Precipitation of crystals is slightly observed.
×: Considerable precipitation of crystals is observed

(Table 4-1)

| Test No. | First Dye | Amount (mass%) | Second Dye | Amount (mass%) | Solution Aging Stability | Remarks |
|---|---|---|---|---|---|---|
| 1 | (I)-7 | 50 | A-1 | 50 | o | Invention |
| 2 | (I)-7 | 50 | A-2 | 50 | o | Invention |
| 3 | (I)-7 | 50 | A-3 | 50 | o | Invention |
| 4 | (I)-10 | 40 | A-4 | 60 | o | Invention |
| 5 | (I)-12 | 70 | A-5 | 30 | o | Invention |
| 6 | (I)-13 | 20 | A-6 | 80 | o | Invention |
| 7 | (I)-14 | 80 | A-7 | 20 | o | Invention |
| 8 | (I)-14 | 95 | A-16 | 5 | o | Invention |

(continued)

| Test No. | First Dye | Amount (mass%) | Second Dye | Amount (mass%) | Solution Aging Stability | Remarks |
|---|---|---|---|---|---|---|
| 9 | (I)-14 | 95 | A-19 | 5 | o | Invention |
| 10 | (I)-7 | 50 | A-10/A-15 | 25/25 | o | Invention |
| 11 | (I)-7 | 100 | - | - | Δ | Comparison |

[Results]

Every test of using an oxonol dye in combination with an azo dye showed improvement in solution aging stability as compared with the time of using a dye alone. (Example 4-2)

Optical recording test

[Manufacture of optical recording medium]

A substrate having a spiral groove (depth: 130 nm, width: 310 nm, track pitch: 0.74 μm), a thickness of 0.6 mm, and a diameter of 120 mm was formed by injection molding with a polycarbonate resin.

A coating solution was prepared by dissolving 1.25 g of dye (I)-7/dye A-1 (50/50) corresponding to Test No. 1 shown in Table 4-1 in Example 4-1 in 100 ml of 2,2,3,3-tetrafluoro- propanol, and the obtained coating solution was coated by spin coating on the surface of the side on which the groove was formed of the above substrate, whereby a dye layer was formed.

After that, silver was sputtered on the dye-coated surface to form a reflective layer having a thickness of about 150 nm, and then the substrate was stuck to a dummy substrate having a thickness of 0.6 mm with a UV-curable resin (DAICURE® CLEAR SD640, manufactured by Dainippon Inks and Chemicals Inc.) as an adhesive to thereby prepare a disc.

[Evaluation of optical recording medium]

By use of DDU1000 and a multisignal generator (a product of Pulse Tech Products Corporation, laser wavelength: 660 nm, aperture rate: 0.60), 8-16 modulating signals were recorded at each of data transfer rates of an equivalent-speed (11.08 Mbps), an octuple-speed (88.64 M), and a decuple-speed (110.8 Mbps).

The recording strategies used are shown in Table 2. The equivalent-speed recording and the decuple-speed recording were each performed with one kind of recording strategy, while the octuple-speed recording was performed with two kinds of recording strategies greatly different in pulse width.

The recording power was set so as to make the amount of jitter least in each recording on the medium. Thereafter, the signals recorded were reproduced with laser of the same wavelength as that used for recording, and therein the amount of jitter was measured. The results obtained are shown in Table 3. The Example showed low jitter and high reflectance in every recording of equivalent-speed recording, octuple-speed recording and decuple-speed recording.

As for the octuple-speed recording characteristics, satisfactory jitter was obtained under the recording strategies greatly different in pulse width.

(Table 4-2) Recording Strategies

| Recording Speed | 1X | 8X | 8X | 10X |
|---|---|---|---|---|
| Recording Strategy | A | B | C | D |
| 3Ttop | 1.55 | 2.55 | 1.85 | 2.75 |
| 4Ttop | 1.50 | 2.92 | 2.12 | 3.20 |
| nTto | 1.55 | 1.70 | 1.30 | 1.90 |
| TmP 0.65 | 0.65 | - | - | - |
| nTwt | - | 0.50 | -0.30 | 0.55 |
| nTlp | - | 1.40 | 0.60 | 1.40 |

(continued)

| Recording Speed | 1X | 8X | 8X | 10X |
|---|---|---|---|---|
| Recording Strategy | A | B | C | D |
| 3-nTld | - | -0.03 | -0.05 | -0.03 |
| 3Tdtop | - | -0.15 | -0.05 | -0.15 |
| 4Tdtop | - | 0.20 | 0.35 | 0.20 |
| nTdtop | - | 0.00 | 0.00 | 0.00 |
| 5Top2 | - | -0.15 | -0.05 | -0.20 |
| 5T1p2 | - | -0.10 | -0.15 | -0.20 |
| 5Tdlp2 | - | 0.00 | 0.00 | 0.00 |
| Po/Pm | - | 1.48 | 1.58 | 1.36 |

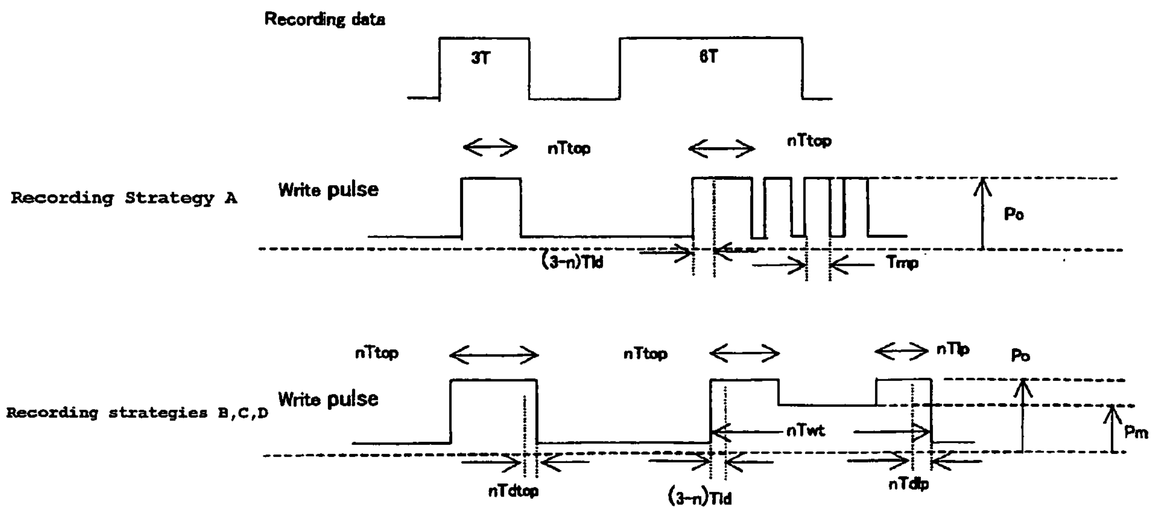


Table 4-3

| | Example | | | |
|---|---|---|---|---|
| Recording speed | 1 X | 8X | 8X | 10X |
| Recording strategy | A | B | C | D |
| Optimum recording power (mW) | 10 | 26 | 32 | 32 |
| Reflectance (%) | 48 | 48 | 49 | 48 |
| Jitter (%) | 6.7 | 6.8 | 6.8 | 6.7 |
| 14T modulation factor | 0.50 | 0.72 | 0.79 | 0.78 |
| PI error | 21 | 19 | 11 | 13 |
| AR (%) | 52 | 42 | 28 | 25 |

(Example 4-3)

DVD-R discs were manufactured with the dyes of Test Nos. 1 to 11 shown in Table 4-1 as shown in Table 4 below including Example 4-1, Test No. 1. Decuple-speed recording and reproduction were performed with each of the prepared samples.

As a result, it can be seen that in discs of Test Nos. 1 to 10 (invention) of using two kinds of dyes as mixture,

sensitivity is improved as compared with the disc of Test No. 11 of using a dye alone. At this time, the solution aging stability of the dye coating solutions is increased as described above.

(Table 4-4)

| Sample No. | Test No. in Example 4-1 | First Dye (content by mass) | | Second Dye (content by mass) | | Sensitivity (mW) | Remarks |
|---|---|---|---|---|---|---|---|
| [201] | 1 | (I)-7 | 50 | A-1 | 50 | 33 | Invention |
| [202] | 2 | (I)-7 | 50 | A-2 | 50 | 33 | Invention |
| [203] | 3 | (I)-7 | 50 | A-3 | 50 | 34 | Invention |
| [204] | 4 | (I)-10 | 40 | A-4 | 60 | 32 | Invention |
| [205] | 5 | (I)-12 | 70 | A-5 | 30 | 33 | Invention |
| [206] | 6 | (I)-13 | 20 | A-6 | 80 | 33 | Invention |
| [207] | 7 | (I)-14 | 80 | A-7 | 20 | 34 | Invention |
| [208] | 8 | (I)-14 | 95 | A-16 | 5 | 31 | Invention |
| [209] | 9 | (I)-14 | 95 | A-17 | 5 | 30 | Invention |
| [210] | 10 | (I)-7 | 50 | A-10/A-15 | 25/25 | 33 | Invention |
| [211] | 11 | (I)-7 | 100 | - | - | 35 | Comparison |

The present patent application is based on Japanese patent application filed on June 23, 2004 (Japanese Patent Application No. 2404-184884), Japanese patent application filed on July 30, 2004 (Japanese Patent Application No. 2004-222939), Japanese patent application filed on October 4, 2004 (Japanese Patent Application No. 2004-291117), Japanese patent application filed on January 28, 2005 (Japanese Patent Application No. 2005-21613), Japanese patent application filed on April 5, 2005 (Japanese Patent Application No. 2005-108861), Japanese patent application filed on April 8, 2005 (Japanese Patent Application No. 2005-112226), Japanese patent application filed on April 26, 2005 (Japanese Patent Application No. 2005-127921), Japanese patent application filed on June 17, 2005 (Japanese Patent Application No. 2005-178075), Japanese patent application filed on June 17, 2005 (Japanese Patent Application No. 2005-178226), and Japanese patent application filed on June 17, 2005 (Japanese Patent Application No. 2005-178074), and the contents of the above patents are introduced into the specification of the present invention as reference.

Industrial Applicability

The invention can provide an optical recording medium that is high sensitivity throughout low speed recording to high speed recording and excellent in recording characteristics.

## Claims

**1.** An optical recording medium comprising: a substrate; and a recording layer on the substrate, the recording layer containing at least two kinds of dye A and dye B, wherein the dye A and the dye B satisfy the following conditions (1) and (2):

(1) the starting temperature of decomposition is from 150 to 250˚C,
(2) refractive index n (A) and extinction coefficient k (A) of the dye A at a wavelength of recording laser ray, and refractive index n (B) and extinction coefficient k (B) of the dye B at the same wavelength satisfy the following expressions:

$$n(B)/n(A) > 0.7$$

$$k(B)/k(A) > 10.$$

2. The optical recording medium as claimed in claim 1, wherein a cationic part of the dye A and a cationic part of the dye B are the same, or an anionic part of the dye A and an anionic part of the dye B are the same.

3. The optical recording medium as claimed in claim 2, wherein the anionic part is the anionic part of an oxonol dye.

4. The optical recording medium as claimed in claim 2 or 3, wherein the cationic part has the following structure:

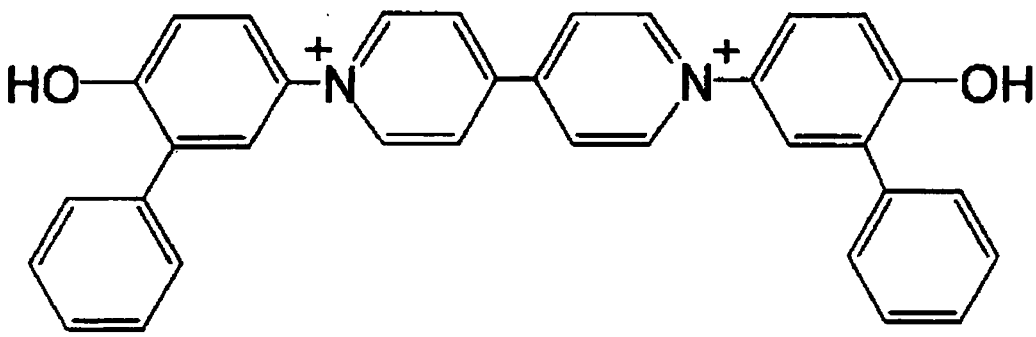

5. The optical recording medium as claimed in any of claims 1 to 4, wherein the mass ratio of dye B to dye A is from 1 to 10%.

6. An optical information-recording medium, comprising two or more compounds selected from compounds having structures represented by formula (I);

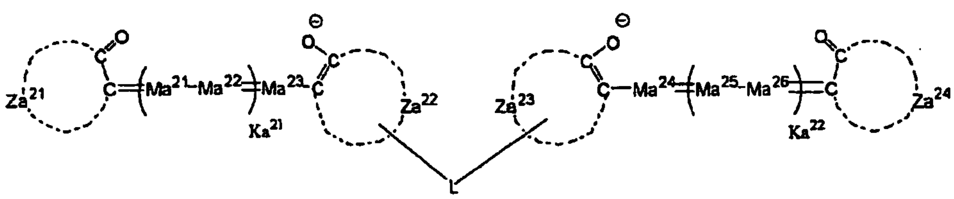

(I)

$\cdot$ 2 Q

wherein $Za^{21}$, $Za^{22}$, $Za^{23}$ and $Za^{24}$ each independently represents atoms forming an acidic nucleus, $Ma^{21}$, $Ma^{22}$, $Ma^{23}$, $Ma^{24}$, $Ma^{25}$ and $Ma^{26}$ each independently represents a substituted or unsubstituted methine group, L represents a divalent linkage group forming no $\pi$-conjugated system in conjunction with its two bonds, $Ka^{21}$ and $Ka^{22}$ each independently represents an integer of 0 to 3, and Q represents a univalent cation for neutralizing an electric charge or 2Q represents a divalent cation, wherein, when $Ka^{21}$ and $Ka^{22}$ are plural number each, more than one $Ma^{21}$, more than one $Ma^{22}$, more than one $Ma^{25}$ and more than one $Ma^{26}$ present are the same or different each.

7. An optical information-recording medium as described in claim 6, wherein the two or more kinds of compounds comprise a compound having a structure represented by formula (IIIa) and a compound having a structure represented by formula (IIIb);

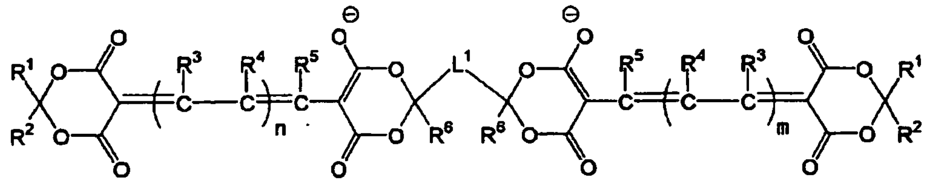

(IIIa)

· 2 Q

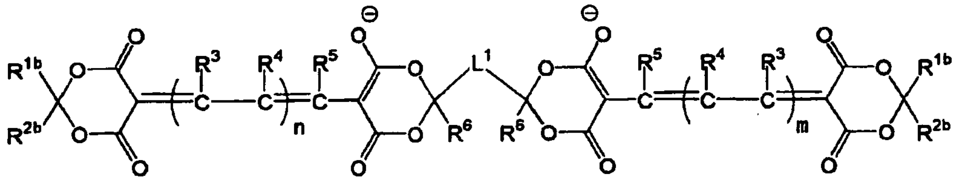

(IIIb)

· 2 Q

in formula (IIIa), $R^1$ and $R^2$ each independently represents a hydrogen atom, an unsubstituted alkyl group or an unsubstituted aryl group, $R^3$, $R^4$ and $R^5$ each independently represents a hydrogen atom or a substituent, each $R^6$ represents a hydrogen atom, a substituted or unsubstituted alkyl group or a substituted or unsubstituted aryl group, two $R^6$s may combine with each other to form a divalent linkage group, $L^1$ represents a divalent linkage group, and n and m each independently represents an integer of 0 to 2 wherein, when n and m are plural number each, more than one $R^3$ and more than one $R^4$ are the same or different each, and Q represents a univalent cation for neutralizing an electric charge or 2Q represents a divalent cation; and in formula (IIIb), $R^3$, $R^4$, $R^5$, $R^6$, n, m, $L^1$ and Q have the same meanings as in formula (IIIa), respectively, $R^{1b}$ represents a hydrogen atom, a substituted or unsubstituted alkyl group or a substituted or unsubstituted aryl group and $R^{2b}$ represents a substituted alkyl group or a substituted aryl group.

**8.** An optical information-recording medium, comprising:

a dye having a structure represented by formula (I) and exhibiting its absorption maximum in a wavelength range of 500 nm to shorter than 600 nm when formed into an amorphous film; and
a dye having a structure represented by formula (II) and exhibiting its absorption maximum in a wavelength range of 600 nm to shorter than 720 nm;

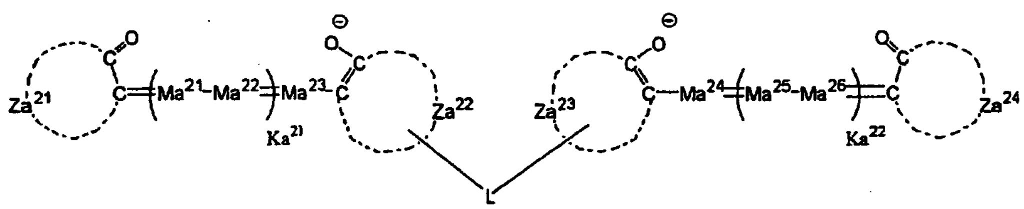

(I)

· 2 Q

wherein $Za^{21}$, $Za^{22}$, $Za^{23}$ and $Za^{24}$ each independently represents atoms forming an acidic nucleus, $Ma^{21}$, $Ma^{22}$, $Ma^{23}$, $Ma^{24}$, $Ma^{25}$ and $Ma^{26}$ each independently represents a substituted or unsubstituted methine group, L represents a divalent linkage group forming no π-conjugated system in conjunction with its two bonds, $Ka^{21}$ and $Ka^{22}$ each independently represents an integer of 0 to 3 and Q represents a univalent cation for neutralizing an electric charge or 2Q represents a divalent cation, wherein, when $Ka^{21}$ and $Ka^{22}$ are plural number each, more than one $Ma^{21}$, more than one $Ma^{22}$, more than one $Ma^{25}$ and more than one $Ma^{26}$ are the same or different each, and

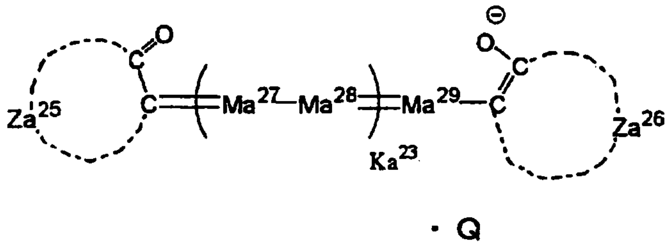

(II)

wherein $Za^{25}$ and $Za^{26}$ each independently represents atoms forming an acidic nucleus, $Ma^{27}$, $Ma^{28}$ and $Ma^{29}$ each independently represents a substituted or unsubstituted methine group, $Ka^{23}$ represents an integer of 0 to 3 and Q represents a univalent cation, wherein, when $Ka^{23}$ is plural number, more than one $Ma^{27}$ and more than one $Ma^{28}$ are the same or different each.

**9.** An optical information-recording medium as described in claim 8,
wherein the dye having a structure represented by formula (I) is a dye having a structure represented by formula (III) and
the dye having a structure represented by formula (II) is a dye having a structure selected from structures represented by formulae (IV), (V), (VI) and (VII), respectively;

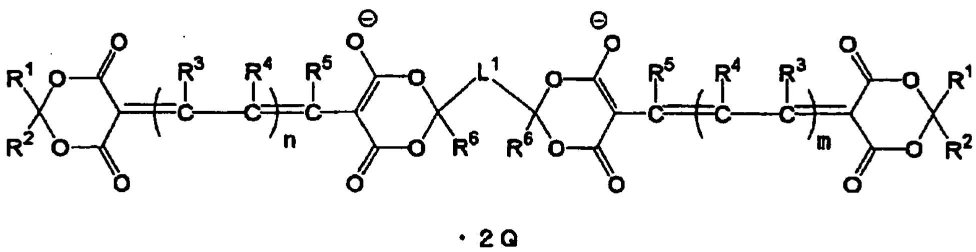

(III)

wherein $R^1$ and $R^2$ each independently represents a hydrogen atom, a substituted or unsubstituted alkyl group or a substituted or unsubstituted aryl group, $R^1$ and $R^2$ may combine with each other to form a ring structure, $R^3$, $R^4$ and $R^5$ each independently represents a hydrogen atom or a substituent, $R^6$ represents a hydrogen atom, a substituted or unsubstituted alkyl group or a substituted or unsubstituted aryl group, two $R^6$s may combine with each other to form a divalent linkage group, $L^1$ represents a divalent linkage group, n and m each independently represents an integer of 0 to 2, wherein, when n and m are plural number each, more than one $R^3$ and more than one $R^4$ are the same or different each, and Q represents a univalent cation for neutralizing an electric charge, and

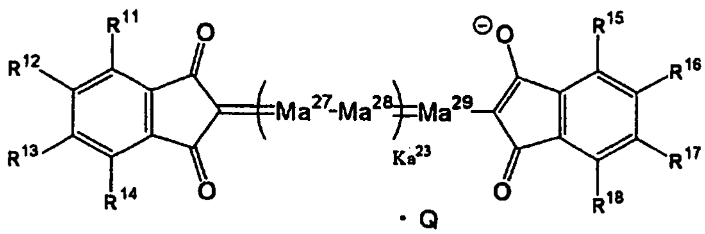

(IV)

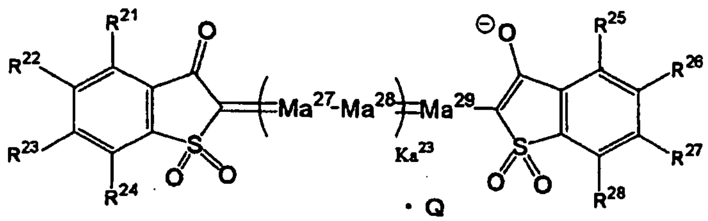

(V)

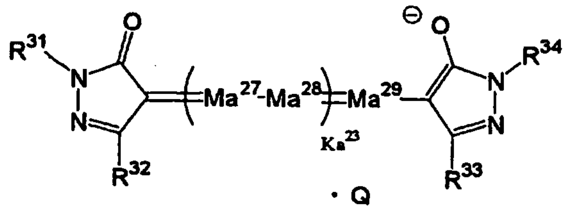

(VI)

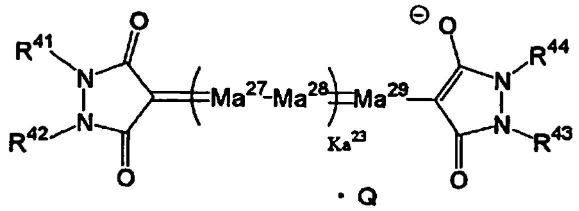

(VII)

wherein $R^{11}$, $R^{12}$, $R^{13}$, $R^{14}$, $R^{15}$, $R^{16}$, $R^{17}$, $R^{18}$, $R^{21}$, $R^{22}$, $R^{23}$, $R^{24}$, $R^{25}$, $R^{26}$, $R^{27}$, $R^{28}$, $R^{31}$, $R^{32}$, $R^{33}$, $R^{34}$, $R^{41}$, $R^{42}$, $R^{43}$ and $R^{44}$ each independently represents a hydrogen atom or a substituent, $Ma^{27}$, $Ma^{28}$ and $Ma^{29}$ each independently represents a substituted or unsubstituted methine group, $Ka^{23}$ represents an integer of 0 to 3, wherein, when $Ka^{23}$ is plural number, more than one $Ma^{27}$ and more than one $Ma^{28}$ are the same or different each, and Q represents a univalent cation for neutralizing an electric charge.

**10.** A compound having a structure represented by the following formula (VIII);

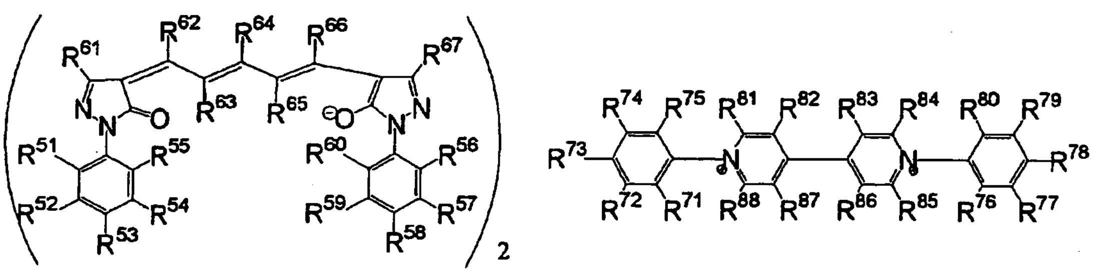

(VIII)

wherein $R^{51}$, $R^{52}$, $R^{53}$, $R^{54}$, $R^{55}$, $R^{56}$, $R^{57}$, $R^{58}$, $R^{59}$ and $R^{60}$ each independently represents a hydrogen atom or a substituent, $R^{61}$ and $R^{67}$ each independently represents a hydrogen atom, a substituted or unsubstituted alkyl group, a substituted or unsubstituted aryl group, a cyano group, a substituted or unsubstituted carbamoyl group, a substituted or unsubstituted alkoxy group, a substituted or unsubstituted alkoxycarbonyl group, a substituted or unsubstituted aryloxycarbonyl group or a substituted or unsubstituted acylamino group, $R^{62}$, $R^{63}$, $R^{64}$, $R^{65}$ and $R^{66}$ each independently represents a hydrogen atom, a substituted or unsubstituted alkyl group, a substituted or unsubstituted aryl group, a substituted or unsubstituted acylamino group or a substituted or unsubstituted heterocyclic group, and $R^{71}$, $R^{72}$ , $R^{73}$ , $R^{74}$, $R^{75}$, $R^{76}$, $R^{77}$, $R^{78}$ , $R^{79}$, $R^{80}$ , $R^{81}$ , $R^{82}$, $R^{83}$, $R^{84}$, $R^{85}$, $R^{86}$, $R^{17}$ and $R^{88}$ each independently represents a hydrogen atom or a substituent.

**11.** An optical information-recording medium comprising: at least two kinds of compounds having structures represented by formula (I) and exhibiting their absorption maxima in a wavelength range of 500 nm to shorter than 600 nm when formed into an amorphous film; and an oxonol dye exhibiting its absorption maximum in a wavelength range of 600 nm to shorter than 720 nm when formed into an amorphous film;

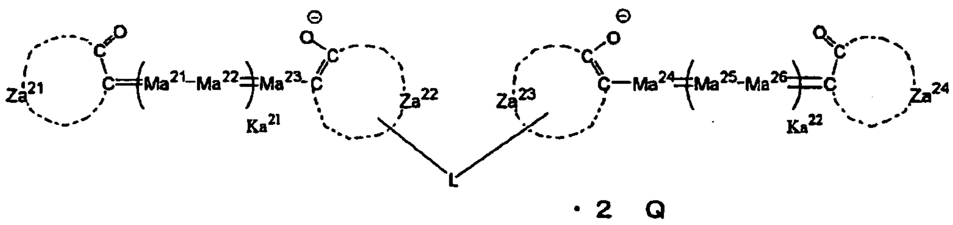

(I)

wherein $Za^{21}$, $Za^{22}$, $Za^{23}$ and $Za^{24}$ each independently represents atoms forming an acidic nucleus, $Ma^{21}$, $Ma^{22}$, $Ma^{23}$, $Ma^{24}$, $Ma^{25}$ and $Ma^{26}$ each independently represents a substituted or unsubstituted methine group, L represents a divalent linkage group forming no $\pi$-conjugated system in conjunction with its two bonds, $Ka^{21}$ and $Ka^{22}$ each independently represents an integer of 0 to 3 and Q represents a univalent cation for neutralizing an electric charge or 2Q represents a divalent cation, wherein, when $Ka^{21}$ and $Ka^{22}$ are plural number each, more than one $Ma^{21}$, more than one $Ma^{22}$, more than one $Ma^{25}$ and more than one $Ma^{26}$ are the same or different each.

**12.** An optical information-recording medium as described in claim 11, wherein the oxonol dye exhibiting its absorption maximum in a wavelength range of 600 nm to shorter than 720 nm when formed into an amorphous film is a dye having a structure represented by formula (II);

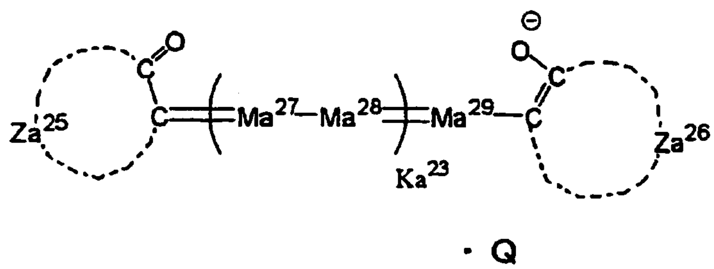

(II)

wherein $Za^{25}$ and $Za^{26}$ each independently represents atoms forming an acidic nucleus, $Ma^{27}$, $Ma^{28}$ and $Ma^{29}$ each independently represents a substituted or unsubstituted methine group, $Ka^{23}$ represents an integer of 0 to 3 and Q represents a univalent cation, wherein, when $Ka^{23}$ is plural number, more than one $Ma^{27}$ and more than one $Ma^{28}$ are the same or different each.

**13.** An optical information-recording medium as described in claim 12, wherein one of the two or more dyes having structures represented by formula (I) is a dye having a structure represented by formula (IIIa), another of the two or more dyes having structures represented by formula (I) is a dye having a structure represented by formula (IIIb) and the dye having a structure represented by formula (II) is a dye having a structure represented by formula (IV), (V), (VI) or (VII);

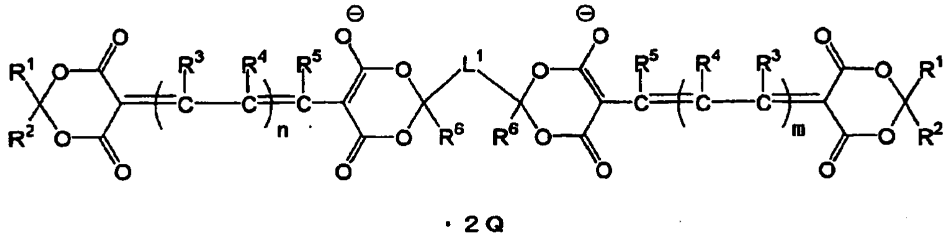

(IIIa)

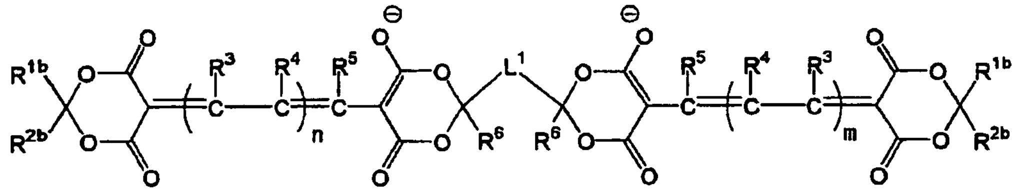

(IIIb)

· 2 Q

in formula (IIIa), $R^1$ and $R^2$ each independently represents a hydrogen atom, an unsubstituted alkyl group or an unsubstituted aryl group, $R^3$, $R^4$ and $R^5$ each independently represents a hydrogen atom or a substituent, $R^6$s each independently represents a hydrogen atom, a substituted or unsubstituted alkyl group or a substituted or unsubstituted aryl group, two $R^6$s may combine with each other to form a divalent linkage group, $L^1$ represents a divalent linkage group, and n and m each independently represents an integer of 0 to 2, wherein, when n and m are plural number each, more than one $R^3$ and more than one $R^4$ are the same or different each, and Q represents a univalent cation for neutralizing an electric charge or 2Q represents a divalent cation;

in formula (IIIb), $R^3$, $R^4$, $R^5$, $R^6$, n, m, $L^1$ and Q have the same meanings as in formula (IIIa), respectively, $R^{1b}$ represents a hydrogen atom, a substituted or unsubstituted alkyl group or a substituted or unsubstituted aryl group and $R^{2b}$ represents a substituted alkyl group or a substituted aryl group, and

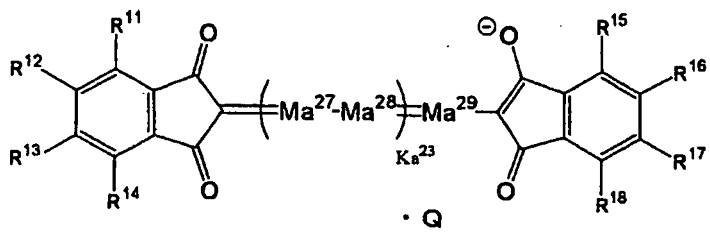

(IV)

· Q

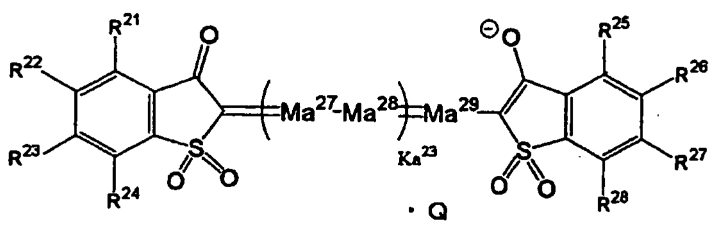

(V)

· Q

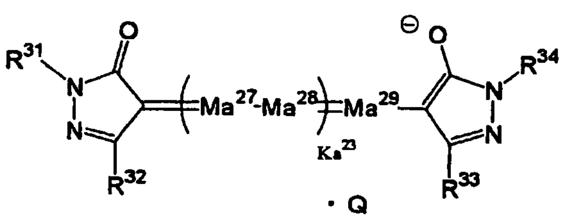

(VI)

· Q

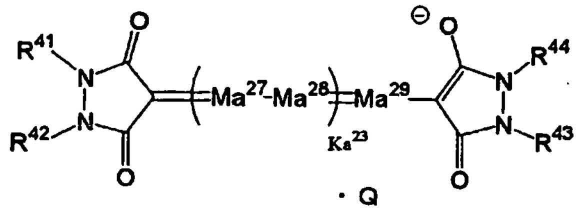

(VII)

· Q

wherein $R^{11}$, $R^{12}$, $R^{13}$, $R^{14}$, $R^{15}$, $R^{16}$, $R^{17}$, $R^{18}$, $R^{21}$, $R^{22}$, $R^{23}$, $R^{24}$, $R^{25}$, $R^{26}$, $R^{27}$, $R^{28}$, $R^{31}$, $R^{32}$, $R^{33}$, $R^{34}$, $R^{41}$, $R^{42}$, $R^{43}$ and $R^{44}$ each independently represents a hydrogen atom or a substituent, $Ma^{27}$, $Ma^{28}$ and $Ma^{29}$ each independently represents a substituted or unsubstituted methine group, $Ka^{23}$ represents an integer of 0 to 3, wherein, when $Ka^{23}$ is plural number, more than one $Ma^{27}$ and more than one $Ma^{28}$ are the same or different each, and Q represents a univalent cation for neutralizing an electric charge.

**14.** An optical information-recording medium, comprising a compound having a structure represented by formula (II');

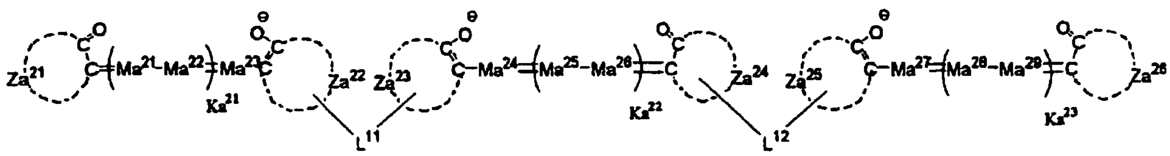

· 3 Q (II')

wherein $Za^{21}$, $Za^{22}$, $Za^{23}$, $Za^{24}$, $Za^{25}$ and $Za^{26}$ each independently represents atoms forming an acidic nucleus, $Ma^{21}$, $Ma^{22}$, $Ma^{23}$, $Ma^{24}$, $Ma^{25}$, $Ma^{26}$, $Ma^{27}$, $Ma^{28}$ and $Ma^{29}$ each independently represents a substituted or unsubstituted methine group, $L^{11}$ and $L^{12}$ each independently represents a divalent linkage group forming no $\pi$-conjugated system in conjunction with its two bonds, $Ka^{21}$, $Ka^{22}$ and $Ka^{23}$ each independently represents an integer of 0 to 3, and Q represents a univalent cation for neutralizing an electric charge, wherein, when $Ka^{21}$, $Ka^{22}$ and $Ka^{23}$ are plural number each, more than one $Ma^{21}$, more than one $Ma^{22}$, more than one $Ma^{25}$, more than one $Ma^{26}$, more than one $Ma^{28}$ and more than one $Ma^{29}$ are the same or different each.

**15.** An optical information-recording medium, comprising:

a compound having a structure represented by formula (I'); and
a compound having a structure represented by formula (II'):

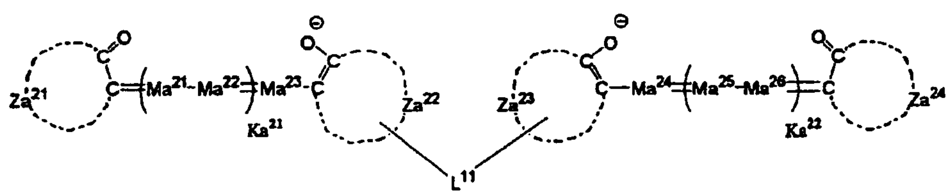

(I')

· 2 Q

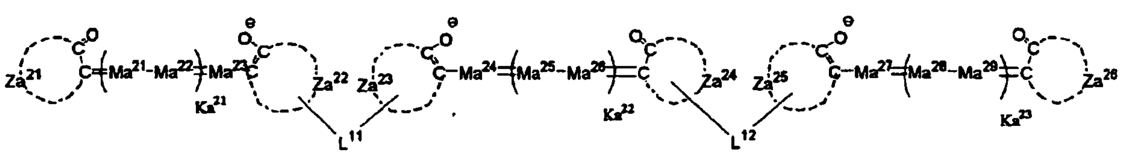

· 3 Q (II')

wherein $Za^{21}$, $Za^{22}$, $Za^{23}$, $Za^{24}$, $Za^{25}$ and $Za^{26}$ each independently represents atoms forming an acidic nucleus, $Ma^{21}$, $Ma^{22}$, $Ma^{23}$, $Ma^{24}$, $Ma^{25}$, $Ma^{26}$, $Ma^{27}$, $Ma^{28}$ and $Ma^{29}$ each independently represents a substituted or unsubstituted methine group, $L^{11}$ and $L^{12}$ each independently represents a divalent linkage group forming no $\pi$-conjugated system in conjunction with its two bonds, $Ka^{21}$, $Ka^{22}$ and $Ka^{23}$ each independently represents an integer of 0 to 3, and Q represents a univalent cation for neutralizing an electric charge, wherein, when $Ka^{21}$, $Ka^{22}$ and $Ka^{23}$ are plural number each, more than one $Ma^{21}$, more than one $Ma^{22}$, more than one $Ma^{25}$, more than one $Ma^{26}$, more than one $Ma^{28}$ and more than one $Ma^{29}$ are the same or different each.

**16.** An optical information-recording medium as described in claim 15, wherein the compound having a structure represented by formula (I') constitutes 80 to 99 mass % of all dyes used in the medium and the compound having a structure represented by formula (II') constitutes 1 to 20 mass % of all dyes used in the medium.

**17.** An optical information-recording medium as described in any of claims 14 to 16, wherein the acidic nucleus comprising each of $Za^{21}$, $Za^{22}$, $Za^{23}$, $Za^{24}$, $Za^{25}$ and $Za^{26}$ in formulae (I') and (II') is 1,3-dioxane-4,6-dione.

**18.** An optical information recording medium comprising a recording layer including a dye, wherein the dye in the recording layer is a mixture of an oxonol dye and a cyanine dye.

**19.** The optical information recording medium as claimed in claim 18, wherein the oxonol dye has a structure represented by the following formula (1'), and the cyanine dye has a structure represented by the following formula (2'):

Formula (1')

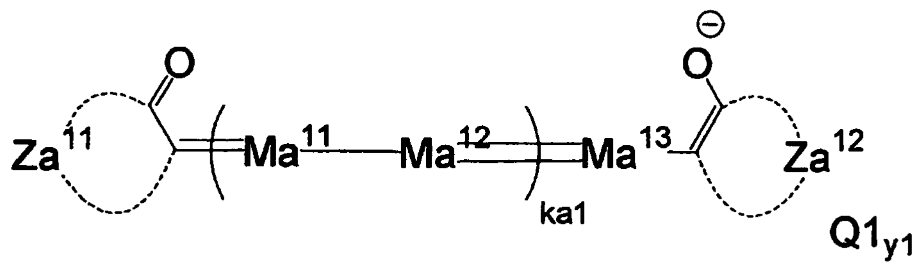

Formula (2')

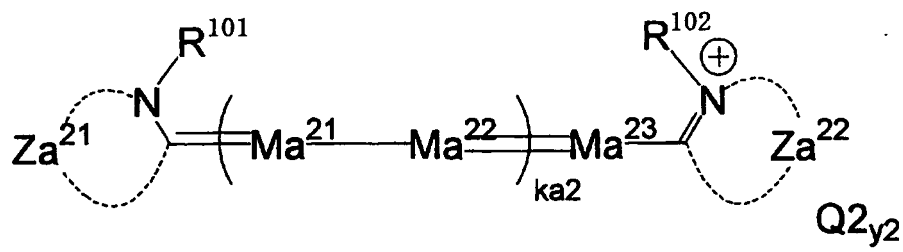

in formula (1'), $Za^{11}$ and $Za^{12}$ each represents an atomic group for forming an acidic nucleus; $Ma^{11}$, $Ma^{12}$ and $Ma^{13}$ each represents a substituted or unsubstituted methine group; ka1 represents an integer of from 0 to 3, and when ka1 represents 2 or more, more than one $Ma^{11}$ and more than one $Ma^{12}$ may be the same or different each; Q1 represents an ion for neutralizing electric charge; and y1 represents a number necessary for the neutralization of electric charge;
in formula (2'), $Za^{21}$ and $Za^{22}$ each represents an atomic group for forming a heterocyclic ring; $Ma^{21}$, $Ma^{22}$ and $Ma^{23}$ each represents a substituted or unsubstituted methine group; ka2 represents an integer of from 0 to 3, and when ka2 represents 2 or more, more than one $Ma^{21}$ and more than one $Ma^{22}$ may be the same or different each; $R^{101}$ and $R^{102}$ each represents a substituent; Q2 represents an ion for neutralizing electric charge; and y2 represents a number necessary for the neutralization of electric charge.

**20.** The optical information recording medium as claimed in claim 19, wherein the ion represented by Q1 has a structure represented by the following formula (3'):

Formula (3')

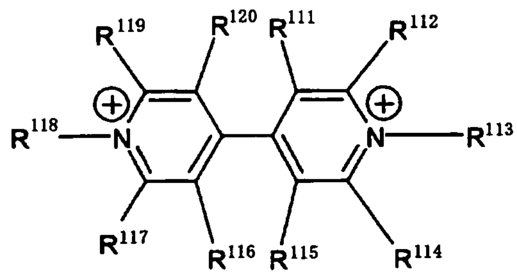

wherein $R^{111}$, $R^{112}$, $R^{114}$, $R^{115}$, $R^{116}$, $R^{117}$, $R^{119}$ and $R^{120}$ each represents a hydrogen atom or a substituent; and $R^{113}$ and $R^{118}$ each represents a substituent.

**21.** The optical information recording medium as claimed in any of claims 18 to 20, wherein the cyanine dye has a structure represented by the following formula (4'):

Formula (4')

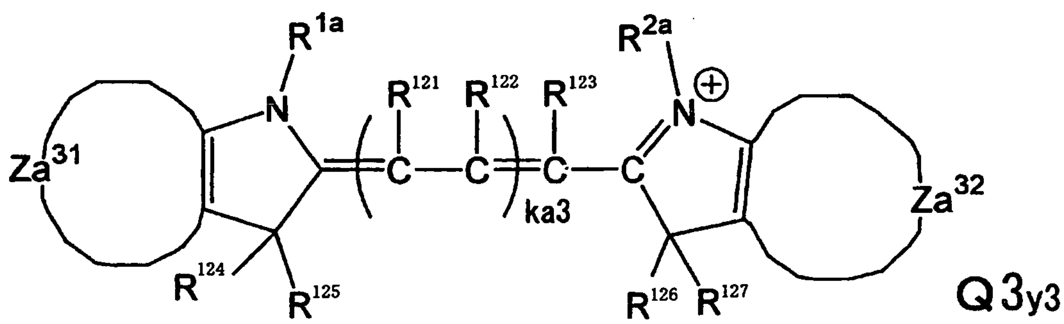

wherein $Za^{31}$ and $Za^{32}$ each represents an atomic group for forming a carbon ring or a heterocyclic ring; $R^{1a}$ and $R^{2a}$ each represents a substituent; $R^{121}$, $R^{122}$, $R^{123}$, $R^{124}$, $R^{125}$, $R^{126}$ and $R^{127}$ each represents a hydrogen atom or a substituent; ka3 represents an integer of from 0 to 3, and when ka3 represents 2 or more, more than one $R^{121}$ and more than one $R^{122}$ may be the same or different each; Q3 represents an ion for neutralizing electric charge; and y3 represents a number necessary for the neutralization of electric charge.

**22.** The optical information recording medium as claimed in any of claims 18 to 21, wherein the oxonol dye exhibits absorption maximum in a wavelength range of from 500 nm to shorter than 600 nm when formed into an amorphous film, and the cyanine dye exhibits absorption maximum in a wavelength range of from 600 nm to shorter than 750 nm when formed.into an amorphous film.

**23.** The optical information-recording medium as claimed in any of claims 18 to 22, which is (i) a heat-mode type medium having a thickness of 1.2±0.2 mm formed by bonding two laminates each of which comprises a transparent disc-like substrate having a pre-groove of from 0.6 to 0.9 μm track pitch formed thereon and having a diameter of 120±3 mm or 80±3 mm and a thickness of 0.6±0.1 mm and a recording layer containing a dye formed on the surface of the substrate on which the pre-groove is formed in a manner that the two laminates are bonded with the recording layers inside, or (ii) a heat-mode type medium having a thickness of 1.2±0.2 mm formed by bonding: a laminate which comprises a transparent disc-like substrate having a pre-groove of from 0.6 to 0.9 μm track pitch formed thereon and having a diameter of 120±3 mm or 80±3 mm and a thickness of 0.6±0.1 mm and a recording layer containing a dye formed on the surface of the substrate on which the pre-groove is formed; and a disc-like protective layer in a manner that the recording layer is inside.

**24.** An optical information-recording medium comprising a recording layer including a dye, wherein the dye in the recording layer is a mixture of an oxonol dye and an azo dye.

**25.** The optical information-recording medium as claimed in claim 24, wherein the oxonol dye has a structure represented by the following formula (1'), and the azo dye is an azo metal chelate dye comprising an azo dye and a metal ion:

Formula (1')

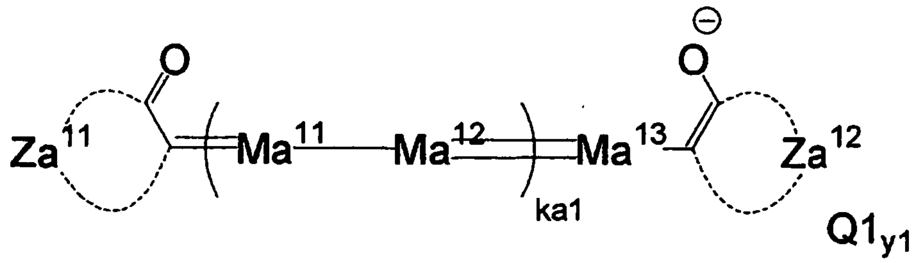

wherein $Za^{11}$ and $Za^{12}$ each represents an atomic group for forming an acidic nucleus; $Ma^{11}$, $Ma^{12}$ and $Ma^{13}$ each represents a substituted or unsubstituted methine group; ka1 represents an integer of from 0 to 3, and when ka1 represents 2 or more, more than one $Ma^{11}$ and more than one $Ma^{12}$ may be the same or different each; Q1 represents an ion for neutralizing electric charge; and y1 represents a number necessary for the neutralization of electric charge.

**26.** The optical information-recording medium as claimed in claim 25, wherein the ion represented by Q has a structure represented by the following formula (3'):

Formula (3')

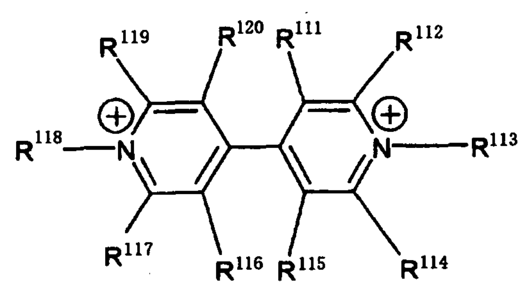

wherein $R^{111}$, $R^{112}$, $R^{114}$, $R^{115}$, $R^{116}$, $R^{117}$, $R^{119}$ and $R^{120}$ each represents a hydrogen atom or a substituent; and $R^{113}$ and $R^{118}$ each represents a substituent.

**27.** The optical information-recording medium as claimed in any of claims 24 to 26, wherein the azo dye is a dye having a structure represented by the following formula (2"), or an azo metal chelate dye comprising a dye having a structure represented by formula (2") and a metal ion: Formula (2")

A-N=N-B

wherein A represents a univalent group derived from a coupler component, and B represents a univalent group derived from a diazonium salt.

**28.** The optical information-recording medium as claimed in claim 27, wherein the azo dye is an azo metal chelate dye comprising a dye having a structure represented by the following formula (4") and a metal ion:

Formula (4")

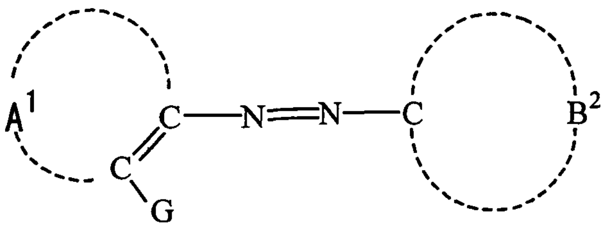

wherein $A^1$ and $B^2$ each represents an atomic group for forming a substituted or unsubstituted aromatic hydrocarbon ring or a substituted or unsubstituted aromatic heterocyclic ring; and G represents a univalent group capable of coordination on the metal ion.

**29.** The optical information-recording medium as claimed in any of claims 24 to 28, wherein the oxonol dye exhibits absorption maximum in a wavelength range of from 500 nm to shorter than 600 nm as an amorphous film, and the azo dye exhibits absorption maximum in a wavelength range of from 600 nm to shorter than 750 nm as an amorphous film.

**30.** The optical information-recording medium as claimed in claim 24 which is a heat-mode type medium having a thickness of 1.2±0.2 mm formed by bonding two laminates each of which comprises a transparent disc-like substrate having a pre-groove of from 0.6 to 0.9 μm track pitch formed thereon and having a diameter of 120±3 mm or 80±3 mm and a thickness of 0.6±0.1 mm and a recording layer containing a dye formed on the surface of the substrate on which the pre-groove is formed in a manner that the two laminates are bonded with the recording layers inside, or the optical information-recording medium as claimed in any of claims 24 to 29 which is a heat-mode type medium having a thickness of 1.2±0.2 mm formed by bonding: a laminate which comprises a transparent disc-like substrate having a pre-groove of from 0.6 to 0.9 μm track pitch formed thereon and having a diameter of 120±3 mm or 80±3 mm and a thickness of 0.6±0.1 mm and a recording layer containing a dye formed on the surface of the substrate on which the pre-groove is formed; and a disc-like protective layer in a manner that the recording layer is inside.

Fig. 1

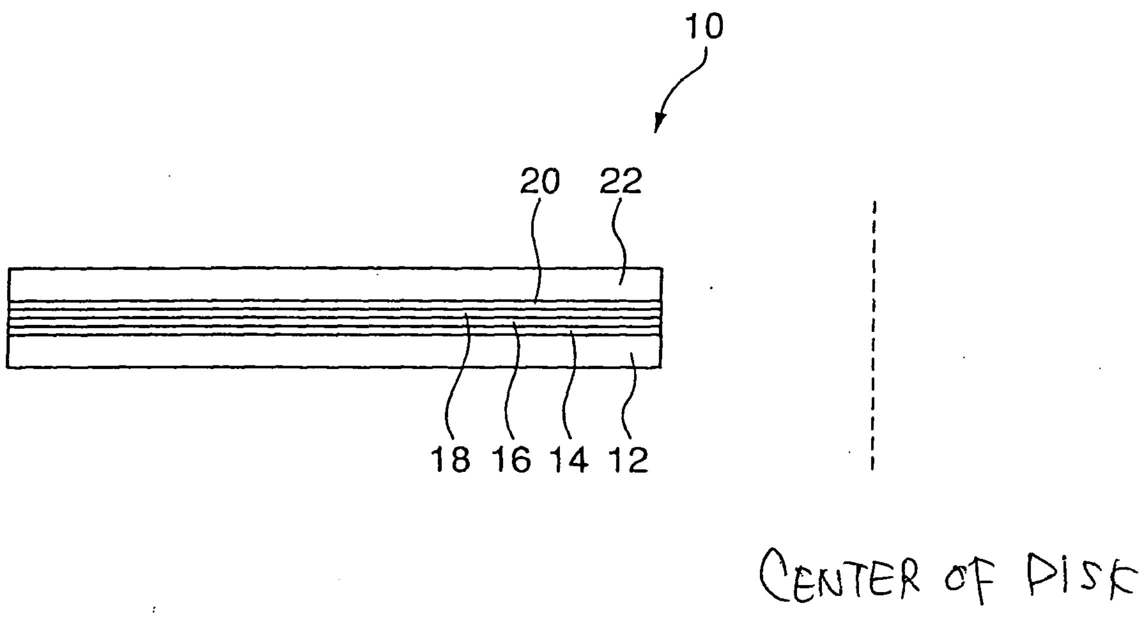

## INTERNATIONAL SEARCH REPORT

International application No.
PCT/JP2005/011866

A. CLASSIFICATION OF SUBJECT MATTER
Int.Cl[7] B41M5/26, C09B67/22, 69/04, G11B7/24//C09B23/00

According to International Patent Classification (IPC) or to both national classification and IPC

B. FIELDS SEARCHED

Minimum documentation searched (classification system followed by classification symbols)
Int.Cl[7] B41M5/26, C09B67/22, 69/04, G11B7/24//C09B23/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)
CAplus(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| Y | JP 2002-59652 A (Fuji Photo Film Co., Ltd.), 26 February, 2002 (26.02.02), Full text & EP 1180766 B1 & US 2002041948 A1 | 1-5 |
| Y | JP 2002-211130 A (Fuji Photo Film Co., Ltd.), 31 July, 2002 (31.07.02), Full text (Family: none) | 1-5 |
| Y<br>A | JP 2002-240433 A (Fuji Photo Film Co., Ltd.), 28 August, 2002 (28.08.02), Full text & EP 1239467 A1 & US 2003064205 A1 | 1-5<br>8,9,11-13 |

☒ Further documents are listed in the continuation of Box C.　☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 20 September, 2005 (20.09.05) | 11 October, 2005 (11.10.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

INTERNATIONAL SEARCH REPORT

International application No.
PCT/JP2005/011866

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2002-249674 A (Fuji Photo Film Co., Ltd.), 06 September, 2002 (06.09.02), Full text & EP 1477484 A1 | 1-5 |
| Y | JP 2003-25726 A (Fuji Photo Film Co., Ltd.), 29 January, 2003 (29.01.03), Full text (Family: none) | 1-5 |
| X | EP 1424691 A2 (FUJI PHOTO Film Co., Ltd.), 02 June, 2004 (02.06.04), Full text & JP 2004-188968 A | 6,7,14-17 |
| X<br>A | JP 10-297103 A (Fuji Photo Film Co., Ltd.), 10 November, 1998 (10.11.98), Claims; Par. Nos. [0077] to [0082], [0110], [0111], [0114] to [0116], [0120], [0121], [0199] & EP 833314 A2 & US 2003078421 A1 | 10<br>8,9,11-13 |
| X<br>A | JP 11-58973 A (Fuji Photo Film Co., Ltd.), 02 March, 1999 (02.03.99), Full text (Family: none) | 18-23<br>8,9,11-13 |
| X<br>Y | JP 2000-52658 A (Fuji Photo Film Co., Ltd.), 22 February, 2000 (22.02.00), Full text & EP 962923 A1 & US 2002009669 A1 | 24<br>25-30 |
| Y | JP 11-28865 A (TDK Corp.), 02 February, 1999 (02.02.99), Full text (Family: none) | 25-30 |

Form PCT/ISA/210 (continuation of second sheet) (January 2004)

INTERNATIONAL SEARCH REPORT

International application No.
PCT/JP2005/011866

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:
See extra sheet

1. ☒ As all required additional search fees were timely paid by the applicant, this international search report covers all searchable claims.
2. ☐ As all searchable claims could be searched without effort justifying an additional fee, this Authority did not invite payment of any additional fee.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest.
☒ No protest accompanied the payment of additional search fees.

Form PCT/ISA/210 (continuation of first sheet (2)) (January 2004)

INTERNATIONAL SEARCH REPORT

International application No. PCT/JP2005/011866

Continuation of Box No.III of continuation of first sheet(2)

1. Claim 1 is an invention relating to an optical recording medium which has a substrate and, formed thereon, a recording layer containing at least two types of dye, that is, a dye A and a dye B, wherein the above dye A and the above dye B satisfy the following requirements (1) and (2) (the requirements (1) and (2) are omitted).

Claims 2 to 5 are inventions of claims described basically by referring to claim 1.

2. Claim 6 is an invention relating to an optical recording medium which comprises two or more selected from the compounds having a structure represented by the general formula (I) (the general formula (I) is omitted).

Claim 7 is an invention of a claim described basically by referring to claim 6.

3. Claim 8 is an invention relating to an optical recording medium which comprises a dye having a structure represented by the following general formula (I) and having a maximum absorption wavelength in an amorphous film of 500 nm or more and less than 600 nm, and a dye having a structure represented by the following general formula (II) and having a maximum absorption wavelength in an amorphous film of 600 nm or more and less than 720 nm (the general formulae (I) and (II) are omitted).

Claim 9 is an invention of a claim described basically by referring to claim 8.

4. Claim 10 is an invention relating to a compound having a structure represented by the following general formula (VIII) (the general formula (VIII) is omitted).

5. Claim 11 is an invention relating to an optical recording medium which comprises at least two compounds having a structure represented by the following general formula (I) and having a maximum absorption wavelength in an amorphous film of 500 nm or more and less than 600 nm, and an oxonol dye having a maximum absorption wavelength in an amorphous film of 600 nm or more and less than 720 nm (the general formula (I) is omitted).

Claims 12 and 13 are inventions of claims described basically by referring to claim 11.

6. Claim 14 is an invention relating to an optical recording medium which comprises a compound having a structure represented by the general formula (II') (the general formula (II') is omitted).

7. Claim 15 is an invention relating to an optical recording medium which comprises a compound having a structure represented by the general formula (I') and a compound having a structure represented by the general formula (II') (the general formulae (I') and (II') are omitted).

Claims 16 and 17 are inventions of claims described basically by referring to claim 15.

8. Claim 18 is an invention relating to an optical recording medium wherein

the dye in a recording layer is a mixture of an oxonol dye and a cyanine dye.

Claims 19 to 23 are inventions of claims described basically by referring to claim 18.

9. Claim 24 is an invention relating to an optical recording medium wherein

the dye in a recording layer is a mixture of an oxonol dye and an azo dye.

Claims 25 to 30 are inventions of claims described basically by referring to claim 24.

(continued to next page)

Form PCT/ISA/210 (extra sheet) (January 2004)

INTERNATIONAL SEARCH REPORT

International application No.
PCT/JP2005/011866

Each invention of the above Nos. 1 to 9 has no special technical matter in the meaning of PCT Rule 13.2, and therefore, the above inventions (groups of inventions) are not a group of inventions being so linked as to form a single general inventive concept.

Accordingly, the above inventions (groups of inventions) have no relationship which complies with the unity of invention.

Form PCT/ISA/210 (extra sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 63209995 A
- JP 2000052658 A
- JP 2002249674 A
- JP 2002059652 A
- JP 2004188968 A
- JP 2004082406 A
- JP 2004118898 A
- JP 2003276342 A
- JP 2003034078 A
- JP 3268994 A
- JP 7161069 A
- JP 7251567 A
- JP 10204070 A
- JP 11012483 A
- JP 11166125 A
- JP 2001199169 A
- JP 2001152040 A
- JP 2002114922 A
- JP 4015263 A
- JP 3922069 B
- JP 433504 B
- JP 52038056 B
- JP 54038129 B
- JP 55010059 B
- JP 58035544 B
- JP 49099620 A
- JP 52092716 A
- JP 59016834 A
- JP 63316853 A
- JP 6440827 B
- GB 1133986 A
- US 3247127 A
- US 4042397 A
- US 4181225 A
- US 5213956 A
- US 5260179 A
- JP 10309871 A
- EP 1424691 A2
- JP 6440827 A
- JP 361088 A
- JP 2001 A
- JP 199169 A
- JP 3224793 A
- JP 2300287 A
- JP 2300288 A
- JP 10151861 A
- JP 4146189 A
- JP 58175693 A
- JP 59081194 A
- JP 60018387 A
- JP 60019586 A
- JP 60019587 A
- JP 60035054 A
- JP 60036190 A
- JP 60036191 A
- JP 60044554 A
- JP 60044555 A
- JP 60044389 A
- JP 60044390 A
- JP 60054892 A
- JP 60047069 A
- JP 4025492 A
- JP 1038680 B
- JP 6026028 B
- DE 350399
- JP 2404184884 B
- JP 2004222939 A
- JP 2004291117 A
- JP 2005021613 A
- JP 2005108861 A
- JP 2005112226 A
- JP 2005127921 A
- JP 2005178075 A
- JP 2005178226 A
- JP 2005178074 A


### Non-patent literature cited in the description


- The Theory of the Photographic Process. Macmillan Publishing Co., Inc, 1977, 198
- **F.M. HARMER.** Heterocyclic Compounds-Cyanine Dyes and Related Compounds. John & Wiley & Sons, 1964
- **JAMES.** The Theory of the Photographic Process. Macmillan Publishing Co., Inc, 1977, 198
- Cyanine Dyes and Related Compounds. The Chemistry of Heterocyclic Compounds. John Wiley & Sons, 1964
- *Nippon Kagaku-kai Shi,* October 1992, 1141